(19) Europäisches Patentamt
European Patent Office
Office européen des brevets

(11) EP 3 498 762 A1

(12) **EUROPEAN PATENT APPLICATION**
published in accordance with Art. 153(4) EPC

(43) Date of publication:
**19.06.2019 Bulletin 2019/25**

(21) Application number: **17839562.0**

(22) Date of filing: **09.08.2017**

(51) Int Cl.:
***C08J 5/18*** *(2006.01)* ***B29C 51/16*** *(2006.01)*
***B32B 27/00*** *(2006.01)* ***B32B 27/32*** *(2006.01)*

(86) International application number:
**PCT/JP2017/029012**

(87) International publication number:
**WO 2018/030495 (15.02.2018 Gazette 2018/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority:
**09.08.2016 JP 2016156570**
**09.08.2016 JP 2016156571**
**09.08.2016 JP 2016156572**
**25.08.2016 JP 2016164248**
**22.02.2017 JP 2017030578**
**27.02.2017 JP 2017035183**
**15.03.2017 JP 2017049278**
**16.03.2017 JP 2017051454**

(71) Applicant: **Japan Polypropylene Corporation**
**Tokyo 100-8251 (JP)**

(72) Inventors:
- **KATSUNO Satoshi**
**Yokkaichi-shi**
**Mie 510-0848 (JP)**
- **ASUKA Kazuo**
**Yokkaichi-shi**
**Mie 510-0848 (JP)**
- **KITAURA Hayato**
**Yokkaichi-shi**
**Mie 510-0848 (JP)**
- **NIIBE Morikazu**
**Yokkaichi-shi**
**Mie 510-0848 (JP)**
- **TAKAHASHI Kuninori**
**Yokkaichi-shi**
**Mie 510-0848 (JP)**

(74) Representative: **Müller-Boré & Partner Patentanwälte PartG mbB**
**Friedenheimer Brücke 21**
**80639 München (DE)**

(54) **DECORATIVE FILM AND METHOD FOR PRODUCING DECORATIVE MOLDED BODY IN WHICH SAME IS USED**

(57) An object of the present invention is to provide a polypropylene-based decorative film to be used for three-dimensional decorative thermoforming, which film is capable of achieving both of sufficient adhesive strength and product appearance and is easy to recycle. The present invention relates to a decorative film for sticking on a resin molded body by thermoforming, wherein the decorative film comprises a layer (II) including a resin composition (B) containing a polypropylene-based resin (B) and the resin composition (B) satisfies the following requirements (bl) and (b2):(b1) the melt flow rate (MFR)(B) (230°C, a load of 2.16 kg) is 40 g/10 minutes or less and (b2) the strain hardening degree λ is 1.1 or more

FIG. 6

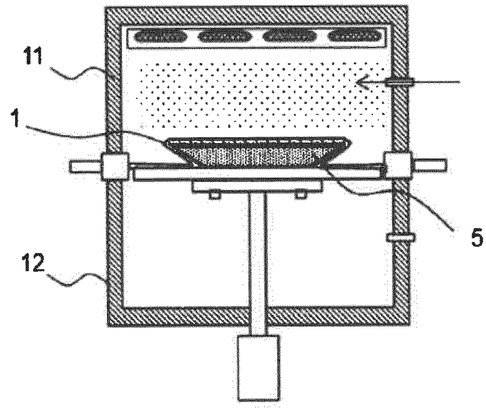


EP 3 498 762 A1

## Description

### TECHNICAL FIELD

The present invention relates to a decorative film for sticking on a resin molded body by thermoforming and a method for producing a decorative molded body using the decorative film. More specifically, it relates to a decorative film for sticking on a resin molded body by thermoforming, which can suppress shrinkage and breakage of the film at the time of thermoforming and can exhibit sufficient adhesive strength to the resin molded body, and a method for producing a decorative molded body using the decorative film. Furthermore, it relates to a decorative film for sticking on a resin molded body by thermoforming, which exhibits less fading of crimps after thermoforming and less damage to the film, such as migration of an additive contained in the film to the outside of the film at the time of thermoforming, and a method for producing a decorative molded body using the decorative film.

### BACKGROUND ART

In recent years, owing to a request for reducing VOC (volatile organic compound) and the like, there has increased the demand for a decorative technique instead of coating, so that various decorative techniques have been proposed.

Especially, there has been proposed a technique of forming a decorative molded article in which a decorative sheet and a molded body are integrated by applying the decorative film (decorative sheet) instead of a coated film to the molded body by vacuum pressure forming or vacuum forming (e.g., see Patent Document 1), and recently, the technique has particularly come to draw attention.

The decorative forming by vacuum pressure forming and vacuum forming has advantages that, as compared with the other decorative forming represented by insert forming, freedom of shape is large, appearance is excellent owing to no generation of a seam since the edge of the decorative film is wound to the back side of an decoration object and, since thermoforming can be performed at relatively low temperature and low pressure, reproducibility of crimps or the like on the surface of the decorative molded body is excellent through applying the crimps or the like on the surface of a decorative film.

In such decorative forming by vacuum pressure forming and vacuum forming, at the time of sticking the decorative film and the molded body, there are problems that film breakage and/or shrinkage are generated on the decorative film and adhesive strength between the decorative film and the molded body is not sufficiently obtained. Moreover, as a layer for improving the adhesive strength, the use of an adhesive, a tackifier, or the like has been proposed but the use has such problems that they are expensive, the layer configuration becomes extremely complex, and solvent resistance and heat resistance are insufficient.

For such problems, it is proposed to thermally fuse the decorative film and the molded body by applying a decorative film having an adhesive layer containing a polypropylene-based resin to a substrate (molded body) composed of a propylene-based resin (e.g., see Patent Documents 2 and 3).

Moreover, in automobile parts, parts for electric appliances, and parts for building materials, there are often used resin molded bodies composed of polar resin materials such as polyester resins, polyamide resins, polyimide resins, polystyrene resins, acrylic resins, polyvinyl alcohol resins, polycarbonate resins, ABS resins, urethane resins, melamine resins, and polyphenylene ether resins. Since these polar resin materials are poor in water resistance and chemical resistance, it is expected to improve the water resistance and chemical resistance by sticking a decorative film.

On the other hand, a polyolefin-based resin has properties of low polarity and excellent water resistance and chemical resistance, and thus there have been proposed various decorative films composed of polyolefin-based resins.

### CITATION LIST

#### PATENT LITERATURE

Patent Document 1: JP-A-2002-67137
Patent Document 2: JP-A-2013-14027
Patent Document 3: JP-A-2014-124940

## SUMMARY OF INVENTION

## TECHNICAL PROBLEM

The inventions disclosed in Patent Documents 2 and 3 use a polypropylene-based resin as an adhesive layer of the decorative film but actually, it is necessary to provide further layers of an acrylic resin, a polyurethane resin, a polycarbonate, and the like as a surface layer, a bonding layer, and/or a bulk layer on the adhesive layer. The thermoformability such as a draw-down property is expressed by combining heterogeneous raw materials as such, the thermoformability cannot be secured in a decorative film composed of a polypropylene-based resin that does not contain the heterogeneous raw materials. Therefore, holes, wrinkles, and entrainment of air are prone to be generated on the surface of a molded article on which the decorative film is stuck, and further, breakage of the film is generated, so that a decorative molded body excellent in appearance cannot be obtained. Particularly, in the case where a polyurethane resin is contained as a heterogeneous raw material, the polyurethane resin that is a thermosetting resin does not melt at the time of heating, so that the form of the film is easily kept and thermoformability is remarkably enhanced but there is a problem that recyclability is extremely low.

That is, in the decorative films described in Patent Documents 2 and 3, there are problems that they contain heterogeneous raw materials for securing thermoformability such as adhesiveness and appearance, layer configuration is complex and many steps are required for the production thereof, and it is difficult to recycle the decorative film where the heterogeneous raw materials are combined.

Furthermore, there is a problem that a phenomenon of fading of crimps, i.e., disappearance of crimps and the like on the film surface is generated through heating and melting of the film at the time of thermoforming.

Moreover, the decorative thermoforming by vacuum pressure forming and vacuum forming has an advantage that a molded article having high integrity between the substrate formed by a step of injection molding or the like and the decorative film but, on the other hand, the decorative film picks up scratches formed on the surface of the substrate and appearance defects owing to the influence of the scratches formed on the surface of the decorative molded body (substrate) are prone to occur on the surface of the decorated molded article, so that the scratches on the substrate surface should be strictly controlled.

Furthermore, in automobile parts, parts for electric appliances, and parts for building materials, since a conventional decorative film composed of a polyolefin resin material is poor in thermoformability and also is poor in adhesiveness to resin materials having polarity, the film is insufficient in suitability for decorative forming by vacuum pressure forming and vacuum forming.

That is, in conventional techniques, there has not yet attained a decorative film composed of a propylene-based resin, which is easy to recycle and can achieve both of excellent adhesiveness and appearance. In consideration of the above problems, an object of the present invention is to provide a decorative film to be used for three-dimensional decorative thermoforming, which can achieve both of sufficient adhesive strength and product appearance and facilitates recycling, and a method for producing a decorative molded body using the decorative film.

Moreover, it is an object to provide a decorative film which is capable of reducing product defects by making the scratches on the substrate inconspicuous and further exhibits less fading of crimps, and a method for producing a decorative molded body using the decorative film.

Furthermore, in automobile parts, parts for electric appliances, and parts for building materials, in the conventional techniques, there have not yet been developed a decorative film composed of a polypropylene-based resin, which is suitable for decorative forming by vacuum pressure forming and vacuum forming and having satisfactory adhesiveness to substrates having polarity. Accordingly, it is also an object to provide a decorative film to be used for three-dimensional decorative thermoforming, which is capable of being adhered to a substrate having polarity and is excellent in product appearance and a method for producing a decorative molded body excellent in water resistance and chemical resistance using the decorative film.

## SOLUTION TO PROBLEM

In the three-dimensional decorative thermoforming, for sticking a solid-state decorative film to a solid-state resin molded body, it is necessary that the molded body surface and the film is sufficiently softened or melted. Moreover, also in the case where the resin molded body has polarity, it is necessary that the adhesive layer of the film has polarity and also the molded body surface and the film is sufficiently softened or melted. Therefore, it becomes important to add heat quantity necessary for softening or melting the surface of the molded body and the film or to use a molded body and film which are easily softened or melted. On the other hand, when the film is heated too much, viscosity of the film decreases and the film is broken or violently moved by protrusion of the molded body in the three-dimensional decorative thermoforming step and in-flow of air at the time of returning the vacuum chamber to atmospheric pressure, thus leading to appearance defects. Thus, investigation is conducted while paying attention on the facts. As a result, it is found that

a decorative film including a layer composed of a specific polypropylene-based resin can solve the above problems and thus the present invention has been accomplished.

Furthermore, when the decorative film further has a specific sealing layer, it is found that there are obtained an effect of making the scratches formed on the surface inconspicuous and effects of suppressing a decrease in imparted functions derived from additives, such as heat resistance, weather resistance, and nucleating performance, maintaining thermoformability, and suppressing fading of crimps, and thus the present invention has been accomplished.

That is, the decorative film of the present invention comprises any configuration of the following (1) to (25).

(1) A decorative film for sticking on a resin molded body by thermoforming,
wherein the decorative film comprises a layer (II) including a resin composition (B) containing a polypropylene-based resin (B) and the resin composition (B) satisfies the following requirements (b1) and (b2):

(b1) the melt flow rate (MFR)(B) (230°C, a load of 2.16 kg) is 40 g/10 minutes or less and

(b2) the strain hardening degree $\lambda$ is 1.1 or more.

(2) The decorative film according to the above (1),
wherein the decorative film further comprises a sealing layer (I) including a polypropylene-based resin (A) and MFR(A) (230°C, a load of 2.16 kg) of the polypropylene-based resin (A) is more than 2 g/10 minutes.

(3) The decorative film according to the above (1),
wherein the decorative film further comprises a sealing layer (I) composed of a polypropylene-based resin (A) and the polypropylene-based resin (A) satisfies the following requirements (a1) to (a4), and the polypropylene-based resin (B) further satisfies the following requirement (b3):

(a1) the polypropylene-based resin (A) is a metallocene catalyst-based propylene-based polymer,
(a2) the MFR(A) (230°C, a load of 2.16 kg) is more than 0.5 g/10 minutes,
(a3) the melting peak temperature (Tm)(A) is lower than 150°C,
(a4) the molecular weight distribution (Mw/Mn)(A) obtained by GPC measurement is 1.5 to 3.5, and
(b3) Tm(B) satisfies the following relational expression (b-3) with respect to the above Tm(A):

$$Tm(B) > Tm(A) \ldots \text{Expression (b-3).}$$

(4) The decorative film according to the above (1),
wherein the decorative film further comprises a sealing layer (I) including a resin composition (X) containing a polypropylene-based resin (A) and an ethylene-$\alpha$-olefin random copolymer (C) as main components, the weight ratio of the polypropylene-based resin (A) to the ethylene-$\alpha$-olefin random copolymer (C) being 97:3 to 5:95, and the polypropylene-based resin (A) satisfies the following requirement (a2) and the ethylene-$\alpha$-olefin random copolymer (C) satisfies the following requirements (c1) to (c3):

(a2) the MFR(A) (230°C, a load of 2.16 kg) is more than 0.5 g/10 minutes,
(c1) the ethylene content [E(C)] is 65% by weight or more,
(c2) the density is 0.850 to 0.950 g/cm$^3$, and
(c3) the MFR(C) (230°C, a load of 2.16 kg) is 0.1 to 100 g/10 minutes.

(5) The decorative film according to the above (1),
wherein the decorative film further comprises a sealing layer (I) including a resin composition (X) containing a polypropylene-based resin (A) and a thermoplastic elastomer (D) as main components, the weight ratio of the polypropylene-based resin (A) to the thermoplastic elastomer (D) being 97:3 to 5:95, and
the polypropylene-based resin (A) satisfies the following requirement (a2) and the thermoplastic elastomer (D) satisfies the following requirements (d1) to (d3):

(a2) the MFR(A) (230°C, a load of 2.16 kg) is more than 0.5 g/10 minutes,
(d1) the thermoplastic elastomer is a thermoplastic elastomer in which at least one of propylene and butene is a main component,
(d2) the density is 0.850 to 0.950 g/cm$^3$, and
(d3) the MFR(D) (230°C, a load of 2.16 kg) is 0.1 to 100 g/10 minutes.

(6) The decorative film according to the above (1),
wherein the decorative film further comprises a sealing layer (I) including a resin composition (X) containing a polypropylene-based resin (A) and a thermoplastic resin (E) as main components, the weight ratio of the polypropylene-based resin (A) and the thermoplastic resin (E) is 97:3 to 5:95 and
the polypropylene-based resin (A) satisfies the following requirement (a2), the thermoplastic resin (E) satisfies the following requirement (e1), and the resin composition (X) satisfies the following requirement (x1):

(a2) the MFR(A) (230°C, a load of 2.16 kg) is more than 0.5 g/10 minutes,
(e1) the thermoplastic resin (E) contains at least one of an alicyclic hydrocarbon group and an aromatic hydrocarbon group, and
(x1) the isothermal crystallization time (t) (second) determined by a differential scanning calorimeter (DSC) satisfies the following expression (x-1):

$$t(X) \geq 1.5 \times t(A) \text{ ... Expression (x-1)}$$

wherein t(A) represents isothermal crystallization time (second) of the polypropylene-based resin (A) measured at a temperature 10°C higher than the crystallization initiation temperature of the polypropylene-based resin (A) and t(X) is isothermal crystallization time (second) of the resin composition (X) measured at a temperature that is 10°C higher than the crystallization initiation temperature of the polypropylene-based resin (A).

(7) The decorative film according to the above (1),
wherein the decorative film further comprises a sealing layer (I) including a propylene-ethylene block copolymer (F) and the propylene-ethylene block copolymer (F) satisfies the following requirements (f1) to (f3):

(f1) the propylene-ethylene block copolymer (F) contains 5 to 97% by weight of a component (F1) composed of propylene homopolymer or a propylene-ethylene random copolymer and 3 to 95% by weight of a component (F2) composed of a propylene-ethylene random copolymer having an ethylene content larger than that of the component (F1),
(f2) the MFR(F) (230°C, a load of 2.16 kg) is more than 0.5 g/10 minutes, and
(f3) the melting peak temperature (Tm)(F) is 110 to 170°C.

(8)The decorative film according to the above (1),
wherein the decorative film further comprises a sealing layer (I) including a polyolefin adhesive resin (G), the polyolefin adhesive resin (G) is a polyolefin resin having a polar functional group containing at least one heteroatom, and MFR(G) (230°C, a load of 2.16 kg) thereof is 100 g/10 minutes or less.
(9) The decorative film according to any one of the above (1) to (8),
wherein the resin composition (B) satisfies the following requirements (b1') and (b2'):

(b1') the MFR(B) (230°C, a load of 2.16 kg) is 20 g/10 minutes or less and
(b2') the strain hardening degree $\lambda$ is 1.8 or more.

(10) The decorative film according to any one of the above (1) to (8),
wherein the resin composition (B) satisfies the following requirements (b1") and (b2"):

(b1") the MFR(B) (230°C, a load of 2.16 kg) is 12 g/10 minutes or less and
(b2") the strain hardening degree $\lambda$ is 2.3 or more.

(11) The decorative film according to any one of the above (1) to (10),
wherein the polypropylene-based resin (B) is a polypropylene-based resin (B-1) having a long-chain branched structure.
(12) The decorative film according to the above (11),
wherein the polypropylene-based resin (B-1) is a polypropylene-based resin containing little gel, which is produced by a method other than a crosslinking method.
(13) The decorative film according to any one of the above (1) to (12), which comprises a surface decorative layer (III) composed of a surface decorative layer resin at an opposite face side of the layer (II) to a sticking face side thereof with the resin molded body.

(14) The decorative film according to the above (13),
wherein the surface decorative layer resin contains a polypropylene-based resin (H) and the polypropylene-based resin (H) has a strain hardening degree λ of 1 or less.
(15) The decorative film according to the above (3),
wherein the polypropylene-based resin (A) is a propylene-α-olefin copolymer.
(16) The decorative film according to the above (3) or (15),
wherein the above Tm(A) is 140°C or lower.
(17) The decorative film according to the above (4),
wherein the ethylene-α-olefin random copolymer (C) further satisfies the following requirement (c4):
(c4) melting peak temperature (Tm)(C) is 30 to 130°C.
(18) The decorative film according to the above (4) or (17),
wherein the ethylene-α-olefin random copolymer (C) further satisfies the following requirement (c5):
(c5) the ethylene-α-olefin random copolymer (C) is a random copolymer of ethylene and an α-olefin having 3 to 20 carbon atoms.
(19) The decorative film according to the above (5),
wherein the thermoplastic elastomer (D) is a propylene-ethylene copolymer having an ethylene content of less than 50% by weight, a butene-ethylene copolymer having an ethylene content of less than 50% by weight, a propylene-ethylene-butene copolymer having an ethylene content of less than 50% by weight, a propylene-butene copolymer, or butene homopolymer.
(20) The decorative film according to the above (5) or (19),
wherein the thermoplastic elastomer (D) further satisfies the following requirement (d4):
(d4) the melting peak temperature (Tm)(D) is 30 to 170°C.
(21) The decorative film according to the above (6),
wherein the thermoplastic resin (E) is a styrene-based elastomer.
(22) The decorative film according to the above (6),
wherein the thermoplastic resin (E) is an alicyclic hydrocarbon resin.
(23) The decorative film according to the above (7),
wherein the propylene-ethylene block copolymer (F) further satisfies the following requirement (f4):
(f4) the ethylene content in the propylene-ethylene block copolymer (F) is 0.15 to 85% by weight.
(24) The decorative film according to the above (7) or (23),
wherein the propylene-ethylene block copolymer (F) further satisfies the following requirement (f5):
(f5) the ethylene content of the component (F1) is in the range of 0 to 6% by weight.
(25) The decorative film according to the above (7), (23), or (24),
wherein the propylene-ethylene block copolymer (F) further satisfies the following requirement (f6):
(f6) the ethylene content of the component (F2) is in the range of 5 to 90% by weight.

Moreover, the method for producing the decorative molded body of the present invention comprises any configuration of the following (26) to (28).

(26) A method for producing a decorative molded body comprising: preparing the decorative film according to any one of the above (1) to (25),
preparing a resin molded body,
setting the resin molded body and the decorative film in a pressure-reducible chamber box,
reducing the pressure in the chamber box,
heating and softening the decorative film,
pushing the heated and softened decorative film to the resin molded body, and
returning the inside of the pressure-reduced chamber box to atmospheric pressure or pressurizing the inside.
(27) The method for producing a decorative molded body according to the above (26),
wherein the resin molded body includes a propylene-based resin composition.
(28) The method for producing a decorative molded body according to the above (26),
wherein the decorative film is the decorative film according to any one of the above (8) to (14) and
the resin molded body includes a polar resin material containing at least one selected from a polyester resin, a polyamide resin, a polyimide resin, a polystyrene resin, an acrylic resin, a polyvinyl alcohol resin, a polycarbonate resin, an ABS resin, an urethane resin, a melamine resin, a polyphenylene ether resin, and composite materials thereof.

## ADVANTAGEOUS EFFECTS OF INVENTION

Since the decorative film of the present invention includes a layer (II) composed of a resin composition (B) containing a polypropylene-based resin (B) having a specific melt flow rate (MFR), even when it does not include a thermosetting resin layer, the film is excellent in thermoformability at the time of three-dimensional decorative thermoforming, heating time can be sufficiently lengthened, and it is possible to achieve both of high adhesive strength to a polypropylene-based molded body to which adhesion is hitherto difficult and satisfactory product appearance.

Furthermore, since the decorative film further includes a specific sealing layer (sticking layer) (I), scratches formed on a substrate surface can be made inconspicuous to reduce product defects. Moreover, since sticking to a molded body is possible for a short period of heating time, it is also possible to obtain a decorative film that suppresses fading of crimps, is less prone to pick up scratches on the surface of the molded body, and has good recyclability.

Depending on the configuration of the sealing layer (I), the decorative film can be stuck on a substrate having polarity and a decorative molded body comprising the decorative film and the substrate composed of a polar resin material is particularly excellent in water resistance and chemical resistance.

According to the method for producing a decorative film of the present invention, it is possible to obtain a beautiful decorative molded body where holes and wrinkles are not present on the surface, air is not entrained between the decorative film and the resin molded body, reproducibility of texture such as crimps is satisfactory, and scratches are inconspicuous. Moreover, the decorative film can be beautifully stuck to a resin molded body to which adhesion is hitherto difficult. Furthermore, since the constituting material of the decorative film is the resin composition (B) containing the polypropylene-based resin (B) and do not contain or may not contain a thermosetting resin layer, at the time when the thus-obtained decorative molded body is recycled, an decrease in appearance and performance is small and thus recycling suitability is high.

## BRIEF DESCRIPTION OF DRAWINGS

FIG. 1A(a) to FIG 1A(c) are cross-sectional schematic views exemplifying embodiments of the decorative molded body in which the decorative film of the present invention is stuck to a molded body and are examples in which layer configuration of the decorative film is each differentiated.

FIG. 1B(a) to FIG. 1B(c) are cross-sectional schematic views exemplifying embodiments of the decorative molded body in which the decorative film of the present invention is stuck to a molded body and are examples in which layer configuration of the decorative film is each differentiated.

FIG. 1C(a) to FIG. 1C(c) are drawings showing examples of layer configuration of the decorative film of the present invention.

FIG. 2 is a schematic cross-sectional view illustrating outline of an apparatus to be used in the method for producing the decorative film of the present invention.

FIG. 3 is a schematic cross-sectional view illustrating a state that a resin molded body and a decorative film have been set in the apparatus of FIG. 2.

FIG. 4 is a schematic cross-sectional view illustrating a state of performing heating and pressure reduction in the apparatus of FIG. 2.

FIG. 5 is a schematic cross-sectional view illustrating a state of pushing a decorative film to a resin molded body in the apparatus of FIG 2.

FIG 6 is a schematic cross-sectional view illustrating a state of returning the pressure to atmospheric pressure or performing pressurization in the apparatus of FIG. 2.

FIG 7 is a schematic cross-sectional view illustrating a state that an unnecessary edge of a decorative film has been trimmed at an obtained decorative molded body.

## DESCRIPTION OF EMBODIMENTS

In the present description, the decorative film means a film for decorating a molded body. The decorative forming means forming of sticking the decorative film to the molded body. The three-dimensional decorative thermoforming means forming of sticking the decorative film to the molded body, which has a step of thermoforming the decorative film along the sticking face of the molded body and simultaneously sticking the film thereto, the step being a step of performing the thermoforming under reduced pressure (vacuum) for suppressing the entrainment of air between the decorative film and the molded body, sticking the heated decorative film to the molded body, and closely adhering them through pressure release (pressurization). Moreover," to " showing a numerical range is used as a meanings including the numerical values described before and after the "to" as a lower limit value and an upper limit value.

The following will explain the modes for carrying out the present invention in detail.

<Layer (II)>

The decorative film in the present invention is a decorative film for sticking on a resin molded body by thermoforming, wherein the decorative film includes a layer (II) composed of a resin composition (B) containing a polypropylene-based resin (B) (hereinafter sometimes simply referred to as "resin composition (B)" or "polypropylene-based resin composition (B)") and the resin composition (B) has a specific melt flow rate (MFR) satisfying the requirement (b1) to be mentioned below and a strain hardening property satisfying the requirement (b1) to be mentioned below in elongational viscosity measurement.

By providing the layer (II), the occurrence of appearance defects resulting from the breakage or violent movement of the film at the time of three-dimensional decorative thermoforming can be suppressed. Thereby, the thermoformability of the decorative film is improved, so that the decorative film may suitably not contain a thermosetting resin layer excellent in thermoformability.

Further, by improving the formability of the resin composition (B) containing the polypropylene-based resin (B), a film having an extremely simple configuration of a monolayer (II) of the resin composition (B) or a laminated layer of the layer (II) composed of the resin composition (B) and the sealing layer can be used as a decorative film. When the film has such a configuration, it is possible to form the decorative film by (co)extrusion.

[Resin Composition (B) containing Polypropylene-based Resin (B)]

The decorative film includes the layer (II) composed of the resin composition (B) containing the polypropylene-based resin (B). The resin composition (B) may be constituted by the polypropylene-based resin (B) alone, may be constituted by a polypropylene-based resin composition (B) containing a plurality of polypropylene-based resins, or may be constituted by a blend of the polypropylene-based resin (B) and another polypropylene-based resin.

The resin composition (B) satisfies both of the requirements (b1) and (b2) to be mentioned below but, when the resin composition (B) is constituted by the polypropylene-based resin (B) alone, the polypropylene-based resin (B) satisfies the requirements (b1) and (b2). Moreover, when the resin composition (B) is constituted by the polypropylene-based resin (B) and the other polypropylene-based resin, it is preferred that, in addition to the resin composition (B), at least the polypropylene-based resin (B) satisfies the requirements (b1) and (b2). The blend of the polypropylene-based resin (B) and the other polypropylene-based resin is not particularly limited and may be any of a mixture of pellets and/or powders, a melt blend, or a solution blend, or a combination thereof.

In the present invention, since sufficient forming stability of the resin composition (B) is not obtained when the viscosity decreases too much, the resin composition (B) containing the polypropylene-based resin (B) should have certain viscosity. In the present invention, as an index of the viscosity, a melt flow rate (MFR) (230°C, a load of 2.16 kg) is defined.

Herein, MFR (230°C, a load of 2.16 kg) of the resin composition (B) containing the polypropylene-based resin (B) is referred to as MFR(B). MFR(B) satisfies the following requirement (bl), preferably satisfies the requirement (bl'), and more preferably satisfies the requirement (b1"). By controlling MFR(B) of the resin composition (B) to the following value or less, a decorative molded body having satisfactory appearance can be obtained.

(b1) MFR(B) is 40 g/10 minutes or less
(b1') MFR(B) is 20 g/10 minutes or less
(b1") MFR(B) is 12 g/10 minutes or less

A lower limit of MFR(B) of the resin composition (B) is not particularly limited but is preferably 0.1 g/10 minutes or more, more preferably 0.3 g/10 minutes or more. By controlling MFR(B) to the above value or more, the formability at the time of producing the decorative film is improved and the occurrence of appearance defects called shark skin and rough interface can be suppressed on the film surface.

Herein, MFR of the polypropylene-based resin or the resin composition is measured under conditions of 230°C and a load of 2.16 kg in accordance with ISO 1133:1977 Conditions M. The unit is g/10 minutes.

The strain hardening degree λ of the resin composition (B) containing a polypropylene-based resin (B) satisfies the following requirement (b2), preferably satisfies the following requirement (b2'), more preferably satisfies the following requirement (b2"). By controlling the strain hardening degree λ of the resin composition (B) to a value in the following range, a decorative molded body having satisfactory formability at the time of thermoforming and having satisfactory appearance can be obtained.

(b2) strain hardening degree λ is 1.1 or more.

(b2') strain hardening degree λ is 1.8 or more.
(b2") strain hardening degree λ is 2.3 or more.

An upper limit of the strain hardening degree of the resin composition (B) is not particularly limited but is preferably 50 or less, more preferably 20 or less. By controlling the strain hardening degree to a value in the above range, the appearance of the decorative film can be made satisfactory.

The strain hardening degree of the resin composition (B) is determined based on the measurement of the strain hardening property in elongational viscosity measurement. The strain hardening property (non-linearity) of the elongational viscosity is described in "Koza Rheology" edited by The Society of Rheology, Japan, Kobunshi Kankoukai, 1992, pp. 221-222. Herein, the strain hardening degree λ is calculated by a method in accordance with the determination method shown in FIG 7-20 of the book and η*(0.01) is adopted as a value of shear viscosity, ηe(3.5) is adopted as a value of elongational viscosity, and the strain hardening degree λ is defined by the following expression (b-1).

$$\lambda = \eta e(3.5)/\{3\times\eta^*(0.01)\} \text{ ... Expression (b-1)}$$

In the expression (b-1), η*(0.01) is a complex viscosity coefficient [unit: Pa.s] at a measurement temperature of 180°C and angular frequency ω=0.01 rad/s, which is measured by dynamic frequency sweeping experiment, and the complex viscosity coefficient η* is calculated from a complex modulus G* [unit: Pa] and the angular frequency ω according to η*=G*/ω. Moreover, ηe(3.5) is elongational viscosity at a measurement temperature of 180°C, a strain velocity of 1.0 $s^{-1}$, and a strain amount of 3.5.

Usually, data obtained by the viscoelasticity measurement become a group of numerical values of modulus, viscosity, and the like at discrete each frequency or at an interval of measurement time. Therefore, in the case where the measurement is carried out on an apparatus different from one used in the present invention or under a condition different from one used in the present invention, there may be a case where data of the complex viscosity coefficient η*(0.01) at an angular frequency ω=0.01 and/or the elongational viscosity ηe(3.5) at a strain of 3.5 are not always present but, in that case, it is permitted to estimate the relevant value by interpolation such as linear interpolation, spline interpolation, or the like using data before and after the point. At the time of performing interpolation, it is a usual method to use logarithmic scales as scales of stress and time.

At this time, in the case of a sample having no strain hardening property (non-linearity) on elongational viscosity, the strain hardening degree λ shows about 1 (e.g., 0.9 or more and less than 1.1) or a more small value and the value of the strain hardening degree λ increases as the strain hardening property (non-linearity) increases.

Common crystalline polypropylene is a linear polymer and usually do not have the strain hardening property. On the other hand, the polypropylene-based resin (B) for use in the present invention is preferably a polypropylene-based resin (B-1) having a long-chain branched structure and, thereby, the resin composition (B) containing the polypropylene-based resin (B) can exhibit more satisfactory strain hardening property.

The long-chain branched structure in the present invention means a branched structure of a molecular chain in which the number of carbons of carbon skeleton constituting a branch (main chain of a branch) is several tens or more and its molecular weight is several hundreds or more, for exhibiting the strain hardening property. The long-chain branched structure is discriminated from a short-chain branch that is formed by performing copolymerization with an α-olefin such as 1-butene.

As methods for introducing the long-chain branched structure into a polypropylene-based resin, there may be mentioned a method of irradiating a polypropylene having no long-chain branched structure with high-energy ionized radiation (JP-A-62-121704), a method of reacting a polypropylene having no long-chain branched structure with an organic peroxide (JP-T-2001-524565), or a method of producing a macromonomer having a terminal unsaturated bond using a metallocene catalyst having a specific structure and copolymerizing the macromonomer with propylene to form a long-chain branched structure (JP-T-2001-525460). In any case of the production using any one of the methods, the strain hardening degree of the polypropylene-based resin can be remarkably improved.

The polypropylene-based resin (B-1) having a long-chain branched structure is not particularly limited as long as it has a long-chain branched structure but is preferably a polypropylene-based resin produced by a method other than a crosslinking method and is more preferably one having a ladder chain structure obtained by a method using a macromer copolymerization method by which a long-chain branched structure is formed at the time of polymerization. Examples of such a method include methods disclosed in JP-T-2001-525460, JP-T-10-338717, JP-T-2002-523575, JP-A-2009-57542, Japanese Patent No. 05027353, and JP-A-10-338717. Particularly, the macromer copolymerization method of JP-A-2009-57542 can affords a polypropylene resin containing a long chain branch without generating gel and thus is suitable for the present invention.

The existence of the long-chain branched structure in a polypropylene is defined by a method based on rheology

characteristics of a resin, a method of calculating a branching index g' using a relationship between molecular weight and viscosity, a method using $^{13}C$-NMR, and other methods. In the present invention, as shown below, the long-chain branched structure is defined by the branching index g' and/or $^{13}C$-NMR.

The branching index g' is known as a direct index with regard to a long-chain branched structure. There is detailed explanation in "Developments in Polymer Characterization-4" (J. V. Dawkins ed. Applied Science Publishers, 1983) and the definition of the branching index g' is as follows.

$$\text{Branching index } g' = [\eta]br/[\eta]lin$$

[η]br: intrinsic viscosity of a polymer (br) having a long-chain branched structure
[η]lin: intrinsic viscosity of a linear polymer having molecular weight the same as that of the polymer (br)

As is apparent from the above definition, when the branching index g' takes a value smaller than 1, it is judged that a long-chain branched structure is present and the value of the branching index g' decreases as the long-chain branched structure increases.

The branching index g' can be obtained as a function of absolute molecular weight Mabs by using GPC having a light-scattering meter and a viscometer as detectors. The measurement method of the branching index g' in the present invention is described in JP-A-2015-40213 in detail and is as follows.

{Measurement Method}

GPC: Alliance GPCV2000 (manufactured by Waters)
Detector: described in the order of connection
Multi-angle laser light-scattering detector (MALLS): DAWN-E (manufactured by Wyatt Technology)
Differential refractometer (RI): attached to GPC
Viscosity detector (Viscometer): attached to GPC
Mobile phase solvent: 1,2,4-trichlorobenzene (Irganox 1076 is added in a concentration of 0.5 mg/mL)
Mobile phase flow rate: 1 mL/minute
Column: two columns of GMHHR-H(S) HT manufactured by Tosoh Corporation are connected
Temperature of sample injection port: 140°C
Column temperature: 140°C
Detector temperature: all 140°C
Sample concentration: 1 mg/mL
Injection amount: (sample loop volume): 0.2175 mL

{Analysis Method}

At the determination of absolute molecular weight (Mabs) obtained from the multi-angle laser light-scattering detector (MALLS), mean square radius of gyration (Rg), and intrinsic viscosity ([η]) obtained from Viscometer, utilizing a data-processing software ASTRA (version 4.73.04) attached to MALLS, calculation is performed with reference to the following literatures.

Reference Literatures:

1. "Developments in Polymer Characterization-4" (J. V. Dawkins ed. Applied Science Publishers, 1983, Chapter 1.)
2. Polymer, 45, 6495-6505 (2004)
3. Macromolecules, 33, 2424-2436 (2000)
4. Macromolecules, 33, 6945-6952 (2000)

In the decorative film of the present invention, when the polypropylene-based resin (B) contains gel, film appearance gets worse, so that it is preferred to use the resin composition (B) containing no gel. Especially, preferred is the aforementioned polypropylene-based resin (B-1) having the long-chain branched structure, which is a polypropylene-based resin having little gel produced by a method other than a crosslinking method and more preferred is one produced by using a method of producing a macromonomer having a terminal unsaturated bond using a metallocene catalyst having a specific structure and copolymerizing the macromonomer with propylene to form the long-chain branched structure.

Particularly, one that satisfies a branching index g' at an absolute molecular weight Mabs of 1,000,000 of 0.3 or more and less than 1.0 is preferred, and the index is more preferably 0.55 or more and 0.98 or less, further preferably 0.75 or more and 0.96 or less, most preferably 0.78 or more and 0.95 or less.

Incidentally, in the invention, "little gel" means that the branching index g' of the polypropylene-based resin at an absolute molecular weight Mabs of 1,000,000 is in the above range. When the branching index g' is in the range, a highly crosslinked component is not formed and gel is not formed or gel is very little, so that appearance is not deteriorated in the case where the layer (II) containing the polypropylene-based resin (B-1) having the long-chain branched structure constitutes the surface of a product.

{$^{13}$C-NMR}

$^{13}$C-NMR can discriminates the short-chain branched structure and the long-chain branched structure as mentioned above. There is detailed explanation in Macromol. Chem. Phys. 2003, vol. 204, 1738 and summary thereof is as follows.

A propylene-based polymer having a long-chain branched structure has a specific branched structure as shown in the following structural formula (1). In the structural formula (1), $C_a$, $C_b$, and $C_c$ represent methylene carbons neighboring a branching carbon, $C_{br}$ represents a methane carbon at the base of branching chains, and $P^1$, $P^2$, and $P^3$ represent propylene-based polymer residues.

The propylene-based polymer residues $P^1$, $P^2$, and $P^3$ may contain, in the residues themselves, a branching carbon ($C_{br}$) different from the $C_{br}$ described in the structural formula (1).

[Chem 1]

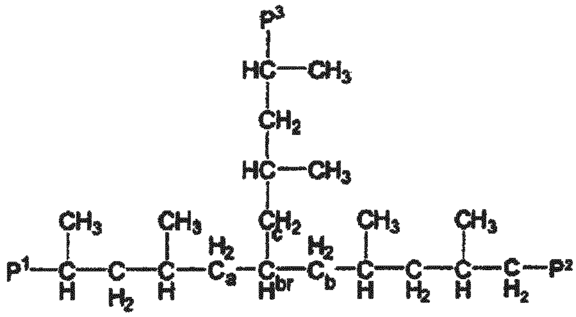

Structural formula (1)

Such a branched structure is identified by $^{13}$C-NMR analysis. Each peak can be assigned with reference to the description on pages 3839 to 3842 in Macromolecules, Vol. 35, No. 10, 2002. That is, three methylene carbons ($C_a$, $C_b$, and $C_c$) in total are observed at 43.9 to 44.1 ppm, 44.5 to 44.7 ppm, and 44.7 to 44.9 ppm and a methine carbon ($C_{br}$) is observed at 31.5 to 31.7 ppm. The methine carbon observed at 31.5 to 31.7 ppm is sometimes abbreviated as branching methine carbon ($C_{br}$).

The spectrum of $^{13}$C-NMR of the propylene-based polymer having a long-chain branched structure is characterized in that three methylene carbons adjacent to the branching methine carbon $C_{br}$ are observed as three nonequivalent peaks diastereotropically.

Such a branching chain assigned by $^{13}$C-NMR represents a propylene-based polymer residue having 5 or more carbon atoms which is branched from the main chain of the propylene-based polymer. Since the residue can be discriminated from a branch having 4 or less carbon atoms by the fact that the peak position of the branching carbon is different, in the present invention, the presence of the long-chain branched structure can be judged by the confirmation of the peak of the branching methine carbon.

Incidentally, the measurement method of $^{13}$C-NMR in the present invention is as follows.

{Measurement Method of $^{13}$C-NMR}

Into an NMR sample tube having an internal diameter of 10 mmϕ was put 200 mg of a sample together with

2.4 ml of o-dichlorobenzene/deuterated bromobenzene ($C_6D_5Br$)=4/1 (volume ratio) and hexamethyldisiloxane as a reference substance for chemical shift, followed by dissolution, and then $^{13}C$-NMR measurement was performed.

The $^{13}C$-NMR measurement was performed using an AV400 model NMR apparatus manufactured by Burker-Biospin K.K., which had been fitted with a cryoprobe of 10 mmϕ.

The measurement was conducted by a complete proton decoupling method at a sample temperature of 120°C. The other conditions are as follows.

Pulse angle: 90°
Pulse interval: 4 seconds
Integration times: 20,000

As for the chemical shift, the peak of the methyl carbon of hexamethyldisiloxane is set at 1.98 ppm and the chemical shift of a peak derived from another carbon uses it as a reference.

The amount of long-chain branches can be calculated using peaks in the vicinity of 44 ppm.

In the $^{13}C$-NMR spectrum of the polypropylene-based resin (B-1) having a long-chain branched structure, the amount of long-chain branches quantitatively determined from the peaks in the vicinity of 44 ppm is preferably 0.01/1000 total propylenes or more, more preferably 0.03/1000 total propylenes or more, further preferably 0.05/1000 total propylenes or more. Since too large value thereof may cause appearance defects such as gel, fish eyes, and the like, the amount is preferably 1.00/1000 total propylenes or less, more preferably 0.50/1000 total propylenes or less, further preferably 0.30/1000 total propylenes or less.

It is sufficient that such a polypropylene-based resin (B-1) having a long-chain branched structure is contained in the resin composition (B) containing the polypropylene-based resin (B) in an amount sufficient for imparting the strain hardening property. The polypropylene-based resin (B-1) having a long-chain branched structure is contained in 100% by weight of the resin composition (B) in a ratio of preferably 1 to 100% by weight, more suitably 5% by weight or more.

As the polypropylene-based resin (B-1) having a long-chain branched structure in the present invention, there may be selected one of various types of propylene-based polymers, such as propylene homopolymer (homopolypropylene), a propylene-α-olefin copolymer (random polypropylene), and a propylene block copolymer (block polypropylene), or a combination thereof. The polypropylene-based polymer preferably contains 50 mol% or more of a propylene monomer.

The polypropylene-based resin (B) in the present invention preferably has high crystallinity from the viewpoints of heat resistance, scratch resistance, and solvent resistance. The melting point (DSC melting peak point) of the polypropylene-based resin (B) is preferably 130°C or higher, more preferably 140°C or higher, further preferably 140 to 170°C, still further preferably 145 to 170°C, especially preferably 150 to 168°C. The polypropylene-based resin (B) is preferably propylene homopolymer or a propylene-α-olefin copolymer having such a melting point. Moreover, since the scratch resistance and solvent resistance decrease when components having low crystallinity is contained even if the melting point is high, it is preferred that the polypropylene-based resin (B) does not contain an ethylene-α-olefin copolymer having an ethylene content of 50 to 70% by weight.

Moreover, in the case where the decorative film further includes a sealing layer (I) composed of a polypropylene-based resin (A) to be mentioned below and the polypropylene-based resin (A) satisfies the requirements (a1) to (a4) to be mentioned below, the melting peak temperature (Tm)(B) of the polypropylene-based resin (B) on DSC measurement is preferably higher than the melting peak temperature (Tm)(A) of the polypropylene-based resin (A) on DSC measurement. That is, it is preferred to satisfy the following requirement (b3) with regard to Tm(A).

(b3) (Tm)(B) satisfies the following relational expression (b-3).

$$Tm(B) > Tm(A) \text{ ... Expression (b-3)}$$

In the above range, thermoformability becomes satisfactory.

The resin composition (B) containing the polypropylene-based resin (B) may contain a plurality of polypropylene-based resins other than the polypropylene-based resin (B-1) having a long-chain branched structure, an additive, a filler, a colorant, other resin components, and the like. At this time, the total amount of the additive, filler, colorant, other resin components, and the like is preferably 50% by weight or less relative to the resin composition (B) containing the polypropylene-based resin, which includes them.

In the case where the decorative molded body of the present invention is formed as a colored molded body, the colorant may be used only in the decorative film, so that the use of an expensive colorant can be suppressed as compared with the case where the whole resin molded body is colored. Moreover, it is possible to suppress change in physical properties that may be accompanied by the blending of the colorant.

As the additive, there can be blended known various additives that can be used for a polypropylene-based resin, such as an antioxidant, a neutralizing agent, a light stabilizer, a UV absorber, a crystal nucleating agent, a blocking inhibitor, a lubricant, an antistatic agent, and a metal inactivating agent.

As the antioxidant, phenol-based antioxidants, phosphite-based antioxidants, thio-based antioxidants, and the like can be exemplified. As the neutralizing agent, higher fatty acid salts such as calcium stearate and zinc stearate can be exemplified. As the light stabilizer and the UV absorber, hindered amines, benzotriazoles, benzophenones, and the like can be exemplified.

As the crystal nucleating agent, aromatic carboxylic acid metal salts, aromatic phosphoric acid metal salts, sorbitol-based derivatives, metal salts of rosin, amide-based nucleating agents, and the like can be exemplified. Of these crystal nucleating agents, there can be exemplified aluminum p-t-butylbenzoate, 2,2'-methylenebis(4,6-di-t-butylphenyl) sodium phosphate, 2,2'-methylenebis(4,6-di-t-butylphenyl) aluminum phosphate, a complex of bis(2,4,8,10-tetra-tert-butyl-6-hydroxy-12H-dibenzo[d,g] [1,2,3]dioxaphosphocin-6-oxide) aluminum hydroxide salt and an organic compound, p-methyl-benzylidenesorbitol, p-ethyl-benzylidenesorbitol, 1,2,3-trideoxy-4,6:5,7-bis-[(4-propylphenyl)methylene]-nonitol, sodium salt of rosin, and the like.

As the lubricant, higher fatty acid amides such as stearic acid amide can be exemplified. As the antistatic agent, fatty acid partial esters such as glycerol fatty acid monoesters can be exemplified. As the metal inactivating agent, triazines, phosphones, epoxys, triazoles, hydrazides, oxamides, and the like can be exemplified.

As the filler, there can be blended known various fillers that can be used for a polypropylene-based resin, such as inorganic fillers and organic fillers. As the inorganic fillers, there can be exemplified calcium carbonate, silica, hydrotalcite, zeolite, aluminum silicate, magnesium silicate, glass fibers, carbon fibers, and the like. Moreover, as the organic fillers, crosslinked rubber fine particles, thermosetting resin fine particles, thermosetting resin hollow fine particles and the like can be exemplified.

As the other resin components, there can be exemplified polyethylene-based resins, polyolefins such as ethylene-based elastomers, modified polyolefins, other thermoplastic resins, and the like.

Moreover, for imparting design, coloring is also possible. For coloring, various colorants such as inorganic pigments, organic pigments, and dyes can be used. Moreover, it is also possible to use a brilliant material such aluminum flakes, titanium oxide flakes, and (synthetic) mica.

The polypropylene-based resin composition can be produced by a method of melt-kneading a propylene-based polymer, an additive, a filler, other resin components, and the like, a method of melt-kneading a propylene-based polymer, an additive, a filler, and the like and dry blending other resin components into the melt blended one, or a method of dry blending a master batch in which an additive, a filler, and the like are dispersed in a carrier resin in a high concentration, in addition to a propylene-based polymer and the other resin components.

<Sealing Layer (I)>

[1. Sealing Layer (I) composed of Polypropylene-based Resin (A)]

As one embodiment of the decorative film in the present invention, in addition to the above layer (II), a sealing layer (I) composed of a polypropylene-based resin (A) having MFR(A) (230°C, a load of 2.16 kg) of more than 2 g/10 minutes can be included.

By including the sealing layer (I) composed of the polypropylene-based resin (A) on a sticking face with the resin molded body (substrate), the scratches formed on the substrate surface can be made inconspicuous and thereby product defects can be reduced.

This is because, since fluidity of the polypropylene-based resin (A) constituting the sealing layer (I) is higher than that of the polypropylene-based resin composition (B) constituting the layer (II) that imparts thermoformability, the deformation of the sealing layer (I) is easier than the deformation of the layer (II) and thus emergence of the scratches onto the decorative molded body surface can be suppressed through the deformation of the sealing layer (I) in conformity of the shape of the scratches against the scratches of the substrate.

In order that the decorative film exhibits such an effect, the strain hardening degree $\lambda$ of the polypropylene-based resin (A) is preferably less than 1.1.

As the polypropylene-based resin (A) in this embodiment, there may be selected one of various types of propylene-based polymers, such as propylene homopolymer (homopolypropylene), a propylene-$\alpha$-olefin copolymer (random polypropylene), and a propylene block copolymer (block polypropylene), or a combination thereof. The polypropylene-based polymer preferably contains 50 mol% or more of a propylene monomer. The propylene-based polymer preferably does not contain a polar group-containing monomer unit.

The melting point (DSC melting peak temperature) of the polypropylene-based resin (A) is preferably 100 to 170°C, more preferably 115 to 165°C.

The polypropylene-based resin (A) is preferably a propylene-$\alpha$-olefin copolymer from the viewpoint of sealability.

Since the propylene-α-olefin copolymer usually has lowered crystallization temperature with the lowering of the melting point as compared with propylene homopolymer, the copolymer is more prone to deform at the time of thermoforming and thus has a high effect of making scratches inconspicuous.

Moreover, the polypropylene-based resin (A) may contain an additive, a filler, other resin components, and the like. That is, the resin may be a resin composition (polypropylene-based resin composition) of a propylene-based polymer, an additive, a filler, other resin components, and the like. The total amount of the additive, filler, other resin components, and the like is preferably 50% by weight or less relative to the polypropylene-based resin composition.

As the additive, the additives and the like that may be contained in the above polypropylene-based resin (B) can be used.

The above resin composition (polypropylene-based resin composition) can be produced by a method of melt-kneading a propylene-based polymer, an additive, a filler, other resin components, and the like, a method of melt-kneading a propylene-based polymer, an additive, a filler, and the like and dry blending other resin components into the melt blended one, or a method of dry blending a master batch in which an additive, a filler, and the like are dispersed in a carrier resin in a high concentration, in addition to a propylene-based polymer and the other resin components.

[2. Sealing Layer (I) composed of Polypropylene-based Resin (A)]

As one embodiment of the decorative film in the present invention, in addition to the layer (II), the decorative film further includes a sealing layer (I) composed of a polypropylene-based resin (A) and the polypropylene-based resin (A) satisfies the following requirements (a1) to (a4), and the polypropylene-based resin (B) can further satisfy the following requirement (b3):

(a1) it is a metallocene catalyst-based propylene-based polymer,
(a2) MFR(A) (230°C, a load of 2.16 kg) is more than 0.5 g/10 minutes,
(a3) melting peak temperature (Tm)(A) is lower than 150°C,
(a4) molecular weight distribution (Mw/Mn)(A) obtained by GPC measurement is 1.5 to 3.5, and
(b3) Tm(B) satisfies the following relational expression (b-3) with respect to the above Tm(A):

$$Tm(B) > Tm(A) \text{ ... Expression (b-3).}$$

The sealing layer (I) composed of the polypropylene-based resin (A) in the present embodiment is a layer that comes into contact with the resin molded body (substrate) at the time of three-dimensional decorative thermoforming. The polypropylene-based resin (A) is preferably a resin that easily melts and relaxes. By providing the sealing layer (I), generation of holes, wrinkles, entrainment of air, and the like can be suppressed on the surface of the decorative molded body and scratches formed on the substrate surface can be made inconspicuous.

The melt flow rate (230°C, a load of 2.16 kg) MFR(A) of the polypropylene-based resin (A) is necessarily more than 0.5 g/10 minutes (requirement (a2)), and is preferably 1 g/10 minutes or more, more preferably 2 g/10 minutes or more. In the above range, relaxation at the time of three-dimensional decorative thermoforming sufficiently proceeds and sufficient adhesive strength can be exhibited. An upper limit of MFR(A) is not limited but is preferably 100 g/10 minutes or less. In the above range, deterioration of the adhesive strength by a decrease in physical properties does not occur.

In the present embodiment, MFR of the polypropylene-based resin (A) and the polypropylene-based resin composition (A) to be mentioned later is measured at 230°C under a load of 2.16 kg in accordance with ISO 1133:1997 Conditions M. The unit is g/10 minutes.

Mw/Mn(A) of the polypropylene-based resin (A) is 1.5 to 3.5 (requirement (a4)), preferably 2 to 3. In the above range, the amount of components having relatively long relaxation time is small and sufficient relaxation is prone to occur, so that the range is preferred.

Incidentally, Mn and Mw are described in "Kobunshi no Kiso" (edit by The Society of Polymer Science, Japan, Tokyo Kagaku Dojin, 1978) and the like and are values to be calculated from a molecular weight distribution curve measured on GPC.

The melting point of the polypropylene-based resin (A) Tm(A) (DSC melting peak temperature) is lower than 150°C (requirement (a3)), preferably 145°C or lower, more preferably 140°C or lower, further preferably 130°C or lower. In the above range, sufficient adhesive strength can be exhibited. When Tm(A) lowers too much, heat resistance decreases and there is a case where a problem may occur in the use of the molded body, so that Tm(A) is preferably 100°C or higher, more preferably 110°C or higher.

Moreover, the melting peak temperature of the polypropylene-based resin (B) (Tm(B)) on DSC measurement

is necessarily higher than Tm(A) and Tm(B) > Tm(A) (requirement (b3)). In the above range, thermoformability becomes satisfactory.

The melting point of the polypropylene-based resin (B) (Tm(B)) (melting peak temperature on DSC measurement) is preferably 140°C or higher, more preferably 145 to 170°C, further preferably 150 to 168°C. The polypropylene-based resin (B) is preferably propylene homopolymer or a propylene-α-olefin copolymer having such a melting point. Moreover, since scratch resistance and solvent resistance decrease when a component having low crystallinity is contained even if the melting point is high, the polypropylene-based resin or polypropylene-based resin composition (B) preferably does not contain an ethylene-α-olefin copolymer having an ethylene content of 50 to 70% by weight.

The polypropylene-based resin (A) of the present embodiment is a so-called metallocene catalyst-based propylene-based polymer that is polymerized by a metallocene catalyst (requirement (a1)). Since a metallocene catalyst has a single active site, a propylene-based polymer polymerized by means of the metallocene catalyst has narrow molecular weight distribution and crystallinity distribution and is prone to be melted and relaxed, so that it becomes possible to fuse it to a substrate without applying a large quantity of heat.

As the polypropylene-based resin (A) in the present embodiment, there may be selected one of various types of propylene-based polymers, such as propylene homopolymer (homopolypropylene), a propylene-α-olefin copolymer (random polypropylene), and a propylene block copolymer (block polypropylene), or a combination thereof. The polypropylene-based polymer preferably contains 50 mol% or more of a polymerization unit derived from a propylene monomer. The propylene-based polymer preferably does not contain a polymerization unit derived from a polar group-containing monomer.

The polypropylene-based resin (A) is preferably a propylene-α-olefin copolymer from the viewpoint of sealability. Since the propylene-α-olefin copolymer usually has lowered crystallization temperature with the lowering of the melting point as compared with propylene homopolymer, the copolymer is more prone to deform at the time of thermoforming and thus has a high effect of making scratches inconspicuous.

As the α-olefin, there can be used one selected from ethylene and α-olefins having 3 to 8 carbon atoms or a combination of two or more thereof.

Moreover, the polypropylene-based resin (A) may contain an additive, a filler, other resin components, and the like. That is, the resin may be a resin composition (polypropylene-based resin composition) of a propylene-based polymer, an additive, a filler, other resin components, and the like. The total amount of the additive, filler, other resin components, and the like is preferably 50% by weight or less relative to the polypropylene-based resin composition.

When the polypropylene-based resin (A) is a polypropylene-based resin composition (A), the polypropylene-based resin composition (A) preferably has the above properties of the polypropylene-based resin (A).

As the additive, there can be blended known various additives that can be used for a polypropylene-based resin, such as an antioxidant, a neutralizing agent, a light stabilizer, a UV absorber, a crystal nucleating agent, a blocking inhibitor, a lubricant, an antistatic agent, and a metal inactivating agent.

As the antioxidant, phenol-based antioxidants, phosphite-based antioxidants, thio-based antioxidants, and the like can be exemplified. As the neutralizing agent, higher fatty acid salts such as calcium stearate and zinc stearate can be exemplified. As the light stabilizer and the UV absorber, hindered amines, benzotriazoles, benzophenones, and the like can be exemplified.

As the crystal nucleating agent, aromatic carboxylic acid metal salts, aromatic phosphoric acid metal salts, sorbitol-based derivatives, metal salts and the like of rosin, amide-based nucleating agents, and the like can be exemplified. Of these crystal nucleating agents, there can be exemplified aluminum p-t-butylbenzoate, 2,2'-methylenebis(4,6-di-t-butylphenyl) sodium phosphate, 2,2'-methylenebis(4,6-di-t-butylphenyl) aluminum phosphate, a complex of bis(2,4,8,10-tetra-tert-butyl-6-hydroxy-12H-dibenzo[d,g][1,2,3]dioxaphosphocin-6-oxide) aluminum hydroxide salt and an organic compound, p-methyl-benzylidenesorbitol, p-ethyl-benzylidenesorbitol, 1,2,3-trideoxy-4,6:5,7-bis-[(4-propylphenyl)methylene]-nonitol, sodium salt of rosin, and the like.

As the lubricant, higher fatty acid amides such as stearic acid amide can be exemplified. As the antistatic agent, fatty acid partial esters such as glycerol fatty acid monoesters can be exemplified. As the metal inactivating agent, triazines, phosphones, epoxys, triazoles, hydrazides, oxamides, and the like can be exemplified.

As the filler, there can be blended known various fillers that can be used for a polypropylene-based resin, such as inorganic fillers and organic fillers. As the inorganic fillers, there can be exemplified calcium carbonate, silica, hydrotalcite, zeolite, aluminum silicate, magnesium silicate, glass fibers, carbon fibers, and the like. Moreover, as the organic fillers, crosslinked rubber fine particles, thermosetting resin fine particles, thermosetting resin hollow fine particles and the like can be exemplified.

As the other resin components, there can be exemplified polyethylene-based resins, polyolefins such as ethylene-based elastomers, modified polyolefins, other thermoplastic resins, and the like.

The polypropylene-based resin composition (A) can be produced by a method of melt-kneading a propylene-based polymer, an additive, a filler, other resin components, and the like, a method of melt-kneading a propylene-based polymer, an additive, a filler, and the like and dry blending other resin components into the melt blended one, or a method

of dry blending a master batch in which an additive, a filler, and the like are dispersed in a carrier resin in a high concentration, in addition to a propylene-based polymer and the other resin components.

[3. Sealing Layer (I) composed of Resin Composition (X) containing Polypropylene-based Resin (A) and Ethylene-α-Olefin Random Copolymer (C) as Main Components]

As one embodiment of the decorative film in the present invention, in addition to the layer (II), the decorative film preferably further includes a sealing layer (I) composed of a resin composition (X) containing a polypropylene-based resin (A) and an ethylene-α-olefin random copolymer (C) as main components, the weight ratio of the polypropylene-based resin (A) to the ethylene-α-olefin random copolymer (C) being 97:3 to 5:95. The polypropylene-based resin (A) satisfies the following requirement (a2) and the ethylene-α-olefin random copolymer (C) can satisfy the following requirements (c1) to (c3):

(a2) MFR(A) (230°C, a load of 2.16 kg) is more than 0.5 g/10 minutes,
(c1) ethylene content [E(C)] is 65% by weight or more,
(c2) density is 0.850 to 0.950 g/$cm^3$, and
(c3) MFR(C) (230°C, a load of 2.16 kg) is 0.1 to 100 g/10 minutes.

The sealing layer (I) in the present embodiment is a layer that comes into contact with the resin molded body (substrate) at the time of three-dimensional decorative thermoforming. By providing the sealing layer (I), sufficient adhesive strength can be exhibited even when film heating time is short at the time of three-dimensional decorative thermoforming and scratches formed on the substrate surface can be made inconspicuous.

{Polypropylene-based Resin (A)}

As the polypropylene-based resin (A) in the present embodiment, there may be selected one of various types of propylene-based polymers, such as propylene homopolymer (homopolypropylene), a propylene-α-olefin copolymer (random polypropylene), and a propylene block copolymer (block polypropylene), or a combination thereof. The propylene-based polymer preferably contains 50 mol% or more of a polymerization unit derived from a propylene monomer. The propylene-based polymer preferably do not contain a polymerization unit derived from a polar group-containing monomer.

(a2) Melt flow rate (MFR(A))

The melt flow rate MFR(A) (230°C, a load of 2.16 kg) of the polypropylene-based resin (A) contained in the sealing layer (I) is necessarily more than 0.5 g/10 minutes (requirement (a2)), and is preferably 1 g/10 minutes or more, more preferably 2 g/10 minutes or more. In the above range, relaxation at the time of three-dimensional decorative thermoforming sufficiently proceeds, sufficient adhesive strength can be exhibited, and also the scratches formed on the substrate becomes inconspicuous. An upper limit of MFR(A) is not limited but is preferably 100 g/10 minutes or less. In the above range, deterioration of the adhesive strength resulting from a decrease in physical properties does not occur.
In the present embodiment, MFR of the polypropylene-based resin and the polypropylene-based resin composition to be mentioned below is measured at 230°C under a load of 2.16 kg in accordance with ISO 1133:1997 Conditions M. The unit is g/10 minutes.

(a3) Melting peak temperature (Tm(A))

The melting peak temperature (DSC melting peak temperature, herein, there is a case where it is referred to as "melting point") of the polypropylene-based resin (A) (Tm(A)) is preferably 110°C or higher, more preferably 115°C or higher, further preferably 120°C or higher. In the above range, formability at the time of three-dimensional decorative thermoforming is satisfactory. An upper limit of the melting peak temperature is not limited but is preferably 170°C or lower. In the above range, sufficient adhesive strength can be exhibited.
The polypropylene-based resin (A) in the present embodiment is preferably a resin polymerized by means of a Ziegler catalyst, a metallocene catalyst, or the like. That is, the polypropylene-based resin (A) may be a Ziegler catalyst-based propylene polymer or a metallocene catalyst-based propylene polymer.

{Ethylene-α-Olefin Random Copolymer (C)}

The ethylene-α-olefin random copolymer (C) to be used as an essential component in the sealing layer (I) of

the present embodiment has the following requirements (c1) to (c3), preferably further, requirements (c4) and/or (c5).

(c1) the ethylene content [E(C)] is 65% by weight or more,
(c2) the density is 0.850 to 0.950 g/cm$^3$,
(c3) the MFR(C) (230°C, a load of 2.16 kg) is 0.1 to 100 g/10 minutes,
(c4) the melting peak temperature (Tm)(C) is 30 to 130°C, and
(c5) the ethylene-$\alpha$-olefin random copolymer (C) is a copolymer of ethylene and an $\alpha$-olefin having 3 to 20 carbon atoms.

(c1) Ethylene Content [E(C)]

The ethylene content [E(C)] of the ethylene-$\alpha$-olefin random copolymer (C) of the present embodiment is preferably 65% by weight or more, more preferably 68% by weight or more, further preferably 70% by weight or more relative to the total amount of the ethylene-$\alpha$-olefin random copolymer (C). In the above range, sufficient adhesive strength can be exhibited at the time of three-dimensional decorative thermoforming and heating time of the film can be shortened. An upper limit of the ethylene content [E(C)] is not particularly limited but is preferably 95% by weight or less.

(Calculation Method of Ethylene Content [E(C)])

The ethylene content [E(C)] of the ethylene-$\alpha$-olefin random copolymer (C) can be determined from integrated intensity obtained by $^{13}$C-NMR measurement.

(Calculation Method 1 (Binary System))

First, there is described a method of calculating the ethylene content [E(C)] in a binary copolymer composed of two kinds of repeating units. In this case, the ethylene content of an ethylene-$\alpha$-olefin binary copolymer can be determined according to (Expression c1-1) and (Expression c1-2).

$$\text{Ethylene content (mol\%)} = IE \times 100/(IE+IX) \text{ ... (Expression c1-1)}$$

$$\text{Ethylene content [E(C)] (\% by weight)} = [\text{Ethylene content (mol\%)} \times \text{Molecular weight of ethylene}]/[\text{Ethylene content (mol\%)} \times \text{Molecular weight of ethylene} + \alpha\text{-Olefin content (mol\%)} \times \text{Molecular weight of } \alpha\text{-olefin}] \text{ ... (Expression c1-2)}$$

Here, IE and IX are integrated intensity of ethylene and integrated intensity of the $\alpha$-olefin, respectively, and can be determined according to the following (Expression c-2) and (Expression c-3), respectively.

$$IE = (I_{\beta\beta}+I_{\gamma\gamma}+I_{\beta\delta}+I_{\gamma\delta}+I_{\delta\delta})/2+(I_{\alpha\gamma}+I_{\alpha\delta})/4 \text{ ... (Expression c-2)}$$

$$IX = I_{\alpha\alpha}+(I_{\alpha\gamma}+I_{\alpha\delta})/2 \text{ ... (Expression c-3)}$$

Here, the subscripts of I of the right side indicate carbons described in the following structural formulae (a) to (d). For example, $\alpha\alpha$ indicates a methylene carbon based on an $\alpha$-olefin chain, and $I_{\alpha\alpha}$ represents integrated intensity of the signal of the methylene carbon based on the $\alpha$-olefin chain.

[Chem 2]

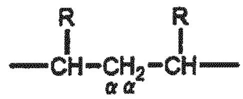
Structural formula (a)

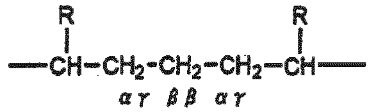
Structural formula (b)

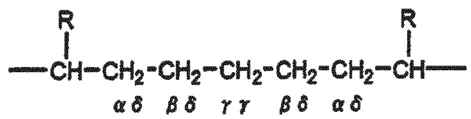
Structural formula (c)

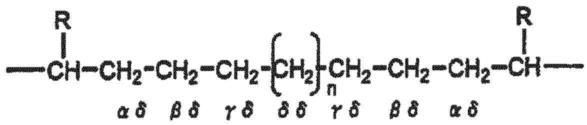
Structural formula (d)

In the structural formula (d), n represents an odd number of 1 or more.

The following will describe integrated intensity to be used in (Expression c-2) and (Expression c-3) for each α-olefin of an ethylene-α-olefin binary copolymer.

(Case of Ethylene-Propylene Copolymer)

In the case where the α-olefin is propylene, the following values of integrated intensity are substituted into (Expression c-2) and (Expression c-3) to determine the ethylene content [E(C)].

$I_{\beta\beta} = I_{25.0\text{-}24.2}$
$I_{\gamma\gamma} = I_{30.8\text{-}30.6}$
$I_{\beta\delta} = I_{27.8\text{-}26.8}$
$I_{\gamma\delta} = I_{30.6\text{-}30.2}$
$I_{\delta\delta} = I_{30.2\text{-}28.0}$
$I_{\alpha\alpha} = I_{48.0\text{-}43.9}$

$$I_{\alpha\gamma}+I_{\alpha\delta} = I_{39.0\text{-}36.2}$$

Here, the subscript numerals of I of the right side indicate a range of chemical shift. For example, $I_{39.0\text{-}36.2}$ indicates integrated intensity of $^{13}C$ signals detected between 39.0 ppm and 36.2 ppm.

As for the chemical shift, the $^{13}C$ signal of hexamethyldisiloxane is set at 1.98 ppm and the chemical shift of the signal derived from another $^{13}C$ uses it as a reference. Similarly to the case of the ethylene-propylene copolymer, the following will also describe for an ethylene-1-butene copolymer, an ethylene-1-hexene copolymer, and an ethylene-1-octene copolymer.

(Case of Ethylene-1-Butene Copolymer)

In the case where the α-olefin is 1-butene, the following values of integrated intensity are substituted into (Expression c-2) and (Expression c-3) to determine the ethylene content [E(C)].

$I_{\beta\beta} = I_{24.6\text{-}24.4}$
$I_{\gamma\gamma} = I_{30.9\text{-}30.7}$
$I_{\beta\delta} = I_{27.8\text{-}26.8}$
$I_{\gamma\delta} = I_{30.5\text{-}30.2}$
$I_{\delta\delta} = I_{30.2\text{-}28.0}$
$I_{\alpha\alpha} = I_{39.3\text{-}38.1}$

$$I_{\alpha\gamma}+I_{\alpha\delta} = I_{34.5\text{-}33.8}$$

(Case of Ethylene-1-Hexene Copolymer)

In the case where the α-olefin is 1-hexene, the following values of integrated intensity are substituted into (Expression c-2) and (Expression c-3) to determine the ethylene content [E(C)].

$I_{\beta\beta} = I_{24.5\text{-}24.4}$
$I_{\gamma\gamma} = I_{31.0\text{-}30.8}$
$I_{\beta\delta} = I_{27.5\text{-}27.0}$
$I_{\gamma\delta} = I_{30.6\text{-}30.2}$
$I_{\delta\delta} = I_{30.2\text{-}28.0}$
$I_{\alpha\alpha} = I_{40.0\text{-}39.0}$

$$I_{\alpha\gamma}+I_{\alpha\delta} = I_{35.0\text{-}34.0}$$

(Case of Ethylene-1-Octene Copolymer)

In the case where the α-olefin is 1-octene, methylene carbons of the hexyl branch based on 1-octene overlap with the βδ signal and the αγ+αδ signal (5B6 and 6B6 in the following structural formula).

$$I_{\beta\delta}+I_{5B6} = I_{27.6\text{-}26.7}$$

$$I_{\alpha\gamma}+I_{\alpha\delta}+I_{6B6} = I_{35.0\text{-}34.0}$$

[Chem 3]

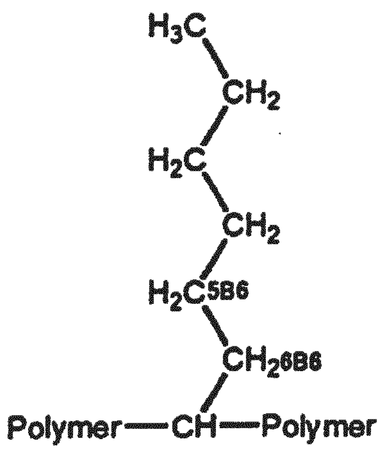

Hexyl branch

Accordingly, using $I_{\beta\delta}$ and $I_{\alpha\gamma}+I_{\alpha\delta}$ in which the overlap of 5B6 and 6B6 has been corrected as substitutes, the following values of integrated intensity are substituted into (Expression-2) and (Expression-3) to determine the ethylene content [E(C)].

$I_{\beta\beta} = I_{24.7\text{-}24.2}$

$$I_{\gamma\gamma}+I_{\gamma\delta}+I_{\delta\delta}= I_{32.0\text{-}28.0}$$

$$I_{\beta\delta} = 2/3 \times I_{27.6\text{-}26.7}$$

$I_{\alpha\alpha} = I_{40.8\text{-}39.6}$

$$I_{\alpha\gamma}+I_{\alpha\delta} = I_{\beta\delta}+2\times I_{\beta\beta}$$

(Calculation Method 2 (Ternary System))

Next, there is explained a method of calculating the ethylene content [E(C)] in a ternary copolymer composed of three kinds of repeating units.

For example, the ethylene content of an ethylene-propylene-butene ternary copolymer can be determined according to the following (Expression c4-1) and (Expression c4-2).

Ethylene content (mol%) = IE×100/(IE+IP+IB) ... (Expression c4-1)

Ethylene content [E(C)] (% by weight) = [Ethylene content (mol%) × Molecular weight of ethylene]/[Ethylene content (mol%) × Molecular weight of ethylene + Propylene content (mol%) × Molecular weight of propylene + Butene content (mol%) × Molecular weight of butene] ... (Expression c4-2)

Here, IE, IP, and IB are integrated intensity values of ethylene, propylene, and butene, respectively, and can be determined according to (Expression c-5), (Expression c-6), and (Expression c-7).

$$IE = (I_{\beta\beta}+I_{\gamma\gamma}+I_{\beta\delta}+I_{\gamma\delta}+I_{\delta\delta})/2+(I_{\alpha\gamma(P)}+I_{\alpha\delta(P)}+I_{\alpha\gamma(B)}+I_{\alpha\delta(B)})/4 \text{ ... (Expression c-5)}$$

$$IP = 1/3\times[I_{CH3(P)}+I_{CH(P)}+I_{\alpha\alpha(PP)}+1/2\times(I_{\alpha\alpha(PB)}+I_{\alpha\gamma(P)}+I_{\alpha\delta(P)})] \text{ ... (Expression c-6)}$$

$$IB = 1/4\times[(I_{CH3(B)}+I_{CH(B)}+I_{2B2}+I_{\alpha\alpha(BB)})+1/2\times(I_{\alpha\alpha(PB)}+I_{\alpha\gamma(B)}+I_{\alpha\delta(B)})] \text{ ... (Expression c-7)}$$

Here, the subscript (P) means that the signal is a signal based on the methyl group branch derived from propylene and similarly, the subscript (B) means that the signal is a signal based on the ethyl group branch derived from butene.

Moreover, $\alpha\alpha$(PP) means a signal of a methylene carbon based on a propylene chain, and similarly, $\alpha\alpha$(BB) means a signal of a methylene carbon based on a butene chain and $\alpha\alpha$(PB) means a signal of a methylene carbon based on a propylene-butene chain.

Here, since the $\gamma\gamma$ signal overlaps with the skirt of the signal of a methine carbon CH (PPE) of central propylene aligned as propylene-propylene-ethylene, it is difficult to separate the signal of $\gamma\gamma$.

The $\gamma\gamma$ signal appears in the structural formula (c) containing two ethylene chains, and (Expression c-8) holds between the integrated intensity of $\gamma\gamma$ derived from ethylene and the integrated intensity of $\beta\delta$ of the structural formula (c).

$$I_{\beta\delta} \text{ (structural formula (c))} = 2\times I_{\gamma\gamma} \text{ ... (Expression c-8)}$$

Moreover, $\beta\delta$ appears in the structural formula (d) in which three or more ethylene chains exist, and the integrated intensity of $\beta\delta$ of the structural formula (d) is equal to the integrated intensity of $\gamma\delta$ and (Expression c-9) holds.

$$I_{\beta\delta} \text{ (structural formula (d))} = I_{\gamma\delta} \text{ ... (Expression c-9)}$$

Accordingly, βδ based on the structural formula (c) and the structural formula (d) is determined by (Expression c-10).

$$I_{\beta\delta} = I_{\beta\delta} \text{ (structural formula (c))} + I_{\beta\delta} \text{ (structural formula (d))} = 2\times I_{\gamma\gamma}+I_{\gamma\delta} \text{ ... (Expression c-10)}$$

That is,

$$I_{\gamma\gamma} = (I_{\beta\delta}-I_{\gamma\delta})/2 \text{ ... (Expression c-10')}$$

Accordingly, when (Expression c-10') is substituted into (Expression c-5), IE can be replaced by (Expression c-11).

$$IE = (I_{\beta\beta}+I_{\delta\delta})/2+(I_{\alpha\gamma(P)}+I_{\alpha\delta(P)}+I_{\alpha\gamma(B)}+I_{\alpha\delta(B)}+3\times I_{\beta\delta}+I_{\gamma\delta})/4 \text{ ... (Expression c-11)}$$

Here, the βδ signal becomes (Expression c-12) with correcting the overlap of ethyl branch based on 1-butene.

$$I_{\beta\delta} = I_{\alpha\gamma(P)}+I_{\alpha\delta(P)}+I_{\alpha\gamma(B)}+I_{\alpha\delta(B)}-2\times I_{\beta\beta} \text{ ... (Expression c-12)}$$

From (Expression c-11) and (Expression c-12), IE becomes (Expression c-13).

$$IE = I_{\delta\delta}/2+I_{\gamma\delta}/4-I_{\beta\beta}+I_{\alpha\gamma(P)}+I_{\alpha\delta(P)}+I_{\alpha\gamma(B)}+I_{\alpha\delta(B)} \text{ ... (Expression c-13)}$$

The ethylene content is determined by substituting the following into (Expression c-13), (Expression c-6), and (Expression c-7).

$I_{\beta\beta} = I_{25.2\text{-}23.8}$
$I_{\gamma\delta} = I_{30.4\text{-}30.2}$
$I_{\delta\delta} = I_{30.2\text{-}29.8}$

$$I_{\alpha\gamma(P)}+I_{\alpha\delta(P)} = I_{39.5\text{-}37.3}$$

$$I_{\alpha\gamma(B)}+I_{\alpha\delta(B)} = I_{34.6\text{-}33.9}$$

$I_{CH3(P)} = I_{22.6\text{-}19.0}$

$$I_{CH(P)} = I_{29.5\text{-}27.6}+I_{31.2\text{-}30.4}+I_{33.4\text{-}32.8}$$

$I_{\alpha\alpha(PP)} = I_{48.0\text{-}45.0}$
$I_{CH3(B)} = I_{11.4\text{-}10.0}$

$$I_{CH(B)} = I_{35.5\text{-}34.7}+I_{37.4\text{-}36.8}+I_{39.7\text{-}39.6}$$

$I_{\alpha\alpha(BB)} = I_{40.3\text{-}40.0}$

$I_{\alpha\alpha(PB)} = I_{44.2\text{-}42.0}$
$I_{2B2} = I_{26.7\text{-}26.4}$

Incidentally, for assigning each signal, the following five literatures are referred to.
Macromolecules, Vol. 10, No. 4, 1977,
Macromolecules, Vol. 36, No. 11, 2003,
Analytical Chemistry, Vol. 76, No. 19, 2004,
Macromolecules, 2001, 34, 4757-4767,
Macromolecules, Vol. 25, No. 1, 1992.

Also in the case where the α-olefin of the ethylene-α-olefin random copolymer is other than the aforementioned case, the ethylene content [E(C)] can be determined in the same manner as in the aforementioned case with assigning each signal.

(c2) Density

The density of the ethylene-α-olefin random copolymer (C) is necessarily 0.850 to 0.950 g/cm$^3$, more preferably 0.855 to 0.900 g/cm$_3$, further preferably 0.860 to 0.890 g/cm$^3$. In the above range, sufficient adhesive strength can be exhibited at the time of three-dimensional decorative thermoforming and further, film formability is also satisfactory.

(c3) Melt Flow Rate (MFR(C))

The melt flow rate (230°C, a load of 2.16 kg) of the ethylene-α-olefin random copolymer (C) (MFR(C)) is necessarily 0.1 to 100 g/10 minutes, preferably 0.5 to 50 g/10 minutes, further preferably 1 to 30 g/10 minutes. In the above range, an effect of making the scratches formed on the substrate inconspicuous is high.

(c4) Melting Peak Temperature (Tm(C))

The melting peak temperature (DSC melting peak temperature) of the ethylene-α-olefin random copolymer (C) Tm(C) is preferably 30 to 130°C, more preferably 35 to 120°C, further preferably 40 to 110°C. In the above range, sufficient adhesive strength can be exhibited at the time of three-dimensional decorative thermoforming.

(c5) α-Olefin of Ethylene-α-Olefin Random Copolymer (C)

The ethylene-α-olefin random copolymer (C) is preferably a copolymer of ethylene and an α-olefin having 3 to 20 carbon atoms. As the α-olefin having 3 to 20 carbon atoms, there may be specifically mentioned propylene, 1-butene, 1-pentene, 1-hexene, 4-methyl-1-pentene, 1-heptene, 1-octene, 1-decene, 1-dodecene, 1-tetradecene, 1-hexadecene, 1-eicocene, and the like. Of these, particularly, propylene, 1-butene, 1-hexene, and 1-octene are preferably used.

Such an ethylene-α-olefin random copolymer (C) is produced by copolymerizing respective monomers in the presence of a catalyst. Specifically, the ethylene-α-olefin random copolymer (C) can be produced by copolymerizing ethylene and an α-olefin such as propylene, 1-butene, 1-hexene, 4-methyl-1-pentene, or 1-octene through a process such as a vapor-phase process, a solution process, a high-pressure process, or a slurry process using a catalyst such as a Ziegler catalyst, a Philips catalyst, or a metallocene catalyst as a polymerization catalyst of olefins.

Moreover, the ethylene-α-olefin random copolymer (C) to be used for the sealing layer (I) of the present embodiment can be used singly or in combination of two or more thereof within a range where the advantages of the invention are not impaired.

As commercially available products of such a ethylene-α-olefin random copolymer (C), there may be mentioned Kernel series manufactured by Japan Polyethylene Corporation, TAFMER P series and TAFMER A series manufactured by Mitsui Chemicals, Inc., Engage EG series manufactured by DowDuPont Inc., and the like.

{Resin Composition (X)}

The resin composition (X) constituting the sealing layer (I) contains the polypropylene-based resin (A) and the ethylene-α-olefin random copolymer (C) as main components, and may be a mixture of the polypropylene-based resin (A) and the ethylene-α-olefin random copolymer (C) or a melt-kneaded product thereof, or a sequentially polymerized product of the polypropylene-based resin (A) and the ethylene-α-olefin random copolymer (C).

In the resin composition (X) of the sealing layer (I), the weight ratio of the polypropylene-based resin (A) to the ethylene-α-olefin random copolymer (C) ((A):(C)) is necessarily selected in the range of 97:3 to 5:95 and is preferably 95:5 to 10:90, more preferably 93:7 to 20:80. In the above range, sufficient adhesive strength can be exhibited at the

time of three-dimensional decorative thermoforming, heating time of the film can be shortened, and also, the adhesiveness between the sealing layer (I) and the layer (II) is satisfactory.

The resin composition (X) constituting the sealing layer (I) may contain an additive, a filler, other resin components, and the like. However, the total amount of the additive, filler, other resin components, and the like is preferably 50% by weight or less relative to the resin composition (X).

As the additive, there can be blended known various additives that can be used for a polypropylene-based resin, such as an antioxidant, a neutralizing agent, a light stabilizer, a UV absorber, a crystal nucleating agent, a blocking inhibitor, a lubricant, an antistatic agent, and a metal inactivating agent.

As the antioxidant, phenol-based antioxidants, phosphite-based antioxidants, thio-based antioxidants, and the like can be exemplified. As the neutralizing agent, higher fatty acid salts such as calcium stearate and zinc stearate can be exemplified. As the light stabilizer and the UV absorber, hindered amines, benzotriazoles, benzophenones, and the like can be exemplified.

As the crystal nucleating agent, aromatic carboxylic acid metal salts, aromatic phosphoric acid metal salts, sorbitol-based derivatives, metal salts and the like of rosin, amide-based nucleating agents, and the like can be exemplified. Of these crystal nucleating agents, there can be exemplified aluminum p-t-butylbenzoate, 2,2'-methylenebis(4,6-di-t-butylphenyl) sodium phosphate, 2,2'-methylenebis(4,6-di-t-butylphenyl) aluminum phosphate, a complex of bis(2,4,8,10-tetra-tert-butyl-6-hydroxy-12H-dibenzo[d,g][1,2,3]dioxaphosphocin-6-oxide) aluminum hydroxide salt and an organic compound, p-methyl-benzylidenesorbitol, p-ethyl-benzylidenesorbitol, 1,2,3-trideoxy-4,6:5,7-bis-[(4-propylphenyl)methylene]-nonitol, sodium salt of rosin, and the like.

As the lubricant, higher fatty acid amides such as stearic acid amide can be exemplified. As the antistatic agent, fatty acid partial esters such as glycerol fatty acid monoesters can be exemplified. As the metal inactivating agent, triazines, phosphones, epoxys, triazoles, hydrazides, oxamides, and the like can be exemplified.

As the filler, there can be blended known various fillers that can be used for a polypropylene-based resin, such as inorganic fillers and organic fillers. As the inorganic fillers, there can be exemplified calcium carbonate, silica, hydrotalcite, zeolite, aluminum silicate, magnesium silicate, glass fibers, carbon fibers, and the like. Moreover, as the organic fillers, crosslinked rubber fine particles, thermosetting resin fine particles, thermosetting resin hollow fine particles and the like can be exemplified.

As the other resin components, there can be exemplified modified polyolefins, petroleum resins, other thermoplastic resins, and the like.

The resin composition (X) can be produced by a method of melt-kneading a polypropylene-based resin (A), an ethylene-α-olefin random copolymer (C), an additive, a filler, other resin components, and the like, a method of melt-kneading a polypropylene-based resin (A), an additive, a filler, and the like and dry blending an ethylene-α-olefin random copolymer (C) into the melt blended one, or a method of adding a polypropylene-based resin (A) to an ethylene-α-olefin random copolymer (C) and dry blending a master batch in which an additive, a filler, other resin components, and the like are dispersed in a carrier resin in a high concentration.

[4. Sealing Layer (I) composed of Resin Composition (X) containing Polypropylene-based Resin (A) and Thermoplastic Elastomer (D) as Main Components]

As one embodiment of the decorative film in the present invention, in addition to the layer (II), the decorative film can further include a sealing layer (I) composed of a resin composition (X) containing a polypropylene-based resin (A) and a thermoplastic elastomer (D) as main components, the weight ratio of the polypropylene-based resin (A) to the thermoplastic elastomer (D) being 97:3 to 5:95. It is preferred that the polypropylene-based resin (A) satisfies the following requirement (a2) and the thermoplastic elastomer (D) satisfies the following requirements (d1) to (d3):

(a2) the melt flow rate (MFR(A)) (230°C, a load of 2.16 kg) is more than 0.5 g/10 minutes,
(d1) the thermoplastic elastomer (D) is a thermoplastic elastomer in which at least one of propylene and butene is a main component,
(d2) the density is 0.850 to 0.950 g/cm$^3$, and
(d3) the MFR(D) (230°C, a load of 2.16 kg) is 0.1 to 100 g/10 minutes.

The sealing layer (I) in the present embodiment is a layer that comes into contact with the resin molded body (substrate) at the time of three-dimensional decorative thermoforming. By providing the sealing layer (I), sufficient adhesive strength can be exhibited at the time of three-dimensional decorative thermoforming even when the heating time of the film is short and further, scratches formed on the substrate surface can be made inconspicuous.

{Polypropylene-based Resin (A)}

As the polypropylene-based resin (A) in the present embodiment, there may be selected one of various types of propylene-based polymers, such as propylene homopolymer (homopolypropylene), a propylene-α-olefin copolymer (random polypropylene), and a propylene block copolymer (block polypropylene), or a combination thereof. The propylene-based polymer preferably contains 50 mol% or more of a polymerization unit derived from a propylene monomer. The propylene-based polymer preferably does not contain a polymerization unit derived from a polar group-containing monomer.

(a2) Melt flow rate (MFR(A))

The melt flow rate (MFR(A)) (230°C, a load of 2.16 kg) of the polypropylene-based resin (A) contained in the sealing layer (I) is necessarily more than 0.5 g/10 minutes (requirement (a2)), and is preferably 1 g/10 minutes or more, more preferably 2 g/10 minutes or more. In the above range, the relaxation at the time of three-dimensional decorative thermoforming sufficiently proceeds and sufficient adhesive strength can be exhibited, and also the scratches formed on the substrate becomes inconspicuous. An upper limit of MFR(A) is not limited but is preferably 100 g/10 minutes or less. In the above range, deterioration of the adhesive strength resulting from a decrease in physical properties does not occur.

In the present embodiment, MFR of the polypropylene-based resin and the polypropylene-based resin composition to be mentioned later is measured at 230°C under a load of 2.16 kg in accordance with ISO 1133:1997 Conditions M. The unit is g/10 minutes.

(a3) Melting peak temperature (Tm(A))

The melting peak temperature (DSC melting peak temperature, herein, there is a case where it is referred to as "melting point") of the polypropylene-based resin (A) (Tm(A)) is preferably 110°C or higher, more preferably 115°C or higher, further preferably 120°C or higher. In the above range, formability at the time of three-dimensional decorative thermoforming is satisfactory. An upper limit of the melting peak temperature is not limited but is preferably 170°C or lower. In the above range, sufficient adhesive strength can be exhibited.

The polypropylene-based resin (A) in the present embodiment is preferably a resin polymerized by means of a Ziegler catalyst, a metallocene catalyst, or the like. That is, the polypropylene-based resin (A) may be a Ziegler catalyst-based propylene polymer or a metallocene catalyst-based propylene polymer.

{Thermoplastic Elastomer (D)}

The thermoplastic elastomer (D) to be used as an essential component in the sealing layer of the present embodiment has the following requirements (d1) to (d3), and preferably further has requirements (d4) and/or (d5):

(d1) it is a thermoplastic elastomer in which at least one of propylene and butene is a main component,
(d2) density is 0.850 to 0.950 g/cm$^3$,
(d3) MFR(D) (230°C, a load of 2.16 kg) is 0.1 to 100 g/10 minutes,
(d4) melting peak temperature Tm(D) is 30 to 170°C, and
(d5) ethylene content [E(D)] is less than 50% by weight.

(d1) Composition

The thermoplastic elastomer (D) of the present embodiment is a thermoplastic elastomer in which at least one of propylene and butene is a main component. Here, the term "thermoplastic elastomer in which at least one of propylene and butene is a main component" includes (i) a thermoplastic elastomer in which butene is a main component, (ii) a thermoplastic elastomer in which propylene is a main component, and (iii) a thermoplastic elastomer in which components of propylene and butene altogether are main components. The unit "wt%" means % by weight.

The content of propylene or butene in the thermoplastic elastomer (D) is not particularly limited but is preferably 30% by weight or more, more preferably 40% by weight or more, further preferably 50% by weight or more. For example, the thermoplastic elastomer (D) can contain propylene or butene in an amount of more than 35% by weight.

Moreover, the thermoplastic elastomer (D) may contain both of propylene and butene and, in that case, components of propylene and butene altogether are main components of the thermoplastic elastomer (D). The total of the contents of propylene and butene is preferably 30% by weight or more, more preferably 40% by weight or more, further preferably 50% by weight or more. In the case where both of propylene and butene are contained, for example, the

thermoplastic elastomer (D) can contain propylene and butene in an amount of more than 35% by weight in total.

In the above range, sufficient adhesive strength can be exhibited at the time of three-dimensional decorative thermoforming, heating time of the film can be shortened, and the effect of making the scratches formed on the substrate inconspicuous is high. Incidentally, the thermoplastic elastomer in which propylene or butene is a main component has high uniform dispersibility into the polypropylene-based resin (C) and it is considered that this fact further enhances the effect of making the scratches formed on the substrate inconspicuous. Incidentally, the thermoplastic elastomer (D) may be composed of propylene or butene as a sole component.

(d2) Density

The density of the thermoplastic elastomer (D) is necessarily 0.850 to 0.950 g/cm$^3$, preferably 0.855 to 0.940 g/cm$^3$, further preferably 0.860 to 0.93 g/cm$^3$. In the above range, sufficient adhesive strength can be exhibited at the time of three-dimensional decorative thermoforming, and further, film formability also becomes satisfactory.

(d3) Melt Flow Rate (MFR(D))

The melt flow rate (MFR(D)) (230°C, a load of 2.16 kg) of the thermoplastic elastomer (D) is necessarily 0.1 to 100 g/10 minutes, preferably 0.5 to 50 g/10 minutes, further preferably 1 to 30 g/10 minutes. In the above range, the effect of making the scratches formed on the substrate inconspicuous is high.

(d4) Melting Peak Temperature (Tm(D))

The melting peak temperature (DSC melting peak temperature) of the thermoplastic elastomer (D) Tm(D) is preferably 30 to 170°C, more preferably 35 to 168°C, further preferably 40 to 165°C or higher. In the above range, sufficient adhesive strength can be exhibited at the time of three-dimensional decorative thermoforming.

(d5) Ethylene Content [E(D)]

The thermoplastic elastomer (D) of the present embodiment may be appropriately selected and used as long as it satisfies the aforementioned requirements (d1) to (d3) but is preferably a propylene-ethylene copolymer having an ethylene content of less than 50% by weight, a butene-ethylene copolymer having an ethylene content of less than 50% by weight, a propylene-ethylene-butene copolymer having an ethylene content of less than 50% by weight, a propylene-butene copolymer, or butene homopolymer.

The ethylene content [E(D)] of the propylene-ethylene copolymer, butene-ethylene copolymer or propylene-ethylene-butene copolymer is more preferably 45% by weight or less, further preferably 40% by weight or less. In the above range, sufficient adhesive strength can be exhibited at the time of three-dimensional decorative thermoforming.

(Calculation Method of Ethylene Content [E(D)])

In the case where the thermoplastic elastomer (D) is an elastomer containing ethylene, the ethylene content [E(D)] of the thermoplastic elastomer (D) can be determined from integrated intensity obtained by $^{13}$C-NMR measurement.

(Calculation Method 1 (Binary System))

First, there is described a method of calculating the ethylene content [E(D)] in a binary system elastomer (propylene-ethylene copolymer or butene-ethylene copolymer, etc.) composed of two kinds of repeating units. The ethylene content of an ethylene-α-olefin binary copolymer can be determined according to (Expression d1-1) and (Expression d1-2).

$$\text{Ethylene content (mol\%)} = IE \times 100/(IE+IX) \text{ ... (Expression d1-1)}$$

$$\text{Ethylene content (\% by weight)} = [\text{Ethylene content (mol\%)} \times \text{Molecular weight of ethylene} \times 100]/[\text{Ethylene content (mol\%)} \times \text{Molecular weight of ethylene} + \alpha\text{-Olefin content (mol\%)} \times \text{Molecular weight of } \alpha\text{-olefin}] \text{ ... (Expression d1-2)}$$

Here, IE and IX are integrated intensity of ethylene and integrated intensity of the α-olefin, respectively, and can be determined according to the following (Expression d-2) and (Expression d-3), respectively.

$$IE = (I_{\beta\beta}+I_{\gamma\gamma}+I_{\beta\delta}+I_{\gamma\delta}+I_{\delta\delta})/2+(I_{\alpha\gamma}+I_{\alpha\delta})/4 \text{ ... (Expression d-2)}$$

$$IX = I_{\alpha\alpha}+(I_{\alpha\gamma}+I_{\alpha\delta})/2 \text{ ... (Expression d-3)}$$

Here, the subscripts of I of the right side indicate carbons described in the following structural formulae (a) to (d). For example, αα indicates a methylene carbon based on an α-olefin chain, and $I_{\alpha\alpha}$ represents integrated intensity of the signal of the methylene carbon based on the α-olefin chain.

[Chem 4]

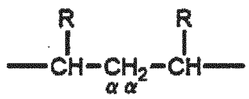

Structural formula (a)

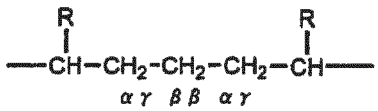

Structural formula (b)

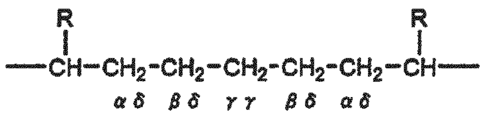

Structural formula (c)

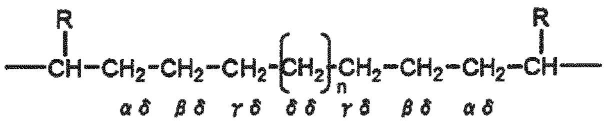

Structural formula (d)

In the structural formula (d), n represents an odd number of 1 or more.
The following will describe integrated intensity to be used in (Expression d-2) and (Expression d-3).
In the case of a propylene-ethylene copolymer, the following values of integrated intensity are substituted into (Expression d-2) and (Expression d-3) to determine the ethylene content [E(D)].

$I_{\beta\beta} = I_{25.0\text{-}24.2}$
$I_{\gamma\gamma} = I_{30.8\text{-}30.6}$
$I_{\beta\delta} = I_{27.8\text{-}26.8}$
$I_{\gamma\delta} = I_{30.6\text{-}30.2}$
$I_{\delta\delta} = I_{30.2\text{-}28.0}$
$I_{\alpha\alpha} = I_{48.0\text{-}43.9}$

$$I_{\alpha\gamma}+I_{\alpha\delta} = I_{39.0\text{-}36.2}$$

Here, I represents integrated intensity and the subscript numerals of I of the right side indicate a range of chemical shift. For example, $I_{39.0\text{-}36.2}$ indicates integrated intensity of $^{13}C$ signals detected between 39.0 ppm and 36.2 ppm.
As for the chemical shift, the $^{13}C$ signal of hexamethyldisiloxane is set at 1.98 ppm and the chemical shift of the signal derived from another $^{13}C$ uses it as a reference.
In the case of a butene-ethylene copolymer, the following values of integrated intensity are substituted into (Expression d-2) and (Expression d-3) to determine the ethylene content [E(D)].

$I_{\beta\beta} = I_{24.6\text{-}24.4}$

$I_{\gamma\gamma} = I_{30.9-30.7}$
$I_{\beta\delta} = I_{27.8-26.8}$
$I_{\gamma\delta} = I_{30.5-30.2}$
$I_{\delta\delta} = I_{30.2-28.0}$
$I_{\alpha\alpha} = I_{39.3-38.1}$

$$I_{\alpha\gamma}+I_{\alpha\delta} = I_{34.5-33.8}$$

(Calculation Method 2 (Ternary System))

Next, there is explained a method of calculating the ethylene content [E(D)] in a ternary copolymer composed of three kinds of repeating units. For example, the ethylene content of an ethylene-propylene-butene ternary copolymer can be determined according to the following (Expression d4-1) and (Expression d4-2).

$$\text{Ethylene content (mol\%)} = IE\times100/(IE+IP+IB) \text{ ... (Expression d4-1)}$$

Ethylene content[E(D)] (% by weight) = [Ethylene content (mol%) × Molecular weight of ethylene × 100]/[Ethylene content (mol%) × Molecular weight of ethylene + Propylene content (mol%) × Molecular weight of propylene + Butene content (mol%) × Molecular weight of butene] ... (Expression d4-2)

Here, IE, IP, and IB are integrated intensity values of ethylene, propylene, and butene, respectively, and can be determined according to (Expression d-5), (Expression d-6), and (Expression d-7).

$$IE = (I_{\beta\beta}+I_{\gamma\gamma}+I_{\beta\delta}+I_{\gamma\delta}+I_{\delta\delta})/2+(I_{\alpha\gamma(P)}+I_{\alpha\delta(P)}+I_{\alpha\gamma(B)}+I_{\alpha\delta(B)})/4 \text{ ... (Expression d-5)}$$

$$IP = 1/3\times[I_{CH3(P)}+I_{CH(P)}+I_{\alpha\alpha(PP)}+1/2\times(I_{\alpha\alpha(PB)}+I_{\alpha\gamma(P)}+I_{\alpha\delta(P)})] \text{ ... (Expression d-6)}$$

$$IB = 1/4\times[(I_{CH3(B)}+I_{CH(B)}+I_{2B2}+I_{\alpha\alpha(BB)})+1/2\times(I_{\alpha\alpha(PB)}+I_{\alpha\gamma(B)}+I_{\alpha\delta(B)})] \text{ ... (Expression d-7)}$$

Here, the subscript (P) means that the signal is a signal based on the methyl group branch derived from propylene and similarly, the subscript (B) means that the signal is a signal based on the ethyl group branch derived from butene.

Moreover, αα(PP) means a signal of a methylene carbon based on a propylene chain, and similarly, αα(BB) means a signal of a methylene carbon based on a butene chain and αα(PB) means a signal of a methylene carbon based on a propylene-butene chain.

Here, since the γγ signal overlaps with the skirt of the signal of a methine carbon CH of central propylene aligned as propylene-propylene-ethylene (PPE), it is difficult to separate the signal of γγ.

The γγ signal appears in the structural formula (c) containing two ethylene chains, and (Expression d-8) holds between the integrated intensity of γγ derived from ethylene and the integrated intensity of βδ of the structural formula (c).

$$I_{\beta\delta} \text{ (structural formula (c))} = 2\times I_{\gamma\gamma} \text{ ... (Expression d-8)}$$

Moreover, βδ appears in the structural formula (d) in which three or more ethylene chains exist, and the integrated

intensity of $\beta\delta$ of the structural formula (d) is equal to the integrated intensity of $\gamma\beta$ and (Expression d-9) holds.

$$I_{\beta\delta} \text{ (structural formula (d))} = I_{\gamma\delta} \text{ ... (Expression d-9)}$$

Accordingly, $\beta\delta$ based on the structural formula (c) and the structural formula (d) is determined by (Expression d-10).

$$I_{\beta\delta} = I_{\beta\delta} \text{ (structural formula (c))} + I_{\beta\delta} \text{ (structural formula (d))} = 2\times I_{\gamma\gamma}+I_{\gamma\delta} \text{ ... (Expression d-10)}$$

That is,

$$I_{\gamma\gamma} = (I_{\beta\delta}-I_{\gamma\delta})/2 \text{ ... (Expression d-10')}$$

Accordingly, when (Expression d-10') is substituted into (Expression d-5), IE can be replaced by (Expression d-11).

$$IE = (I_{\beta\beta}+I_{\delta\delta})/2+(I_{\alpha\gamma(P)}+I_{\alpha\delta(P)}+I_{\alpha\gamma(B)}+I_{\alpha\delta(B)}+3\times I_{\beta\delta}+I_{\gamma\delta})/4 \text{ ... (Expression d-11)}$$

Here, the $\beta\delta$ signal becomes (Expression d-12) with correcting the overlap of ethyl branch based on 1-butene.

$$I_{\beta\delta} = I_{\alpha\gamma(P)}+I_{\alpha\delta(P)}+I_{\alpha\gamma(B)}+I_{\alpha\delta(B)}-2\times I_{\beta\beta} \text{ ... (Expression d-12)}$$

From (Expression d-11) and (Expression d-12), IE becomes (Expression d-13).

$$IE = I_{\delta\delta}/2+I_{\gamma\delta}/4-I_{\beta\beta}+I_{\alpha\gamma(P)}+I_{\alpha\delta(P)}+I_{\alpha\gamma(B)}+I_{\alpha\delta(B)} \text{ ... (Expression d-13)}$$

The ethylene content is determined by substituting the following into (Expression d-13), (Expression d-6), and (Expression d-7).

$I_{\beta\beta} = I_{25.2\text{-}23.8}$
$I_{\gamma\delta} = I_{30.4\text{-}30.2}$
$I_{\delta\delta} = I_{30.2\text{-}29.8}$

$$I_{\alpha\gamma(P)}+I_{\alpha\delta(P)} = I_{39.5\text{-}37.3}$$

$$I_{\alpha\gamma(B)}+I_{\alpha\delta(B)} = I_{34.6\text{-}33.9}$$

$I_{CH3(P)} = I_{22.6\text{-}19.0}$

$$I_{CH(P)} = I_{29.5\text{-}27.6}+I_{31.2\text{-}30.4}+I_{33.4\text{-}32.8}$$

$I_{\alpha\alpha(PP)} = I_{48.0\text{-}45.0}$
$I_{CH3(B)} = I_{11.4\text{-}10.0}$

$$I_{CH(B)} = I_{35.5\text{-}34.7}+I_{37.4\text{-}36.8}+I_{39.7\text{-}39.6}$$

$I_{\alpha\alpha(BB)} = I_{40.3\text{-}40.0}$

$I_{\alpha\alpha(PB)} = I_{44.2\text{-}42.0}$
$I_{2B2} = I_{26.7\text{-}26.4}$

Incidentally, for assigning each signal, the following five literatures are referred to.
Macromolecules, Vol. 10, No. 4, 1977,
Macromolecules, Vol. 36, No. 11, 2003,
Analytical Chemistry, Vol. 76, No. 19, 2004,
Macromolecules, 2001, 34, 4757-4767,
Macromolecules, Vol. 25, No. 1, 1992.

Moreover, the thermoplastic elastomer (D) may be a copolymer with an α-olefin other than propylene and butene as long as the copolymer does not impair the advantages of the present invention. As the α-olefin, there may be specifically mentioned ethylene, 1-pentene, 1-hexene, 4-methyl-1-pentene, 1-heptene, 1-octene, 1-decene, 1-dodecene, 1-tetradecene, 1-hexadecene, 1-eicocene, and the like. These α-olefins may be used singly or as a combination. Of these, particularly, 1-hexene and 1-octene are preferably used.

Such a thermoplastic elastomer is produced by copolymerizing respective monomers in the presence of a catalyst. Specifically, such a thermoplastic elastomer can be produced by copolymerizing α-olefins such as propylene, 1-butene, ethylene, 1-hexene, 4-methyl-1-pentene, and/or 1-octene through a process such as a vapor-phase process, a solution process, a high-pressure process, or a slurry process using a catalyst such as a Ziegler catalyst, a Philips catalyst, or a metallocene catalyst as a polymerization catalyst of olefms.

Moreover, the thermoplastic elastomer (D) to be used selectively for the sealing layer (I) of the present embodiment can be used singly or in combination of two or more thereof within a range where the advantages of the invention are not impaired.

As commercially available products of such a thermoplastic elastomer (D), there may be mentioned TAFMER XM series, TAFMER BL series, and TAFMER PN series manufactured by Mitsui Chemicals, Inc., VISTAMAXX series manufactured by Exxon Mobil Chemical, Corporation, and the like.

{Resin Composition (X)}

The resin composition (X) constituting the sealing layer (I) contains the polypropylene-based resin (A) and the thermoplastic elastomer (D) as main components. The resin composition (X) may be a mixture of the polypropylene-based resin (A) and the thermoplastic elastomer (D) or a melt-kneaded product thereof or a sequentially polymerized product of the polypropylene-based resin (A) and the thermoplastic elastomer (D).

In the resin composition (X) constituting the sealing layer (I), the weight ratio of the polypropylene-based resin (A) to the thermoplastic elastomer (D) ((A):(D)) is necessarily composed in the ratio of 97:3 to 5:95 and is preferably 95:5 to 10:90, more preferably 93:7 to 20:80. In the above range, sufficient adhesive strength can be exhibited at the time of three-dimensional decorative thermoforming, heating time of the film can be shortened, and also, the adhesiveness between the sealing layer (I) and the layer (II) becomes satisfactory.

The resin composition (X) may contain an additive, a filler, other resin components, and the like. However, the total amount of the additive, filler, other resin components, and the like is preferably 50% by weight or less relative to the resin composition (X).

As the additive, there can be blended known various additives that can be used for a polypropylene-based resin, such as an antioxidant, a neutralizing agent, a light stabilizer, a UV absorber, a crystal nucleating agent, a blocking inhibitor, a lubricant, an antistatic agent, and a metal inactivating agent.

As the antioxidant, phenol-based antioxidants, phosphite-based antioxidants, thio-based antioxidants, and the like can be exemplified. As the neutralizing agent, higher fatty acid salts such as calcium stearate and zinc stearate can be exemplified. As the light stabilizer and the UV absorber, hindered amines, benzotriazoles, benzophenones, and the like can be exemplified.

As the crystal nucleating agent, aromatic carboxylic acid metal salts, aromatic phosphoric acid metal salts, sorbitol-based derivatives, metal salts and the like of rosin, amide-based nucleating agents, and the like can be exemplified. Of these crystal nucleating agents, there can be exemplified aluminum p-t-butylbenzoate, 2,2'-methylenebis(4,6-di-t-butylphenyl) sodium phosphate, 2,2'-methylenebis(4,6-di-t-butylphenyl) aluminum phosphate, a complex of bis(2,4,8,10-tetra-tert-butyl-6-hydroxy-12H-dibenzo[d,g][1,2,3]dioxaphosphocin-6-oxide) aluminum hydroxide salt and an organic compound, p-methyl-benzylidenesorbitol, p-ethyl-benzylidenesorbitol, 1,2,3-trideoxy-4,6:5,7-bis-[(4-propylphenyl)methylene]-nonitol, sodium salt of rosin, and the like.

As the lubricant, higher fatty acid amides such as stearic acid amide can be exemplified. As the antistatic agent, fatty acid partial esters such as glycerol fatty acid monoesters can be exemplified. As the metal inactivating agent, triazines, phosphones, epoxys, triazoles, hydrazides, oxamides, and the like can be exemplified.

As the filler, there can be blended known various fillers that can be used for a polypropylene-based resin, such

as inorganic fillers and organic fillers. As the inorganic fillers, there can be exemplified calcium carbonate, silica, hydrotalcite, zeolite, aluminum silicate, magnesium silicate, glass fibers, carbon fibers, and the like. Moreover, as the organic fillers, crosslinked rubber fine particles, thermosetting resin fine particles, thermosetting resin hollow fine particles and the like can be exemplified.

As the other resin components, there can be exemplified modified polyolefins, petroleum resins, other thermoplastic resins, and the like.

The resin composition (X) can be produced by a method of melt-kneading a polypropylene-based resin (A), a thermoplastic elastomer (D), an additive, a filler, other resin components, and the like, a method of melt-kneading a polypropylene-based resin (A), an additive, a filler, other resin components, and the like and dry blending a thermoplastic elastomer (D) into the melt blended one, or a method of adding a polypropylene-based resin (A) to a thermoplastic elastomer (D) and dry blending a master batch in which an additive, a filler, other resin components, and the like are dispersed in a carrier resin in a high concentration.

[5. Sealing Layer (I) composed of Resin Composition (X) containing Polypropylene-based Resin (A) and Thermoplastic Resin (E) as Main Components]

As one embodiment of the decorative film in the present invention, in addition to the layer (II), the decorative film may further includes a sealing layer (I) composed of a resin composition (X) containing a polypropylene-based resin (A) and a thermoplastic resin (E) as main components, the weight ratio of the polypropylene-based resin (A) and the thermoplastic resin (E) is 97:3 to 5:95. It is preferred that the polypropylene-based resin (A) satisfies the following requirement (c2), the thermoplastic resin (E) satisfies the following requirement (e1), and the resin composition (X) satisfies the following requirement (x1):

(a2) MFR(A) (230°C, a load of 2.16 kg) is more than 0.5 g/10 minutes,
(e1) it contains at least one of an alicyclic hydrocarbon group and an aromatic hydrocarbon group, and
(x1) isothermal crystallization time (t) (second) determined by a differential scanning calorimeter (DSC) satisfies the following relational expression (x-1):

$$t(X) \geq 1.5 \times t(A) \text{ ... Expression (x-1)}$$

wherein t(A) represents isothermal crystallization time (second) of the polypropylene-based resin (A) measured at a temperature 10°C higher than the crystallization initiation temperature of the polypropylene-based resin (A) and t(X) is isothermal crystallization time (second) of the resin composition (X) measured at a temperature that is 10°C higher than the crystallization initiation temperature of the polypropylene-based resin (A).

The sealing layer (I) in the present embodiment is a layer that comes into contact with the resin molded body (substrate) at the time of three-dimensional decorative thermoforming. By providing the sealing layer (I), sufficient adhesive strength can be exhibited at the time of three-dimensional decorative thermoforming even when the heating time of the film is short and further, scratches formed on the substrate surface can be made inconspicuous.

{Polypropylene-based Resin (A)}

As the polypropylene-based resin (A) in the present embodiment, there may be selected one of various types of propylene-based polymers, such as propylene homopolymer (homopolypropylene), a propylene-α-olefin copolymer (random polypropylene), and a propylene block copolymer (block polypropylene), or a combination thereof. The polypropylene-based polymer preferably contains 50 mol% or more of a polymerization unit derived from a propylene monomer. The propylene-based polymer preferably does not contain a polymerization unit derived from a polar group-containing monomer.

(a2) Melt Flow Rate (MFR(A))

The melt flow rate (MFR(A)) (230°C, a load of 2.16 kg) of the polypropylene-based resin (A) contained in the sealing layer (I) is necessarily more than 0.5/10 minutes (requirement (a2)), and is preferably 1 g/10 minutes or more, more preferably 2 g/10 minutes or more. In the above range, the relaxation at the time of three-dimensional decorative thermoforming sufficiently proceeds, sufficient adhesive strength can be exhibited, and also the scratches formed on the substrate becomes inconspicuous. An upper limit of MFR(A) is not limited but is preferably 100 g/10 minutes or less.

In the above range, deterioration of the adhesive strength by a decrease in physical properties does not occur.

In the present embodiment, MFR of the polypropylene-based resin and the polypropylene-based resin composition to be mentioned below is measured at 230°C under a load of 2.16 kg in accordance with ISO 1133:1997 Conditions M. The unit is g/10 minutes.

(a3) Melting Peak Temperature (Tm(A))

The melting peak temperature (DSC melting peak temperature, herein, there is a case where it is referred to as "melting point") (Tm(A)) of the polypropylene-based resin (A) is preferably 110°C or higher, more preferably 115°C or higher, further preferably 120°C or higher. In the above range, formability at the time of three-dimensional decorative thermoforming is satisfactory. An upper limit of the melting peak temperature is not limited but is preferably 170°C or lower. In the above range, sufficient adhesive strength can be exhibited.

The polypropylene-based resin (A) in the present embodiment is preferably a resin polymerized by means of a Ziegler catalyst, a metallocene catalyst, or the like. That is, the polypropylene-based resin (A) may be a Ziegler catalyst-based propylene polymer or a metallocene catalyst-based propylene polymer.

{Thermoplastic Resin (E)}

The thermoplastic resin (E) to be used in the sealing layer (1) of the present embodiment as an essential component is a component having a function of retarding the crystallization of the polypropylene-based resin (A) by incorporating the resin (E) into the polypropylene-based resin (A). By retarding the crystallization of the polypropylene-based resin (A), at the time of decorative forming, the adhesive force can be prevented from decreasing through crystallization (solidification) of the resin of the sealing layer (I) before thermal fusion of the sealing layer (I) to the substrate surface. As a result, strong adhesive force can be exhibited even when the heating time of the decorative film is short and also the effect of making the scratches formed on the substrate surface inconspicuous is high. The effect of retarding the crystallization of the polypropylene-based resin (A) is evaluated with isothermal crystallization temperature of the resin composition (X) to be mentioned later.

(e1) Resin Composition

The thermoplastic resin (E) in the present embodiment necessarily contains at least one of an alicyclic hydrocarbon group and an aromatic hydrocarbon group. When the thermoplastic resin (E) has the above characteristic, at the time of mixing it with the polypropylene-based resin (A), the effect of retarding the crystallization of the polypropylene-based resin (A) is expressed and the effect of making the scratches formed on the substrate surface inconspicuous is high.

Specifically, as the alicyclic hydrocarbon group, there may be mentioned a cyclopropyl group, a cyclobutyl group, a cyclopentyl group, a cyclohexyl group, a cyclooctyl group, and a substituted derivative, a condensed cyclic one, and a crosslinked one thereof, and the like. Especially, it is preferred to contain a cyclopentyl group or a cyclohexyl group.

As the aromatic hydrocarbon group, there may be mentioned a phenyl group, a methylphenyl group, a biphenyl group, an indenyl group, a fluorenyl group, and a substituted derivative, a condensed cyclic one, and a crosslinked one thereof, and the like. Especially, it is preferred to contain a phenyl group, a biphenyl group, or an indenyl group. Moreover, the alicyclic hydrocarbon group may be one obtained by hydrogenating an aromatic group contained in the resin.

Incidentally, as the thermoplastic resin (E), any one can be appropriately selected and used as long as it satisfies the aforementioned requirement (e1) but a styrene-based elastomer or an alicyclic hydrocarbon resin can be particularly preferably used and both of them may be contained.

As the styrene-based elastomer, there may be exemplified a styrene·butadiene·styrene triblock copolymer elastomer (SBS), a styrene·isoprene·styrene triblock copolymer elastomer (SIS), a styrene-ethylene·butylene copolymer elastomer (SEB), a styrene-ethylene·propylene copolymer elastomer (SEP), a styrene-ethylene·butyrene-styrene copolymer elastomer (SEBS), a styrene-ethylene·butyrene-ethylene copolymer elastomer (SEBC), a hydrogenated styrene·butadiene elastomer (HSBR), a styrene-ethylene·propylene-styrene copolymer elastomer (SEPS), a styrene-ethylene·ethylene·propylene-styrene copolymer elastomer (SEEPS), a styrene-butadiene·butylene-styrene copolymer elastomer (SBBS), and the like, and hydrogenated one can be particularly preferably used.

As commercially available products, there may be mentioned DYNARON series manufactured by JSR Corporation, Kraton G series manufactured by Kraton Polymer Japan Corporation, Tuftec series manufactured by Asahi Kasei Corporation, and the like.

As the alicyclic hydrocarbon resin, for example, there may be mentioned hydrocarbon resins obtained by polymerizing one of dicyclopentadiene derivatives such as dicyclopentadiene, methyldicyclopentadiene, and dimethyldicyclopentadiene or a mixture of two or more thereof as a main raw material, a hydrogenated coumarone·indene resin, a hydrogenated C9 petroleum resin, a hydrogenated C5 petroleum resin, a C5/C9 copolymer-based petroleum resin, a

hydrogenated terpene resin, a hydrogenated rosin resin, and the like. A commercially available product can be used, and specifically, Arkon series manufactured by Arakawa Chemical Industries, Ltd. and the like may be mentioned.

{Resin Composition (X)}

The resin composition (X) constituting the sealing layer (I) contains the polypropylene-based resin (A) and the thermoplastic resin (E) as main components and may be a mixture of the polypropylene-based resin (A) and the thermoplastic resin (E) or a melt-kneaded product thereof.

In the resin composition (X) constituting the sealing layer (I), the weight ratio of the polypropylene-based resin (A) to the thermoplastic resin (E) ((A):(E)) is necessarily selected from a range of 97:3 to 5:95 and is preferably 95:5 to 10:90, more preferably 93:7 to 20:80. Here, plural kinds of polypropylene-based resins (A) or thermoplastic resins (E) may be contained and, for example, in the case where a thermoplastic resin (E1) and a thermoplastic resin (E2) are contained, the total of the thermoplastic resin (E1) and the thermoplastic resin (E2) is taken as the weight of the thermoplastic resin (E). In the above range, sufficient adhesive strength can be exhibited at the time of three-dimensional decorative thermoforming, heating time of the film can be shortened, and also, the scratches formed on the substrate surface can be made inconspicuous. Furthermore, the adhesiveness between the sealing layer (I) and the layer (II) is satisfactory.

(x1) Isothermal Crystallization Time (t(X))

As for the resin composition (X), the isothermal crystallization time (t) (second) determined by a differential scanning calorimeter (DSC) necessarily satisfies the following relational expression (x-1), and satisfies preferably the relational expression (x-2), more preferably the relational expression (x-3):

$$t(X) \geq 1.5 \times t(A) \text{ ... Expression (x-1)}$$

$$t(X) \geq 2.0 \times t(A) \text{ ... Expression (x-2)}$$

$$t(X) \geq 2.5 \times t(A) \text{ ... Expression (x-3)}$$

wherein t(A) represents isothermal crystallization time (second) of the polypropylene-based resin (A) measured at a temperature 10°C higher than the crystallization initiation temperature of the polypropylene-based resin (A) and t(X) is isothermal crystallization time (second) of the resin composition (X) measured at a temperature that is 10°C higher than the crystallization initiation temperature of the polypropylene-based resin (A).

When the isothermal crystallization time (t(X)) of the resin composition (X) is in the above range, at the time of decorative forming, a time for thermal fusion of the sealing layer (I) of the decorative film to the substrate surface can be earned and effects of achieving high adhesive force and making the scratches formed on the substrate surface inconspicuous are high.

An upper limit of the isothermal crystallization time (t(X)) is not particularly limited but, when a relational expression $30 \times t(A) \geq t(X)$ is satisfied, the formability of the film is satisfactory and hence the case is more preferred.

(Measurement of Isothermal Crystallization Time by Differential Scanning Calorimeter (DSC))

The isothermal crystallization time in the present embodiment is a value measured using a differential scanning calorimeter (DSC) and is measured in accordance with JIS-K7121:2012 "Method for measuring transition temperature of plastics".

Specifically, 5 mg of a sample of the polypropylene-based resin (A) is placed in an aluminum-made holder and is heated from 40°C to 200°C at a rate of 10°C/min under a nitrogen atmosphere. After the temperature is kept at 200°C for 10 minutes, the resin is crystallized at a cooling rate of 10°C/minute to 40°C and crystallization initiation temperature is measured/calculated from the DSC curve at this time.

Next, 5 mg of a sample of the polypropylene-based resin (A) or the resin composition (X) is placed in an aluminum-made holder and is heated from 40°C to 200°C at a rate of 10°C/min under a nitrogen atmosphere and kept for 10 minutes to melt the sample. Subsequently, the sample is cooled at a rate of 40°C/min to a temperature (hereinafter sometimes referred to as "measurement temperature") 10°C higher than the crystallization initiation temperature of the

polypropylene-based resin (A) determined by the aforementioned method, and thereafter is kept at the measurement temperature, thus measuring behavior of crystallization and heat generation of the sample. A period from the time at which the temperature of the sample reaches the measurement temperature to the heat generation peak time is taken as the isothermal crystallization time. Here, since it is considered that the adhesive force is remarkably decreased only by slight crystallization of the sealing layer (I) of the decorative film at the time of decorative forming, in the case where two or more heat generation peaks at the isothermal crystallization measurement exist, the period to the first heat generation peak time is taken as the isothermal crystallization time.

Moreover, depending on the kind of the polypropylene-based resin (A), there is a possibility of occurrence of a case where the isothermal crystallization time of the polypropylene-based resin (A) is extremely short (e.g., 120 seconds or less) or long (e.g., 3,000 seconds or more) even in the measurement at the temperature 10°C higher than the crystallization initiation temperature. In that case, the isothermal crystallization time may be measured at a temperature 10±2°C higher than the crystallization initiation temperature. However, in the case of performing such measurement, the isothermal crystallization time of the resin composition (X) should be measured in conformity to the measurement temperature of the polypropylene-based resin (A).

The resin composition (X) constituting the sealing layer (I) may contain an additive, a filler, other resin components, and the like. However, the total amount of the additive, filler, other resin components, and the like is preferably 50% by weight or less relative to the resin composition (X).

As the additive, there can be blended known various additives that can be used for a polypropylene-based resin, such as an antioxidant, a neutralizing agent, a light stabilizer, a UV absorber, a crystal nucleating agent, a blocking inhibitor, a lubricant, an antistatic agent, and a metal inactivating agent.

As the antioxidant, phenol-based antioxidants, phosphite-based antioxidants, thio-based antioxidants, and the like can be exemplified. As the neutralizing agent, higher fatty acid salts such as calcium stearate and zinc stearate can be exemplified. As the light stabilizer and the UV absorber, hindered amines, benzotriazoles, benzophenones, and the like can be exemplified.

As the crystal nucleating agent, aromatic carboxylic acid metal salts, aromatic phosphoric acid metal salts, sorbitol-based derivatives, metal salts and the like of rosin, amide-based nucleating agents, and the like can be exemplified. Of these crystal nucleating agents, there can be exemplified aluminum p-t-butylbenzoate, 2,2'-methylenebis(4,6-di-t-butylphenyl) sodium phosphate, 2,2'-methylenebis(4,6-di-t-butylphenyl) aluminum phosphate, a complex of bis(2,4,8,10-tetra-tert-butyl-6-hydroxy-12H-dibenzo[d,g][1,2,3]dioxaphosphocin-6-oxide) aluminum hydroxide salt and an organic compound, p-methyl-benzylidenesorbitol, p-ethyl-benzylidenesorbitol, 1,2,3-trideoxy-4,6:5,7-bis-[(4-propylphenyl)methylene]-nonitol, sodium salt of rosin, and the like.

As the lubricant, higher fatty acid amides such as stearic acid amide can be exemplified. As the antistatic agent, fatty acid partial esters such as glycerol fatty acid monoesters can be exemplified. As the metal inactivating agent, triazines, phosphones, epoxys, triazoles, hydrazides, oxamides, and the like can be exemplified.

As the filler, there can be blended known various fillers that can be used for a polypropylene-based resin, such as inorganic fillers and organic fillers. As the inorganic fillers, there can be exemplified calcium carbonate, silica, hydrotalcite, zeolite, aluminum silicate, magnesium silicate, glass fibers, carbon fibers, and the like. Moreover, as the organic fillers, crosslinked rubber fine particles, thermosetting resin fine particles, thermosetting resin hollow fine particles and the like can be exemplified.

As the other resin components, there can be exemplified elastomers such as modified polyolefins and ethylene-$\alpha$-olefin copolymers, low density polyethylene, high density polyethylene, petroleum resins, other thermoplastic resins, and the like.

The resin composition (X) can be produced by a method of melt-kneading a polypropylene-based resin (A), a thermoplastic resin (E), an additive, a filler, other resin components, and the like, a method of melt-kneading a polypropylene-based resin (A), an additive, a filler, other resin components, and the like and dry blending a thermoplastic resin (E) into the melt blended one, or a method of adding a polypropylene-based resin (A) to a thermoplastic resin (E) and dry blending a master batch in which an additive, a filler, other resin components, and the like are dispersed in a carrier resin in a high concentration.

[6. Sealing Layer (I) composed of Propylene-Ethylene Block Copolymer (F)]

As one embodiment of the decorative film in the present invention, in addition to the layer (II), the decorative film can further includes a sealing layer (I) composed of a propylene-ethylene block copolymer (F). The propylene-ethylene block copolymer (F) preferably satisfies the following requirements (f1) to (f3):

(f1) it contains 5 to 97% by weight of a component (F1) composed of propylene homopolymer or a propylene-ethylene random copolymer and 3 to 95% by weight of a component (F2) composed of a propylene-ethylene random copolymer having an ethylene content larger than that of the component (F1).

(f2) MFR(F) (230°C, a load of 2.16 kg) is more than 0.5 g/10 minutes, and
(f3) melting peak temperature (Tm)(F) is 110 to 170°C.

The sealing layer (I) in the present embodiment is a layer that comes into contact with the resin molded body (substrate) at the time of three-dimensional decorative thermoforming. By providing the sealing layer (I), sufficient adhesive strength can be exhibited even when the heating time of the film is short at the time of three-dimensional decorative thermoforming and further, scratches formed on the substrate surface can be made inconspicuous.

{Propylene-Ethylene Block Copolymer (F)}

The propylene-ethylene block copolymer (F) of the present embodiment contains the component (F1) composed of propylene homopolymer or a propylene-ethylene random copolymer and the component (F2) composed of a propylene-ethylene random copolymer having an ethylene content larger than that of the component (F1). Owing to the component (F2) that is a rubber component in the propylene-ethylene block copolymer (F), the adhesive force with the resin molded body (substrate) is improved. Moreover, the component (F2) has high homogeneity to propylene in a dispersion form and thus exhibits a high effect of making the scratches inconspicuous.

The propylene-ethylene block copolymer (F) is obtained by (co)polymerization of the component (F1) composed of propylene alone or a propylene-ethylene random copolymer in a first polymerization step and sequential copolymerization of the component (F2) composed of a propylene-ethylene random copolymer having an ethylene content larger than that of the component (F1) in a second polymerization step.

(f1) Ratio of Component (F1) and Component (F2)

As for the content proportion of the ratio of the component (F1) and the ratio of the component (F2) constituting the propylene-ethylene block copolymer (F) in the present embodiment, it is necessary that the ratio of the component (F1) is 5 to 97% by weight and the ratio of the component (F2) is 3 to 95% by weight (requirement (fl)). Preferably, the ratio of the component (F1) is 30 to 95% by weight and the ratio of the component (F2) is 5 to 70% by weight and further preferably, the ratio of the component (F1) is 52 to 92% by weight and the ratio of the component (F2) is 8 to 48% by weight.

When the ratio of the component (F1) and the ratio of the component (F2) are in the above ranges, sufficient adhesive strength can be exhibited and the effect of making the scratches inconspicuous is high. Moreover, in the above ranges, the film is not sticky and film formability is satisfactory.

(f2) Melt Flow Rate (MFR(F))

The melt flow rate (MFR(F)) (230°C, a load of 2.16 kg) of the propylene-ethylene block copolymer (F) is necessarily more than 0.5/10 minutes (requirement (f2)), and is preferably 1 g/10 minutes or more, more preferably 2 g/10 minutes or more. When MFR(F) is in the above range, relaxation of the propylene-ethylene block copolymer (F) sufficiently proceeds at the time of three-dimensional decorative thermoforming and sufficient adhesive strength can be exhibited, and also the scratches formed on the substrate becomes inconspicuous. An upper limit of MFR(F) is not limited but is preferably 100 g/10 minutes or less. In the above range, deterioration of the adhesive strength by a decrease in physical properties does not occur.

In the present embodiment, MFR of the propylene-ethylene block copolymer (F), the polypropylene-based resin composition (B), and the polypropylene-based resin composition to be mentioned below is measured at 230°C under a load of 2.16 kg in accordance with ISO 1133:1997 Conditions M. The unit is g/10 minutes.

(f3) Melting Peak Temperature (Tm(F))

The melting point (melting peak temperature) of the propylene-ethylene block copolymer (F) (hereinafter referred to as "Tm(F)") is necessarily 110 to 170°C (requirement (f3)). It is preferably 113 to 169°C, more preferably 115 to 168°C. When Tm(F) is in the above range, formability at the time of three-dimensional decorative thermoforming is satisfactory. The melting peak temperature is mainly derived from the component (F1) having a small ethylene content, i.e., the component (F1) having high crystallinity and the melting peak temperature can be changed by the content of ethylene to be copolymerized.

(f4) Ethylene Content (E(F)) in Propylene-Ethylene Block Copolymer (F)

The ethylene content in the propylene-ethylene block copolymer (F) (hereinafter referred to as "E(F)") of the present embodiment is preferably 0.15 to 85% by weight. More preferred is 0.5 to 75% by weight and further preferred

is 2 to 50% by weight. When E(F) is in the above range, sufficient adhesive strength can be exhibited, the adhesiveness with the layer (II) of the decorative film is satisfactory, and the film formability is also excellent.

(f5) Ethylene Content of Component (F1) [E(F1)]

The component (F1) is preferably propylene homopolymer or a propylene-ethylene random copolymer which has a relatively high melting point and an ethylene content (hereinafter referred to as "E(F1)") ranging from 0 to 6% by weight. More preferred is 0 to 5% by weight. When E(F1) is in the above range, formability at the time of three-dimensional decorative thermoforming is satisfactory and also stickiness of the film is a little and film formability is also excellent.

(f6) Ethylene Content of Component (F2) [E(F2)]

In the component (F2), the ethylene content (hereinafter referred to as "E(F2)") is more than the ethylene content E(F1) of the component (F1). Moreover, the component (F2) is preferably a propylene-ethylene random copolymer having E(F2) ranging from 5 to 90% by weight. E(F2) is more preferably 7 to 80% by weight, further preferably 9 to 50% by weight. When E(F2) is in the above range, sufficient adhesive strength can be exhibited and the effect of making the scratches inconspicuous is high.

{Method for Producing Propylene-Ethylene Block Copolymer (F)}

The propylene-ethylene block copolymer (F) to be used in the present embodiment and the component (F1) composed of propylene homopolymer or the propylene-ethylene random copolymer and the component (F2) composed of the propylene-ethylene random copolymer, which constitute the copolymer (F), can be preferably produced by the following raw materials and polymerization method. The following will explain the method for producing the propylene-ethylene block copolymer (F) to be used in the present invention.

(Used Raw Materials)

As a catalyst to be used at the time of producing the propylene-ethylene block copolymer (F) to be used in the present embodiment, there can be used a magnesium-supported catalyst having magnesium, halogen, titanium, and an electron donor as catalyst components, a catalyst composed of a solid catalyst component having titanium trichloride as a catalyst and an organoaluminum, or a metallocene catalyst. Specific methods for producing the catalysts are not particularly limited but, for example, there can be exemplified the Ziegler catalyst disclosed in JP-A-2007-254671 and the metallocene catalyst disclosed in JP-A-2010-105197.

Moreover, the raw material olefins to be polymerized are propylene and ethylene and, if necessary, there can be also used other olefins, e.g., 1-butene, 1-hexene, 1-octene, 4-methyl-1-pentene, and the like in such an amount that the purpose of the present invention is not impaired.

(Polymerization Step)

The polymerization step to be performed in the presence of the above catalyst comprises multi-stages of a first polymerization step of producing the component (F1) and a second polymerization step of producing the component (F2).

- First Polymerization Step

The first polymerization step is a step of feeding propylene alone or a mixture of propylene/ethylene to a polymerization system to which the catalyst is added and producing propylene homopolymer or a propylene-ethylene random copolymer to form the component (F1) so as to be an amount that corresponds to 5 to 97% by weight of the total polymer amount.

MFR of the component (F1) (hereinafter referred to as "MFR(F1)" can be regulated by using hydrogen as a chain transfer agent. Specifically, when the concentration of hydrogen that is a chain transfer agent is increased, MFR(F1) of the component (F1) becomes high and vice versa. For increasing the concentration of hydrogen in a polymerization tank, it is sufficient to increase the feed amount of hydrogen to the polymerization tank and the regulation is extremely easy for one skilled in the art. Moreover, in the case where the component (F1) is a propylene-ethylene random copolymer, as a method for controlling the ethylene content, it is convenient to use a method of controlling the amount of ethylene to be fed to the polymerization tank. Specifically, when the amount ratio of ethylene to propylene (ethylene feed amount/propylene feed amount) to be fed to the polymerization tank is increased, the ethylene content of the component (F1) becomes high and vice versa. Although the relation between the amount ratio of propylene to ethylene to be fed to

the polymerization tank and the ethylene content of the component (F1) varies depending on the kind of the catalyst to be used, it is extremely easy for one skilled in the art to obtain the component (F1) having an objective ethylene content by regulating the feed amount ratio appropriately.

- Second Polymerization Step

The second polymerization step is a step of further introducing a propylene/ethylene mixture subsequently to the first polymerization step and producing a propylene-ethylene random copolymer to form the component (F2) so as to be an amount that corresponds to 3 to 95% by weight of the total polymer amount.
MFR of the component (F2) (hereinafter referred to as "MFR(F2)" can be regulated by using hydrogen as a chain transfer agent. Specific controlling method is the same as the controlling method of MFR of the component (F1). As a method for controlling the ethylene content of the component (F2), it is convenient to use a method of controlling the amount of ethylene to be fed to the polymerization tank. Specific controlling method is the same as in the case where the component (F1) is a propylene-ethylene random copolymer.
Next, a method for controlling indexes of the propylene-ethylene block copolymer (F) will be explained.
First, a method of controlling the weight ratio of the component (F1) to the component (F2) is explained. The weight ratio of the component (F1) to the component (F2) is controlled by the production amount in the first polymerization step in which the component (F1) is produced and the production amount in the second polymerization step in which the component (F2) is produced. For example, for increasing the amount of the component (F1) and decreasing the amount of the component (F2), it is sufficient to decrease the production amount of the second polymerization step while maintaining the production amount of the first polymerization step. For the purpose, it is sufficient to shorten residential time in the second polymerization step or lower the polymerization temperature. Moreover, the weight ratio can be also controlled by adding a polymerization inhibitor such as ethanol or oxygen or, in the case where it has been originally added, increasing the adding amount thereof and vice versa.
Usually, the weight ratio of the component (F1) to the component (F2) is defined by the production amount in the first polymerization step of producing the component (F1) and the production amount in the second polymerization step of producing the component (F2).
The expression is shown below.
Weight of Component (F1):Weight of Component (F2) = W(F1):W(F2)

$$W(F1) = \text{Production amount in first polymerization step} \div (\text{Production amount in first polymerization} + \text{Production amount in second polymerization})$$

$$W(F2) = \text{Production amount in second polymerization step} \div (\text{Production amount in first polymerization} + \text{Production amount in second polymerization})$$

$$W(F1)+W(F2) = 1$$

wherein W(F1) and W(F2) are the weight ratios of the component (F1) and the component (F2) in the propylene-ethylene block copolymer (F), respectively.
In an industrial production facility, it is usual to determine a production amount from heat balance and material balance of each polymerization tank. Moreover, in the case where the crystallinity of the component (F1) and that of the component (F2) are sufficiently different from each other, the both may be separated and identified by an analytical method such as TREF (temperature rising elution fractionation method) and the amount ratio may be determined. The method of evaluating crystallinity distribution of polypropylene by TREF measurement is well known by one skilled in the art and detailed measurement methods are shown in literatures of G. Glokner, J. Appl. Polym. Sci: Appl. Poly. Symp.; 45, 1-24 (1990), L. Wild, Adv. Polym. Sci.; 98, 1-47 (1990), J. B. P. Soares, A. E. Hamielec, Polymer; 36, 8, 1639-1654 (1995), and the like.
Next, a method for controlling the ethylene content will be explained. Since the propylene-ethylene block copolymer (F) is a mixture of the component (F1) composed of propylene homopolymer or a propylene-ethylene random copolymer and the component (F2) composed of a propylene-ethylene random copolymer, the following relational expression holds between respective ethylene contents.

$$E(F) = E(F1) \times W(F1) + E(F2) \times W(F2)$$

wherein E(F), E(F1), and E(F2) are the ethylene contents of the propylene-ethylene block copolymer (F), the component (F1) composed of propylene homopolymer or a propylene-ethylene random copolymer, and the component (F2) composed of a propylene-ethylene random copolymer, respectively.

The expression represents material balance with regard to the ethylene contents.

Therefore, when the weight ratio of the component (F1) to the component (F2) is determined, that is, W(F1) and W(F2) are determined, E(F) is uniquely determined by E(F1) and E(F2). That is, E(F) can be controlled by controlling the three factors of the weight ratio of the component (F1) and the component (F2), E(F1), and E(F2).

For example, for increasing E(F), E(F1) may be increased or E(F2) may be increased. Moreover, when attention is paid to the fact that E(F2) is higher than E(F1), it is also easily understood that W(F1) may be decreased while W(F2) may be increased. The same applies to the reverse direction of the control.

Incidentally, those which can be actually directly obtained as measured values are E(F) and E(F1) and hence E(F2) is to be calculated using the measured values of the both. Therefore, at the time of performing an operation of increasing E(F), in the case where an operation of increasing E(F2), i.e., an operation of increasing the amount of ethylene to be fed to the second polymerization step is assumingly selected as a method, one directly confirmed as a measured value is E(F) and not E(F2) but it is obvious that the cause of an increase of E(F) is the increase of E(F2).

Next, a method for controlling MFR(F) will be explained. In the present embodiment, MFR(F2) is defined by the following expression.

$$MFR(F2) = \exp\{(\log_e[MFR(F)] - W(F1) \times \log_e[MFR(F1)]) \div W(F2)\}$$

wherein $\log_e$ is a logarithm to base e. MFR(F), MFR(F1), and MFR(F2) are MFR of the propylene-ethylene block copolymer (F), MFR of the component (F1) composed of propylene homopolymer or a propylene-ethylene random copolymer, and MFR of the component (F2) composed of a propylene-ethylene random copolymer, respectively.

The expression is transformed one of an empirical expression generally called as logarithmic additive rule of viscosity:

$$\mathrm{Log}_e[MFR(F)] = W(F1) \times \log_e[MFR(F1)] + W(F2) \times \log_e[MFR(F2)]$$

and is routinely used in the art.

Since they are defined by the expression, the weight ratio of the component (F1) to the component (F2), MFR(F), MFR(F1), and MFR(F2) are not independent. Therefore, for controlling MFR(F), it is sufficient to control the three factors of the weight ratio of the component (F1) to the component (F2), MFR(F1), and MFR(F2). For example, for increasing MFR(F), MFR(F1) may be increased or MFR(F2) may be increased. Moreover, in the case where MFR(F2) is lower than MFR(F1), it is also easily understood that MFR(F) can be increased by increasing W(F1) and decreasing W(F2). The same applies to the reverse direction of the control.

Incidentally, those which can be actually directly obtained as measured values are MFR(F) and MFR(F1) and hence MFR(F2) is calculated using the measured values of the both. Therefore, at the time of performing an operation of increasing MFR(F), in the case where an operation of increasing MFR(F2), i.e., an operation of increasing the amount of hydrogen to be fed to the second polymerization step is assumingly selected as a method, one directly confirmed as a measured value is MFR(F) and not MFR(F2) but it is obvious that the cause of an increase of MFR(F) is the increase of MFR(F2).

The polymerization process of the propylene-ethylene block copolymer can be carried out by any method of a batch-wise method and a continuous method. On this occasion, it is possible to employ a method of performing polymerization in an inert hydrocarbon solvent such as hexane or heptane, a method of using propylene as a solvent using substantially no inert solvent, a method of performing polymerization in a gaseous monomer using substantially no liquid solvent, and a method in which these methods are combined. Moreover, in the first polymerization step and the second polymerization step, the same polymerization tank may be used or different polymerization tanks may be used.

(1) Measurement of Ethylene Content in Copolymer

Using the propylene-ethylene block copolymer (F), each ethylene content was measured in the copolymer. That is, each ethylene content in the component (F1) composed of propylene homopolymer or a propylene-ethylene random copolymer obtained at the time of completion of the first polymerization step and in the propylene-ethylene block copolymer (F) obtained via the second polymerization step was determined by analyzing $^{13}$C-NMR spectra measured according to the following conditions by a complete proton decoupling method.

Instrument: GSX-400 or an equivalent apparatus (carbon nuclear resonance frequency of 100 MHz or more) manufactured by JEOL Ltd.

Solvent: o-dichlorobenzene + deuterated benzene (4:1 (volume ratio))
Concentration: 100 mg/mL
Temperature: 130°C
Pulse angle: 90°
Pulse interval: 15 seconds
Integration times: 5,000 or more

Assignment of spectra may be conducted, for example, with reference to Macromolecules, 17, 1950 (1984). The assignment of the spectra measured under the above conditions are as shown in the following table. In the Table 1, the signs such as Sαα are described in accordance with the notation of Carman et al. (Macromolecules, 10, 536 (1977)) and P, S, and T represent a methyl carbon, a methylene carbon, and a methine carbon, respectively.

[Table 1]

| Chemical shift (ppm) | Assignment |
|---|---|
| 45 to 48 | $S_{\alpha\alpha}$ |
| 37.8 to 37.9 | $S_{\alpha\gamma}$ |
| 37.4 to 37.5 | $S_{\alpha\delta}$ |
| 33.1 | $T_{\delta\delta}$ |
| 30.9 | $T_{\beta\delta}$ |
| 30.6 | $S_{\gamma\gamma}$ |
| 30.2 | $S_{\gamma\delta}$ |
| 29.8 | $S_{\delta\delta}$ |
| 28.7 | $T_{\beta\beta}$ |
| 27.4 to 27.6 | $S_{\beta\delta}$ |
| 24.4 to 24.7 | $S_{\beta\beta}$ |
| 19.1 to 22.0 | P |

Hereinafter, when "P" is a propylene unit in the copolymer chain and "E" is an ethylene unit, six kinds of triads of PPP, PPE, EPE, PEP, PEE, and EEE may be present in the chain. As described in Macromolecules, 15, 1150 (1982) and the like, the concentration of the triads and the peak intensity of a spectrum are correlated by the following relational expressions (f-1) to (f-6).

$$[PPP]=k\times I(T\beta\beta) \ldots \text{(f-1)}$$

$$[PPE]=k\times I(T\beta\delta) \ldots \text{(f-2)}$$

$$[EPE]=k\times I(T\delta\delta) \ldots \text{(f-3)}$$

$$[PEP]=k\times I(S\beta\beta) \ldots (f\text{-}4)$$

$$[PEE]=k\times I(S\beta\delta) \ldots (f\text{-}5)$$

$$[EEE]=k\times\{I(S\delta\delta)/2+I(S\gamma\delta)/4\} \ldots (f\text{-}6)$$

Here, the parenthesis [ ] represents the fraction of a triad and, for example, [PPP] is the fraction of the PPP triad in all triads. Therefore,

$$[PPP]+[PPE]+[EPE]+[PEP]+[PEE]+[EEE]=1 \ldots (f\text{-}7).$$

Moreover, k is a constant and I represents spectrum intensity. For example, I(T$\beta\beta$) means intensity of a peak at 28.7 ppm attributable to T$\beta\beta$. By using the above relational expressions (f-1) to (f-7), each triad fraction is determined and further, the ethylene content is determined according to the following expression (f-8).

$$\text{Ethylene content (\% by mol)} = ([PEP]+[PEE]+[EEE])\times 100 \ldots (f\text{-}8)$$

Incidentally, the conversion of % by mol to % by weight of the ethylene content is conducted using the following expression (f-9).

$$\text{Ethylene content (\% by weight)} = (28\times X/100)/\{28\times X/100+42\times(1-X/100)\}\times 100 \ldots (f\text{-}9)$$

Here, X is an ethylene content in terms of % by mol.

The propylene-ethylene block copolymer (F) in the present embodiment may contain an additive, a filler, other resin components, and the like. That is, it may be a resin composition (polypropylene-based resin composition) of a propylene-ethylene block copolymer (F), an additive, a filler, other resin components, and the like. The total amount of the additive, filler, other resin components, and the like is preferably 50% by weight or less relative to the resin composition.

As the additive, there can be blended known various additives that can be used for a polypropylene-based resin, such as an antioxidant, a neutralizing agent, a light stabilizer, a UV absorber, a crystal nucleating agent, a blocking inhibitor, a lubricant, an antistatic agent, and a metal inactivating agent.

As the antioxidant, phenol-based antioxidants, phosphite-based antioxidants, thio-based antioxidants, and the like can be exemplified. As the neutralizing agent, higher fatty acid salts such as calcium stearate and zinc stearate can be exemplified. As the light stabilizer and the UV absorber, hindered amines, benzotriazoles, benzophenones, and the like can be exemplified.

As the crystal nucleating agent, aromatic carboxylic acid metal salts, aromatic phosphoric acid metal salts, sorbitol-based derivatives, metal salts and the like of rosin, amide-based nucleating agents, and the like can be exemplified. Of these crystal nucleating agents, there can be exemplified aluminum p-t-butylbenzoate, 2,2'-methylenebis(4,6-di-t-butylphenyl) sodium phosphate, 2,2'-methylenebis(4,6-di-t-butylphenyl) aluminum phosphate, a complex of bis(2,4,8,10-tetra-tert-butyl-6-hydroxy-12H-dibenzo[d,g][1,2,3]dioxaphosphocin-6-oxide) aluminum hydroxide salt and an organic compound, p-methyl-benzylidenesorbitol, p-ethyl-benzylidenesorbitol, 1,2,3-trideoxy-4,6:5,7-bis-[(4-propylphenyl)methylene]-nonitol, sodium salt of rosin, and the like.

As the lubricant, higher fatty acid amides such as stearic acid amide can be exemplified. As the antistatic agent, fatty acid partial esters such as glycerol fatty acid monoesters can be exemplified. As the metal inactivating agent, triazines, phosphones, epoxys, triazoles, hydrazides, oxamides, and the like can be exemplified.

As the filler, there can be blended known various fillers that can be used for a polypropylene-based resin, such as inorganic fillers and organic fillers. As the inorganic fillers, there can be exemplified calcium carbonate, silica, hydrotalcite, zeolite, aluminum silicate, magnesium silicate, glass fibers, carbon fibers, and the like. Moreover, as the organic fillers, crosslinked rubber fine particles, thermosetting resin fine particles, thermosetting resin hollow fine particles and the like can be exemplified.

As the other resin components, there can be exemplified polyethylene-based resins, polyolefins such as ethylene-based elastomers, modified polyolefins, petroleum resins, other thermoplastic resins, and the like.

The above resin composition can be produced by a method of melt-kneading a propylene-ethylene block

copolymer (F), an additive, a filler, other resin components, and the like, a method of melt-kneading a propylene-ethylene block copolymer (F), an additive, a filler, and the like and dry blending other resin components into the melt blended one, or a method of dry blending a master batch in which an additive, a filler, and the like are dispersed in a carrier resin in a high concentration, in addition to a propylene-ethylene block copolymer (F) and the other resin components.

[7. Sealing Layer (I) composed of Polyolefin Adhesive Resin (G)]

As one embodiment of the decorative film in the present invention, the decorative film further includes a sealing layer (I) (sticking layer (I)) composed of a polyolefin adhesive resin (G), and can strongly adhere to a substrate composed of a resin material having polarity resulting from the lamination of the sealing layer (I) on the layer (II).

MFR(G) (230°C, a load of 2.16 kg) of the polyolefin adhesive resin (G) in the present embodiment is preferably 100 g/10 minutes or less, more preferably 50 g/10 minutes or less, further preferably 20 g/10 minutes or less. By controlling MFR(G) of the polyolefin adhesive resin (G) to the above value or less, it becomes possible to laminate the sealing layer (I) composed of the polyolefin adhesive resin (G) on the layer (II) composed of the resin composition (B) containing the polypropylene-based resin (B) by an extrusion molding method.

A lower limit of MFR(G) of the polyolefin adhesive resin (G) is not particularly limited but is preferably 0.1 g/10 minutes or more, more preferably 0.3 g/10 minutes or more. By controlling MFR(G) of the polyolefin adhesive resin (G) to the above value or more, in the coextrusion molding of the polypropylene-based resin composition (B) and the polyolefin adhesive resin (G), there can be suppressed the generation of problems that surface roughness may be generated at lamination interface and the polyolefin adhesive resin (G) may not be laminated up to a film edge.

The polyolefin adhesive resin (G) in the present invention is preferably a polyolefin resin having a polar functional group having at least one heteroatom from the viewpoint of improving adhesiveness with the layer (II) composed of the resin composition (B) containing the polypropylene-based resin (B).

As the polar functional group having at least one heteroatom, there may be mentioned an epoxy group, a carbonyl group, an ester group, an ether group, a hydroxy group, a carboxy group or a metal salt thereof, an alkoxy group, an aryloxy group, an acyl group, an acyloxy group, an acid anhydride group, an amino group, an imide group, an amide group, a nitrile group, a thiol group, a sulfo group, an isocyanate group, a halogen group, and the like. Especially, the polyolefin adhesive resin (G) is more preferably a polyolefin resin having at least one functional group selected from the group consisting of an epoxy group, a hydroxy group, a carboxy group, an acid anhydride group, an amino group, an imide group, an amide group, a nitrile group, a thiol group, an isocyanate group, and a halogen group.

Specific examples of such a polyolefin having the polar functional group include acid-modified polypropylenes such as maleic anhydride-modified polypropylene, maleic acid-modified polypropylene, and acrylic acid-modified polypropylene; ethylene or α-olefin/vinyl monomer copolymers such as ethylene/vinyl chloride copolymer, ethylene/vinylidene chloride copolymer, ethylene/acrylonitrile copolymer, ethylene/methacrylonitrile copolymer, ethylene/vinyl acetate copolymer, ethylene/acrylamide copolymer, ethylene/methacrylamide copolymer, ethylene/acrylic acid copolymer, ethylene/methacrylic acid copolymer, ethylene/maleic acid copolymer, ethylene/methyl acrylate copolymer, ethylene/ethyl acrylate copolymer, ethylene/isopropyl acrylate copolymer, ethylene/butyl acrylate copolymer, ethylene/isobutyl acrylate copolymer, ethylene/2-ethylhexyl acrylate copolymer, ethylene/methyl methacrylate copolymer, ethylene/ethyl methacrylate copolymer, ethylene/isopropyl methacrylate copolymer, ethylene/butyl methacrylate copolymer, ethylene/isobutyl methacrylate copolymer, ethylene/2-ethylhexyl methacrylate copolymer, ethylene/maleic anhydride copolymer, ethylene/ethyl acrylate/maleic anhydride copolymer, ethylene/metal acrylate copolymer, ethylene/metal methacrylate copolymer, ethylene/vinyl acetate copolymer or a saponified product thereof, ethylene/vinyl propionate copolymer, ethylene/glycidyl methacrylate copolymer, ethylene/ethyl acrylate/glycidyl methacrylate copolymer, and ethylene/vinyl acetate/glycidyl methacrylate copolymer; chlorinated polyolefins such as chlorinated polypropylene and chlorinated polyethylene; and the like.

Moreover, these resins may be used solely or two or more thereof may be used in combination. Furthermore, if necessary, other resins or rubbers, a tackifying agent, various additives, and the like may be mixed.

As the other resins or rubbers, for example, there may be mentioned poly-α-olefins such as polypentene-1 and polymethylpentene-1, ethylene or α-olefin/α-olefin copolymers such as propylene/butene-1 copolymer, ethylene or α-olefin/α-olefin/diene monomer copolymers such as ethylene/propylene/5-ethylidene-2-norbornene copolymer, polybutadiene copolymers such as polybutadiene and polyisoprene, vinyl monomer/diene monomer random copolymer such as styrene/butadiene random copolymer and styrene/isoprene random copolymer, vinyl monomer/diene monomer/vinyl monomer block copolymers such as styrene/butadiene/styrene block copolymer and styrene/isoprene/styrene block copolymer, hydrogenated (vinyl monomer/diene monomer random copolymers) such as hydrogenated (styrene/butadiene random copolymer) and hydrogenated (styrene/isoprene random copolymer), hydrogenated (vinyl monomer/diene monomer/vinyl monomer block copolymers) such as hydrogenated (styrene/butadiene/styrene block copolymer) and hydrogenated (styrene/isoprene/styrene block copolymer), vinyl monomer/diene monomer/vinyl monomer graft copolymers such as acrylonitrile/butadiene/styrene graft copolymer and methyl methacrylate/butadiene/styrene graft copolymer, vinyl polymers such as polyvinyl chloride, polyvinylidene chloride, polyacrylonitrile, polyvinyl acetate, polyethyl acrylate, polybutyl acrylate, polymethyl methacrylate, polystyrene, vinyl copolymers such as vinyl chloride/acrylonitrile copolymer, vinyl chloride/vinyl acetate copolymer, acrylonitrile/styrene copolymer, and methyl methacrylate/styrene copolymer, and the like.

As the tackifying agent, for example, there may be mentioned rosin-based resins (gum rosin, tall oil rosin, wood rosin, hydrogenated rosin, disproportionated rosin, polymerized rosin, maleated rosin, rosin esters, etc.), terpene phenol resins, terpene resins (polymers such as α-pinene, β-pinene, and limonene), aromatic hydrocarbon-modified terpene resins, petroleum resins (aliphatic ones, alicyclic ones, aromatic ones, etc.), cumarone-indene resin, styrene-based resins, phenol resins (alkylphenol, phenol-xylene-formaldehyde, rosin-modified phenol resins, etc.), xylene resins, and the like. These may be used solely or two or more thereof may be used in combination. Of these, form the viewpoint of thermal stability, rosin-based resins, terpene-phenol resins, terpene resins, aromatic hydrocarbon-modified terpene resins, petroleum resins, and hydrogenated petroleum resins are preferred and, in view of compatibility with the modified polyolefin-based resin of the present invention and also capability of contribution to the adhesion to a polar resin, rosin-based resins and terpene-phenol resins are particularly preferred.

As the additives, there may be mentioned stabilizers such as antioxidants, metal deactivators, phosphorus-based processing stabilizers, UV absorbers, UV stabilizers, metal soaps, and anti-acid adsorbents, or crosslinking agents, chain transfer agents, nucleating agents, lubricants, plasticizers, fillers, reinforcing materials, pigments, dyes, flame retardants, antistatic agents, fluorescent brightening agents, and the like. They may be added within a range where the advantages of the present invention are not impaired.

Of the polyolefin resins having the polar functional group mentioned above, from the viewpoint of adhesiveness to the layer (II), as commercially available products, there can be suitably used trade name "ADMER" manufactured by Mitsui Chemicals, Inc., trade name "MODIC" manufactured by Mitsubishi Chemical Corporation, "UMEX" manufactured by Sanyo Chemical Industries, Ltd., and the like.

[Decorative Film]

The decorative film in the present invention includes the layer (II) containing the polypropylene resin (B) and preferably further includes the sealing layer (I) containing the polypropylene resin (A). That is, the decorative film may be a monolayer film composed of the layer (II), may be a two-layered film composed of the layer (II) and the sealing layer (I), or a multi-layered film having three or more layers composed of the layer (II), the sealing layer (I), and the other layer(s). Moreover, it may be a multi-layered film having two or more layers composed of the layer (II) and the other layer(s). The decorative film can take various configurations in addition to the layer (II). Incidentally, the sealing layer (I) is stuck along a resin molded body (substrate). Moreover, the decorative film may be provided with crimping, embossing, printing, sandblasting, scratching, and the like.

The decorative film has large freedom of shape, is excellent in appearance owing to no generation of a seam since the edge of the decorative film is wound to the back side of an decoration object, and further, can express a variety of textures by applying crimps or the like to the surface of the decorative film. For example, in the case of applying a texture such as embossment to the resin molded body, it is sufficient to perform three-dimensional thermoforming using a decorative film to which embossment had been applied. Therefore, there can be solved problems in the case of forming with a forming mold that applies embossment, i.e., problems that a forming mold is necessary for each embossment pattern and it is very difficult and expensive to provide complex embossment on a curved mold, so that it is possible to obtain a decorative molded body to which embossment of various patterns has been applied.

In the multi-layered film, it is possible to include, in addition to the sealing layer (I) and the layer (II), a surface layer, a surface decorative layer, a printing layer, a light-shielding layer, a coloring layer, a substrate layer, a barrier layer, a tie layer that can be provided between these layers, and the like. The layer (II) composed of the resin composition (B) may be any layer of the layers constituting the multi-layered film excluding the sealing layer.

As a preferable embodiment of the decorative film, in the case of a monolayer film of the layer (II), it is a film composed of the resin composition (B) in which MFR (230°C, a load of 2.16 kg) is 40 g/10 minutes or less and the strain hardening degree λ is 1.1 or more.

As a preferable other embodiment of the decorative film, in the case of a multi-layered film having two-layered configuration composed of the layer (II) and another layer, the surface layer to be the surface of the decorative molded body and/or the internal layer to be stuck to the molded body is a layer (II) composed of the resin composition (B) in which MFR (230°C, a load of 2.16 kg) is 40 g/10 minutes or less and the strain hardening degree λ is 1.1 or more. More preferably, the internal layer to be stuck to the molded body is a layer composed of the resin composition (B).

As a preferable still other embodiment of the decorative film, in the case of a multi-layered film having three-layered configuration composed of the layer (II) and the other layers, the surface layer to be the surface of the decorative molded body, the internal layer to be stuck to the molded body, and/or an intermediate layer intervening between the surface layer and the internal layer are a layer (I) composed of the resin composition (B) in which MFR (230°C, a load

of 2.16 kg) is 40 g/10 minutes or less and the strain hardening degree λ is 1.1 or more. More preferably, the internal layer to be stuck to the molded body is a layer (II) composed of the resin composition (B).

In a multi-layered film having more complex layer configuration, similarly, at least one layer constituting the multi-layered film is a layer (II) composed of the resin composition (B) in which MFR (230°C, a load of 2.16 kg) is 40 g/10 minutes or less and the strain hardening degree λ is 1.1 or more.

When the decorative film is two-layered film composed of the layer (II) and the sealing layer (I), it is preferred that the layer (II) constitutes a surface layer reverse to the sticking surface to the resin molded body and the sealing layer (I) constitutes a sealing layer of the sticking surface to the resin molded body.

Moreover, as a preferable other embodiment of the multi-layered film composed of two or more layers containing the layer (II) and the sealing layer (I), the layer other than the layer (II) and the sealing layer (I) is preferably a layer composed of a thermoplastic resin, more preferably a layer composed of a polypropylene-based resin. In the layer other than the layer (II) and the sealing layer (I), MFR (230°C, a load of 2.16 kg) of the polypropylene-based resin constituting the layer is not particularly limited as long as it can be discriminated from the layer (II) and the sealing layer (I). Each layer is preferably a layer that does not contain a thermosetting layer. By using the thermoplastic resin, recyclability is improved and, by using the polypropylene-based resin, complication of layer configuration can be suppressed and further the recyclability is more improved.

When the decorative film is a multi-layered film having three or more layers, there is a case where an effect of suppressing emergence of scratches on the substrate surface decreases when the other layer intervenes between the sealing layer (I) and the layer (II). Therefore, the multi-layered film preferably has a configuration of the sealing layer (I)/the layer (II)/the other layer(s) (including plural layers) from the sticking face side of the resin molded body.

FIG. 1A(a) to FIG. 1A(c) are explanatory drawings schematically exemplifying the cross-sections of embodiments of the decorative film stuck to the resin molded body in the mode where the decorative film includes the layer (II) composed of the polypropylene-based resin composition (B). In FIG. 1A(a) to FIG. 1A(c), for easy understanding, explanation is conducted while specifying the disposition of the layer (II) but the layer configuration of the decorative film should not be construed as being limited to these exemplifications.

Herein, the reference numeral 1 in the drawings represents the decorative film, the reference numeral 2 represents the layer (II), the reference numeral 4 represents the surface decorative layer (III), the reference numeral 5 represents the resin molded body, and the reference numeral 6 represents the decorative molded body. FIG. 1A(a) is an example in which the decorative film 1 is composed of a monolayer film, and the layer (II) 2 composed of the resin composition (B) is stuck on the resin molded body 5. FIG. 1A(b) and FIG. 1A(c) are examples in which the decorative film is composed of a multi-layered film. The decorative film 1 of FIG. 1A(b) is composed of the layer (II) 2 and a surface decorative layer (III) 4, and the layer (II) 2 is stuck on the surface of the resin molded body 5 and the surface decorative layer (III) 4 is laminated on the layer (II) 2. The decorative film of FIG. 1A(c) is composed of the layer (II) 2, an intermediate layer, and the surface decorative layer (III) 4, and the layer (II) 2 is stuck on the surface of the resin molded body 5 and the intermediate layer and the surface decorative layer (III) 4 are laminated on the layer (II) 2 in this order.

FIG. 1C(a) to FIG. 1C(c) are explanatory drawings schematically exemplifying the cross-sections of embodiments of the decorative film in the mode where the decorative film includes the layer (II) composed of the polypropylene-based resin composition (B) and the sealing layer (I), and FIG. 1B(a) to FIG. 1B(c) are explanatory drawings schematically exemplifying the cross-sections of embodiments of the decorative film stuck to the resin molded body. Using FIG. 1B(a) to FIG 1B(c), embodiments of the decorative film are explained. In FIG. 1B(a) to FIG 1B(c), for easy understanding, explanation is conducted while specifying the disposition of the sealing layer (I) and the layer (II) but the layer configuration of the decorative film should not be construed as being limited to these exemplifications.

The reference numeral 1 in the drawings represents the decorative film, the reference numeral 2 represents the layer (II), the reference numeral 3 represents the sealing layer (I), the reference numeral 4 represents the surface decorative layer (III), the reference numeral 5 represents the resin molded body, and the reference numeral 6 represents the decorative molded body. FIG. 1B(a) is an example in which the decorative film 1 is composed of a two-layered film, and the sealing layer (I) 3 is stuck to the resin molded body 5 and the layer (II) 2 composed of the resin composition (B) is stuck on the sealing layer (I) 3. The decorative film 1 of FIG. 1B(b) is composed of the sealing layer (I) 3, the layer (III) 2, and a surface layer, and the sealing layer (I) 3 is stuck on the surface of the resin molded body 5 and the layer (II) 2 and the surface layer are laminated on the sealing layer (I) 3 in this order. The decorative film 1 of FIG. 1B(c) is composed of the sealing layer (I), the layer (II), and the surface decorative layer (III) composed of a polypropylene-based resin, and the sealing layer (I) is stuck on the surface of the resin molded body 5 and the layer (II) and the surface decorative layer (III) are laminated on the sealing layer (I) in this order.

Moreover, in FIG. 1C(a) to FIG. 1C(c), for easy understanding, explanation is conducted while specifying the disposition of the sealing layer (I) and the layer (II) but the layer configuration of the decorative film should not be construed as being limited to these exemplifications. The reference numeral 1 in the drawings represents the decorative film, the reference numeral 2 represents the layer (II), the reference numeral 3 represents the sealing layer (I), and the reference numeral 4 represents the surface decorative layer (III). FIG. 1C(a) is an example in which the decorative film

1 is composed of a two-layered film, and the layer (II) 2 composed of the resin composition (A) is laminated on the sealing layer (I) 3. The decorative film 1 of FIG. 1C(b) is composed of the sealing layer (I) 3, the layer (II) 2, and a surface layer, and the layer (II) 2 and the surface layer are laminated on the sealing layer (I) 3 in this order. The decorative film 1 of FIG 1C(c) is composed of the sealing layer (I) 3, the layer (II) 2, and the surface decorative layer (III) 4, and the layer (II) 2 and the surface decorative layer (III) 4 are laminated on the sealing layer (I) 3 in this order.

As a preferable embodiment of the multi-layered film, a layer other than the layer (II) composed of the resin composition (B) is preferably a layer composed of a thermoplastic resin, more preferably a layer composed of a polypropylene-based resin other than the polypropylene-based resin (B). Each layer is preferably a layer that does not contain a thermosetting resin. By using the thermoplastic resin, recyclability is improved. Furthermore, by using the polypropylene-based resin other than the polypropylene-based resin (B), complication of layer configuration can be suppressed and further the recyclability is more improved.

As a still other preferable embodiment of the decorative film, there may be mentioned a multi-layered film including the layer (II) composed of the resin composition (B) and a surface decorative layer (III) composed of a surface decorative layer resin provided at an opposite face side of the layer (II) to the sticking face side with the resin molded body.

The surface decorative layer resin is preferably composed of a thermoplastic resin and is more preferably composed of a polypropylene-based resin (H). By using the polypropylene-based resin (H), complication of layer configuration and a decrease in the recyclability can be suppressed. In addition, by using the polypropylene-based resin (H) for a surface decorative layer of the decorative film, solvent resistance and the like can be made excellent. Moreover, by using the polypropylene-based resin (H) for the surface decorative layer, transferability of the surface is improved at the time of the production and the thermoforming of the decorative film and, when a mirror surface-shaped roll is used at the thermoforming, a decorative film having higher gloss can be obtained.

As the polypropylene-based resin (H) in the present embodiment, there may be selected one of various types of propylene-based polymers, such as propylene homopolymer (homopolypropylene), a propylene-$\alpha$-olefin copolymer (random polypropylene), and a propylene block copolymer (block polypropylene), or a combination thereof. The propylene-based polymer preferably contains 50 mol% or more of a propylene monomer. The propylene-based polymer preferably does not contain a polar group-containing monomer unit. The polypropylene-based resin (H) is preferably homopolypropylene from the viewpoints of oil resistance, solvent resistance, scratch resistance, and the like. From the viewpoints of gloss and transparency (color development), a propylene-$\alpha$-olefin copolymer is preferred.

The polypropylene-based resin (H) in the present embodiment has a strain hardening degree of preferably less than 1.1, more preferably 1.0 or less. By controlling the strain hardening degree of the polypropylene-based resin (H) to less than 1.1, the appearance of the decorative molded body can make satisfactory. The strain hardening degree of the polypropylene-based resin (H) is determined by the aforementioned method.

As for the polypropylene-based resin (H), MFR(H) (230°C, a load of 2.16 kg) is preferably more than 2 g/10 minutes, more preferably 5 g/10 minutes, further preferably 9 g/10 minutes. By controlling MFR of the polypropylene-based resin (H) to the range of the above values, there are obtained effects that the gloss of the decorative film is improved and the crimp-transferability is improved, and a decorative molded body having satisfactory appearance can be obtained with regard to the required surface form (gloss, non-gloss, crimp, etc.) of the molded body.

An upper limit of MFR of the polypropylene-based resin (H) is not particularly limited but is preferably 100 g/10 minutes or less, more preferably 50 g/10 minutes. By controlling MFR(H) to the range of the above values, satisfactory oil resistance, solvent resistance, scratch resistance, and the like can be exhibited.

The polypropylene-based resin (H) may contain an additive, a filler, a colorant, other resin components, and the like. That is, it may be a resin composition (polypropylene-based resin composition) of a propylene-based polymer, an additive, a filler, a colorant, other resin components, and the like. The total amount of the additive, filler, colorant, other resin components, and the like is preferably 50% by weight or less relative to the polypropylene-based resin composition.

As the additive, the additives and the like which may be contained in the polypropylene-based resin (B) can be used.

The polypropylene-based resin composition can be produced by a method of melt-kneading a propylene-based polymer, an additive, a filler, other resin components, and the like, a method of melt-kneading a propylene-based polymer, an additive, a filler, and the like and dry blending other resin components into the melt blended one, or a method of dry blending a master batch in which an additive, a filler, and the like are dispersed in a carrier resin in a high concentration, in addition to a propylene-based polymer and the other resin components.

The decorative film of the present embodiment has a thickness of preferably about 20 $\mu$m or more, more preferably about 50 $\mu$m or more, further preferably about 80 $\mu$m or more. By controlling the thickness of the decorative film to such a value or more, an effect of imparting design is improved and the stability at the forming is also improved, so that it becomes possible to obtain a more satisfactory decorative molded body. On the other hand, the thickness of the decorative film is preferably about 2 mm or less, more preferably about 1.2 mm or less, further preferably about 0.8 mm or less. By controlling the thickness of the decorative film to such a value or less, a time required for heating at the

time of thermoforming is shortened, thereby improving productivity, and it becomes easy to trim an unnecessary portion.

When the decorative film is a monolayer film, the ratio of the thickness of the layer (II) to the total thickness of the decorative film is 100%. When the decorative film is a multi-layered film, the ratio of the thickness of the layer (II) to the total thickness of the decorative film is preferably 30% or more, more preferably 50% or more. An upper limit is not particularly limited but is preferably less than 100%. When the ratio of the thickness of the layer (II) relative to the whole decorative film is in the range of the above values, it can be avoided that the thermoformability of the decorative film becomes insufficient.

At the time when the decorative film includes the sealing layer (I) described in the above [1. Sealing Layer (I) composed of Polypropylene-based Resin (A)], as a preferable other embodiment of the decorative film, there is mentioned a multi-layered film including a surface decorative layer (III) composed of a surface decorative layer resin at an opposite face side of the layer (II) to the sticking face side with the resin molded body, more preferably on the uppermost surface at the opposite face side. The surface decorative layer resin is preferably a thermoplastic resin, more preferably a polypropylene-based resin (H) having an MFR (230°C, a load of 2.16 kg) of more than 2 g/10 minutes. That is, by further providing a layer (III) composed of the polypropylene-based resin (H) on the surface layer of the decorative film, the gloss and crimp-transferability can be improved without a large decrease in thermoformability. Moreover, by using the polypropylene-based resin (H), complication of layer configuration and a decrease in the recyclability can be suppressed. In addition, by using the polypropylene-based resin (H) for a surface decorative layer of the decorative film, solvent resistance and the like can be made excellent. Moreover, by using the polypropylene-based resin (H) for the surface decorative layer, transferability of the surface is improved at the time of the production and the thermoforming of the decorative film and, when a mirror surface-shaped roll is used at the thermoforming, a decorative film having higher gloss can be obtained.

As the polypropylene-based resin (H) in the present embodiment, there may be selected one of various types of propylene-based polymers, such as propylene homopolymer (homopolypropylene), a propylene-$\alpha$-olefin copolymer (random polypropylene), and a propylene block copolymer (block polypropylene), or a combination thereof. The propylene-based polymer preferably contains 50 mol% or more of a propylene monomer. The propylene-based polymer preferably does not contain a polar group-containing monomer unit. The polypropylene-based resin (H) is preferably homopolypropylene from the viewpoints of oil resistance, solvent resistance, scratch resistance, and the like. From the viewpoints of gloss and transparency (color development), a propylene-$\alpha$-olefin copolymer is preferred. In the present invention, the polypropylene-based resin (H) constituting the surface decorative layer (III) may be the same as or different from the polypropylene-based resin (A) constituting the sealing layer (I).

The polypropylene-based resin (H) in the present embodiment has a strain hardening degree of preferably less than 1.1, more preferably 1 or less. By controlling the strain hardening degree of the polypropylene-based resin (H) to less than 1.1, the appearance of the decorative molded body can make satisfactory. The strain hardening degree of the polypropylene-based resin (H) is determined by the aforementioned method.

As for the polypropylene-based resin (H), MFR(H) (230°C, a load of 2.16 kg) is preferably more than 2 g/10 minutes, more preferably 5 g/10 minutes, further preferably 9 g/10 minutes. By controlling MFR of the polypropylene-based resin (H) to the range of the above values, there are obtained effects that the gloss of the decorative film is improved and the crimp-transferability is improved, and a decorative molded body having satisfactory appearance can be obtained with regard to the required surface form (gloss, non-gloss, crimp, etc.) of the molded body.

An upper limit of MFR of the polypropylene-based resin (H) is not particularly limited but is preferably 100 g/10 minutes or less, more preferably 50 g/10 minutes. By controlling MFR to the range of the above values, satisfactory oil resistance, solvent resistance, scratch resistance, and the like can be exhibited.

The polypropylene-based resin (H) may contain an additive, a filler, other resin components, and the like. That is, it may be a resin composition (polypropylene-based resin composition) of a propylene-based polymer, an additive, a filler, other resin components, and the like. The total amount of the additive, filler, other resin components, and the like is preferably 50% by weight or less relative to the polypropylene-based resin composition.

As the additive, the additives and the like which may be contained in the polypropylene-based resin (B) can be used.

The polypropylene-based resin composition can be produced by a method of melt-kneading a propylene-based polymer, an additive, a filler, other resin components, and the like, a method of melt-kneading a propylene-based polymer, an additive, a filler, and the like and dry blending other resin components into the melt blended one, or a method of dry blending a master batch in which an additive, a filler, and the like are dispersed in a carrier resin in a high concentration, in addition to a propylene-based polymer and the other resin components.

When the polypropylene-based resin (H) constituting the surface decorative layer (III) is a polypropylene-based resin composition, the polypropylene-based resin composition may be the same as or different from the polypropylene-based resin composition that composes the polypropylene-based resin (A) constituting the sealing layer (I). In the case where both the polypropylene-based resin compositions are the same, there is an advantage that the sealing layer (I) and the surface decorative layer (III) can be formed by means of one extruder using a feed block or the like.

The decorative film of the present invention has a thickness of preferably about 20 μm or more, more preferably about 50 μm or more, further preferably about 80 μm or more. By controlling the thickness of the decorative film to such a value or more, an effect of imparting design is improved and the stability at the forming is also improved, so that it becomes possible to obtain a more satisfactory decorative molded body. On the other hand, the thickness of the decorative film is preferably about 2 mm or less, more preferably about 1.2 mm or less, further preferably about 0.8 mm or less. By controlling the thickness of the decorative film to such a value or less, a time required for heating at the time of thermoforming is shortened, thereby improving productivity, and it becomes easy to trim an unnecessary portion.

In the decorative film of the present embodiment, the ratio of the thickness of the layer (II) to the thickness of the whole decorative film is preferably 30 to 99% and the ratio of the thickness of the sealing layer (I) is preferably 1 to 70%. When the ratio of the thickness of the layer (II) relative to the whole decorative film is in the range of the above values, it can be avoided that the thermoformability of the decorative film becomes insufficient. When the ratio of thickness of the sealing layer (I) relative to the whole decorative film is in the range of the above values, sufficient adhesive strength can be exhibited and the emergence of the scratches of the resin molded body (substrate) to the surface can be suppressed.

Furthermore, in the multi-layered film where the surface decorative layer (III) composed of the polypropylene-based resin (H) is provided on the uppermost surface of the decorative film, the ratio of the thickness of the surface decorative layer (III) to the thickness of the whole decorative film is preferably 30% or less.

At the time when the decorative film includes the sealing layer (I) described in the above [2. Sealing Layer (I) composed of Polypropylene-based Resin (A)], as a preferable other embodiment of the decorative film, there is mentioned a multi-layered film also including a surface decorative layer (III) composed of a surface decorative layer resin at an opposite face side of the layer (II) to the sticking face side with the resin molded body, more preferably on the uppermost surface at the opposite face side. The surface decorative layer resin is preferably a thermoplastic resin, more preferably a polypropylene-based resin (H)

The melt flow rate (230°C, a load of 2.16 kg) of the polypropylene-based resin (H) (MFR(H)) in the present embodiment preferably satisfies the following: MFR(H)>MFR(B). By controlling the value to the above range, more beautiful surface texture can be expressed.

As the polypropylene-based resin (H) in the present embodiment, there may be selected one of various types of propylene-based polymers, such as propylene homopolymer (homopolypropylene), a propylene-α-olefin copolymer (random polypropylene), and a propylene block copolymer (block polypropylene), or a combination thereof. The propylene-based polymer preferably contains 50 mol% or more of a polymerization unit derived from a propylene monomer. The propylene-based polymer preferably does not contain a polymerization unit derived from a polar group-containing monomer. The polypropylene-based resin (H) is preferably homopolypropylene from the viewpoints of oil resistance, solvent resistance, scratch resistance, and the like. From the viewpoints of gloss and transparency (color development), a propylene-α-olefin copolymer is preferred. In the present invention, the polypropylene-based resin (H) constituting the surface decorative layer (III) may be the same as or different from the polypropylene-based resin (A) constituting the sealing layer (I).

The polypropylene-based resin (H) may contain an additive, a filler, other resin components, and the like. That is, it may be a resin composition (polypropylene-based resin composition) of a propylene-based polymer, an additive, a filler, other resin components, and the like. The total amount of the additive, filler, other resin components, and the like is preferably 50% by weight or less relative to the polypropylene-based resin composition.

As the additive, the additives and the like which may be contained in the polypropylene-based resin (A) can be used.

The polypropylene-based resin composition can be produced by a method of melt-kneading a propylene-based polymer, an additive, a filler, other resin components, and the like, a method of melt-kneading a propylene-based polymer, an additive, a filler, and the like and dry blending other resin components into the melt blended one, or a method of dry blending a master batch in which an additive, a filler, and the like are dispersed in a carrier resin in a high concentration, in addition to a propylene-based polymer and the other resin components.

When the polypropylene-based resin (H) constituting the surface decorative layer (III) is a polypropylene-based resin composition, the polypropylene-based resin composition may be the same as or different from the polypropylene-based resin composition that composes the polypropylene-based resin (A) constituting the sealing layer (I).

The decorative film of the present embodiment has a thickness of preferably about 20 μm or more, more preferably about 50 μm or more, further preferably about 80 μm or more. By controlling the thickness of the decorative film to such a value or more, an effect of imparting design is improved and the stability at the forming is also improved, so that it becomes possible to obtain a more satisfactory decorative molded body. On the other hand, the thickness of the decorative film is preferably about 2 mm or less, more preferably about 1.2 mm or less, further preferably about 0.8 mm or less. By controlling the thickness of the decorative film to such a value or less, a time required for heating at the time of thermoforming is shortened, thereby improving productivity, and it becomes easy to trim an unnecessary portion.

In the decorative film of the present embodiment, the ratio of the thickness of the sealing layer (I) to the thickness

of the whole decorative film is preferably 1 to 70% and the ratio of the thickness of the layer (II) is preferably 30 to 99%. When the ratio of thickness of the sealing layer (I) relative to the whole decorative film is in the range of the above values, sufficient adhesive strength can be exhibited and the emergence of the scratches of the resin molded body (substrate) to the surface can be suppressed. Moreover, when the ratio of thickness of the layer (II) relative to the whole decorative film is in the range of the above values, it can be avoided that the thermoformability of the decorative film becomes insufficient.

Furthermore, in the multi-layered film where the surface decorative layer (III) composed of the polypropylene-based resin (H) is provided on the uppermost surface of the decorative film, the ratio of the thickness of the surface decorative layer (III) relative to the whole decorative film is preferably 30% or less.

At the time when the decorative film includes the sealing layer (I) described in the above [3. Sealing Layer (I) composed of Resin Composition (X) containing Polypropylene-based Resin (A) and Ethylene-α-Olefin Random Copolymer (C) as Main Components], as a preferable other embodiment of the decorative film, there is mentioned a multi-layered film also including a surface decorative layer (III) composed of a surface decorative layer resin at an opposite face side of the layer (II) to the sticking face side to the resin molded body, more preferably on the uppermost surface at the opposite face side.

The surface decorative layer resin is preferably a thermoplastic resin, more preferably a polypropylene-based resin (H).

The melt flow rate (230°C, a load of 2.16 kg) of the polypropylene-based resin (H) (MFR(H)) in the present embodiment preferably satisfies the following: MFR(H)>MFR(B). By controlling the value to the above range, more beautiful surface texture can be expressed.

As the polypropylene-based resin (H) in the present embodiment, there may be selected one of various types of propylene-based polymers, such as propylene homopolymer (homopolypropylene), a propylene-α-olefin copolymer (random polypropylene), and a propylene block copolymer (block polypropylene), or a combination thereof. The propylene-based polymer preferably contains 50 mol% or more of a polymerization unit derived from a propylene monomer. The propylene-based polymer preferably does not contain a polymerization unit derived from a polar group-containing monomer. The polypropylene-based resin (H) is preferably homopolypropylene from the viewpoints of oil resistance, solvent resistance, scratch resistance, and the like. From the viewpoints of gloss and transparency (color development), a propylene-α-olefin copolymer is preferred. In the present embodiment, the polypropylene-based resin (H) constituting the surface decorative layer (III) may be the same as or different from the polypropylene-based resin (A) constituting the sealing layer (I).

The polypropylene-based resin (H) may contain an additive, a filler, other resin components, and the like. That is, it may be a resin composition (polypropylene-based resin composition) of a propylene-based polymer, an additive, a filler, other resin components, and the like. The total amount of the additive, filler, other resin components, and the like is preferably 50% by weight or less relative to the polypropylene-based resin composition.

As the additive, the additives and the like which may be contained in the resin composition (X) constituting the sealing layer (I) can be used.

The polypropylene-based resin composition can be produced by a method of melt-kneading a propylene-based polymer, an additive, a filler, other resin components, and the like, a method of melt-kneading a propylene-based polymer, an additive, a filler, and the like and dry blending other resin components into the melt blended one, or a method of dry blending a master batch in which an additive, a filler, and the like are dispersed in a carrier resin in a high concentration, in addition to a propylene-based polymer and the other resin components.

When the polypropylene-based resin (H) constituting the surface decorative layer (III) is a polypropylene-based resin composition, the polypropylene-based resin composition may be the same as or different from the polypropylene-based resin composition that composes the polypropylene-based resin (A) constituting the sealing layer (I).

The decorative film of the present embodiment has a thickness of preferably about 20 μm or more, more preferably about 50 μm or more, further preferably about 80 μm or more. By controlling the thickness of the decorative film to such a value or more, an effect of imparting design is improved and the stability at the forming is also improved, so that it becomes possible to obtain a more satisfactory decorative molded body. On the other hand, the thickness of the decorative film is preferably about 2 mm or less, more preferably about 1.2 mm or less, further preferably about 0.8 mm or less. By controlling the thickness of the decorative film to such a value or less, a time required for heating at the time of thermoforming is shortened, thereby improving productivity, and it becomes easy to trim an unnecessary portion.

In the decorative film of the present embodiment, the ratio of the thickness of the sealing layer (I) to the thickness of the whole decorative film is preferably 1 to 70% and the ratio of the thickness of the layer (II) is preferably 30 to 99%. When the ratio of thickness of the sealing layer (I) relative to the whole decorative film is in the range of the above values, sufficient adhesive strength can be exhibited and the emergence of the scratches of the resin molded body (substrate) to the surface can be suppressed. Moreover, when the ratio of thickness of the layer (II) relative to the whole decorative film decorative film is in the range of the above values, it can be avoided that the thermoformability of the decorative film becomes insufficient.

Furthermore, in the multi-layered film where the surface decorative layer (III) composed of the polypropylene-based resin (H) is provided on the uppermost surface of the decorative film, the ratio of the thickness of the surface decorative layer (III) relative to the whole decorative film is preferably 30% or less.

At the time when the decorative film includes the sealing layer (I) described in the above [4. Sealing Layer (I) composed of Resin Composition (X) containing Polypropylene-based Resin (A) and Thermoplastic Elastomer (D) as Main Components], as a preferable other embodiment of the decorative film, there is mentioned a multi-layered film also including a surface decorative layer (III) composed of a surface decorative layer resin at an opposite face side of the layer (II) to the sticking face side with the resin molded body, more preferably on the uppermost surface at the opposite face side.

The surface decorative layer resin is preferably a thermoplastic resin, more preferably a polypropylene-based resin (H).

The melt flow rate (230°C, a load of 2.16 kg) of the polypropylene-based resin (H) (MFR(H)) in the present embodiment preferably satisfies the following: MFR(H)>MFR(B). By controlling the value to the above range, more beautiful surface texture can be expressed.

As the polypropylene-based resin (H) in the present embodiment, there may be selected one of various types of propylene-based polymers, such as propylene homopolymer (homopolypropylene), a propylene-$\alpha$-olefin copolymer (random polypropylene), and a propylene block copolymer (block polypropylene), or a combination thereof. The propylene-based polymer preferably contains 50 mol% or more of a polymerization unit derived from a propylene monomer. The propylene-based polymer preferably does not contain a polymerization unit derived from a polar group-containing monomer. The polypropylene-based resin (H) is preferably homopolypropylene from the viewpoints of oil resistance, solvent resistance, scratch resistance, and the like. From the viewpoints of gloss and transparency (color development), a propylene-$\alpha$-olefin copolymer is preferred. In the present embodiment, the polypropylene-based resin (H) constituting the surface decorative layer (III) may be the same as or different from the polypropylene-based resin (A) constituting the sealing layer (I).

The polypropylene-based resin (H) may contain an additive, a filler, other resin components, and the like. That is, it may be a resin composition (polypropylene-based resin composition) of a propylene-based polymer, an additive, a filler, other resin components, and the like. The total amount of the additive, filler, other resin components, and the like is preferably 50% by weight or less relative to the polypropylene-based resin composition.

As the additive, the additives and the like which may be contained in the resin composition (X) constituting the sealing layer (I) can be used.

The polypropylene-based resin composition can be produced by a method of melt-kneading a propylene-based polymer, an additive, a filler, other resin components, and the like, a method of melt-kneading a propylene-based polymer, an additive, a filler, and the like and dry blending other resin components into the melt blended one, or a method of dry blending a master batch in which an additive, a filler, and the like are dispersed in a carrier resin in a high concentration, in addition to a propylene-based polymer and the other resin components.

When the polypropylene-based resin (H) constituting the surface decorative layer (III) is a polypropylene-based resin composition, the polypropylene-based resin composition may be the same as or different from the polypropylene-based resin composition that composes the polypropylene-based resin (A) constituting the sealing layer (I).

The decorative film of the present invention has a thickness of preferably about 20 $\mu$m or more, more preferably about 50 $\mu$m or more, further preferably about 80 $\mu$m or more. By controlling the thickness of the decorative film to such a value or more, an effect of imparting design is improved and the stability at the forming is also improved, so that it becomes possible to obtain a more satisfactory decorative molded body. On the other hand, the thickness of the decorative film is preferably about 2 mm or less, more preferably about 1.2 mm or less, further preferably about 0.8 mm or less. By controlling the thickness of the decorative film to such a value or less, a time required for heating at the time of thermoforming is shortened, thereby improving productivity, and it becomes easy to trim an unnecessary portion.

In the decorative film of the present embodiment, the ratio of the thickness of the sealing layer (I) to the thickness of the whole decorative film is preferably 1 to 70% and the ratio of the thickness of the layer (II) is preferably 30 to 99%. When the ratio of thickness of the sealing layer (I) relative to the whole decorative film is in the range of the above values, sufficient adhesive strength can be exhibited and the emergence of the scratches of the resin molded body (substrate) to the surface can be suppressed. Moreover, when the ratio of thickness of the layer (II) relative to the whole decorative film decorative film is in the range of the above values, it can be avoided that the thermoformability of the decorative film becomes insufficient.

Furthermore, in the multi-layered film where the surface decorative layer (III) composed of the polypropylene-based resin (H) is provided on the uppermost surface of the decorative film, the ratio of the thickness of the surface decorative layer (III) relative to the whole decorative film is preferably 30% or less.

At the time when the decorative film includes the sealing layer (I) described in the above [5. Sealing Layer (I) composed of Resin Composition (X) containing Polypropylene-based Resin (A) and Thermoplastic Resin (E) as Main Components], as a preferable other embodiment of the decorative film, there is mentioned a multi-layered film also

including a surface decorative layer (III) composed of a surface decorative layer resin at an opposite face side of the layer (II) to the sticking face side with the resin molded body, more preferably on the uppermost surface at the opposite face side.

The surface decorative layer resin is preferably a thermoplastic resin, more preferably a polypropylene-based resin (H).

The melt flow rate (230°C, a load of 2.16 kg) of the polypropylene-based resin (H) (MFR(H)) in the present embodiment preferably satisfies the following: MFR(H)>MFR(B). By controlling the value to the above range, more beautiful surface texture can be expressed.

As the polypropylene-based resin (H) in the present embodiment, there may be selected one of various types of propylene-based polymers, such as propylene homopolymer (homopolypropylene), a propylene-α-olefin copolymer (random polypropylene), and a propylene block copolymer (block polypropylene), or a combination thereof. The propylene-based polymer preferably contains 50 mol% or more of a polymerization unit derived from a propylene monomer. The propylene-based polymer preferably does not contain a polymerization unit derived from a polar group-containing monomer. The polypropylene-based resin (H) is preferably homopolypropylene from the viewpoints of oil resistance, solvent resistance, scratch resistance, and the like. From the viewpoints of gloss and transparency (color development), a propylene-α-olefin copolymer is preferred. In the present invention, the polypropylene-based resin (H) constituting the surface decorative layer (III) may be the same as or different from the polypropylene-based resin (A) constituting the sealing layer (I).

The polypropylene-based resin (H) may contain an additive, a filler, other resin components, and the like. That is, it may be a resin composition (polypropylene-based resin composition) of a propylene-based polymer, an additive, a filler, other resin components, and the like. The total amount of the additive, filler, other resin components, and the like is preferably 50% by weight or less relative to the polypropylene-based resin composition.

As the additive, the additives and the like which may be contained in the resin composition (X) can be used.

The polypropylene-based resin composition can be produced by a method of melt-kneading a propylene-based polymer, an additive, a filler, other resin components, and the like, a method of melt-kneading a propylene-based polymer, an additive, a filler, and the like and dry blending other resin components into the melt blended one, or a method of dry blending a master batch in which an additive, a filler, and the like are dispersed in a carrier resin in a high concentration, in addition to a propylene-based polymer and the other resin components.

When the polypropylene-based resin (H) constituting the surface decorative layer (III) is a polypropylene-based resin composition, the polypropylene-based resin composition may be the same as or different from the polypropylene-based resin composition that composes the polypropylene-based resin (A) constituting the sealing layer (I).

The decorative film of the present embodiment has a thickness of preferably about 20 μm or more, more preferably about 50 μm or more, further preferably about 80 μm or more. By controlling the thickness of the decorative film to such a value or more, an effect of imparting design is improved and the stability at the forming is also improved, so that it becomes possible to obtain a more satisfactory decorative molded body. On the other hand, the thickness of the decorative film is preferably about 2 mm or less, more preferably about 1.2 mm or less, further preferably about 0.8 mm or less. By controlling the thickness of the decorative film to such a value or less, a time required for heating at the time of thermoforming is shortened, thereby improving productivity, and it becomes easy to trim an unnecessary portion.

In the decorative film of the present embodiment, the ratio of the thickness of the sealing layer (I) to the thickness of the whole decorative film is preferably 1 to 70% and the ratio of the thickness of the layer (II) is preferably 30 to 99%. When the ratio of thickness of the sealing layer (I) relative to the whole decorative film is in the range of the above values, sufficient adhesive strength can be exhibited and the emergence of the scratches of the resin molded body (substrate) to the surface can be suppressed. Moreover, when the ratio of thickness of the layer (II) relative to the whole decorative film decorative film is in the range of the above values, it can be avoided that the thermoformability of the decorative film becomes insufficient.

Furthermore, in the multi-layered film where the surface decorative layer (III) composed of the polypropylene-based resin (H) is provided on the uppermost surface of the decorative film, the ratio of the thickness of the surface decorative layer (III) relative to the whole decorative film is preferably 30% or less.

At the time when the decorative film includes the sealing layer (I) described in the above [6. Sealing Layer (I) composed of Propylene-Ethylene Block Copolymer (F)], as a preferable other embodiment of the decorative film, there is mentioned a multi-layered film also including a surface decorative layer (III) composed of a surface decorative layer resin at an opposite face side of the layer (II) to the sticking face side to the resin molded body, more preferably on the uppermost surface at the opposite face side. The surface decorative layer resin is preferably a thermoplastic resin, more preferably a polypropylene-based resin (H).

The melt flow rate (230°C, a load of 2.16 kg) of the polypropylene-based resin (H) (MFR(H)) in the present embodiment preferably satisfies the following: MFR(H)>MFR(B). By controlling the value to the above range, more beautiful surface texture can be expressed.

As the polypropylene-based resin (H) in the present embodiment, there may be selected one of various types

of propylene-based polymers, such as propylene homopolymer (homopolypropylene), a propylene-α-olefin copolymer (random polypropylene), and a propylene-α-olefin block copolymer (block polypropylene), or a combination thereof. The propylene-based polymer preferably contains 50 mol% or more of a polymerization unit derived from a propylene monomer. The propylene-based polymer preferably does not contain a polymerization unit derived from a polar group-containing monomer. The polypropylene-based resin (H) is preferably homopolypropylene from the viewpoints of oil resistance, solvent resistance, scratch resistance, and the like. From the viewpoints of gloss and transparency (color development), a propylene-α-olefin copolymer is preferred. In the present embodiment, the polypropylene-based resin (H) constituting the surface decorative layer (III) may be the same as or different from the propylene-ethylene copolymer block copolymer (F) constituting the sealing layer (I).

The polypropylene-based resin (H) may contain an additive, a filler, other resin components, and the like. That is, it may be a resin composition (polypropylene-based resin composition) of a propylene-based polymer (H), an additive, a filler, other resin components, and the like. The total amount of the additive, filler, other resin components, and the like is preferably 50% by weight or less relative to the polypropylene-based resin composition.

As the additive, the additives and the like which may be contained in the resin composition constituting the sealing layer (I) can be used.

The polypropylene-based resin composition can be produced by a method of melt-kneading a propylene-based polymer, an additive, a filler, other resin components, and the like, a method of melt-kneading a propylene-based polymer, an additive, a filler, and the like and dry blending other resin components into the melt blended one, or a method of dry blending a master batch in which an additive, a filler, and the like are dispersed in a carrier resin in a high concentration, in addition to a propylene-based polymer and the other resin components.

When the polypropylene-based resin (H) constituting the surface decorative layer (III) is a polypropylene-based resin composition, the polypropylene-based resin composition may be the same as or different from the polypropylene-based resin composition that composes the propylene-ethylene copolymer block copolymer (F) constituting the sealing layer (I).

The decorative film of the present embodiment has a thickness of preferably about 20 μm or more, more preferably about 50 μm or more, further preferably about 80 μm or more. By controlling the thickness of the decorative film to such a value or more, an effect of imparting design is improved and the stability at the forming is also improved, so that it becomes possible to obtain a more satisfactory decorative molded body. On the other hand, the thickness of the decorative film is preferably about 2 mm or less, more preferably about 1.2 mm or less, further preferably about 0.8 mm or less. By controlling the thickness of the decorative film to such a value or less, a time required for heating at the time of thermoforming is shortened, thereby improving productivity, and it becomes easy to trim an unnecessary portion.

In the decorative film of the present embodiment, the ratio of the thickness of the sealing layer (I) to the thickness of the whole decorative film is preferably 1 to 70% and the ratio of the thickness of the layer (II) is preferably 30 to 99%. When the ratio of thickness of the sealing layer (I) relative to the whole decorative film is in the above range, sufficient adhesive strength can be exhibited and the emergence of the scratches of the resin molded body (substrate) to the surface can be suppressed. Moreover, when the ratio of thickness of the layer (II) relative to the whole decorative film decorative film is in the above range, it can be avoided that the thermoformability of the decorative film becomes insufficient.

Furthermore, in the multi-layered film where the surface decorative layer (III) composed of the polypropylene-based resin (H) is provided on the uppermost surface of the decorative film, the ratio of the thickness of the surface decorative layer (III) relative to the whole decorative film is preferably 30% or less.

At the time when the decorative film includes the sealing layer (I) described in the above [7. Sealing Layer (I) composed of Polyolefin Adhesive Resin (G)], as another preferable embodiment of the decorative film, there is mentioned a multi-layered film also including a surface decorative layer (III) composed of a surface decorative layer resin at an opposite face side of the layer (II) to the sticking face side to the resin molded body, more preferably on the uppermost surface at the opposite face side. The surface decorative layer resin is preferably a thermoplastic resin, more preferably a polypropylene-based resin (H) having an MFR (230°C, a load of 2.16 kg) of more than 2 g/10 minutes. That is, by further providing a surface decorative layer (III) composed of the polypropylene-based resin (H) on the surface layer of the decorative film, the gloss and crimp-transferability can be improved without a large decrease in thermoformability. Moreover, by using the polypropylene-based resin (H), complication of layer configuration and a decrease in the recyclability can be suppressed. In addition, by using the polypropylene-based resin (H) for a surface decorative layer of the decorative film, solvent resistance and the like can be made excellent. Moreover, by using the polypropylene-based resin (H) for the surface decorative layer, transferability of the surface is improved at the time of the production and the thermoforming of the decorative film and, when a mirror surface-shaped roll is used at the thermoforming, a decorative film having higher gloss can be obtained.

As the polypropylene-based resin (H) in the present embodiment, there may be selected one of various types of propylene-based polymers, such as propylene homopolymer (homopolypropylene), a propylene-α-olefin copolymer (random polypropylene), and a propylene block copolymer (block polypropylene), or a combination thereof. The propylene-based polymer preferably contains 50 mol% or more of a propylene monomer. The propylene-based polymer preferably does not contain a polar group-containing monomer unit. The polypropylene-based resin (H) is preferably homopolypropylene from the viewpoints of oil resistance, solvent resistance, scratch resistance, and the like. From the viewpoints of gloss and transparency (color development), a propylene-$\alpha$-olefin copolymer is preferred. In the present embodiment, the polypropylene-based resin (H) constituting the surface decorative layer (III) may be the same as or different from the polyolefin adhesive resin (G) constituting the sealing layer (I).

The polypropylene-based resin (H) in the present embodiment has a strain hardening degree of preferably less than 1.1, more preferably 1.0 or less. By controlling the strain hardening degree of the polypropylene-based resin (H) to less than 1.1, the appearance of the decorative molded body can make satisfactory. The strain hardening degree of the polypropylene-based resin (H) is determined by the aforementioned method.

As for the polypropylene-based resin (H) in the present embodiment, MFR (230°C, a load of 2.16 kg) is preferably more than 2 g/10 minutes, more preferably 5 g/10 minutes, further preferably 9 g/10 minutes. By controlling MFR of the polypropylene-based resin (H) to the range of the above values, there are obtained effects that the gloss of the decorative film is improved and the crimp-transferability is improved, and a decorative molded body having satisfactory appearance can be obtained with regard to the required surface form (gloss, non-gloss, crimp, etc.) of the molded body.

An upper limit of MFR of the polypropylene-based resin (H) is not particularly limited but is preferably 100 g/10 minutes or less, more preferably 50 g/10 minutes. By controlling MFR(H) to the range of the above values, satisfactory oil resistance, solvent resistance, scratch resistance, and the like can be exhibited.

The polypropylene-based resin (H) may contain an additive, a filler, other resin components, and the like. That is, it may be a resin composition (polypropylene-based resin composition) of a propylene-based polymer, an additive, a filler, other resin components, and the like. The total amount of the additive, filler, other resin components, and the like is preferably 50% by weight or less relative to the polypropylene-based resin composition.

As the additive, the additives and the like which may be contained in the resin composition (B) can be used.

The polypropylene-based resin composition can be produced by a method of melt-kneading a propylene-based polymer, an additive, a filler, other resin components, and the like, a method of melt-kneading a propylene-based polymer, an additive, a filler, and the like and dry blending other resin components into the melt blended one, or a method of dry blending a master batch in which an additive, a filler, and the like are dispersed in a carrier resin in a high concentration, in addition to a propylene-based polymer and the other resin components.

The decorative film of the present embodiment has a thickness of preferably about 20 $\mu$m or more, more preferably about 50 $\mu$m or more, further preferably about 80 $\mu$m or more. By controlling the thickness of the decorative film to such a value or more, an effect of imparting design is improved and the stability at the forming is also improved, so that it becomes possible to obtain a more satisfactory decorative molded body. On the other hand, the thickness of the decorative film is preferably about 2 mm or less, more preferably about 1.2 mm or less, further preferably about 0.8 mm or less. By controlling the thickness of the decorative film to such a value or less, a time required for heating at the time of thermoforming is shortened, thereby improving productivity, and it becomes easy to trim an unnecessary portion.

In the decorative film of the present embodiment, the ratio of the thickness of the layer (II) to the thickness of the whole decorative film is preferably 30 to 99% and the ratio of the thickness of the sealing layer (I) is preferably 1 to 70%. When the ratio of the thickness of the layer (II) relative to the whole decorative film is in the range of the above values, it can be avoided that the thermoformability of the decorative film becomes insufficient. Moreover, when the ratio of thickness of the sealing layer (I) relative to the whole decorative film is in the range of the above values, sufficient adhesive strength can be exhibited to the substrate composed of a polar resin material.

Furthermore, in the multi-layered film where the surface decorative layer (III) composed of the polypropylene-based resin (H) is provided on the uppermost surface of the decorative film, the ratio of the thickness of the surface decorative layer (III) relative to the whole decorative film is preferably 30% or less.

[Production of Decorative Film]

The decorative film of the present invention can be produced by known various forming/molding methods.

For example, there may be mentioned a method of extrusion molding of the layer (II) composed of the resin composition (B) containing the polypropylene-based resin (B), a method of co-extrusion molding of the layer (II) composed of the resin composition (B) and the other layer(s), a thermal lamination method of attaching the other layer on one surface of one layer, which is subjected to extrusion molding beforehand, by applying heat and pressure, a dry lamination method and a wet lamination method of attaching the layer (II) and the other layer(s) through an adhesive, an extrusion lamination method of melt-extruding a polypropylene-based resin on one surface of one layer subjected to extrusion molding beforehand, a sand lamination method, and the like.

Moreover, there may be mentioned a method of co-extrusion molding of any of various sealing layers (I) and the layer (II) composed of the resin composition (B), a method of co-extrusion molding of the sealing layer (I), the layer (II), and further the other layer(s), a thermal lamination method of attaching the other layer on one surface of one layer,

which is subjected to extrusion molding beforehand, by applying heat and pressure, a dry lamination method and a wet lamination method of attaching layers through an adhesive, an extrusion lamination method of melt-extruding a polypropylene-based resin on one surface of one layer subjected to extrusion molding beforehand, a sand lamination method, and the like.

As an apparatus for forming the decorative film, a known co-extrusion T-die molding machine or a known laminate molding machine can be used. Of these, from the viewpoint of productivity, the (co-)extrusion T-die molding machine is suitably used.

As a method of cooling a melted decorative film extruded from a die, there may be mentioned a method of bringing the melted decorative film into contact with one cooling roll through air discharged from an air knife unit or an air chamber unit and a method of cooling by pressing the film by means of a plurality of cooling rolls.

In the case of imparting gloss to the decorative film of the present invention, there is used a method of subjecting the decorative film to mirror finishing by surface-transferring a mirror surface-shaped cooling roll to a design surface of a product of the decorative film.

Furthermore, the decorative film of the present invention may have a crimped shape on the surface. Such a decorative film can be produced by a method of directly pressing a melted resin extruded from a die with a roll having an uneven shape and a smooth roll to surface-transfer the uneven shape, a method of pressing a smooth film with a roll having an uneven shape and a smooth cooling roll to achieve surface transfer, and other methods. As the crimped shape, satin-tone, animal skin-tone, hairline-tone, carbon-tone, and the like are exemplified.

The decorative film of the present invention may be subjected to a heat treatment after film forming. As methods for the heat treatment, there may be mentioned a method of heating with a hot roll, a method of heating with a heating furnace or a far-infrared heater, a method of blowing hot air, and other methods.

[Decorative Molded Body]

As a molded body to be decorated (a decoration object) in the present invention, various types of resin molded body (hereinafter, sometimes referred to as "substrate") composed of a polypropylene-based resin or a polypropylene-based resin composition can be preferably used. The molding method of the resin molded body is not particularly limited and, for example, injection molding, blow molding, press molding, extrusion molding, and the like may be mentioned.

Since the polypropylene-based resin is non-polar, it is a hardly adhesive polymer but the decorative film in the invention includes the layer (II) composed of the resin composition (B) containing the polypropylene-based resin (B), so that very high adhesive strength can be exhibited through sticking of the decoration object composed of a polypropylene-based resin and the decorative film.

Moreover, since the film includes one of various sealing layers (I) and the layer (II) composed of the resin composition (B) containing the polypropylene-based resin (B), very high adhesive strength is exhibited through the sticking of the decoration object composed of a polypropylene-based resin and the decorative film, and also the scratches formed on the surface of the decoration object can be made inconspicuous.

As the polypropylene-based resin and the base resin of the polypropylene-based resin composition of the molded body that is the decoration object, there can be selected known various type ones using a propylene monomer as a main raw material, such as propylene homopolymer (homopolypropylene), propylene-$\alpha$-olefin copolymers, and propylene block copolymers. Moreover, a filler such as talc for imparting rigidity, an elastomer for imparting impact resistance, and the like may be contained as long as they do not impair the advantages of the present invention. Furthermore, similarly to the aforementioned polypropylene-based resin composition that can constitute the decorative film, additive components and other resin components may be contained.

Moreover, as a molded body to be decorated (a decoration object) in the present invention, various types of resin molded bodies composed of polar resin materials can be also used. In that case, there can be preferably used various molded bodies composed of polar resin materials selected from polyester resins, polyamide resins, polyimide resins, polystyrene resins, acryl resins, polyvinyl alcohol resins, polycarbonate resins, ABS resins, urethane resins, melamine resins, polyphenylene ether resins, and composite materials thereof. Furthermore, additives such as reinforcing agents such as inorganic fillers, antioxidants, UV absorbers, antistatic agents, flame retardants, and lubricants may be added to these resins, and the additives may be used solely or two or more thereof may be used in combination. The molding method is not particularly limited and, for example, injection molding, blow molding, press molding, extrusion molding, and the like may be mentioned.

Since a polypropylene-based resin that is non-polar is a hardly adhesive polymer, the aforementioned polar resin materials usually do not thermally adhere to the resin. On the other hand, the decorative film in the invention preferably includes the sealing layer (I) composed of the polyolefin adhesive resin (G), so that thermal adhesion of the decoration object and the film becomes possible and high adhesive strength can be exhibited. As the polyolefin adhesive resin (G), a modified polyolefin resin to which an $\alpha,\beta$-unsaturated carboxylic acid is grafted can be preferably exemplified.

In the decorative molded bodies where the decorative film in the present invention is stuck to various molded

bodies composed of a polypropylene-based resin, particularly various molded bodies formed into a three-dimensional shape, VOC contained in coatings and adhesives is remarkably reduced, so that the decorative molded bodies can be suitably used as automobile members, home electric appliances, vehicles (railway etc.), building materials, daily necessities, and the like.

[Production of Decorative Molded Body]

The method for producing the decorative film of the present invention is characterized by including a step of preparing the aforementioned decorative film, a step of preparing a resin molded body, a step of setting the resin molded body and the decorative film in a pressure-reducible chamber box, a step of reducing the pressure in the chamber box, a step of heating and softening the decorative film, a step of pushing the heated and softened decorative film to the resin molded body, and a step of returning the inside of the pressure-reduced chamber box to atmospheric pressure or pressurizing the inside.

The three-dimensional decorative thermoforming has a basic steps of setting an decoration object and the decorative film in a pressure-reducible chamber box, heating and softening the decorative film in a state that the pressure in the chamber box is reduced, pushing the softened decorative film to the decoration object, and sticking the decorative film to the surface of the decoration object by returning the inside of the chamber box to atmospheric pressure or pressurizing the inside, thus performing attachment of the decorative film under reduced pressure. Thereby, a beautiful decorative molded body can be obtained without generation of air bubbles. In the production method of the present invention, known any techniques can be used as long as they are equipments and conditions suitable to the three-dimensional decorative thermoforming.

That is, the chamber box may be one chamber box which accommodates all of the decoration object and the decorative film and a mechanism for pushing it, an apparatus for heating the decorative film, and the like or may be plural ones divided by the decorative film.

Moreover, the mechanism for pushing the decoration object to the decorative film may be any type of one that transfers the decoration object, one that transfers the decorative film, and one that transfers the both.

More specifically, typical forming methods are exemplified in the following.

Hereinafter, with reference to drawings, there is illustratively explained the method of sticking the decorative film to the decoration object using a three-dimensional decorative thermoforming machine.

As shown in FIG. 2, the three-dimensional decorative thermoforming machine of this embodiment has chamber boxes 11 and 12 at the upper and lower sides and also thermoforming of a decorative film 1 is performed inside the two chamber boxes 11 and 12. A vacuum circuit (not shown in the figure) and an air circuit (not shown in the figure) are piped to the upper and lower chamber boxes 11 and 12, respectively.

Further, between the upper and lower chamber boxes 11 and 12, a jig 13 for fixing the decorative film 1 is provided. Moreover, a table 14 that can ascend and descend is installed in the lower chamber box 12 and a resin molded body (decoration object) 5 is set on the table 14 (through a jig or the like or directly). A heater 15 is incorporated in the upper chamber box 11 and the decorative film 1 is heated by the heater 15. As the decoration object 5, a propylene-based resin composition may be a substrate.

As such a three-dimensional decorative thermoforming machine, a commercially available forming machine (e.g., NGF series manufactured by Fu-se Vacuum Forming Ltd.) can be used.

As shown in FIG. 3, first, in a state that the upper and lower chamber boxes 11 and 12 are opened, the decoration object 5 is placed on the table 14 in the lower chamber box 12 and the table 14 is set in a descended state. Subsequently, the decorative film 1 is set on the jig 13 for film fixing between the upper and lower chamber boxes 11 and 12. In the system containing the sealing layer (I), the decorative film 1 is set so that the sealing layer (I) faces to the substrate.

As shown in FIG. 4, the upper chamber box 11 is descended and the upper and lower chamber boxes 11 and 12 are jointed to make the insides of the chamber boxes 11 and 12 a closed state. Thereafter, a vacuum-suctioned state is achieved at the inside of each of the upper and lower chamber boxes 11 and 12 and the decorative film 1 is heated by the heater 15.

After the decorative film 1 is heated and softened, as shown in FIG. 5, the table 14 in the lower chamber box 12 is ascended while maintaining the inside of the upper and lower chamber boxes 11 and 12 in the vacuum suctioned state. The decorative film 1 is pushed to the decoration object 5 to cover the decoration object 5. Further, as shown in FIG. 6, by opening the upper chamber box 11 under atmospheric pressure or feeding compressed air from an air pressure tank, the decorative film 1 is closely adhered to the decoration object 5 by greater force.

Subsequently, the insides of the upper and lower chamber boxes 11 and 12 are opened under atmospheric pressure and a decorative molded body 6 is taken out of the lower chamber box 12. Finally, as exemplified in FIG. 7, an unnecessary edge of the decorative film 1 around the decorative molded body 6 is trimmed.

[Forming Conditions]

The reduction of the pressure in the chamber boxes 11 and 12 may be to such a degree that air bubbles are not generated and the pressure in the chamber boxes is 10 kPa or less, preferably 3 kPa or less, more preferably 1 kPa or less.

Moreover, in the two chamber boxes 11 and 12 divided into upper and lower ones by the decorative film 1, it is sufficient that the pressure in the chamber box at the side where the decoration object 5 and the decorative film 1 are attached is in the above range, and draw-down of the decorative film 1 can be also suppressed by changing the pressure of the upper and lower chamber boxes 11 and 12.

At this time, a film composed of a common polypropylene-based resin is sometimes remarkably deformed or broken by slight pressure variation owing to a decrease in viscosity at the time of heating.

However, since the decorative film 1 of the present invention includes the layer (II) composed of the resin composition (B) containing a specific polypropylene-based resin (B), the film not only is less prone to generate draw-down but also has resistance to film deformation which may result from pressure variation.

The heating of the decorative film 1 is controlled by heater temperature (output) and heating time. Further, it is also possible that the surface temperature of the film is measured on a thermometer such as a radiation thermometer and the temperature is used as a measure of suitable conditions.

In the present invention, for sticking the polypropylene-based decorative film 1 to the decoration object 5 composed of a polypropylene-based resin, it is necessary to soften or melt the surface of the resin molded body 5 and the decorative film 1 sufficiently.

Therefore, the heater temperature should be higher than melting temperature of the polypropylene-based resin constituting the decoration object 5 and the polypropylene-based resin constituting the decorative film 1. The heater temperature is preferably 160°C or higher, more preferably 180°C or higher, most preferably 200°C or higher.

Although a time required for heating is shortened as the heater temperature becomes high, the temperature at the heater side becomes too high until the inside of the decorative film 1 (or an opposite face to the heater in the case where the heater is installed only at one side) is sufficiently heated and thus not only deterioration of the formability is invited but also the resin is thermally degraded, so that the heater temperature is preferably 500°C or lower, more preferably 450°C or lower, most preferably 400°C or lower.

Suitable heating time varies depending on the heater temperature but, if short, it is preferred to continue heating for such a period of time that the polypropylene-based decorative film is heated and tension return called spring-back is started or for a period of time that is longer than the period.

In some embodiments, the first embodiment, and the second embodiment, it is preferred to continue heating for a period of time after 2 seconds from the finish of tension return or for a period of time that is longer than the period.

That is, the decorative film heated by the heater shows behavior that it is thermally expanded by heating from a solid state and once slackens with the progress of crystal melting, spring-back where tension temporarily returns is observed through relaxation of the molecule when the crystal melting proceeds throughout the film, and thereafter it hangs down by its own weight. After the spring-back, crystals are completely melted in the decorative film and the relaxation of the molecule is sufficient, so that sufficient adhesive strength is obtained.

Furthermore, since the decorative film including the sealing layer (I) of the present invention can surprisingly adhere to the substrate strongly even when decorative thermoforming is performed before the tension return is finished, it is possible to reduce such damage to the film that the additive(s) contained in the film migrate to the outside of the film at the time of thermoforming and a large effect is also observed on the suppression of fading of crimps.

On the other hand, when the heating time is too long, the decorative film hangs down by it own weight or is deformed due to pressure difference between the upper and lower chamber boxes, so that the heating time is preferably less than 120 seconds after the finish of the spring-back.

In the case where a complex-shape molded body having unevenness is decorated or in the case where higher adhesive force is achieved, it is preferred to feed compressed air at the time of closely adhering the decorative film to the substrate. The pressure in the upper chamber box at the time of introducing the compressed air is preferably 150 kPa or more, more preferably 200 kPa or more, further preferably 250 kPa or more. An upper limit is not particularly limited but, since there is a concern of damaging devices when the pressure is too high, it is suitable that the pressure is preferably 450 kPa or less, more preferably 400 kPa or less.

EXAMPLE

Hereinafter, the present invention will be further specifically explained as Examples, but the invention should not be construed as being limited to the Examples.

1. Measurement Methods of Various Physical Properties

(i) Melt Flow Rate (MFR)

It was measured at 230°C under a load of 2.16 kg in accordance with ISO 1133:1997 Conditions M. The unit is g/10 minutes.

(ii) Strain Hardening Degree λ

The determination of the strain hardening degree λ was performed by the method mentioned above. At this time, η*(0.01) to be used as a value of shear viscosity and ηe(3.5) to be used as a value of elongational viscosity were measured by the following methods. Moreover, the sample used for the measurement at this time is one formed into a flat plate having a thickness of 0.7 mm or 2 mm by pressing under conditions of a temperature of 180°C and a pressure of 10 MPa for 1 hour, and the sample having a thickness of 0.7 mm was used for the measurement of elongational viscosity and the sample having a thickness of 2 mm was used for the measurement of a dynamic frequency sweeping experiment.

(ii-1) Shear Viscosity η*(0.01)

Using ARES manufactured by Rheometric Scientific Ltd., a dynamic frequency sweep experiment was performed. As measurement geometry, a parallel disk having a diameter of 25 mm was used. Using a device controlling software TA Orchestrator, the measurement was carried out in a measurement mode of Dynamic Frequency Sweep Test. As a sample, there was used the press molded body having a thickness of 2 mm prepared by the above method. The measurement temperature was controlled to 180°C. The measurement was performed at five points per one digit between 0.01 and 100 rad/s of angular frequency ω so as to become equal interval on a logarithmic scale.

As an index showing viscosity of the sample at a low shear velocity, a complex viscosity coefficient η*(0.01) [unit: Pa.s] at ω=0.01 rad/s is adopted. Incidentally, the complex viscosity coefficient η* is calculated from complex modulus G* [unit: Pa] and ω using η*=G*/ω).

(ii-2) Elongational viscosity ηe(3.5)

Using Extensional Viscosity Fixture manufactured by T A instruments as a measurement jig of ARES manufactured by Rheometric Scientific Ltd., the measurement of elongational viscosity was performed. Using a device controlling software TA Orchestrator, the measurement was carried out in a measurement mode of Extensional Viscosity Test. As a sample, there was used the test specimen having a thickness of 0.7 mm prepared by the above method. The width of the test specimen was 10 mm and the length thereof was 18 mm. The strain velocity was 1.0 $s^{-1}$ and the measurement temperature was 180°C. The other measurement parameters were set as follows.

Sampling Mode: log
Points per Zone: 200
Solid Density: 0.9
Melt Density: 0.8
Prestretch Rate: 0.05 $s^{-1}$
Relaxation after Prestretch: 30 sec
Under the conditions, data are collected for at least 3.7 seconds from the start of the measurement. By means of the software, time-dependent data of elongational viscosity were obtained. A value of elongational viscosity at the time point of 3.5 sec (i.e., strain amount of 3.5) on the obtained elongational viscosity curve was taken as ηe(3.5) [unit: Pa.s].

(iii) Melting Peak Temperature (Melting Point):

Using a differential scanning calorimeter (DSC), after temperature was once raised to 200°C and kept for 10 minutes, the temperature was lowered to 40°C at a temperature-lowering rate of 10°C/minute, and, at the time of measurement again at a temperature-raising rate of 10°C/minute, temperature at an endothermic peak top was taken as melting peak temperature (melting point). The unit is °C.

(iv) Measurement of Branching Index g' at Absolute Molecular Weight Mabs of 1,000,000:

According to the aforementioned method, measurement was performed using GPC fitted with a light scattering meter and a viscometer as detectors and the branching index g' was determined based on the aforementioned analysis method.

(v) Detection of Long-Chain Branching Structure using $^{13}C$-NMR:

According to the aforementioned method, measurement was performed using $^{13}C$-NMR to measure the presence of a long-chain branched structure.

(vi) GPC Measurement:

GPC measurement was performed using the following apparatus and conditions and calculation of Mw/Mn was conducted.

- Apparatus: GPC manufactured by Waters Corporation (ALC/GPC 150C)
- Detector: MIRAN 1A IR detector (measurement wavelength: 3.42 μm) manufactured by FOXBORO.
- Column: AD806M/S (3 columns) manufactured by Showa Denko K.K.
- Mobile phase solvent: ortho-dichlorobenzene (ODCB)
- Measurement temperature: 140°C
- Flow rate: 1.0 ml/min
- Injection amount: 0.2 ml
- Sample preparation: A sample is prepared as a 1 mg/mL solution using ODCB (containing 0.5 mg/mL of BHT), which is dissolved at 140°C with taking about 1 hour.

The conversion from retention volume obtained on GPC measurement into molecular weight is performed using a calibration curve preliminarily generated with standard polystyrenes (PS). The standard polystyrenes to be used are those of the following brands all manufactured by Tosoh Corporation.
F380, F288, F128, F80, F40, F20, F10, F4, F1, A5000, A2500, A1000
A calibration curve was prepared by injecting 0.2 mL of a solution obtained by dissolving each polystyrene in ODCB (containing 0.5 mg/mL of BHT) so as to be 0.5 mg/mL. For the calibration curve, there is used a cubic expression obtained through approximation by the least square method.
Incidentally, in a viscosity expression $[\eta]=K\times M\alpha$ to be used for the conversion into molecular weight, the following numerals are used.

$$\text{PS: } K=1.38\times10^{-4},\ \alpha=0.7$$

$$\text{PP: } K=1.03\times10^{-4},\ \alpha=0.78$$

(vii) Density:

The density of an ethylene-α-olefin random copolymer (C) and a thermoplastic elastomer (D) is measured according to the density gradient column method of JIS K7112:1999.

(viii-1) Ethylene Content [E(C)]:

The ethylene content [E(C)] of an ethylene-α-olefin random copolymer (C) was determined from integrated intensity obtained by $^{13}C$-NMR measurement based on the method as mentioned above. Preparation of a sample and measurement conditions are as follows.
Into an NMR sample tube having an internal diameter of 10 mmϕ was put 200 mg of an ethylene-α-olefin random copolymer (C) as a sample together with 2.4 ml of o-dichlorobenzene/deuterated bromobenzene ($C_6D_5Br$)=4/1 (volume ratio) and hexamethyldisiloxane as a reference substance for chemical shift, followed by dissolution.
The NMR measurement was performed using an AV400 model NMR apparatus manufactured by Burker-Biospin K.K., which had been fitted with a cryoprobe of 10 mmϕ.

The conditions for the $^{13}C$-NMR measurement were as follows: sample temperature of 120°C, pulse angle of 90°, pulse interval of 20 seconds, integration times of 512, and the measurement was conducted by a broadband decoupling method.

(viii-2): Calculation of Ethylene Content of Propylene-Ethylene Block Copolymer (F), Component (F1), and Component (F2):

The ethylene contents of the propylene-ethylene block copolymer (F), the component (F1), and the component (F2) were determined by the aforementioned measurement method of ethylene content by means of $^{13}C$-NMR.

(ix) Isothermal Crystallization Time:

The isothermal crystallization time was measured by the aforementioned method using a differential scanning calorimeter (DSC).

Incidentally, in the case of measuring the isothermal crystallization time of the resin composition (X), the polypropylene-based resin (A) and the thermoplastic resin (E) were melt-kneaded on a twin-screw extruder to obtain pellets of the resin composition (X) and the isothermal crystallization time was measured using the pellets. As the twin-screw extruder, KZW-15 manufactured by TECHNOVEL Corporation was used and the number of screw rotations was set at 400 RPM and the kneading temperature was set at 80°C, 120°C, and 200°C (hereinafter the same temperature to a die exit) from under the hopper.

[1. Decorative Film including Layer (II) (Decorative Film Containing no Sealing Layer (I))

1-2. Used Materials

(1-1) Polypropylene-based Resins

The following polypropylene-based resins were used.

(1A-1-1): Propylene homopolymer having a long-chain branch, which was produced by a macromer copolymerization method, trade name "WAYMAX (registered trademark) MFX8" manufactured by Japan Polypropylene Corporation, MFR=1.0 g/10 minutes, strain hardening degree $\lambda$=9.7, Tm=154°C, branching index g' at an absolute molecular weight Mabs of 1,000,000=0.89, the presence of a long-chain branched structure was confirmed by $^{13}C$-NMR measurement.

(1A-1-2): Propylene homopolymer having a long-chain branch, which was produced by a macromer copolymerization method, trade name "WAYMAX (registered trademark) MFX3" manufactured by Japan Polypropylene Corporation, MFR=8.8 g/10 minutes, strain hardening degree $\lambda$=7.8, Tm=154°C, branching index g' at an absolute molecular weight Mabs of 1,000,000=0.85, the presence of a long-chain branched structure was confirmed by $^{13}C$-NMR measurement.

(1A-1-3): Propylene homopolymer having a long-chain branch, which was produced by a crosslinking method, trade name "Daproy (registered trademark) WB140" manufactured by Borealis AG, MFR=2.2 g/10 minutes, strain hardening degree $\lambda$=10.6, Tm=158°C, branching index g' at an absolute molecular weight Mabs of 1,000,000=0.58, the presence of a long-chain branched structure was confirmed by $^{13}C$-NMR measurement.

(1A-1-4): Polypropylene-based resin composition (MFR=1.0 g/10 minutes, strain hardening degree $\lambda$=9.3, Tm=154°C) obtained by blending 96% by weight of the polypropylene-based resin (1A-1-1) with 4% by weight of a black pigment MB (EPP-K-120601 manufactured by Polycol Kogyo K.K.)

(1A-2-1): Propylene homopolymer having no long-chain branch (MFR=10 g/10 minutes, Tm=161°C, strain hardening degree $\lambda$=1.0), trade name "NOVATEC (registered trademark) FA3KM" manufactured by Japan Polypropylene Corporation, branching index g' at an absolute molecular weight Mabs of 1,000,000=1.0, the absence of a long-chain branched structure was confirmed by $^{13}C$-NMR measurement.

(1A-2-2): Propylene homopolymer having no long-chain branch (MFR=2.4 g/10 minutes, Tm=161°C, strain hardening degree $\lambda$=0.9), trade name "NOVATEC (registered trademark) FY6" manufactured by Japan Polypropylene Corporation, branching index g' at an absolute molecular weight Mabs of 1,000,000=1.0, the absence of a long-chain branched structure was confirmed by $^{13}C$-NMR measurement.

(1B-1): Polypropylene-based resin composition (MFR=10 g/10 minutes, Tm=164°C) obtained by blending 100% by weight of the polypropylene-based resin (1A-2-1) with 0.4% by weight of a nucleating agent (trademark "Millad NX8000J" manufactured by Milliken Japan, K.K.)

(1B-2): Propylene-$\alpha$-olefin copolymer having no long-chain branch (MFR=7 g/10 minutes, Tm=125°C, Mw/Mn=2.5)

by metallocene catalyst, trade name "WINTEC (registered trademark) WFX4M" manufactured by Japan Polypropylene Corporation, the absence of a long-chain branched structure was confirmed by $^{13}C$-NMR measurement.
(1B-3): Polypropylene-based resin composition (MFR=7 g/10 minutes, Tm=127°C) obtained by blending 100% by weight of the polypropylene-based resin (1B-2) with 0.4% by weight of a nucleating agent (trademark "Millad NX8000J" manufactured by Milliken Japan, K.K.)
(1B-4): Polypropylene-based resin composition (MFR=11 g/10 minutes, Tm=161°C) obtained by blending 96% by weight of the polypropylene-based resin (1A-2-1) with 4% by weight of a white pigment MB (EPP-W-59578 manufactured by Polycol Kogyo K.K., titanium oxide content of 80% by weight)
(1B-5): Polypropylene-based resin composition (MFR=10 g/10 minutes, Tm=161°C) obtained by blending 96% by weight of the polypropylene-based resin (1A-2-1) with 4% by weight of a silver pigment MB (PPCM913Y-42 SILVER21X manufactured by TOYOCOLOR Co., Ltd.)

(1-2) Polypropylene-based Resin used for Resin Molded Body

The following polypropylene-based resins were used.

(1X-1): Propylene homopolymer (MFR=40 g/10 minutes, Tm=165°C), trade name "NOVATEC (registered trademark) MA04H" manufactured by Japan Polypropylene Corporation
(1X-2): Propylene ethylene block copolymer (MFR=30 g/10 minutes, Tm=164°C), trade name "NOVATEC (registered trademark) NBC03HR" manufactured by Japan Polypropylene Corporation
(1X-3): Polypropylene-based resin composition obtained by blending 60% by weight of the polypropylene-based resin (1X-2) with 20% of EBR (TAFMER (registered trademark) A0550S manufactured by Mitsui Chemicals, inc.) of MFR=1.0 and 20% by weight of an inorganic filler (TALC P-6 manufactured by Nippon Talc Co., Ltd., average particle size of 4.0 μm)

1-3. Production of Resin Molded Body (Substrate)

Using the polypropylene-based resins (1X-1) to (1X-3), injection molded bodies (substrates) were obtained by injection molding according to the following method.

Injection molding machine: "IS100GN" manufactured by Toshiba Machine Co., ltd., mold clamping pressure of 100 tons
Cylinder temperature: 200°C
Mold temperature: 40°C
Injection mold: A flat plate of width×height×thickness = 120 mm×120 mm×3 mm
Condition control: Kept in a constant-temperature constant-humidity chamber at a temperature of 23°C and a humidity of 50%RH for 5 days

{Example 1-1}

- Production of Decorative Film

Using an extruder having a nozzle diameter of 40 mm (diameter), the polypropylene-based resin (1A-1-1) was extruded under conditions of a resin temperature of 240°C and a discharge amount of 13 kg/h and was introduced into a monolayer T-die which had been controlled to a temperature of 240°C, a die width of 400 mm, and a lip opening of 0.8 mm, thereby performing melt-extrusion. The melt-extruded film was cooled and solidified on a roll rotating at 3 m/min at 80°C to obtain a monolayer unstretched film having a thickness of 200 μm. The unstretched film constitutes the layer (I) of a decorative film.

- Three-Dimensional Decorative Thermoforming

As the resin molded body (substrate) 5, there was used the injection molded body composed of the polypropylene-based resin (1X-1) obtained in the above.
As a three-dimensional decorative thermoforming apparatus, "NGF-0406-SW" manufactured by Fu-se Vacuum Forming Ltd. was used. A decorative film 1 was cut into a size having a width of 250 mm and a length of 350 mm and was set to a jig 13 for film fixing having an opening part size of 210 mmx300 mm so that the longitudinal direction became the MD direction of the film. The resin molded body (substrate) 5 was attached on a sample-placing stand having a height of 20 mm, which was placed on a table 14 positioned below the jig 13 for film fixing, through "NICETACK NW-K15" manufactured by Nichiban Co., Ltd. The jig 13 for film fixing and the table 14 were placed in upper and lower chamber boxes 11 and 12 and the upper and lower chamber boxes 11 and 12 were closed to make the inside of the chamber boxes a tightly closed state. The chamber boxes were divided into upper and lower ones through the decorative film 1. The upper and lower chamber boxes were vacuum-suctioned and a far-infrared heater 15 placed on the upper chamber box 11 was started at an output of 80% to heat the decorative film 1 in a state that the pressure was reduced from atmospheric pressure (101.3 kPa) to 1.0 kPa. During heating, the vacuum-suction was continued and finally, the pressure was reduced to 0.1 kPa. After 40 seconds from the finish of a spring-back phenomenon that the decorative film 1 was heated to temporarily slacken and thereafter tension returned, the table 14 placed in the lower chamber box 12 was transferred upward to push the resin molded body (substrate) 5 to the decorative film 1 and immediately after that, compressed air was fed so that the pressure in the upper chamber box 11 became 270 kPa to adhere the resin molded body (substrate) 5 and the decorative film 1 closely. Thus, there was obtained a three-dimensional decorative thermoformed article 6 where the decorative film 1 was stuck to the upper surface and side surface of the resin molded body (substrate) 5.

- Physical Property Evaluation

(1-1) Evaluation of Appearance of Decorative Molded Body

A draw-down state of the decorative film at the time of three-dimensional decorative thermoforming and a sticking state of the decorative film of the decorative molded body where the decorative film had been stuck to the substrate were visually observed and evaluated according to the criteria shown below.

O: Since the contact between the substrate and the decorative film is simultaneously achieved over a whole contact surface without generating draw-down of the decorative film at the time of three-dimensional decorative thermoforming, uneven contact is not generated and the film is uniformly stuck.
Δ: Since slight draw-down of the decorative film occurs at the three-dimensional decorative thermoforming, the contact with the decorative film is started from the center of the substrate and thus uneven contact is generated at an edge part of the upper surface of the substrate.
×: Since draw-down of the decorative film remarkably occurs at the time of three-dimensional decorative thermoforming, uneven contact is generated all over the surface of the substrate.

(1-2) Gloss

The gloss in the vicinity of the center of the three-dimensional decorative thermoformed article to which a decorative film had been stuck was measured at an incident angle of 60° using Gloss Meter VG2000 manufactured by Nippon Denshoku Industries Co., Ltd. The measurement method conformed to JIS K7105-1981. Table 2 shows measurement results.

(1-3) Adhesive Force between Resin Molded Body (Substrate) and Decorative Film

"Craft adhesive tape No. 712N" manufactured by Nitoms, Inc. was cut into a size having a width of 75 mm and a length of 120 mm and was attached to a resin molded body (substrate) in the range of 75 mm×120 mm from the edge part of the resin molded body to perform a masking treatment (a surface exposed part of the substrate had a width of 45 mm and a length of 120 mm). The resin molded body (substrate) was placed on a three-dimensional decorative thermoforming apparatus NGF-0406-SW so that the masking face of the molded body came into contact with the decorative film, and three-dimensional decorative thermoforming was conducted.
The decorative film face of the obtained decorative molded body was cut to the substrate surface at a width of 10 mm using a cutter in a vertical direction toward a longitudinal direction of the adhesive tape to prepare a test specimen. In the obtained test specimen, the adhesion face between the substrate and the decorative film has a width of 10 mm and a length of 45 mm. It was fixed to a tensile tester so that the substrate part and the decorative film part of the test specimen made an angle of 180°, and 180° peeling strength of the adhesion face was measured at a tensile rate of 200 mm/min. Maximum strength (N/10 mm) at peeling or at break was measured five times and averaged strength was taken as adhesive force.
Table 2 shows results of physical property evaluation of the obtained decorative molded body.
Since MFR of the polypropylene-based resin (1A-1-1) was 40 g/10 minutes or less and the strain hardening degree $\lambda$ thereof was 1.1 or more, the obtained decorative molded body was excellent in appearance and adhesive force.

(1-4) Evaluation of Recyclability

The obtained decorative molded body was pulverized and a recycled molded body was prepared by injection molding in the same manner as in the production of the resin molded body (substrate). The obtained recycled molded body was excellent in appearance (evaluation in the table: "O").

{Examples 1-2 to 1-5}

Forming and evaluation were performed in the same manner as in Example 1-1 except that, in the three-dimensional decorative thermoforming of Example 1-1, the polypropylene-based resin (1A-1-1) was changed to each blend (resin composition (B)) of the polypropylene-based resins (1A-1-1) and (1A-2-1) described in Table 2. Table 2 shows obtained results.

Since MFR of the resin composition (B) was 40 g/10 minutes or less and the strain hardening degree λ thereof was 1.1 or more, the obtained decorative molded body was excellent in appearance and adhesive force. Moreover, the recycled molded body was excellent in appearance.

{Example 1-6}

Forming and evaluation were performed in the same manner as in Example 1-1 except that, in the three-dimensional decorative thermoforming of Example 1-1, the polypropylene-based resin (1A-1-1) was changed to the polypropylene-based resin (1A-2-1). Table 2 shows obtained results.

Since MFR of the polypropylene-based resin (1A-1-2) was 40 g/10 minutes or less and the strain hardening degree λ thereof was 1.1 or more, the obtained decorative molded body was excellent in appearance and adhesive force. Moreover, the recycled molded body was excellent in appearance.

{Examples 1-7 to 1-10}

Forming and evaluation were performed in the same manner as in Example 1-6 except that, in the three-dimensional decorative thermoforming of Example 1-6, the polypropylene-based resin (1A-1-2) was changed to each blend (resin composition (B)) of the polypropylene-based resins (1A-1-2) and (1A-2-1) described in Table 2. Table 2 shows obtained results.

Since MFR of the resin composition (B) was 40 g/10 minutes or less and the strain hardening degree λ thereof was 1.1 or more, the obtained decorative molded body was excellent in appearance and adhesive force. Moreover, the recycled molded body was excellent in appearance.

{Example 1-11}

Forming and evaluation were performed in the same manner as in Example 1-1 except that, in the three-dimensional decorative thermoforming of Example 1-1, the polypropylene-based resin (1A-1-1) was changed to the polypropylene-based resin (1A-1-3). Table 2 shows obtained results.

Since MFR of the polypropylene-based resin (1A-1-3) was 40 g/10 minutes or less and the strain hardening degree λ thereof was 1.1 or more, the obtained decorative molded body was excellent in appearance and adhesive force. Moreover, the recycled molded body was excellent in appearance.

{Example 1-12}

- Production of Decorative Film

For the production of the decorative film, there was used a 2-kind 2-layer T-die having a lip opening of 0.8 mm and a die width of 400 mm, to which an extruder-1 for a surface layer having a nozzle diameter of 30 mm (diameter) and an extruder-2 having a nozzle diameter of 40 mm (diameter) had been connected. The polypropylene-based resin (1A-2-1) was charged into the extruder-1 for a surface layer and the polypropylene-based resin (1A-1-1) was charged into the extruder-2, and melt-extrusion was performed under conditions of a resin temperature of 240°C, a discharge amount from the extruder-1 for a surface layer of 4 kg/h and a discharge amount from the extruder-2 of 12 kg/h.

The melt-extruded film was cooled and solidified so that the surface layer came into contact with a cooling roll rotating at 3 m/min at 80°C, thereby obtaining a two-layered unstretched film where a surface layer having a thickness of 50 μm and a layer having a thickness of 150 μm were laminated. The obtained unstretched film is a decorative film including a layer (II) and a layer (III) of a surface decorative layer.

Evaluation was performed in the same manner as in Example 1-1 except the above. Table 2 shows obtained results.

Since MFR of the polypropylene-based resin (1A-1-1) constituting the layer (II) was 40 g/10 minutes or less and the strain hardening degree λ thereof was 1.1 or more, the obtained decorative molded body was excellent in appearance and adhesive force. Moreover, the polypropylene-based resin (1A-2-1) was laminated as the surface decorative layer (III) [surface layer (III)] on the layer (II), so that a result of excellent gloss was observed.

{Example 1-13}

Forming and evaluation were performed in the same manner as in Example 1-12 except that, in the production of the decorative film of Example 1-12, the composition of the layer (II) was changed from the polypropylene-based resin (1A-1-1) to the polypropylene-based resin (1A-1-2). Table 2 shows results.

Since MFR of the polypropylene-based resin (1A-1-2) constituting the layer (II) was 40 g/10 minutes or less and the strain hardening degree λ thereof was 1.1 or more, the obtained decorative molded body was excellent in appearance and adhesive force. Moreover, the polypropylene-based resin (1A-2-1) was laminated as the surface decorative layer (III) [surface layer (III)] on the layer (II), so that a result of excellent gloss was observed.

{Comparative Example 1-1}

Forming and evaluation were performed in the same manner as in Example 1-1 except that, in the production of the decorative film of Example 1-1, the polypropylene-based resin (1A-1-1) was changed to the polypropylene-based resin (1A-2-1) having no long-chain branch.

Since the strain hardening degree λ of the polypropylene-based resin (1A-2-1) was less than 1.1, the stability at thermoforming was poor and remarkable draw-down of the decorative film occurred at the time of three-dimensional decorative thermoforming, so that uneven contact was generated all over the surface of the substrate and there was observed a result of remarkably poor appearance of the decorative molded body.

{Comparative Example 1-2}

Forming and evaluation were performed in the same manner as in Example 1-1 except that, in the production of the decorative film of Example 1-1, the polypropylene-based resin (1A-1-1) was changed to the polypropylene-based resin (1A-2-2) having no long-chain branch.

Since the strain hardening degree λ of the polypropylene-based resin (1A-2-2) was less than 1.1, the stability at thermoforming was poor and remarkable draw-down of the decorative film occurred at the time of three-dimensional decorative thermoforming, so that uneven contact was generated all over the surface of the substrate and there was observed a result of remarkably poor appearance of the decorative molded body.

{Comparative Example 1-3 (Decorative Film including Urethane Layer)}

- Production of Decorative Film

A pre-solution was obtained by mixing and stirring 70 g of a water-dispersible polycarbonate-based polyurethane, trade name "R-986" (manufactured by DSM) and 6.5 g of a polycarbodiimide-based crosslinking agent CARBODILITE, trade name "V-02" (manufactured by Nisshinbo Chemical Inc.). The obtained pre-solution was applied on a PET film having a thickness of 75μm using a bar coater and, after drying at 90°C for 3 minutes in a box-type hot-air oven, was further dried and solidified at 120°C for 15 minutes to obtain a PET (polyethylene terephthalate)/urethane laminate film. The thickness of the urethane resin layer was 30 μm.

Next, 80 g of a polyurethane adhesive, trade name "NIPPOLAN 3124" (manufactured by Tosoh Corporation) and 4 g of a crosslinking agent for adhesive, trade name "Coronate HL" (manufactured by Tosoh Corporation) were mixed and stirred to obtain a pre-solution. The cooling roll contact face of the unstretched film obtained in Comparative Example 1-1 was subjected to a corona treatment (wetting index of 40 mN/m) and the aforementioned pre-solution was applied on the corona-treated face of the polypropylene unstretched film using a bar coater and was dried at 80°C for 3 minutes in a box-type hot-air oven to obtain a polypropylene unstretched film/urethane adhesive laminate film. The thickness of the urethane adhesive layer was 10 μm.

Subsequently, the PET/urethene laminate film and the polypropylene unstretched film/urethane adhesive laminate film were laminated so that the urethanes came into contact with each other and, after aging at 40°C for 3 days, the PET film was removed to obtain a urethene/polypropylene laminate film.

- Three-Dimensional Decorative Thermoforming

Evaluation was performed in the same manner as in Example 1-1 except that, in the three-dimensional decorative thermoforming of Example 1-1, setting to the jig for film fixing was performed so that the polypropylene face came into contact with the substrate.

Since the polyurethane layer was contained, the obtained decorative molded body is excellent in appearance and adhesive force although the polypropylene film has no strain hardening property. However, in the recyclability, since urethane is a thermosetting resin and is not re-dissolved, it was dispersed in a polypropylene melt as foreign matter at injection molding and fish eyes were much generated in injected pieces, so that a result of remarkably poor appearance was observed (evaluation: ×).

{Example 1-14}

Evaluation was performed in the same manner as in Example 1-1 except that, in the three-dimensional decorative thermoforming of Example 1-1, the substrate was changed to the injection molded body using the resin (1X-2). Table 3 shows obtained results.

Since MFR of the resin composition (1A-1-1) was 40 g/10 minutes or less and the strain hardening degree λ thereof was 1.1 or more, the obtained decorative molded body was excellent in appearance and adhesive force. Moreover, the recycled molded body was excellent in appearance.

{Example 1-15}

Evaluation was performed in the same manner as in Example 1-1 except that, in the three-dimensional decorative thermoforming of Example 1-1, the substrate was changed to the injection molded body using the resin (1X-3). Table 3 shows obtained results.

Since MFR of the resin composition (1A-1-1) was 40 g/10 minutes or less and the strain hardening degree λ thereof was 1.1 or more, the obtained decorative molded body was excellent in appearance and adhesive force. Moreover, the recycled molded body was excellent in appearance.

{Example 1-16}

Evaluation was performed in the same manner as in Example 1-12 except that, in the production of the decorative film of Example 1-12, the polypropylene-based resin (1A-2-1) used for the surface layer was changed to the polypropylene-based resin (1B-1). Table 3 shows obtained results.

Since MFR of the resin composition (1A-1-1) was 40 g/10 minutes or less and the strain hardening degree λ thereof was 1.1 or more, the obtained decorative molded body was excellent in appearance and adhesive force. Moreover, the recycled molded body was excellent in appearance. Furthermore, the polypropylene-based resin (1B-1) to which a nucleating agent had been added was laminated as the surface decorative layer (III) [surface layer (III)] at the uppermost surface side, so that a result of excellent gloss was observed.

{Example 1-17}

Evaluation was performed in the same manner as in Example 1-12 except that, in the production of the decorative film of Example 1-12, the polypropylene-based resin (1A-2-1) used for the surface layer was changed to the polypropylene-based resin (1B-2). Table 3 shows obtained results.

Since MFR of the resin composition (1A-1-1) was 40 g/10 minutes or less and the strain hardening degree λ thereof was 1.1 or more, the obtained decorative molded body was excellent in appearance and adhesive force. Moreover, the recycled molded body was excellent in appearance. Furthermore, the polypropylene-based resin (1B-2) was laminated as the surface decorative layer (III) [surface layer (III)] at the uppermost surface side, so that a result of excellent gloss was observed.

{Example 1-18}

Evaluation was performed in the same manner as in Example 1-12 except that, in the production of the decorative film of Example 1-12, the polypropylene-based resin (1A-2-1) used for the surface layer was changed to the polypropylene-based resin (1B-3). Table 3 shows obtained results.

Since MFR of the resin composition (1A-1-1) was 40 g/10 minutes or less and the strain hardening degree λ thereof was 1.1 or more, the obtained decorative molded body was excellent in appearance and adhesive force. Moreover,

the recycled molded body was excellent in appearance. Furthermore, the polypropylene-based resin (1B-3) to which a nucleating agent had been added was laminated as the surface decorative layer (III) [surface layer (III)] at the uppermost surface side, so that a result of excellent gloss was observed.

{Example 1-19}

Evaluation was performed in the same manner as in Example 1-12 except that, in the production of the decorative film of Example 1-12, the polypropylene-based resin (1A-2-1) used for the surface layer was changed to the polypropylene-based resin (1B-4). Table 3 shows obtained results.

Since MFR of the resin composition (1A-1-1) was 40 g/10 minutes or less and the strain hardening degree λ thereof was 1.1 or more, the obtained decorative molded body was excellent in appearance and adhesive force. Moreover, the recycled molded body was excellent in appearance. Furthermore, the surface decorative layer (III) [surface layer (III)] excellent in gloss was colored white, so that appearance was excellent.

{Example 1-20}

Evaluation was performed in the same manner as in Example 1-12 except that, in the production of the decorative film of Example 1-12, the polypropylene-based resin (1A-1-1) was changed to the polypropylene-based resin (1A-1-4). Table 3 shows obtained results.

Since MFR of the resin composition (1A-1-4) was 40 g/10 minutes or less and the strain hardening degree λ thereof was 1.1 or more, the obtained decorative molded body was excellent in appearance and adhesive force. Moreover, the recycled molded body was excellent in appearance. In addition, since the layer (II) was colored black, appearance was excellent. Furthermore, the polypropylene-based resin (1A-2-1) was laminated as the surface decorative layer (III) [surface layer (III)] at the uppermost surface side, so that a result of excellent gloss was observed.

{Example 1-21}

Evaluation was performed in the same manner as in Example 1-20 except that, in the production of the decorative film of Example 1-20, the polypropylene-based resin (1A-2-1) used for the surface layer was changed to the polypropylene-based resin (1B-5). Table 3 shows obtained results.

Since MFR of the resin composition (1A-1-4) was 40 g/10 minutes or less and the strain hardening degree λ thereof was 1.1 or more, the obtained decorative molded body was excellent in appearance and adhesive force. Moreover, the recycled molded body was excellent in appearance. Furthermore, the polypropylene-based resin (1B-5) was laminated as the surface decorative layer (III) [surface layer (III)] at the uppermost surface side, so that a result of excellent gloss was observed. In addition, since the layer (II) was colored black and the surface layer (III) was colored silver, the film became a metallic film and appearance was excellent.

[Table 2]

Table 2

| | | | Unit | Example 1-1 | Example 1-2 | Example 1-3 | Example 1-4 | Example 1-5 | Example 1-6 | Example 1-7 | Example 1-8 | Example 1-9 | Example 1-10 | Example 1-11 | Example 1-12 | Example 1-13 | Comparative Example 1-1 | Comparative Example 1-2 | Comparative Example 1-3 |
|---|---|---|---|---|---|---|---|---|---|---|---|---|---|---|---|---|---|---|---|
| Surface decorative layer (III) | | Kind | - | - | - | - | - | - | - | - | - | - | - | - | 1A-2-1 | 1A-2-1 | - | - | - |
| | | λ | | - | - | - | - | - | - | - | - | - | - | - | 1.0 | 1.0 | - | - | - |
| | | MFR | g/10min | - | - | - | - | - | - | - | - | - | - | - | 10 | 10 | - | - | - |
| Layer (II) | Long-chain branching PP (1A-1) | Kind | - | 1A-1-1 | 1A-1-1 | 1A-1-1 | 1A-1-1 | 1A-1-1 | 1A-1-2 | 1A-1-2 | 1A-1-2 | 1A-1-2 | 1A-1-2 | 1A-1-3 | 1A-1-1 | 1A-1-2 | none | none | - |
| | | MFR | g/10min | 1.0 | 1.0 | 1.0 | 1.0 | 1.0 | 8.8 | 8.8 | 8.8 | 8.8 | 8.8 | 2.2 | 1.0 | 8.8 | - | - | PU/PP laminate film |
| | | Ratio | wt% | 100 | 70 | 30 | 10 | 5 | 100 | 70 | 30 | 10 | 5 | 100 | 100 | 100 | 0 | 0 | |
| | Other PP | Kind | - | - | 1A-2-1 | 1A-2-1 | 1A-2-1 | 1A-2-1 | - | 1A-2-1 | 1A-2-1 | 1A-2-1 | 1A-2-1 | - | - | - | 1A-2-1 | 1A-2-2 | |
| | | MFR | g/10min | - | 10 | 10 | 10 | 10 | - | 10 | 10 | 10 | 10 | - | - | - | 10 | 2.4 | |
| | | Ratio | wt% | - | 30 | 70 | 90 | 95 | - | 30 | 70 | 90 | 95 | - | - | - | 100 | 100 | |
| | Whole composition (B) | MFR | g/10min | 1.0 | 2.3 | 5.1 | 9.3 | 10 | 8.8 | 8.9 | 9.1 | 10 | 10 | 2.2 | 1.0 | 8.8 | 10 | 2.4 | |
| | | λ | | 9.7 | 6.6 | 4.0 | 2.2 | 1.6 | 7.8 | 4.8 | 2.6 | 1.5 | 1.4 | 10.6 | 9.7 | 7.8 | 1.0 | 0.9 | |
| Substrate | Kind | | - | 1X-1 | 1X-1 | 1X-1 | 1X-1 | 1X-1 | 1X-1 | 1X-1 | 1X-1 | 1X-1 | 1X-1 | 1X-1 | 1X-1 | 1X-1 | 1X-1 | 1X-1 | 1X-1 |
| Heating time | | | sec | 40 | 40 | 40 | 40 | 40 | 40 | 40 | 40 | 40 | 40 | 40 | 40 | 40 | 40 | 40 | 20 |
| Appearance of decorative molded body | | | - | O | O | O | O | Δ | O | O | O | Δ | Δ | O (presence of gel) | O | O | × | × | O |
| Adhesive force | | | N/10mm | 37 | 39 | 40 | 41 | 40 | 38 | 45 | 40 | 39 | 38 | 34 | 38 | 39 | - | - | 17 |
| Gloss (60°) | | | % | 15 | 17 | 20 | 23 | 24 | 20 | 21 | 23 | 24 | 26 | 5 | 30 | 32 | - | - | - |
| Appearance of recycled molded body | | | | O | O | O | O | O | O | O | O | O | O | O | O | O | - | - | × |

[Table 3]

Table 3

| | | | Unit | Example 1-14 | Example 1-15 | Example 1-16 | Example 1-17 | Example 1-18 | Example 1-19 | Example 1-20 | Example 1-21 |
|---|---|---|---|---|---|---|---|---|---|---|---|
| Surface decorative layer (III) | | Kind | - | - | - | 1B-1 | 1B-2 | 1B-3 | 1B-4 | 1A-2-1 | 1B-5 |
| | | λ | | - | - | 1.0 | 1.0 | 1.0 | 1.0 | 1.0 | 1.0 |
| | | MFR | g/10min | - | - | 10 | 7.0 | 7.0 | 10 | 10 | 10 |
| Layer (II) | Long-chain branching PP (1A-1) | Kind | - | 1A-1-1 | 1A-1-1 | 1A-1-1 | 1A-1-1 | 1A-1-1 | 1A-1-1 | 1A-1-4 | 1A-1-4 |
| | | MFR | g/10min | 1.0 | 1.0 | 1.0 | 1.0 | 1.0 | 1.0 | 1.0 | 1.0 |
| | | Ratio | wt% | 100 | 100 | 100 | 100 | 100 | 100 | 100 | 100 |
| | Other PP | Kind | - | - | - | - | - | - | - | - | - |
| | | MFR | g/10min | - | - | - | - | - | - | - | - |
| | | Ratio | wt% | - | - | - | - | - | - | - | - |
| | Whole composition (B) | MFR | g/10min | 1.0 | 1.0 | 1.0 | 1.0 | 1.0 | 1.0 | 1.0 | 1.0 |
| | | λ | | 9.7 | 9.7 | 9.7 | 9.7 | 9.7 | 9.7 | 9.3 | 9.3 |
| Substrate | Kind | | - | 1X-2 | 1X-3 | 1X-1 | 1X-1 | 1X-1 | 1X-1 | 1X-1 | 1X-1 |
| Heating time | | | sec | 40 | 40 | 40 | 40 | 40 | 40 | 40 | 40 |
| Appearance of decorative molded body | | | - | ○ | ○ | ○ | ○ | ○ | ○ | ○ | ○ |
| Adhesive force | | | N/10mm | 36 | 35 | 38 | 36 | 41 | 35 | 34 | 35 |
| Gloss (60°) | | | % | 14 | 16 | 83 | 32 | 95 | 33 | 35 | 34 |
| Appearance of recycled molded body | | | | ○ | ○ | ○ | ○ | ○ | ○ | ○ | ○ |

[2. Decorative Film including Sealing Layer (I) composed of Polypropylene-based Resin (A) having MFR(A) of more than 2 g/10 minutes]

2-2. Used Materials

(2-1) Polypropylene-based Resins

The following polypropylene-based resins were used.

(2A-1-1): Propylene homopolymer having a long-chain branch, which was produced by a macromer copolymerization method, trade name "WAYMAX (registered trademark) MFX8" manufactured by Japan Polypropylene Corporation, MFR=1.0 g/10 minutes, strain hardening degree $\lambda$=9.7, Tm=154°C, branching index g' at an absolute molecular weight Mabs of 1,000,000=0.89, the presence of a long-chain branched structure was confirmed by $^{13}$C-NMR measurement.
(2A-1-2): Propylene homopolymer having a long-chain branch, which was produced by a macromer copolymerization method, trade name "WAYMAX (registered trademark) MFX3" manufactured by Japan Polypropylene Corporation, MFR=8.8 g/10 minutes, strain hardening degree $\lambda$=7.8, Tm=154°C, branching index g' at an absolute molecular weight Mabs of 1,000,000=0.85, the presence of a long-chain branched structure was confirmed by $^{13}$C-NMR measurement.
(2A-1-3): Polypropylene-based resin composition (MFR=1.0 g/10 minutes, strain hardening degree $\lambda$=9.3, Tm=154°C) obtained by blending 96% by weight of the polypropylene-based resin (2A-1-1) with 4% by weight of a black pigment MB (EPP-K-120601 manufactured by Polycol Kogyo K.K.)
(2A-2-1): Propylene homopolymer having no long-chain branch (MFR=10 g/10 minutes, Tm=161°C, strain hardening degree $\lambda$=1.0), trade name "NOVATEC (registered trademark) FA3KM" manufactured by Japan Polypropylene Corporation, branching index g' at an absolute molecular weight Mabs of 1,000,000=1.0, the absence of a long-chain branched structure was confirmed by $^{13}$C-NMR measurement.
(2A-2-2): Propylene homopolymer having no long-chain branch (MFR=2.4 g/10 minutes, Tm=161°C, strain hardening degree $\lambda$=0.9), trade name "NOVATEC (registered trademark) FY6" manufactured by Japan Polypropylene Corporation, branching index g' at an absolute molecular weight Mabs of 1,000,000=1.0, the absence of a long-chain branched structure was confirmed by $^{13}$C-NMR measurement.
(2B-1): Polypropylene-based resin composition (MFR=10 g/10 minutes, Tm=164°C) obtained by blending 100% by weight of the polypropylene-based resin (2A-2-1) with 0.4% by weight of a nucleating agent (trademark "Millad NX8000J" manufactured by Milliken Japan, K.K.)
(2B-2): Propylene-$\alpha$-olefin copolymer having no long-chain branch (MFR=7 g/10 minutes, Tm=125°C, Mw/Mn=2.5) by metallocene catalyst, trade name "WINTEC (registered trademark) WFX4M" manufactured by Japan Polypropylene Corporation, the absence of a long-chain branched structure was confirmed by $^{13}$C-NMR measurement.
(2B-3): Polypropylene-based resin composition (MFR=7 g/10 minutes, Tm=127°C) obtained by blending 100% by weight of the polypropylene-based resin (2B-2) with 0.4% by weight of a nucleating agent (trademark "Millad NX8000J" manufactured by Milliken Japan, K.K.)
(2B-4): Polypropylene-based resin composition (MFR=11 g/10 minutes, Tm=161°C) obtained by blending 96% by weight of the polypropylene-based resin (2A-2-1) with 4% by weight of a white pigment MB (EPP-W-59578 manufactured by Polycol Kogyo K.K., titanium oxide content of 80% by weight)
(2B-5): Polypropylene-based resin composition (MFR=10 g/10 minutes, Tm=161°C) obtained by blending 96% by weight of the polypropylene-based resin (2A-2-1) with 4% by weight of a silver pigment MB (PPCM913Y-42 SILVER21X manufactured by TOYOCOLOR Co., Ltd.)
(2C-1): Propylene-$\alpha$-olefin copolymer having no long-chain branch (MFR=5.0 g/10 minutes, Tm=127°C), trade name "NOVATEC (registered trademark) FX4G" manufactured by Japan Polypropylene Corporation
(2C-2): Propylene-$\alpha$-olefin copolymer having no long-chain branch (MFR=7.0 g/10 minutes, Tm=146°C), trade name "NOVATEC (registered trademark) FW3GT" manufactured by Japan Polypropylene Corporation

2-3. Production of Resin Molded Body (Substrate)

Using the following polypropylene-based resins (2X-1) to (2X-3), injection molded bodies (substrates) were obtained by the following method.

(2X-1): Propylene homopolymer (MFR=40 g/10 minutes, Tm=165°C), trade name "NOVATEC (registered trademark) MA04H" manufactured by Japan Polypropylene Corporation
(2X-2): Propylene ethylene block copolymer (MFR=30 g/10 minutes, Tm=164°C), trade name "NOVATEC (registered

trademark) NBC03HR" manufactured by Japan Polypropylene Corporation

(2X-3): Polypropylene-based resin composition obtained by blending 60% by weight of the polypropylene-based resin (2X-2) with 20% of EBR (TAFMER (registered trademark) A0550S manufactured by Mitsui Chemicals, inc.) of MFR=1.0 and 20% by weight of an inorganic filler (TALC P-6 manufactured by Nippon Talc Co., Ltd., average particle size of 4.0 μm)

Injection molding machine: "IS100GN" manufactured by Toshiba Machine Co., ltd., mold clamping pressure of 100 tons

Cylinder temperature: 200°C

Mold temperature: 40°C

Injection mold: A flat plate of width×height×thickness = 120 mm×120 mm×3 mm

Condition control: Kept in a constant-temperature constant-humidity chamber at a temperature of 23°C and a humidity of 50%RH for 5 days

Moreover, on the obtained injection molded body, scratches were formed by the following method to be a resin molded body (substrate).

Processing for scratch evaluation: In a constant-temperature constant-humidity chamber at a temperature of 23°C and a humidity of 50%RH, using a scratch tester ("SCRATCH&MAR TESTER" manufactured by ROCKWOOD SYSTEMS AND EQUIPMENT), with a load of 15 N, the above injection molded body was scratched with a scratching tip subjected to shape (curvature radius of 0.5 mm, ball shape) processing, at a scratching rate of 100 mm/minute.

When the scratches formed on the surface of the resin molded body (substrate) were measured by means of a shape-measuring laser microscope ("VX-X200" manufactured by KEYENCE Corporation), the depth of the scratches was 13 μm. Further, the scratches became whitened scratches.

{Example 2-1}

- Production of Decorative Film

There was used a 2-kind 2-layer T-die having a lip opening of 0.8 mm and a die width of 400 mm, to which an extruder-1 for a sealing layer (I) having a nozzle diameter of 30 mm (diameter) and an extruder-2 having a nozzle diameter of 40 mm (diameter) had been connected. The polypropylene-based resin (2A-2-1) was charged into the extruder-1 for a sealing layer (I) and the polypropylene-based resin (2A-1-1) was charged into the extruder-2, and melt-extrusion was performed under conditions of a resin temperature of 240°C, a discharge amount from the extruder-1 for a sealing layer of 4 kg/h, and a discharge amount from the extruder-2 for a layer of 12 kg/h. The melt-extruded film was cooled and solidified while pushing it to a first roll rotating at 3 m/min at 80°C with an air knife so that the sealing layer (I) came outside, thereby obtaining a two-layered unstretched film where a sealing layer (I) having a thickness of 50 μm and a layer (II) having a thickness of 150 μm were laminated.

- Three-Dimensional Decorative Thermoforming

As the resin molded body (substrate) 5, there was used the injection molded body composed of the polypropylene-based resin (2X-1) obtained in the above.

As a three-dimensional decorative thermoforming apparatus, "NGF-0406-SW" manufactured by Fu-se Vacuum Forming Ltd. was used. A decorative film 1 was cut into a size having a width of 250 mm and a length of 350 mm and was set to a jig 13 for film fixing having an opening part size of 210 mm×300 mm so that the longitudinal direction became the MD direction of the film. The resin molded body (substrate) 5 was attached on a sample-placing stand having a height of 20 mm, which was placed on a table 14 positioned below the jig 13 for film fixing, through "NICETACK NW-K15" manufactured by Nichiban Co., Ltd. The jig 13 for film fixing and the table 14 were placed in upper and lower chamber boxes 11 and 12 and the upper and lower chamber boxes 11 and 12 were closed to make the inside of the chamber boxes a tightly closed state. The chamber boxes were divided into upper and lower ones through the decorative film 1. The upper and lower chamber boxes 11 and 12 were vacuum-suctioned and a far-infrared heater 15 placed on the upper chamber box 11 was started at an output of 80% to heat the decorative film 1 in a state that the pressure was reduced from atmospheric pressure (101.3 kPa) to 1.0 kPa. During heating, the vacuum-suction was continued and finally, the pressure was reduced to 0.1 kPa. After 20 seconds from the finish of a spring-back phenomenon that the decorative film 1 was heated to temporarily slacken and thereafter tension returned, the table 14 placed in the lower chamber box 12 was transferred upward to push the resin molded body (substrate) 5 to the decorative film 1 and immediately after that, compressed air was fed so that the pressure in the upper chamber box 11 became 270 kPa to adhere the resin molded body (substrate) 5 and the decorative film 1 closely. Thus, there was obtained a three-dimensional decorative thermoformed article 6 where the decorative film 1 was stuck to the upper surface and side surface of the

resin molded body (substrate) 5.

- Physical Property Evaluation

(2-1) Evaluation of Appearance of Decorative Molded Body (Effect of Making Scratches Inconspicuous)

Depth of scratches at the portion where scratches were present on a three-dimensional decorative thermoformed article of a resin molded body (substrate) which had been scratched with a load of 15 N was measured by means of a shape-measuring laser microscope ("VX-X200" manufactured by KEYENCE Corporation). The number of measurement times was 5 times (n=5) and an average value thereof was taken as scratch depth (μm).

Moreover, it was visually judged according to the following criteria whether whitened scratches of the molded body (substrate), which had been scratched with a load of 15 N, were made inconspicuous or not by the decorative film, and thus evaluation was performed.

O: Scars of whitened scratches are inconspicuous and appearance is excellent.
×: Whitened scratches remain and appearance is poor.

(2-2) Evaluation of Thermoformability

A draw-down state of the decorative film at the time of three-dimensional decorative thermoforming and a sticking state of the decorative film of the decorative molded body where the decorative film has been stuck to the substrate were visually observed and evaluated by the criteria shown below.

O: Since the contact between the substrate and the decorative film is simultaneously effected all over the surface of the contact face without generating draw-down of the decorative film at the time of three-dimensional decorative thermoforming, uneven contact is not generated and the film is uniformly stuck.
×: Since draw-down of the decorative film remarkably occurs at the time of three-dimensional decorative thermoforming, uneven contact is generated all over the surface of the substrate.

(2-3) Adhesive Force between Resin Molded Body (Substrate) and Decorative Film

"Craft adhesive tape No. 712N" manufactured by Nitoms, Inc. was cut into a size having a width of 75 mm and a length of 120 mm and was attached to a resin molded body (substrate) in the range of 75 mm×120 mm from the edge part of the resin molded body to perform a masking treatment (a surface exposed part of the substrate had a width of 45 mm and a length of 120 mm). The resin molded body (substrate) was placed on a three-dimensional decorative thermoforming apparatus NGF-0406-SW so that the masking face of the molded body came into contact with the decorative film, and three-dimensional decorative thermoforming was conducted.

The decorative film face of the obtained decorative molded body was cut until the substrate surface at a width of 10 mm using a cutter in a vertical direction toward a longitudinal direction of the adhesive tape to prepare a test specimen. In the obtained test specimen, the adhesion face between the substrate and the decorative film has a width of 10 mm and a length of 45 mm. It was fixed to a tensile tester so that the substrate part and the decorative film part of the test specimen made an angle of 180°, and 180° peeling strength of the adhesion face was measured at a tensile rate of 200 mm/min. Maximum strength (N/10 mm) at peeling or at break was measured five times and averaged strength was taken as adhesive force.

Table 4 shows results of the physical property evaluation of the obtained decorative molded body.

Since MFR of the polypropylene-based resin (2A-1-1) was 40 g/10 minutes or less, the strain hardening degree λ thereof was 1.1 or more, and MFR of the polypropylene-based resin (2A-2-1) constituting the sealing layer (I) was more than 2 g/10 minutes, the obtained decorative molded body was excellent in appearance and adhesive force and scars of the scratches became inconspicuous.

(2-4) Gloss

The gloss in the vicinity of the center of the decorative molded body to which a decorative film had been stuck was measured at an incident angle of 60° using Gloss Meter VG2000 manufactured by Nippon Denshoku Industries Co., Ltd. The measurement method conformed to JIS K7105-1981. Table 4 shows measurement results,

(2-5) Evaluation of Recyclability

The obtained decorative molded body was pulverized and a recycled molded body was obtained by injection molding in the same manner as in the production of the resin molded body (substrate). The obtained recycled molded body was excellent in appearance (evaluation in the table: "O").

{Examples 2-2 to 2-4}

Forming and evaluation were performed in the same manner as in Example 2-1 except that, in the production of the decorative film of Example 2-1, the polypropylene-based resin (2A-1-1) was changed to each blend (resin composition (B)) of the polypropylene-based resins (2A-1-1) and (2A-2-1) described in Table 4. Table 4 shows evaluation results.

Since MFR of the resin composition (B) was 40 g/10 minutes or less, the strain hardening degree λ thereof was 1.1 or more, and MFR of the polypropylene-based resin (2A-2-1) constituting the sealing layer (I) was more than 2 g/10 minutes, the obtained decorative molded body was excellent in appearance and adhesive force and scars of the scratches became inconspicuous. Moreover, the recycled molded body was excellent in appearance.

{Example 2-5}

Forming and evaluation were performed in the same manner as in Example 2-1 except that, in the production of the decorative film of Example 2-1, the polypropylene-based resin (2A-1-1) was changed to the polypropylene-based resin (2A-1-2). Table 4 shows evaluation results.

Since MFR of the polypropylene-based resin (2A-1-2) was 40 g/10 minutes or less, the strain hardening degree λ thereof was 1.1 or more, and MFR of the polypropylene-based resin (2A-2-1) constituting the sealing layer (I) was more than 2 g/10 minutes, the obtained decorative molded body was excellent in appearance and adhesive force and scars of the scratches became inconspicuous. Moreover, the recycled molded body was excellent in appearance.

{Examples 2-6 to 2-8}

Forming and evaluation were performed in the same manner as in Example 2-5 except that, in the production of the decorative film of Example 2-5, the polypropylene-based resin (2A-1-2) was changed to each blend (resin composition (B)) of the polypropylene-based resins (2A-1-2) and (2A-2-1) described in Table 4. Table 4 shows evaluation results.

Since MFR of the polypropylene-based resin (2A-1-2) was 40 g/10 minutes or less, the strain hardening degree λ thereof was 1.1 or more, and MFR of the polypropylene-based resin (2A-2-1) constituting the sealing layer (I) was more than 2 g/10 minutes, the obtained decorative molded body was excellent in appearance and adhesive force and scars of the scratches became inconspicuous. Moreover, the recycled molded body was excellent in appearance.

{Example 2-9}

Forming and evaluation were performed in the same manner as in Example 2-5 except that, in the production of the decorative film of Example 2-5, the polypropylene-based resin used for the sealing layer was changed to (2C-1). Table 4 shows evaluation results.

Since MFR of the polypropylene-based resin (2A-1-2) was 40 g/10 minutes or less, the strain hardening degree λ thereof was 1.1 or more, and MFR of the polypropylene-based resin (2C-1) constituting the sealing layer (I) was more than 2 g/10 minutes, the obtained decorative molded body was excellent in appearance and adhesive force and scars of the scratches became inconspicuous. Moreover, the recycled molded body was excellent in appearance.

{Example 2-10}

Forming and evaluation were performed in the same manner as in Example 2-5 except that, in the production of the decorative film of Example 2-5, the polypropylene-based resin used for the sealing layer was changed to (2C-2). Table 4 shows evaluation results.

Since MFR of the polypropylene-based resin (2A-1-2) was 40 g/10 minutes or less, the strain hardening degree λ thereof was 1.1 or more, and MFR of the polypropylene-based resin (2C-2) constituting the sealing layer (I) was more than 2 g/10 minutes, the obtained decorative molded body was excellent in appearance and adhesive force and scars of the scratches became inconspicuous. Moreover, the recycled molded body was excellent in appearance.

{Example 2-11 }

In the production of the decorative film of Example 2-1, there was used a 3-kind 3-layer T-die having a lip opening of 0.8 mm and a die width of 400 mm, to which an extruder-1 for a sealing layer having a nozzle diameter of 30 mm (diameter), an extruder-2 having a nozzle diameter of 40 mm (diameter), and an extruder-3 for a surface layer having a nozzle diameter of 30 mm (diameter) had been connected. The polypropylene-based resin (2A-2-1) was charged into the extruder-1 for a sealing layer, the polypropylene-based resin (2A-1-1) was charged into the extruder-2, and the polypropylene-based resin (2A-2-1) was charged into the extruder-3 for a surface layer, and melt-extrusion was performed under conditions of a resin temperature of 240°C, a discharge amount from the extruder-1 for a sealing layer of 4 kg/h, a discharge amount from the extruder-2 of 8 kg/h, and a discharge amount from the extruder-3 for a surface layer of 4 kg/h.

The melt-extruded film was cooled and solidified so that the surface decorative layer came into contact with a cooling roll rotating at 3 m/min at 80°C, thereby obtaining a three-layered unstretched film where a surface decorative layer (III) having a thickness of 50 $\mu$m, a layer (II) having a thickness of 100 $\mu$m, and a sealing layer (I) having a thickness of 50 $\mu$m were laminated.

Evaluation was performed in the same manner as in Example 2-1 except that the unstretched film obtained in the above decorative film production was used. Table 4 shows evaluation results.

Since MFR of the polypropylene-based resin (2A-1-1) was 40 g/10 minutes or less, the strain hardening degree $\lambda$ thereof was 1.1 or more, and MFR of the polypropylene-based resin (2A-2-1) constituting the sealing layer (I) was more than 2 g/10 minutes, the obtained decorative molded body was excellent in appearance and adhesive force and scars of the scratches became inconspicuous. Further, the polypropylene-based resin (2A-2-1) was laminated as the surface decorative layer (III) [surface layer (III)] at the uppermost surface side, so that a result of excellent gloss was observed. Moreover, the recycled molded body was excellent in appearance.

{Example 2-12}

Forming and evaluation were performed in the same manner as in Example 2-11 except that, in the production of the decorative film of Example 2-11, the polypropylene-based resin (2A-1-1) was changed to the polypropylene-based resin (2A-1-2). Table 4 shows evaluation results.

Since MFR of the polypropylene-based resin (2A-1-2) was 40 g/10 minutes or less, the strain hardening degree $\lambda$ thereof was 1.1 or more, and MFR of the polypropylene-based resin (2A-2-1) constituting the sealing layer (I) was more than 2 g/10 minutes, the obtained decorative molded body was excellent in appearance and adhesive force and scars of the scratches became inconspicuous. Further, the polypropylene-based resin (2A-2-1) was laminated as the surface decorative layer (III) [surface layer (III)] at the uppermost surface side, so that a result of excellent gloss was observed. Moreover, the recycled molded body was excellent in appearance.

{Comparative Example 2-1}

Evaluation was performed in the same manner as in Example 2-1 except that, in the production of the decorative film of Example 2-1, the polypropylene-based resin (2A-1-1) used for the layer (II) was changed to the polypropylene-based resin (2A-2-1) having no long-chain branch. Table 4 shows evaluation results.

Since the strain hardening degree $\lambda$ of the polypropylene-based resin (2A-2-1) was less than 1.1, the stability at thermoforming was poor and remarkable draw-down of the decorative film occurred at the time of three-dimensional decorative thermoforming, so that uneven contact was generated all over the surface of the substrate and there was observed a result of remarkably poor appearance of the decorative molded body.

{Comparative Example 2-2}

Evaluation was performed in the same manner as in Example 2-1 except that, in the production of the decorative film of Example 2-1, the polypropylene-based resin (2A-1-1) used for the layer (II) was changed to the polypropylene-based resin (2A-2-2) having no long-chain branch. Table 4 shows evaluation results.

Since the strain hardening degree $\lambda$ of the polypropylene-based resin (2A-2-2) was less than 1.1, the stability at thermoforming was poor and remarkable draw-down of the decorative film occurred at the time of three-dimensional decorative thermoforming, so that uneven contact was generated all over the surface of the substrate and there was observed a result of remarkably poor appearance of the decorative molded body.

{Reference Example 2-3}

Using an extruder having a nozzle diameter of 40 mm (diameter), the polypropylene-based resin (2A-1 -1) was

extruded under conditions of a resin temperature of 240°C and a discharge amount of 13 kg/h and was introduced into a monolayer T-die which had been controlled to a temperature of 240°C, a die width of 400 mm, and a lip opening of 0.8 mm, thereby performing melt-extrusion. The melt-extruded film was cooled and solidified on a cooling roll rotating at 3 m/min at 80°C to obtain a monolayer unstretched film having a thickness of 200 μm. The film is used as a decorative film.

Forming and evaluation were performed in the same manner as in Example 2-1 except that the decorative film having no sealing layer (I) was used. Table 4 shows evaluation results.

Since the decorative film having no sealing layer (I) was used, adhesive force was small as compared with Example 2-1 and there was observed a result that scars of the scratches were conspicuous.

{Example 2-13}

Evaluation was performed in the same manner as in Example 2-1 except that, in the three-dimensional decorative thermoforming of Example 2-1, the substrate was changed to the injection molded body using the resin (2X-2). Table 5 shows obtained results.

Since MFR of the polypropylene-based resin (2A-1-1) was 40 g/10 minutes or less, the strain hardening degree λ thereof was 1.1 or more, and MFR of the polypropylene-based resin (2A-2-1) constituting the sealing layer (I) was more than 2 g/10 minutes, the obtained decorative molded body was excellent in appearance and adhesive force and scars of the scratches became inconspicuous. Moreover, the recycled molded body was excellent in appearance.

{Example 2-14}

Evaluation was performed in the same manner as in Example 2-1 except that, in the three-dimensional decorative thermoforming of Example 2-1, the substrate was changed to the injection molded body using the resin (2X-3). Table 5 shows obtained results.

Since MFR of the polypropylene-based resin (2A-1-1) was 40 g/10 minutes or less, the strain hardening degree λ thereof was 1.1 or more, and MFR of the polypropylene-based resin (2A-2-1) constituting the sealing layer (I) was more than 2 g/10 minutes, the obtained decorative molded body was excellent in appearance and adhesive force and scars of the scratches became inconspicuous. Moreover, the recycled molded body was excellent in appearance.

{Example 2-15}

Evaluation was performed in the same manner as in Example 2-11 except that, in the production of the decorative film of Example 2-11, the polypropylene-based resin (2A-2-1) charged into the extruder-3 for a surface layer was changed to the polypropylene-based resin (2B-1). Table 5 shows obtained results.

Since MFR of the polypropylene-based resin (2A-1-1) was 40 g/10 minutes or less, the strain hardening degree λ thereof was 1.1 or more, and MFR of the polypropylene-based resin (2A-2-1) constituting the sealing layer (I) was more than 2 g/10 minutes, the obtained decorative molded body was excellent in appearance and adhesive force and scars of the scratches became inconspicuous. Moreover, the polypropylene-based resin (2B-1) to which a nucleating agent had been added was laminated as the surface decorative layer (III) [surface layer (III)] at the uppermost surface side, so that a result of excellent gloss was observed.

{Example 2-16}

Evaluation was performed in the same manner as in Example 2-11 except that, in the production of the decorative film of Example 2-11, the polypropylene-based resin (2A-2-1) charged into the extruder-3 for a surface layer was changed to the polypropylene-based resin (2B-2). Table 5 shows obtained results.

Since MFR of the polypropylene-based resin (2A-1-1) was 40 g/10 minutes or less, the strain hardening degree λ thereof was 1.1 or more, and MFR of the polypropylene-based resin (2A-2-1) constituting the sealing layer (I) was more than 2 g/10 minutes, the obtained decorative molded body was excellent in appearance and adhesive force and scars of the scratches became inconspicuous. Moreover, the polypropylene-based resin (2B-2) was laminated as the surface decorative layer (III) [surface layer (III)] at the uppermost surface side, so that a result of excellent gloss was observed.

{Example 2-17}

Evaluation was performed in the same manner as in Example 2-11 except that, in the production of the decorative film of Example 2-11, the polypropylene-based resin (2A-2-1) charged into the extruder-3 for a surface layer was changed

to the polypropylene-based resin (2B-3). Table 5 shows obtained results.

Since MFR of the polypropylene-based resin (2A-1-1) was 40 g/10 minutes or less, the strain hardening degree λ thereof was 1.1 or more, and MFR of the polypropylene-based resin (2A-2-1) constituting the sealing layer (I) was more than 2 g/10 minutes, the obtained decorative molded body was excellent in appearance and adhesive force and scars of the scratches became inconspicuous. Moreover, the polypropylene-based resin (2B-3) to which a nucleating agent had been added was laminated as the surface decorative layer (III) [surface layer (III)] at the uppermost surface side, so that a result of excellent gloss was observed.

{Example 2-18}

Evaluation was performed in the same manner as in Example 2-11 except that, in the production of the decorative film of Example 2-11, the polypropylene-based resin (2A-2-1) charged into the extruder-3 for a surface layer was changed to the polypropylene-based resin (2B-4). Table 5 shows obtained results.

Since MFR of the polypropylene-based resin (2A-1-1) was 40 g/10 minutes or less, the strain hardening degree λ thereof was 1.1 or more, and MFR of the polypropylene-based resin (2A-2-1) constituting the sealing layer (I) was more than 2 g/10 minutes, the obtained decorative molded body was excellent in appearance and adhesive force. Further, coupled with the sticking of the white-colored decorative film, the scratches were sufficiently hidden to such a degree that the scratched place was not able to identify. Therefore, the scratch depth was not measured. Moreover, since the surface decorative layer (III) [surface layer (III)] excellent in gloss was colored white, appearance was excellent.

{Example 2-19}

Evaluation was performed in the same manner as in Example 2-11 except that, in the production of the decorative film of Example 2-11, the polypropylene-based resin (2A-1-1) was changed to the polypropylene-based resin (2A-1-3). Table 5 shows obtained results.

Since MFR of the polypropylene-based resin (2A-1-3) was 40 g/10 minutes or less, the strain hardening degree λ thereof was 1.1 or more, and MFR of the polypropylene-based resin (2A-2-1) constituting the sealing layer (I) was more than 2 g/10 minutes, the obtained decorative molded body was excellent in appearance and adhesive force. Further, coupled with the sticking of the black-colored decorative film, the scratches were sufficiently hidden to such a degree that the scratched place was not able to identify. Therefore, the scratch depth was not measured. Moreover, since the layer (II) was colored black, appearance was excellent. Furthermore, the polypropylene-based resin (2A-2-1) was laminated as the surface decorative layer (III) [surface layer (III)] at the uppermost surface side, so that a result of excellent gloss was observed.

{Example 2-20}

Evaluation was performed in the same manner as in Example 2-19 except that, in the production of the decorative film of Example 2-19, the polypropylene-based resin (2A-2-1) charged into the extruder-3 for a surface layer was changed to the polypropylene-based resin (2B-5). Table 5 shows obtained results.

Since MFR of the polypropylene-based resin (2A-1-3) was 40 g/10 minutes or less, the strain hardening degree λ thereof was 1.1 or more, and MFR of the polypropylene-based resin (2A-2-1) constituting the sealing layer (I) was more than 2 g/10 minutes, the obtained decorative molded body was excellent in appearance and adhesive force. Further, coupled with the sticking of the colored decorative film, the scratches were sufficiently hidden to such a degree that the scratched place was not able to identify. Therefore, the scratch depth was not measured. Moreover, the polypropylene-based resin (2B-5) was laminated as the surface decorative layer (III) [surface layer (III)] at the uppermost surface side, so that a result of excellent gloss was observed. Furthermore, since the layer (II) was colored black and the surface layer (III) was colored silver, the film became a metallic film and appearance was excellent.

[Table 4]

Table 4

| | | | Unit | Example 2-1 | Example 2-2 | Example 2-3 | Example 2-4 | Example 2-5 | Example 2-6 | Example 2-7 | Example 2-8 | Example 2-9 | Example 2-10 | Example 2-11 | Example 2-12 | Comparative Example 2-1 | Comparative Example 2-2 | Reference Example 2-3 |
|---|---|---|---|---|---|---|---|---|---|---|---|---|---|---|---|---|---|---|
| Surface layer (III) | Kind | | | - | - | - | - | - | - | - | - | - | - | 2A-2-1 | 2A-2-1 | - | - | - |
| | MFR | | g/10min | - | - | - | - | - | - | - | - | - | - | 10 | 10 | - | - | - |
| | λ | | | - | - | - | - | - | - | - | - | - | - | 1.0 | 1.0 | - | - | - |
| Layer (II) | Long-chain branching PP (2A-1) | Kind | | 2A-1-1 | 2A-1-1 | 2A-1-1 | 2A-1-1 | 2A-1-2 | 2A-1-2 | 2A-1-2 | 2A-1-2 | 2A-1-2 | 2A-1-2 | 2A-1-1 | 2A-1-2 | none | none | 2A-1-1 |
| | | MFR | g/10min | 1.0 | 1.0 | 1.0 | 1.0 | 8.8 | 8.8 | 8.8 | 8.8 | 8.8 | 8.8 | 1.0 | 8.8 | - | - | 1.0 |
| | | Ratio | wt% | 100 | 70 | 10 | 5 | 100 | 70 | 10 | 5 | 100 | 100 | 100 | 100 | 0 | 0 | 100 |
| | Other PP | Kind | | - | 2A-2-1 | 2A-2-1 | 2A-2-1 | - | 2A-2-1 | 2A-2-1 | 2A-2-1 | - | - | - | - | 2A-2-1 | 2A-2-2 | - |
| | | MFR | g/10min | - | 10 | 10 | 10 | - | 10 | 10 | 10 | - | - | - | - | 10 | 2.4 | - |
| | | Ratio | wt% | - | 30 | 90 | 95 | - | 30 | 90 | 95 | - | - | - | - | 100 | 100 | - |
| | Whole composition (B) | MFR | g/10min | 1.0 | 2.3 | 9.3 | 10 | 8.8 | 8.9 | 10 | 10 | 8.8 | 8.8 | 1.0 | 8.8 | 10 | 2.4 | 1.0 |
| | | λ | | 9.7 | 6.6 | 2.2 | 1.6 | 7.8 | 4.8 | 1.5 | 1.4 | 7.8 | 7.8 | 9.7 | 7.8 | 1.0 | 0.9 | 9.7 |
| Sealing layer (I) | Kind | | | 2A-2-1 | 2A-2-1 | 2A-2-1 | 2A-2-1 | 2A-2-1 | 2A-2-1 | 2A-2-1 | 2A-2-1 | 2C-1 | 2C-2 | 2A-2-1 | 2A-2-1 | 2A-2-1 | 2A-2-1 | none |
| | MFR | | g/10min | 10 | 10 | 10 | 10 | 10 | 10 | 10 | 10 | 5.0 | 7.0 | 10 | 10 | 10 | 10 | - |
| | Melting point | | °C | 161 | 161 | 161 | 161 | 161 | 161 | 161 | 161 | 127 | 146 | 161 | 161 | 161 | 161 | - |
| Substrate | Kind | | | 2X-1 | 2X-1 | 2X-1 | 2X-1 | 2X-1 | 2X-1 | 2X-1 | 2X-1 | 2X-1 | 2X-1 | 2X-1 | 2X-1 | 2X-1 | 2X-1 | 2X-1 |
| Heating time | | | sec | 20 | 20 | 20 | 20 | 20 | 20 | 20 | 20 | 20 | 20 | 20 | 20 | 20 | 20 | 20 |
| Thermoformability | | | | ○ | ○ | ○ | ○ | ○ | ○ | ○ | ○ | ○ | ○ | ○ | ○ | × | × | ○ |

(continued)

| | | Unit | Example 2-1 | Example 2-2 | Example 2-3 | Example 2-4 | Example 2-5 | Example 2-6 | Example 2-7 | Example 2-8 | Example 2-9 | Example 2-10 | Example 2-11 | Example 2-12 | Comparative Example 2-1 | Comparative Example 2-2 | Reference Example 2-3 |
|---|---|---|---|---|---|---|---|---|---|---|---|---|---|---|---|---|---|
| Adhesive force | | N/10mm | 34 | 33 | 35 | 32 | 33 | 33 | 32 | 33 | 36 | 39 | 34 | 34 | - | - | 10 |
| Scratch evaluation (15N scratch) | Scratch depth | μm | 6.4 | 6.5 | 6.3 | 6.6 | 5.9 | 6.1 | 6.5 | 6.4 | 5.9 | 4.9 | 5.7 | 5.9 | - | - | 9.4 |
| | Whitened appearance | | ○ | ○ | ○ | ○ | ○ | ○ | ○ | ○ | ○ | ○ | ○ | ○ | - | - | ○ |
| Gloss (60°) | | % | 15 | 17 | 23 | 24 | 20 | 21 | 24 | 26 | 15 | 15 | 30 | 32 | - | - | 16 |
| Appearance of recycled molded body | | | ○ | ○ | ○ | ○ | ○ | ○ | ○ | ○ | ○ | ○ | ○ | ○ | - | - | ○ |

[Table 5]

Table 5

| | | | Unit | Example 2-13 | Example 2-14 | Example 2-15 | Example 2-16 | Example 2-17 | Example 2-18 | Example 2-19 | Example 2-20 |
|---|---|---|---|---|---|---|---|---|---|---|---|
| Surface layer (III) | Kind | | | - | - | 2B-1 | 2B-2 | 2B-3 | 2B4 | 2A-2-1 | 2B-5 |
| | MFR | | g/ 10min | - | - | 10 | 7.0 | 7.0 | 10 | 10 | 10 |
| | λ | | | - | - | 1.0 | 1.0 | 1.0 | 1.0 | 1.0 | 1.0 |
| Layer (II) | Long-chain branching PP (2A-1) | Kind | | 2A-1-1 | 2A-1-1 | 2A-1-1 | 2A-1-1 | 2A-1-1 | 2A-1-1 | 2A-1-3 | 2A-1-3 |
| | | MFR | g/ 10min | 1.0 | 1.0 | 1.0 | 1.0 | 1.0 | 1.0 | 1.0 | 1.0 |
| | | Ratio | wt% | 100 | 100 | 100 | 100 | 100 | 100 | 100 | 100 |
| | Other PP | Kind | | - | - | - | - | - | - | - | - |
| | | MFR | g/ 10min | - | - | - | - | - | - | - | - |
| | | Ratio | wt% | - | - | - | - | - | - | - | - |
| | Whole composition (B) | MFR | g/ 10min | 1.0 | 1.0 | 1.0 | 1.0 | 1.0 | 1.0 | 1.0 | 1.0 |
| | | λ | | 9.7 | 9.7 | 9.7 | 9.7 | 9.7 | 9.7 | 9.3 | 9.3 |
| Sealing layer (I) | Kind | | | 2A-2-1 | 2A-2-1 | 2A-2-1 | 2A-2-1 | 2A-2-1 | 2A-2-1 | 2A-2-1 | 2A-2-1 |
| | MFR | | g/ 10min | 10 | 10 | 10 | 10 | 10 | 10 | 10 | 10 |
| | Melting point | | °C | 161 | 161 | 161 | 161 | 161 | 161 | 161 | 161 |
| Substrate | Kind | | | 2X-2 | 2X-3 | 2X-1 | 2X-1 | 2X-1 | 2X-1 | 2X-1 | 2X-1 |
| Heating time | | | sec | 20 | 20 | 20 | 20 | 20 | 20 | 20 | 20 |
| Thermoformability | | | | ○ | ○ | ○ | ○ | ○ | ○ | ○ | ○ |
| Adhesive force | | | N/ 10mm | 32 | 33 | 33 | 35 | 33 | 32 | 31 | 33 |

(continued)

| | | Unit | Example 2-13 | Example 2-14 | Example 2-15 | Example 2-16 | Example 2-17 | Example 2-18 | Example 2-19 | Example 2-20 |
|---|---|---|---|---|---|---|---|---|---|---|
| Scratch evaluation (15N scratch) | Scratch depth | μm | 5.9 | 6.2 | 6.4 | 5.8 | 6.3 | - | - | - |
| | Whitened appearance | | ○ | ○ | ○ | ○ | ○ | ○ | ○ | ○ |
| Gloss (60°) | | % | 16 | 15 | 81 | 33 | 92 | 34 | 35 | 34 |
| Appearance of recycled molded body | | | ○ | ○ | ○ | ○ | ○ | ○ | ○ | ○ |

[3. Decorative Film including Sealing Layer (I) composed of Polypropylene-based Resin

(A) satisfying Requirements (a1) to (a4)]

3-2. Used Materials

(3-1) Polypropylene-based Resins

The following polypropylene-based resins were used.

(3A-1): Propylene-α-olefin copolymer (MFR=7 g/10 minutes, Tm=125°C, Mw/Mn=2.5) by metallocene catalyst, trade name "WINTEC (registered trademark) WFX4M" manufactured by Japan Polypropylene Corporation
(3A-2): Propylene-α-olefin copolymer (MFR=25 g/10 minutes, Tm=125°C, Mw/Mn=2.4) by metallocene catalyst, trade name "WINTEC (registered trademark) WSX03" manufactured by Japan Polypropylene Corporation
(3A-3): Propylene-α-olefin copolymer (MFR=7 g/10 minutes, Tm=135°C, Mw/Mn=2.3) by metallocene catalyst, trade name "WINTEC (registered trademark) WFW4M" manufactured by Japan Polypropylene Corporation
(3A-4): Propylene-α-olefin copolymer (MFR=3.5 g/10 minutes, Tm=143°C, Mw/Mn=2.8) by metallocene catalyst, trade name "WINTEC (registered trademark) WFW5T" manufactured by Japan Polypropylene Corporation
(3A-5): Propylene-α-olefin copolymer (MFR=7 g/10 minutes, Tm=145°C, Mw/Mn=4.0) by Ziegler-Natta catalyst, trade name "NOVATEC (registered trademark) FW3GT" manufactured by Japan Polypropylene Corporation
(3B-1-1): Propylene homopolymer having a long-chain branch (MFR=1 g/10 minutes, Tm=154°C), which was produced by a macromer copolymerization method, trade name "WAYMAX (registered trademark) MFX8" manufactured by Japan Polypropylene Corporation,
(3B-1-2): Propylene homopolymer having a long-chain branch (MFR=8.8 g/10 minutes, Tm=154°C), which was produced by a macromer copolymerization method, trade name "WAYMAX (registered trademark) MFX3" manufactured by Japan Polypropylene Corporation,
(3B-1-3): Polypropylene-based resin composition (MFR=1.0 g/10 minutes, strain hardening degree λ=9.3, Tm=154°C) obtained by blending 96% by weight of the polypropylene-based resin (3B-1-1) with 4% by weight of a black pigment MB (EPP-K-120601 manufactured by Polycol Kogyo K.K.)
(3B-2-1): Common propylene homopolymer (having no long-chain branch) (MFR=10 g/10 minutes, Tm=161°C), trade name "NOVATEC (registered trademark) FA3KM" manufactured by Japan Polypropylene Corporation
(3B-2-2): Common propylene homopolymer (having no long-chain branch) (MFR=2.4 g/10 minutes, Tm=161°C), trade name "NOVATEC (registered trademark) FY6" manufactured by Japan Polypropylene Corporation,
(3C-1): Polypropylene-based resin composition (MFR=10 g/10 minutes, Tm=164°C) obtained by blending 100% by weight of the polypropylene-based resin (3B-2-1) with 0.4% by weight of a nucleating agent (trademark "Millad NX8000J" manufactured by Milliken Japan, K.K.)
(3C-2): Polypropylene-based resin composition (MFR=7 g/10 minutes, Tm=127°C) obtained by blending 100% by weight of the polypropylene-based resin (3A-1) with 0.4% by weight of a nucleating agent (trademark "Millad NX8000J" manufactured by Milliken Japan, K.K.)
(3C-3): Polypropylene-based resin composition (MFR=10 g/10 minutes, Tm=161°C) obtained by blending 96% by weight of the polypropylene-based resin (3B-2-1) with 4% by weight of a white pigment MB (EPP-W-59578 manufactured by Polycol Kogyo K.K., titanium oxide content of 80% by weight)
(3C-4): Polypropylene-based resin composition (MFR=10 g/10 minutes, Tm=161°C) obtained by blending 96% by weight of the polypropylene-based resin (3B-2-1) with 4% by weight of a silver pigment MB (PPCM913Y-42 SILVER21X manufactured by TOYOCOLOR Co., Ltd.)

3-3. Production of Resin Molded Body (Substrate)

Using the following polypropylene-based resins (3X-1) to (3X-3), injection molded bodies were obtained by the following method.

(3X-1): Propylene homopolymer (MFR=40 g/10 minutes, Tm=165°C), trade name "NOVATEC (registered trademark) MA04H" manufactured by Japan Polypropylene Corporation
(3X-2): Propylene ethylene block copolymer (MFR=30 g/10 minutes, Tm=164°C), trade name "NOVATEC (registered trademark) NBC03HR" manufactured by Japan Polypropylene Corporation
(3X-3): Polypropylene-based resin composition obtained by blending 60% by weight of the polypropylene-based resin (3X-2) with 20% of EBR (TAFMER (registered trademark) A0550S manufactured by Mitsui Chemicals, inc.) of MFR=1.0 and 20% by weight of an inorganic filler (TALC P-6 manufactured by Nippon Talc Co., Ltd., average

particle size of 4.0 μm)
Injection molding machine: "IS100GN" manufactured by Toshiba Machine Co., ltd., mold clamping pressure of 100 tons
Cylinder temperature: 200°C
Mold temperature: 40°C
Injection mold: A flat plate of width×height×thickness = 120 mm×120 mm×3 mm Condition control: Kept in a constant-temperature constant-humidity chamber at a temperature of 23°C and a humidity of 50%RH for 5 days

Moreover, the obtained injection molded bodies were scratched by the following method to form resin molded bodies (substrates).
Processing for scratch evaluation: In a constant-temperature constant-humidity chamber at a temperature of 23°C and a humidity of 50%RH, using a scratch tester ("SCRATCH&MAR TESTER" manufactured by ROCKWOOD SYSTEMS AND EQUIPMENT), each of the above injection molded bodies was scratched with a scratching tip subjected to shape (curvature radius of 0.5 mm, ball shape) processing, under a load of 15N at a scratching rate of 100 mm/minute.
When the scratches formed on the surface of the resin molded body (substrate) were measured by means of a shape-measuring laser microscope ("VX-X200" manufactured by KEYENCE Corporation), the depth of the scratches was 13 μm. Further, the scratches became whitened scratches.

{Example 3-1}

- Production of Decorative Film

There was used a 2-kind 2-layer T-die having a lip opening of 0.8 mm and a die width of 400 mm, to which an extruder-1 for a sealing layer having a nozzle diameter of 30 mm (diameter) and an extruder-2 having a nozzle diameter of 40 mm (diameter) had been connected. The polypropylene-based resin (3A-1) was charged into the extruder-1 for a sealing layer and the polypropylene-based resin (3B-1-1) was charged into the extruder-2, and melt-extrusion was performed under conditions of a resin temperature of 240°C, a discharge amount from the extruder-1 for a sealing layer of 4 kg/h, and a discharge amount from the extruder-2 of 12 kg/h. The melt-extruded film was cooled and solidified while pushing it to a first roll rotating at 3 m/min at 80°C with an air knife so that the sealing layer came outside, thereby obtaining a two-layered unstretched film where a sealing layer (I) having a thickness of 50 μm and a layer (II) having a thickness of 150 μm were laminated.

- Three-Dimensional Decorative Thermoforming

As the resin molded body (substrate) 5, there was used the injection molded body composed of the polypropylene-based resin (3X-1) obtained in the above.
As a three-dimensional decorative thermoforming apparatus, "NGF-0406-SW" manufactured by Fu-se Vacuum Forming Ltd. was used. As shown in FIG 2 to 7, a decorative film 1 was cut into a size having a width of 250 mm and a length of 350 mm and was set to a jig 13 for film fixing having an opening part size of 210 mm×300 mm so that the longitudinal direction became the MD direction of the film. The resin molded body (substrate) 5 was attached on a sample-placing stand having a height of 20 mm, which was placed on a table 14 positioned below the jig 13 for film fixing, through "NICETACK NW-K15" manufactured by Nichiban Co., Ltd. The jig 13 for film fixing and the table 14 were placed in upper and lower chamber boxes 11 and 12 and the upper and lower chamber boxes 11 and 12 were closed to make the inside of the chamber boxes a tightly closed state. The chamber boxes were divided into upper and lower ones through the decorative film 1. The upper and lower chamber boxes 11 and 12 were vacuum-suctioned and a far-infrared heater 15 placed on the upper chamber box 11 was started at an output of 80% to heat the decorative film 1 in a state that the pressure was reduced from atmospheric pressure (101.3 kPa) to 1.0 kPa. During heating, the vacuum-suction was continued and finally, the pressure was reduced to 0.1 kPa. After 5 seconds from the finish of a spring-back phenomenon that the decorative film 1 was heated to temporarily slacken and thereafter tension returned, the table 14 placed in the lower chamber box 12 was transferred upward to push the resin molded body (substrate) 5 to the decorative film 1 and immediately after that, compressed air was fed so that the pressure in the upper chamber box 11 became 270 kPa to adhere the resin molded body (substrate) 5 and the decorative film 1 closely. Thus, there was obtained a three-dimensional decorative thermoformed article 6 where the decorative film 1 was stuck to the upper surface and side surface of the resin molded body (substrate) 5.

- Physical Property Evaluation

(3-1) Evaluation of Thermoformability

A draw-down state of the decorative film at the time of three-dimensional decorative thermoforming and a sticking state of the decorative film of the decorative molded body where the decorative film had been stuck to the substrate were visually observed and evaluated according to the criteria shown below.

O: Since the contact between the substrate and the decorative film is simultaneously achieved over a whole contact surface without generating draw-down of the decorative film at the time of three-dimensional decorative thermoforming, uneven contact is not generated and the film is uniformly stuck.
×: Since draw-down of the decorative film remarkably occurs at the time of three-dimensional decorative thermoforming, uneven contact is generated all over the surface of the substrate.

(3-2) Adhesive Force between Resin Molded Body (Substrate) and Decorative Film

"Craft adhesive tape No. 712N" manufactured by Nitoms, Inc. was cut into a size having a width of 75 mm and a length of 120 mm and was attached to a resin molded body (substrate) in the range of 75 mm×120 mm from the edge part of the resin molded body to perform a masking treatment (a surface exposed part of the substrate had a width of 45 mm and a length of 120 mm). The resin molded body (substrate) was placed on a three-dimensional decorative thermoforming apparatus NGF-0406-SW so that the masking face of the molded body came into contact with the decorative film, and three-dimensional decorative thermoforming was conducted.
The decorative film face of the obtained decorative molded body was cut to the substrate surface at a width of 10 mm using a cutter in a vertical direction toward a longitudinal direction of the adhesive tape to prepare a test specimen. In the obtained test specimen, the adhesion face between the substrate and the decorative film has a width of 10 mm and a length of 45 mm. It was fixed to a tensile tester so that the substrate part and the decorative film part of the test specimen made an angle of 180°, and 180° peeling strength of the adhesion face was measured at a tensile rate of 200 mm/min. Maximum strength (N/10 mm) at peeling or at break was measured five times and averaged strength was taken as adhesive force.

(3-3) Evaluation of Effect of Making Scratches Inconspicuous

Depth of scratches at the portion where scratches were present on a three-dimensional decorative thermoformed product of a resin molded body (substrate) which had been scratched with a load of 15 N was measured by means of a shape-measuring laser microscope ("VX-X200" manufactured by KEYENCE Corporation). The number of measurement times was 5 times (n=5) and an average value thereof was taken as scratch depth ($\mu$m).
Moreover, as whitened appearance, it was visually judged according to the following criteria whether whitened scratches of the molded body (substrate), which had been scratched with a load of 15 N, were made inconspicuous or not by the decorative film, and thus evaluation was performed.

○: Scars of whitened scratches are inconspicuous and appearance is excellent.
×: Whitened scratches remain and appearance is poor.

(3-4) Gloss

The gloss in the vicinity of the center of the decorative molded body to which a decorative film had been stuck was measured at an incident angle of 60° using Gloss Meter VG2000 manufactured by Nippon Denshoku Industries Co., Ltd. The measurement method conformed to JIS K7105-1981.

(3-5) Evaluation of Recyclability

The obtained decorative molded body was pulverized and a recycled molded body was obtained by injection molding in the same manner as in the production of the resin molded body (substrate). The appearance was visually evaluated.
Table 6 shows results of physical property evaluation of the obtained decorative molded body.
Since the polypropylene-based resin (A) and the resin composition (B) containing the polypropylene-based resin (B) satisfied all the requirements of the present invention, the obtained decorative molded body was excellent in appearance and adhesive force, and scratches were made inconspicuous. Moreover, the recycled molded body was

excellent in appearance (evaluation: ○).

{Examples 3-2 to 3-5}

Forming and evaluation were performed in the same manner as in Example 3-1 except that, in the production of the decorative film of Example 3-1, as the polypropylene-based resin used for the layer (II), (3B-1-1) and (3B-2-1) were blended in the ratio shown in Table 2 and used as a raw material to be used. Table 6 shows results.

{Example 3-6}

Forming and evaluation were performed in the same manner as in Example 3-1 except that, in the production of the decorative film of Example 3-1, the polypropylene-based resin used for the layer (II) was changed to (3B-1-2). Table 6 shows results.

{Examples 3-7 to 3-10}

Forming and evaluation were performed in the same manner as in Example 3-6 except that, in the production of the decorative film of Example 3-6, as the polypropylene-based resin used for the layer (II), (3B-1-2) and (3B-2-1) were blended in the ratio shown in Table 6 and used as a raw material to be used. Table 6 shows results of Examples 3-7 to 3-9 and Table 7 shows results of Example 3-10.

{Example 3-11}

Forming and evaluation were performed in the same manner as in Example 3-1 except that, in the production of the decorative film of Example 3-1, the polypropylene-based resin used for the sealing layer (I) was changed to (3A-2). Table 7 shows results.

{Example 3-12}

Forming and evaluation were performed in the same manner as in Example 3-1 except that, in the production of the decorative film of Example 3-1, the polypropylene-based resin used for the sealing layer (I) was changed to (3A-3). Table 7 shows results.

{Example 3-13}

Forming and evaluation were performed in the same manner as in Example 3-1 except that, in the production of the decorative film of Example 3-1, the polypropylene-based resin used for the sealing layer (I) was changed to (3A-4). Table 7 shows results.

{Example 3-14}

In the production of the decorative film, there was used a 3-kind 3-layer T-die having a lip opening of 0.8 mm and a die width of 400 mm, to which an extruder-1 for a sealing layer having a nozzle diameter of 30 mm (diameter), an extruder-2 having a nozzle diameter of 40 mm (diameter), and an extruder-3 for a surface layer having a nozzle diameter of 30 mm (diameter), had been connected. The polypropylene-based resin (3A-1) was charged into the extruder-1 for a sealing layer, the polypropylene-based resin (3B-1-1) was charged into the extruder-2, and the polypropylene-based resin (3B-2-1) was charged into the extruder-3 for a surface layer, and melt-extrusion was performed under conditions of a resin temperature of 240°C, a discharge amount from the extruder-1 for a sealing layer of 4 kg/h, a discharge amount from the extruder-1 for a surface layer of 8 kg/h, and a discharge amount from the extruder-1 for a surface layer of 4 kg/h.

The melt-extruded film was cooled and solidified while pushing it to a first roll rotating at 3 m/min at 80°C with an air knife so that the surface decorative layer came into contact, thereby obtaining a three-layered unstretched film where a sealing layer (I) having a thickness of 50 μm, a layer (II) having a thickness of 100 μm, and a surface decorative layer (III) having a thickness of 50 μm were laminated.

Evaluation was performed in the same manner as in Example 3-1 except the above. Table 7 shows obtained results.

As compared with Example 3-1 where the surface decorative layer was not laminated, the polypropylene-based resin (3B-2-1) was laminated as the surface decorative layer (III), so that a result of excellent gloss was observed.

{Example 3-15}

Forming and evaluation were performed in the same manner as in Example 3-1 except that, in the three-dimensional decorative thermoforming, the heating time of the decorative film was extended and forming was performed after 20 seconds of the finish of the spring-back phenomenon of tension return. Table 7 shows results.

Even when the heating time of the decorative film was extended, draw-down of the decorative film was not observed and the decorative molded body was excellent in appearance.

{Reference Example 3-1}

Forming and evaluation were performed in the same manner as in Example 3-1 except that, in the production of the decorative film of Example 3-1, the polypropylene-based resin used for the sealing layer (I) was changed to (3A-5). Table 7 shows results.

Since the polypropylene-based resin (3A-5) has such high Mw/Mn as 4.0, adhesive force was small and the emergence of the scratches could not be sufficiently suppressed, so that appearance was poor.

{Reference Example 3-2}

Forming and evaluation were performed in the same manner as in Example 3-1 except that, in the production of the decorative film of Example 3-1, the polypropylene-based resin used for the sealing layer (I) was changed to (3A-5) and the polypropylene-based resin used for the layer (II) was changed to (3B-2-2) and furthermore, in the three-dimensional decorative thermoforming, the heating time of the decorative film was extended and forming was performed after 20 seconds of the finish of the spring-back phenomenon of tension return. Table 7 shows results.

By extending the heating time of the decorative film, adhesive force was excellent but uneven contact was generated due to draw-down of the decorative film, so that appearance was remarkably poor. Since appearance was remarkably poor, evaluation was not preformed on the scratches and surface gloss.

{Example 3-16}

Evaluation was performed in the same manner as in Example 3-1 except that, in the three-dimensional decorative thermoforming of Example 3-1, the substrate was changed to the injection molded body using the resin (3X-2). Table 8 shows obtained results.

Since the polypropylene-based resin (A) and the polypropylene-based resin composition (B) satisfied all the requirements of the present invention, the obtained decorative molded body was excellent in appearance and adhesive force, and scratches were made inconspicuous. Moreover, the recycled molded body was excellent in appearance.

{Example 3-17}

Evaluation was performed in the same manner as in Example 3-1 except that, in the three-dimensional decorative thermoforming of Example 3-1, the substrate was changed to the injection molded body using the resin (3X-3). Table 8 shows obtained results.

{Example 3-18}

Evaluation was performed in the same manner as in Example 3-14 except that, in the production of the decorative film of Example 3-14, the polypropylene-based resin (3B-2-1) charged into the extruder-3 for a surface layer was changed to the polypropylene-based resin (3C-1). Table 8 shows obtained results.

Since the polypropylene-based resin (3C-1) to which a nucleating agent had been added was laminated as the surface decorative layer (III) at the uppermost surface side, so that a result of excellent gloss was observed.

{Example 3-19}

Evaluation was performed in the same manner as in Example 3-14 except that, in the production of the decorative film of Example 3-14, the polypropylene-based resin (3B-2-1) charged into the extruder-3 for a surface layer was changed to the polypropylene-based resin (3A-1). Table 8 shows obtained results.

Since the polypropylene-based resin (3A-1) was laminated as the surface decorative layer (III) at the uppermost surface side, so that a result of excellent gloss was observed.

{Example 3-20}

Evaluation was performed in the same manner as in Example 3-14 except that, in the production of the decorative film of Example 3-14, the polypropylene-based resin (3B-2-1) charged into the extruder-3 for a surface layer was changed to the polypropylene-based resin (3C-2). Table 8 shows obtained results.
Since the polypropylene-based resin (3C-2) to which a nucleating agent had been added was laminated as the surface decorative layer (III) at the uppermost surface side, so that a result of excellent gloss was observed.

{Example 3-21}

Evaluation was performed in the same manner as in Example 3-14 except that, in the production of the decorative film of Example 3-14, the polypropylene-based resin (3B-2-1) charged into the extruder-3 for a surface layer was changed to the polypropylene-based resin (3C-3). Table 8 shows obtained results.
Coupled with the sticking of the white-colored decorative film, the scratches were sufficiently hidden to such a degree that the scratched place was not able to identify. Therefore, the scratch depth was not measured. Moreover, since the surface decorative layer (III) excellent in gloss was colored white, appearance was excellent.

{Example 3-22}

Evaluation was performed in the same manner as in Example 3-14 except that, in the production of the decorative film of Example 3-14, the polypropylene-based resin (3B-1-1) was changed to the polypropylene-based resin (3B-1-3). Table 8 shows obtained results.
Since the polypropylene-based resin (A) and the polypropylene-based resin composition (B) satisfied all the requirements of the present invention, the obtained decorative molded body was excellent in appearance and adhesive force. Further, coupled with the sticking of the black-colored decorative film, the scratches were sufficiently hidden to such a degree that the scratched place was not able to identify. Therefore, the scratch depth was not measured. Moreover, since the layer (II) was colored black, appearance was excellent. Furthermore, the polypropylene-based resin (3 B-2-1) was laminated as the surface decorative layer (III) at the uppermost surface side, so that a result of excellent gloss was observed.

{Example 3-23}

Evaluation was performed in the same manner as in Example 3-22 except that, in the production of the decorative film of Example 3-22, the polypropylene-based resin (3B-2-1) charged into the extruder-3 for a surface layer was changed to the polypropylene-based resin (3C-4). Table 8 shows obtained results.
Coupled with the sticking of the colored decorative film, the scratches were sufficiently hidden to such a degree that the scratched place was not able to identify. Therefore, the scratch depth was not measured. Moreover, the polypropylene-based resin (3C-4) was laminated as the surface decorative layer (III) at the uppermost surface side, so that a result of excellent gloss was observed. Furthermore, since the layer (II) was colored black and the surface decorative layer (III) was colored silver, the film became a metallic film and appearance was excellent.

[Table 6]

Table 6

| | | | Unit | Example 3-1 | Example 3-2 | Example 3-3 | Example 3-4 | Example 3-5 | Example 3-6 | Example 3-7 | Example 3-8 | Example 3-9 |
|---|---|---|---|---|---|---|---|---|---|---|---|---|
| Surface decorative layer (III) | Kind | | | - | - | - | - | - | - | - | - | - |
| | MFR | | g/10min | - | - | - | - | - | - | - | - | - |
| Layer (II) | Long-chain branching PP (3B-1) | Kind | | 3B-1-1 | 3B-1-1 | 3B-1-1 | 3B-1-1 | 3B-1-1 | 3B-1-2 | 3B-1-2 | 3B-1-2 | 3B-1-2 |
| | | MFR | g/10min | 1.0 | 1.0 | 1.0 | 1.0 | 1.0 | 8.8 | 8.8 | 8.8 | 8.8 |
| | | Ratio | wt% | 100 | 70 | 30 | 10 | 5 | 100 | 70 | 30 | 10 |
| | Other PP | Kind | | - | 3B-2-1 | 3B-2-1 | 3B-2-1 | 3B-2-1 | - | 3B-2-1 | 3B-2-1 | 3B-2-1 |
| | | MFR | g/10min | - | 10 | 10 | 10 | 10 | - | 10 | 10 | 10 |
| | | Ratio | wt% | - | 30 | 70 | 90 | 95 | - | 30 | 70 | 90 |
| | Whole composition (B) | MFR | g/10min | 1.0 | 2.3 | 5.1 | 9.3 | 10 | 8.8 | 8.9 | 9.1 | 10 |
| | | $\lambda$ | | 9.7 | 6.6 | 4 | 2.2 | 1.6 | 7.8 | 4.8 | 2.6 | 1.5 |
| Sealing layer (I) | Resin (A) | Kind | | 3A-1 | 3A-1 | 3A-1 | 3A-1 | 3A-1 | 3A-1 | 3A-1 | 3A-1 | 3A-1 |
| | | MFR | g/10min | 7.0 | 7.0 | 7.0 | 7.0 | 7.0 | 7.0 | 7.0 | 7.0 | 7.0 |
| | | Tm | °C | 125 | 125 | 125 | 125 | 125 | 125 | 125 | 125 | 125 |
| | | Mw/Mn | | 2.5 | 2.5 | 2.5 | 2.5 | 2.5 | 2.5 | 2.5 | 2.5 | 2.5 |
| Substrate | Kind | | | 3X-1 | 3X-1 | 3X-1 | 3X-1 | 3X-1 | 3X-1 | 3X-1 | 3X-1 | 3X-1 |
| Heating time | | | sec | 5 | 5 | 5 | 5 | 5 | 5 | 5 | 5 | 5 |
| Appearance of decorative molded body | | | | ○ | ○ | ○ | ○ | ○ | ○ | ○ | ○ | ○ |
| Adhesive force | | | N/10mm | 20 | 20 | 19 | 18 | 21 | 20 | 20 | 19 | 19 |

(continued)

| | | Unit | Example 3-1 | Example 3-2 | Example 3-3 | Example 3-4 | Example 3-5 | Example 3-6 | Example 3-7 | Example 3-8 | Example 3-9 |
|---|---|---|---|---|---|---|---|---|---|---|---|
| Evaluation of scratch | Scratch depth | μm | 0.2 | 0.3 | 0.2 | 0.2 | 0.2 | 0.2 | 0.2 | 0.2 | 0.2 |
| | Whitened appearance | | ○ | ○ | ○ | ○ | ○ | ○ | ○ | ○ | ○ |
| GLOSS (60°) | | % | 15 | 17 | 20 | 23 | 24 | 20 | 21 | 23 | 24 |
| Appearance of recycled molded body | | | ○ | ○ | ○ | ○ | ○ | ○ | ○ | ○ | ○ |

[Table 7]

Table 7

| | | | Unit | Example 3-10 | Example 3-11 | Example 3-12 | Example 3-13 | Example 3-14 | Example 3-15 | Reference Example 3-1 | Comparative Example 3-2 |
|---|---|---|---|---|---|---|---|---|---|---|---|
| Surface decorative layer (III) | Kind | | | - | - | - | - | 3B-2-1 | - | - | - |
| | MFR | | g/10min | - | - | - | - | 10 | - | - | - |
| Layer (II) | Long-chain branching PP (3B-1) | Kind | | 3B-1-2 | 3B-1-1 | 3B-1-1 | 3B-1-1 | 3B-1-1 | 3B-1-1 | 3B-1-1 | none |
| | | MFR | g/10min | 8.8 | 1.0 | 1.0 | 1.0 | 1.0 | 1.0 | 1.0 | - |
| | | Ratio | wt% | 5 | 100 | 100 | 100 | 100 | 100 | 100 | 0 |
| | Other PP | Kind | | 3B-2-1 | - | - | - | - | - | - | 3B-2-2 |
| | | MFR | g/10min | 10 | - | - | - | - | - | - | 2.4 |
| | | Ratio | wt% | 95 | - | - | - | - | - | - | 100 |
| | Whole com-posit ion (B) | MFR | g/10min | 10 | 1.0 | 1.0 | 1.0 | 1.0 | 1.0 | 1.0 | 2.4 |
| | | λ | | 1.4 | 9.7 | 9.7 | 9.7 | 9.7 | 9.7 | 9.7 | 0.9 |
| Sealing layer (I) | Resin (A) | Kind | | 3A-1 | 3A-2 | 3A-3 | 3A-4 | 3A-1 | 3A-1 | 3A-5 | 3A-5 |
| | | MFR | g/10min | 7.0 | 25 | 7.0 | 3.5 | 7.0 | 7.0 | 7.0 | 7.0 |
| | | Tm | °C | 125 | 125 | 135 | 143 | 125 | 125 | 145 | 145 |
| | | Mw/Mn | | 2.5 | 2.4 | 2.3 | 2.8 | 2.5 | 2.5 | 4.0 | 4.0 |
| Substrate | Kind | | | 3X-1 | 3X-1 | 3X-1 | 3X-1 | 3X-1 | 3X-1 | 3X-1 | 3X-1 |
| Heating time | | | sec | 5 | 5 | 5 | 5 | 5 | 20 | 5 | 20 |
| Appearance of decorative molded body | | | | ○ | ○ | ○ | ○ | ○ | ○ | ○ | × |
| Adhesive force | | | N/10mm | 21 | 19 | 15 | 12 | 20 | 30 | 3 | 24 |

(continued)

| | | Unit | Example 3-10 | Example 3-11 | Example 3-12 | Example 3-13 | Example 3-14 | Example 3-15 | Reference Example 3-1 | Comparative Example 3-2 |
|---|---|---|---|---|---|---|---|---|---|---|
| Evaluation of scratch | Scratch depth | μm | 0.3 | 0.3 | 0.6 | 0.8 | 0.2 | 0.1 | 1.5 | - |
| | Whitened appearance | | ○ | ○ | ○ | ○ | ○ | ○ | × | - |
| GLOSS (60°) | | % | 26 | 16 | 17 | 17 | 30 | 17 | 16 | - |
| Appearance of recycled molded body | | | ○ | ○ | ○ | ○ | ○ | ○ | ○ | ○ |

[Table 8]

Table 8

| | | | Unit | Example 3-16 | Example 3-17 | Example 3-18 | Example 3-19 | Example 3-20 | Example 3-21 | Example 3-22 | Example 3-23 |
|---|---|---|---|---|---|---|---|---|---|---|---|
| Surface decorative layer (III) | Kind | | | - | - | 3C-1 | 3A-1 | 3C-2 | 3C-3 | 3B-2-1 | 3C-4 |
| | MFR | | g/10min | - | - | 10 | 7.0 | 7.0 | 10 | 10 | 10 |
| Layer (II) | Long-chain branching PP (3B-1) | Kind | | 3B-1-1 | 3B-1-1 | 3B-1-1 | 3B-1-1 | 3B-1-1 | 3B-1-1 | 3B-1-3 | 3B-1-3 |
| | | MFR | g/10min | 1.0 | 1.0 | 1.0 | 1.0 | 1.0 | 1.0 | 1.0 | 1.0 |
| | | Ratio | wt% | 100 | 100 | 100 | 100 | 100 | 100 | 100 | 100 |
| | Other PP | Kind | | - | - | - | - | - | - | - | - |
| | | MFR | g/10min | - | - | - | - | - | - | - | - |
| | | Ratio | wt% | - | - | - | - | - | - | - | - |
| | Whole composite n (B) | MFR | g/10min | 1.0 | 1.0 | 1.0 | 1.0 | 1.0 | 1.0 | 1.0 | 1.0 |
| | | λ | | 9.7 | 9.7 | 9.7 | 9.7 | 9.7 | 9.7 | 9.3 | 9.3 |
| Sealing layer (1) | Resin (A) | Kind | | 3A-1 | 3A-1 | 3A-1 | 3A-1 | 3A-1 | 3A-1 | 3A-1 | 3A-1 |
| | | MFR | g/10min | 7.0 | 7.0 | 7.0 | 7.0 | 7.0 | 7.0 | 7.0 | 7.0 |
| | | Tm | °C | 125 | 125 | 125 | 125 | 125 | 125 | 125 | 125 |
| | | Mw/Mn | | 2.5 | 2.5 | 2.5 | 2.5 | 2.5 | 2.5 | 2.5 | 2.5 |
| Substrate | Kind | | | 3X-2 | 3X-3 | 3X-1 | 3X-1 | 3X-1 | 3X-1 | 3X-1 | 3X-1 |
| Heating time | | | sec | 5 | 5 | 5 | 5 | 5 | 5 | 5 | 5 |
| Appearance of decorative molded body | | | | ○ | ○ | ○ | ○ | ○ | ○ | ○ | ○ |
| Adhesive force | | | N/10mm | 18 | 20 | 22 | 19 | 20 | 20 | 19 | 21 |

(continued)

| | | Unit | Example 3-16 | Example 3-17 | Example 3-18 | Example 3-19 | Example 3-20 | Example 3-21 | Example 3-22 | Example 3-23 |
|---|---|---|---|---|---|---|---|---|---|---|
| Evaluation of scratch | Scratch depth | μm | 0.3 | 0.2 | 0.3 | 0.2 | 0.1 | - | - | - |
| | Whitened appearance | | ○ | ○ | ○ | ○ | ○ | ○ | ○ | ○ |
| GLOSS (60°) | | % | 16 | 16 | 81 | 32 | 93 | 32 | 30 | 31 |
| Appearance of recycled molded body | | | ○ | ○ | ○ | ○ | ○ | ○ | ○ | ○ |

[4. Decorative Film including Sealing Layer (I) composed of Polypropylene-based Resin

(A) satisfying Requirement (a2) and Ethylene-α-Olefin Random Copolymer (C)]

4-2. Used Materials

(4-1) Polypropylene-based Resins

The following polypropylene-based resins were used.

(4A-1): Propylene-α-olefin copolymer (MFR=7 g/10 minutes, Tm=146°C), trade name "NOVATEC (registered trademark) FW3GT" manufactured by Japan Polypropylene Corporation
(4A-2): Propylene homopolymer (MFR=10 g/10 minutes, Tm=161°C), trade name "NOVATEC (registered trademark) FA3KM" manufactured by Japan Polypropylene Corporation
(4A-3): Propylene-α-olefin copolymer (MFR=5 g/10 minutes, Tc=127°C), trade name "NOVATEC (registered trademark) FX4G" manufactured by Japan Polypropylene Corporation
(4C-1-1): Propylene homopolymer having a long-chain branch, which was produced by a macromer copolymerization method, trade name "WAYMAX (registered trademark) MFX3" manufactured by Japan Polypropylene Corporation, MFR=8.8 g/10 minutes, strain hardening degree λ=7.8, Tm=154°C, branching index g' at an absolute molecular weight Mabs of 1,000,000=0.85, the presence of a long-chain branched structure was confirmed by $^{13}$C-NMR measurement.
(4C-1-2): Propylene homopolymer having a long-chain branch, which was produced by a macromer copolymerization method, trade name "WAYMAX (registered trademark) MFX8" manufactured by Japan Polypropylene Corporation, MFR=1 g/10 minutes, strain hardening degree λ=9.7, Tm=154°C, branching index g' at an absolute molecular weight Mabs of 1,000,000=0.89, the presence of a long-chain branched structure was confirmed by $^{13}$C-NMR measurement.
(4C-1-3): Polypropylene-based resin composition (MFR=9 g/10 minutes, strain hardening degree λ=7.3, Tm=154°C) obtained by blending 96% by weight of the polypropylene-based resin (4C-1-1) with 4% by weight of a black pigment MB (EPP-K-120601 manufactured by Polycol Kogyo K.K.)
(4D-1): Polypropylene-based resin composition (MFR=10 g/10 minutes, Tm=164°C) obtained by blending 100% by weight of the polypropylene-based resin (4A-2) with 0.4% by weight of a nucleating agent (trademark "Millad NX8000J" manufactured by Milliken Japan, K.K.)
(4D-2): Propylene-α-olefin copolymer (MFR=7 g/10 minutes, Tm=125°C, Mw/Mn=2.5) by metallocene catalyst, trade name "WINTEC (registered trademark) WFX4M" manufactured by Japan Polypropylene Corporation
(4D-3): Polypropylene-based resin composition (MFR=7 g/10 minutes, Tm=127°C) obtained by blending 100% by weight of the polypropylene-based resin (4D-2) with 0.4% by weight of a nucleating agent (trademark "Millad NX8000J" manufactured by Milliken Japan, K.K.)
(4D-4): Polypropylene-based resin composition (MFR=10 g/10 minutes, Tm=161°C) obtained by blending 96% by weight of the polypropylene-based resin (4A-2) with 4% by weight of a white pigment MB (EPP-W-59578 manufactured by Polycol Kogyo K.K., titanium oxide content of 80% by weight) of MFR=11 g/10 minutes
(4D-5): Polypropylene-based resin composition (MFR=10 g/10 minutes, Tm=161°C) obtained by blending 96% by weight of the polypropylene-based resin (4B-2-1) with 4% by weight of a silver pigment MB (PPCM913Y-42 SILVER21X manufactured by TOYOCOLOR Co., Ltd.)

(4-2) Ethylene-α-Olefin Random Copolymer

The following ethylene-α-olefin random copolymers were used.

(4B-1): Ethylene-butene random copolymer (MFR=6.8 g/10 minutes, Tm=66°C, density=0.885 g/cm$^3$, ethylene content=84% by weight): trade name "TAFMER A4085S" manufactured by Mitsui Chemicals, Inc.
(4B-2): Ethylene-butene random copolymer (MFR=7.0 g/10 minutes, Tm=47°C, density=0.860 g/cm$^3$, ethylene content=73% by weight): trade name "TAFMER A4050S" manufactured by Mitsui Chemicals, Inc.
(4B-3): Ethylene-octene random copolymer (MFR=2.0 g/10 minutes, Tm=77°C, density=0.885 g/cm$^3$, ethylene content=85% by weight): trade name "Engage EG8003" manufactured by DowDuPont Inc.
(4B-4): Ethylene-octene random copolymer (MFR=2.0 g/10 minutes, Tm=38°C, density=0.860 g/cm$^3$, ethylene content=75% by weight): trade name "Engage EG8842" manufactured by DowDuPont Inc.
(4B-5): Ethylene-hexene random copolymer (MFR=3.5 g/10 minutes, Tm=60°C, density=0.880 g/cm$^3$, ethylene content=76% by weight): trade name "Kernel KS340T" manufactured by Japan Polyethylene Corporation
(4B-6): Ethylene-propylene random copolymer (MFR=7.0 g/10 minutes, Tm=38°C, density=0.860 g/cm$^3$, ethylene

content=73% by weight): trade name "TAFMER P0280" manufactured by Mitsui Chemicals, Inc.

4-3. Production of Resin Molded Body (Substrate)

Using the following polypropylene-based resins (4X-1) to (4X-3), injection molded bodies were obtained by the following method.

(4X-1): Propylene homopolymer (MFR=40 g/10 minutes, Tm=165°C), trade name "NOVATEC (registered trademark) MA04H" manufactured by Japan Polypropylene Corporation
(4X-2): Propylene ethylene block copolymer (MFR=30 g/10 minutes, Tm=164°C), trade name "NOVATEC (registered trademark) NBC03HR" manufactured by Japan Polypropylene Corporation
(4X-3): Polypropylene-based resin composition obtained by blending 60% by weight of the polypropylene-based resin (4X-2) with 20% of EBR (TAFMER (registered trademark) A0550S manufactured by Mitsui Chemicals, inc.) of MFR=1.0 and 20% by weight of an inorganic filler (TALC P-6 manufactured by Nippon Talc Co., Ltd., average particle size of 4.0 μm)
Injection molding machine: "IS100GN" manufactured by Toshiba Machine Co., ltd., mold clamping pressure of 100 tons
Cylinder temperature: 200°C
Mold temperature: 40°C
Injection mold: A flat plate of width×height×thickness = 120 mm×120 mm×3 mm
Condition control: Kept in a constant-temperature constant-humidity chamber at a temperature of 23°C and a humidity of 50%RH for 5 days

Moreover, the obtained injection molded bodies were scratched by the following method to form resin molded bodies (substrates).
Processing for scratch evaluation: In a constant-temperature constant-humidity chamber at a temperature of 23°C and a humidity of 50%RH, using a scratch tester ("SCRATCH&MAR TESTER" manufactured by ROCKWOOD SYSTEMS AND EQUIPMENT), each of the above injection molded bodies was scratched with a scratching tip subjected to shape (curvature radius of 0.5 mm, ball shape) processing, under a load of 25N at a scratching rate of 100 mm/minute.
When the scratches formed on the surface of the resin molded body (substrate) were measured by means of a shape-measuring laser microscope ("VX-X200" manufactured by KEYENCE Corporation), the depth of the scratches was 16 μm. Further, the scratches became whitened scratches.

{Example 4-1}

- Production of Decorative Film

There was used a 2-kind 2-layer T-die having a lip opening of 0.8 mm and a die width of 400 mm, to which an extruder-1 for a sealing layer (I) having a nozzle diameter of 30 mm (diameter) and an extruder-2 for a layer (II) having a nozzle diameter of 40 mm (diameter) had been connected. One obtained by blending the polypropylene-based resin (4A-1) and the ethylene-α-olefin random copolymer (4B-1) so as to be a weight ratio of 85:15 was charged into the extruder-1 for a sealing layer (I) and the polypropylene-based resin (4C-1-1) having a long-chain branched structure was charged into the extruder-2 for a layer (II), and melt-extrusion was performed under conditions of a resin temperature of 240°C, a discharge amount from the extruder-1 for a sealing layer (I) of 4 kg/h, and a discharge amount from the extruder-2 for a layer (II) of 12 kg/h. The melt-extruded film was cooled and solidified while pushing it to a first roll rotating at 3 m/min at 80°C with an air knife so that the sealing layer (I) came outside, thereby obtaining a two-layered unstretched film where a sealing layer (I) having a thickness of 50 μm and a layer (II) having a thickness of 150 μm were laminated.

- Three-Dimensional Decorative Thermoforming

As the resin molded body (substrate) 5, there was used the injection molded body composed of the polypropylene-based resin (4X-1) obtained in the above.
As a three-dimensional decorative thermoforming apparatus, "NGF-0406-SW" manufactured by Fu-se Vacuum Forming Ltd. was used. As shown in FIG. 2 to FIG. 7, a decorative film 1 was cut into a size having a width of 250 mm and a length of 350 mm and was set to a jig 13 for film fixing having an opening part size of 210 mm×300 mm so that the longitudinal direction became the MD direction of the film. The resin molded body (substrate) 5 was attached on a sample-placing stand having a height of 20 mm, which was placed on a table 14 positioned below the jig 13 for film fixing, through "NICETACK NW-K15" manufactured by Nichiban Co., Ltd. The jig 13 for film fixing and the table 14 were

placed in upper and lower chamber boxes 11 and 12 and the upper and lower chamber boxes 11 and 12 were closed to make the inside of the chamber boxes a tightly closed state. The chamber boxes were divided into upper and lower ones through the decorative film 1. The upper and lower chamber boxes 11 and 12 were vacuum-suctioned and a far-infrared heater 15 placed on the upper chamber box 11 was started at an output of 80% to heat the decorative film 1 in a state that the pressure was reduced from atmospheric pressure (101.3 kPa) to 1.0 kPa. During heating, the vacuum-suction was continued and finally, the pressure was reduced to 0.1 kPa. Immediately after the finish of a spring-back phenomenon that the decorative film 1 was heated to temporarily slacken and thereafter tension returned (i.e., heating time after the spring-back phenomenon was 0 second), the table 14 placed in the lower chamber box 12 was transferred upward to push the resin molded body (substrate) 5 to the decorative film 1 and immediately after that, compressed air was fed so that the pressure in the upper chamber box 11 became 270 kPa to adhere the resin molded body (substrate) 5 and the decorative film 1 closely. Thus, there was obtained a three-dimensional decorative thermoformed article 6 where the decorative film 1 was stuck to the upper surface and side surface of the resin molded body (substrate) 5.

- Physical Property Evaluation

(4-1) Evaluation of Thermoformability (Appearance of Decorative Molded Body)

A draw-down state of the decorative film at the time of three-dimensional decorative thermoforming and a sticking state of the decorative film of the decorative molded body where the decorative film had been stuck to the substrate were visually observed and evaluated according to the criteria shown below.

○: Since the contact between the substrate and the decorative film is simultaneously achieved over a whole contact surface without generating draw-down of the decorative film at the time of three-dimensional decorative thermoforming, uneven contact is not generated and the film is uniformly stuck.
×: Since draw-down of the decorative film remarkably occurs at the time of three-dimensional decorative thermoforming, uneven contact is generated all over the surface of the substrate.

(4-2) Adhesive Force between Resin Molded Body (Substrate) and Decorative Film

"Craft adhesive tape No. 712N" manufactured by Nitoms, Inc. was cut into a size having a width of 75 mm and a length of 120 mm and was attached to a resin molded body (substrate) in the range of 75 mm×120 mm from the edge part of the resin molded body to perform a masking treatment (a surface exposed part of the substrate had a width of 45 mm and a length of 120 mm). The resin molded body (substrate) was placed on a three-dimensional decorative thermoforming apparatus NGF-0406-SW so that the masking face of the molded body came into contact with the decorative film, and three-dimensional decorative thermoforming was conducted.

The decorative film face of the obtained decorative molded body was cut to the substrate surface at a width of 10 mm using a cutter in a vertical direction toward a longitudinal direction of the adhesive tape to prepare a test specimen. In the obtained test specimen, the adhesion face between the substrate and the decorative film has a width of 10 mm and a length of 45 mm. It was fixed to a tensile tester so that the substrate part and the decorative film part of the test specimen made an angle of 180°, and 180° peeling strength of the adhesion face was measured at a tensile rate of 200 mm/min. Maximum strength (N/10 mm) at peeling or at break was measured five times and averaged strength was taken as adhesive force.

(4-3) Evaluation of Effect of Making Scratches Inconspicuous

Depth of scratches at the portion where scratches were present on a three-dimensional decorative thermoformed product of a resin molded body (substrate) which had been scratched with a load of 25 N was measured by means of a shape-measuring laser microscope ("VX-X200" manufactured by KEYENCE Corporation). The number of measurement times was 5 times (n=5) and an average value thereof was taken as scratch depth (μm).

Moreover, as whitened appearance, it was visually judged according to the following criteria whether whitened scratches of the molded body (substrate), which had been scratched with a load of 25 N, were made inconspicuous or not by the decorative film, and thus evaluation was performed.

○: Scars of whitened scratches are inconspicuous and appearance is excellent.
×: Whitened scratches remain and appearance is poor.

(4-4) Evaluation of Recyclability

The obtained decorative molded body was pulverized and a recycled molded body was obtained by injection molding in the same manner as in the production of the resin molded body (substrate). The appearance was visually evaluated.

(4-5) Gloss

The gloss in the vicinity of the center of the decorative molded body to which a decorative film had been stuck was measured at an incident angle of 60° using Gloss Meter VG2000 manufactured by Nippon Denshoku Industries Co., Ltd. The measurement method conformed to JIS K7105-1981.

Table 9 shows results of physical property evaluation of the obtained decorative molded body and the like.

Since the polypropylene-based resin (A), the ethylene-α-olefin random copolymer (C), and the polypropylene-based resin (B) satisfied all the requirements of the present invention, the obtained decorative molded body was excellent in appearance and adhesive force, and scratches were made inconspicuous. Moreover, the recycled molded body was excellent in appearance (evaluation: ○).

{Example 4-2}

Evaluation was performed in the same manner as in Example 4-1 except that, in the production of the decorative film of Example 4-1, the polypropylene-based resin (4C-1-1) having a long-chain branched structure used for the layer (II) was changed to one obtained by blending the polypropylene-based resin (4C-1-1) having a long-chain branched structure and the polypropylene-based resin (4A-2) so as to be a weight ratio of 30:70. Table 9 shows evaluation results.

Since the polypropylene-based resin (A), the ethylene-α-olefin random copolymer (C), and the polypropylene-based resin composition (B) satisfied all the requirements of the present invention, the obtained decorative molded body was excellent in appearance and adhesive force, and scratches were made inconspicuous. Moreover, the recycled molded body was excellent in appearance (evaluation: ○).

{Example 4-3}

Evaluation was performed in the same manner as in Example 4-1 except that, in the production of the decorative film of Example 4-1, the polypropylene-based resin (4C-1-1) having a long-chain branched structure used for the layer (II) was changed to one obtained by blending the polypropylene-based resin (4C-1-1) having a long-chain branched structure and the polypropylene-based resin (4A-2) so as to be a weight ratio of 5:95. Table 9 shows evaluation results.

Since the polypropylene-based resin (A), the ethylene-α-olefin random copolymer (C), and the polypropylene-based resin composition (B) satisfied all the requirements of the present invention, the obtained decorative molded body was excellent in appearance and adhesive force, and scratches were made inconspicuous. Moreover, the recycled molded body was excellent in appearance (evaluation: ○).

{Example 4-4}

Evaluation was performed in the same manner as in Example 4-1 except that, in the production of the decorative film of Example 4-1, the polypropylene-based resin (4C-1-1) having a long-chain branched structure used for the layer (II) was changed to the polypropylene-based resin (4C-1-2) having a long-chain branched structure. Table 9 shows evaluation results.

Since the polypropylene-based resin (A), the ethylene-α-olefin random copolymer (C), and the polypropylene-based resin (B) satisfied all the requirements of the present invention, the obtained decorative molded body was excellent in appearance and adhesive force, and scratches were made inconspicuous. Moreover, the recycled molded body was excellent in appearance (evaluation: ○).

{Example 4-5}

Evaluation was performed in the same manner as in Example 4-1 except that, in the production of the decorative film of Example 4-1, the polypropylene-based resin (4C-1-1) having a long-chain branched structure used for the layer (II) was changed to one obtained by blending the polypropylene-based resin (4C-1-2) having a long-chain branched structure and the polypropylene-based resin (4A-2) so as to be a weight ratio of 30:70. Table 9 shows evaluation results.

Since the polypropylene-based resin (A), the ethylene-α-olefin random copolymer (C), and the polypropylene-based resin composition (B) satisfied all the requirements of the present invention, the obtained decorative molded body

was excellent in appearance and adhesive force, and scratches were made inconspicuous. Moreover, the recycled molded body was excellent in appearance (evaluation: ○).

{Example 4-6}

Evaluation was performed in the same manner as in Example 4-1 except that, in the production of the decorative film of Example 4-1, the polypropylene-based resin (4C-1-1) having a long-chain branched structure used for the layer (II) was changed to one obtained by blending the polypropylene-based resin (4C-1-2) having a long-chain branched structure and the polypropylene-based resin (4A-2) so as to be a weight ratio of 5:95. Table 9 shows evaluation results.
Since the polypropylene-based resin (A), the ethylene-α-olefin random copolymer (C), and the polypropylene-based resin composition (B) satisfied all the requirements of the present invention, the obtained decorative molded body was excellent in appearance and adhesive force, and scratches were made inconspicuous. Moreover, the recycled molded body was excellent in appearance (evaluation: ○).

{Example 4-7}

Evaluation was performed in the same manner as in Example 4-1 except that, in the production of the decorative film of Example 4-1, the blending ratio of the polypropylene-based resin (4A-1) to the polypropylene-based resin (4B-1) was controlled to 70:30. Table 9 shows evaluation results.
Since the polypropylene-based resin (A), the ethylene-α-olefin random copolymer (C), and the polypropylene-based resin (B) satisfied all the requirements of the present invention, the obtained decorative molded body was excellent in appearance and adhesive force, and scratches were made inconspicuous. Moreover, the recycled molded body was excellent in appearance (evaluation: ○).

{Example 4-8}

Evaluation was performed in the same manner as in Example 4-1 except that, in the production of the decorative film of Example 4-1, the blending ratio of the polypropylene-based resin (4A-1) to the ethylene-α-olefin random copolymer (4B-1) was controlled to 30:70. Table 9 shows evaluation results.
Since the polypropylene-based resin (A), the ethylene-α-olefin random copolymer (C), and the polypropylene-based resin (B) satisfied all the requirements of the present invention, the obtained decorative molded body was excellent in appearance and adhesive force, and scratches were made inconspicuous. Moreover, the recycled molded body was excellent in appearance (evaluation: ○).

{Example 4-9}

Evaluation was performed in the same manner as in Example 4-1 except that, in the production of the decorative film of Example 4-1, the ethylene-α-olefin random copolymer used for the sealing layer was changed to (4B-2). Table 9 shows evaluation results.
Since the polypropylene-based resin (A), the ethylene-α-olefin random copolymer (C), and the polypropylene-based resin (B) satisfied all the requirements of the present invention, the obtained decorative molded body was excellent in appearance and adhesive force, and scratches were made inconspicuous. Moreover, the recycled molded body was excellent in appearance (evaluation: ○).

{Example 4-10}

Evaluation was performed in the same manner as in Example 4-1 except that, in the production of the decorative film of Example 4-1, the ethylene-α-olefin random copolymer used for the sealing layer was changed to (4B-3). Table 9 shows evaluation results.
Since the polypropylene-based resin (A), the ethylene-α-olefin random copolymer (C), and the polypropylene-based resin (B) satisfied all the requirements of the present invention, the obtained decorative molded body was excellent in appearance and adhesive force, and scratches were made inconspicuous. Moreover, the recycled molded body was excellent in appearance (evaluation: ○).

{Example 4-11}

Evaluation was performed in the same manner as in Example 4-1 except that, in the production of the decorative film of Example 4-1, the ethylene-α-olefin random copolymer used for the sealing layer was changed to (4B-4). Table

9 shows evaluation results.

Since the polypropylene-based resin (A), the ethylene-α-olefin random copolymer (C), and the polypropylene-based resin (B) satisfied all the requirements of the present invention, the obtained decorative molded body was excellent in appearance and adhesive force, and scratches were made inconspicuous. Moreover, the recycled molded body was excellent in appearance (evaluation: ○).

{Example 4-12}

Evaluation was performed in the same manner as in Example 4-1 except that, in the production of the decorative film of Example 4-1, the ethylene-α-olefin random copolymer used for the sealing layer was changed to (4B-5). Table 9 shows evaluation results.

Since the polypropylene-based resin (A), the ethylene-α-olefin random copolymer (C), and the polypropylene-based resin (B) satisfied all the requirements of the present invention, the obtained decorative molded body was excellent in appearance and adhesive force, and scratches were made inconspicuous. Moreover, the recycled molded body was excellent in appearance (evaluation: ○).

{Example 4-13}

Evaluation was performed in the same manner as in Example 4-1 except that, in the production of the decorative film of Example 4-1, the ethylene-α-olefin random copolymer used for the sealing layer was changed to (4B-6). Table 9 shows evaluation results.

Since the polypropylene-based resin (A), the ethylene-α-olefin random copolymer (C), and the polypropylene-based resin (B) satisfied all the requirements of the present invention, the obtained decorative molded body was excellent in appearance and adhesive force, and scratches were made inconspicuous. Moreover, the recycled molded body was excellent in appearance (evaluation: ○).

{Example 4-14}

Evaluation was performed in the same manner as in Example 4-1 except that, in the production of the decorative film of Example 4-1, the polypropylene-based resin used for the sealing layer was changed to (4A-2). Table 9 shows evaluation results.

Since the polypropylene-based resin (A), the ethylene-α-olefin random copolymer (C), and the polypropylene-based resin (B) satisfied all the requirements of the present invention, the obtained decorative molded body was excellent in appearance and adhesive force, and scratches were made inconspicuous. Moreover, the recycled molded body was excellent in appearance (evaluation: ○).

{Example 4-15}

Evaluation was performed in the same manner as in Example 4-1 except that, in the production of the decorative film of Example 4-1, the polypropylene-based resin used for the sealing layer was changed to (4A-3). Table 9 shows evaluation results.

Since the polypropylene-based resin (A), the ethylene-α-olefin random copolymer (C), and the polypropylene-based resin (B) satisfied all the requirements of the present invention, the obtained decorative molded body was excellent in appearance and adhesive force, and scratches were made inconspicuous. Moreover, the recycled molded body was excellent in appearance (evaluation: ○).

{Example 4-16}

In the production of the decorative film, there was used a 3-kind 3-layer T-die having a lip opening of 0.8 mm and a die width of 400 mm, to which an extruder-1 for a sealing layer (I) having a nozzle diameter of 30 mm (diameter), an extruder-2 for a layer (III) having a nozzle diameter of 40 mm (diameter), and an extruder-3 for a surface decorative layer (III) having a nozzle diameter of 30 mm (diameter), had been connected. One obtained by blending the polypropylene-based resin (4A-1) and the ethylene-α-olefin random copolymer (4B-1) so as to be a weight ratio of 85:15 was charged into the extruder-1 for a sealing layer (I), the polypropylene-based resin (4C-1-1) having a long-chain branched structure was charged into the extruder-2 for a layer (II), and the polypropylene-based resin (4A-2) was charged into the extruder-3 for a surface decorative layer (III), and melt-extrusion was performed under conditions of a resin temperature of 240°C, a discharge amount from the extruder-1 for a sealing layer (I) of 4 kg/h, a discharge amount from the extruder-2 for a layer (II) of 8 kg/h, and a discharge amount from the extruder-3 for a surface decorative layer (III) of 4 kg/h.

The melt-extruded film was cooled and solidified while pushing it to a first roll rotating at 3 m/min at 80°C with an air knife so that the surface decorative layer (III) came into contact, thereby obtaining a three-layered unstretched film where a sealing layer (I) having a thickness of 50 μm, a layer (II) having a thickness of 100 μm, and a surface decorative layer (III) having a thickness of 50 μm were laminated.

Evaluation was performed in the same manner as in Example 4-1 except the above. Table 9 shows obtained results. Since the polypropylene-based resin (A), the ethylene-α-olefin random copolymer (C), and the polypropylene-based resin (B) satisfied all the requirements of the present invention, the obtained decorative molded body was excellent in appearance and adhesive force, and scratches were made inconspicuous. Moreover, the recycled molded body was excellent in appearance (evaluation: ○). Furthermore, by providing the surface decorative layer (III), a decorative molded body more excellent in surface gloss could be obtained.

{Comparative Example 4-1}

Evaluation was performed in the same manner as in Example 4-1 except that, in the production of the decorative film of Example 4-1, the ethylene-α-olefin random copolymer (C) was not blended and the polypropylene-based resin (4A-1) alone was used in the sealing layer (I) and the polypropylene-based resin having a long-chain branched structure was not blended and the polypropylene-based resin (4A-2) alone was used in the layer (II). Table 9 shows evaluation results.

Since the ethylene-α-olefin random copolymer (C) was not contained in the sealing layer (I), adhesive force was small. Since the polypropylene-based resin having a long-chain branched structure was not contained in the layer (II), draw-down of the film was severe and the appearance of the decorative molded body was poor, so that evaluation on scratches and gloss was not performed.

{Comparative Example 4-2}

Evaluation was performed in the same manner as in Example 4-1 except that, in the production of the decorative film of Example 4-1, the polypropylene-based resin having a long-chain branched structure was not blended and the polypropylene-based resin (4A-2) alone was used in the layer (II). Table 9 shows evaluation results.

Since the polypropylene-based resin having a long-chain branched structure was not contained in the layer (II), draw-down of the film was severe and the appearance of the decorative molded body was poor, so that evaluation on scratches and gloss was not performed.

{Reference Example 4-3}

Evaluation was performed in the same manner as in Example 4-1 except that, in the production of the decorative film of Example 4-1, the ethylene-α-olefin random copolymer (C) was not blended and the polypropylene-based resin (4A-1) alone was used in the sealing layer (I). Table 9 shows evaluation results.

Since the ethylene-α-olefin random copolymer (C) was not contained in the sealing layer (I), adhesive force was small and the emergence of the scratches could not be sufficiently suppressed, so that appearance was poor.

{Example 4-17}

Evaluation was performed in the same manner as in Example 4-1 except that, in the three-dimensional decorative thermoforming of Example 4-1, the substrate was changed to the injection molded body using the resin (4X-2). Table 10 shows obtained results.

Since the polypropylene-based resin (A), the ethylene-α-olefin random copolymer (C), and the polypropylene-based resin (B) satisfied all the requirements of the present invention, the obtained decorative molded body was excellent in appearance and adhesive force, and scratches were made inconspicuous. Moreover, the recycled molded body was excellent in appearance (evaluation: ○).

{Example 4-18}

Evaluation was performed in the same manner as in Example 4-1 except that, in the three-dimensional decorative thermoforming of Example 4-1, the substrate was changed to the injection molded body using the resin (4X-3). Table 10 shows obtained results.

Since the polypropylene-based resin (A), the ethylene-α-olefin random copolymer (C), and the polypropylene-based resin (B) satisfied all the requirements of the present invention, the obtained decorative molded body was excellent in appearance and adhesive force, and scratches were made inconspicuous. Moreover, the recycled molded body was

excellent in appearance (evaluation: ○).

{Example 4-19}

Evaluation was performed in the same manner as in Example 4-16 except that, in the production of the decorative film of Example 4-16, the polypropylene-based resin (4A-2) charged into the extruder-3 for a surface decorative layer (III) was changed to the polypropylene-based resin (4D-1). Table 10 shows obtained results.
Since the polypropylene-based resin (A), the ethylene-α-olefin random copolymer (C), and the polypropylene-based resin (B) satisfied all the requirements of the present invention, the obtained decorative molded body was excellent in appearance and adhesive force, and scratches were made inconspicuous. Moreover, the recycled molded body was excellent in appearance (evaluation: ○). Furthermore, the polypropylene-based resin (4D-1) to which a nucleating agent had been added was laminated as the surface decorative layer (III) at the uppermost surface side, so that a result of excellent gloss was observed.

{Example 4-20}

Evaluation was performed in the same manner as in Example 4-16 except that, in the production of the decorative film of Example 4-16, the polypropylene-based resin (4A-2) charged into the extruder-3 for a surface decorative layer (III) was changed to the polypropylene-based resin (4D-2). Table 10 shows obtained results.
Since the polypropylene-based resin (A), the ethylene-α-olefin random copolymer (C), and the polypropylene-based resin (B) satisfied all the requirements of the present invention, the obtained decorative molded body was excellent in appearance and adhesive force, and scratches were made inconspicuous. Moreover, the recycled molded body was excellent in appearance (evaluation: ○). Furthermore, the polypropylene-based resin (4D-2) was laminated as the surface decorative layer (III) at the uppermost surface side, so that a result of excellent gloss was observed.

{Example 4-21}

Evaluation was performed in the same manner as in Example 4-16 except that, in the production of the decorative film of Example 4-16, the polypropylene-based resin (4A-2) charged into the extruder-3 for a surface decorative layer (III) was changed to the polypropylene-based resin (4D-3). Table 10 shows obtained results.
Since the polypropylene-based resin (A), the ethylene-α-olefin random copolymer (C), and the polypropylene-based resin (B) satisfied all the requirements of the present invention, the obtained decorative molded body was excellent in appearance and adhesive force, and scratches were made inconspicuous. Moreover, the recycled molded body was excellent in appearance (evaluation: ○). Furthermore, the polypropylene-based resin (4D-3) to which a nucleating agent had been added was laminated as the surface decorative layer (III) at the uppermost surface side, so that a result of excellent gloss was observed.

{Example 4-22}

Evaluation was performed in the same manner as in Example 4-16 except that, in the production of the decorative film of Example 4-16, the polypropylene-based resin (4A-2) charged into the extruder-3 for a surface decorative layer (III) was changed to the polypropylene-based resin (4D-4). Table 10 shows obtained results.
Since the polypropylene-based resin (A), the ethylene-α-olefin random copolymer (C), and the polypropylene-based resin (B) satisfied all the requirements of the present invention, the obtained decorative molded body was excellent in appearance and adhesive force. Moreover, coupled with the sticking of the white-colored decorative film, the scratches were sufficiently hidden to such a degree that the scratched place was not able to identify. Therefore, the scratch depth was not measured. Moreover, since the surface decorative layer (III) excellent in gloss was colored white, appearance was excellent.

{Example 4-23}

Evaluation was performed in the same manner as in Example 4-16 except that, in the production of the decorative film of Example 4-16, the polypropylene-based resin (4C-1-1) was changed to the polypropylene-based resin (4C-1-3). Table 10 shows obtained results.
Since the polypropylene-based resin (A), the ethylene-α-olefin random copolymer (C), and the polypropylene-based resin (B) satisfied all the requirements of the present invention, the obtained decorative molded body was excellent in appearance and adhesive force. Moreover, coupled with the sticking of the black-colored decorative film, the scratches were sufficiently hidden to such a degree that the scratched place was not able to identify. Therefore, the scratch depth

was not measured. Moreover, since the layer (II) was colored black, appearance was excellent. Furthermore, the polypropylene-based resin (4A-2) was laminated as the surface decorative layer (III) at the uppermost surface side, so that a result of excellent gloss was observed.

{Example 4-24}

Evaluation was performed in the same manner as in Example 4-23 except that, in the production of the decorative film of Example 4-23, the polypropylene-based resin (4A-2) charged into the extruder-3 for a surface decorative layer (III) was changed to the polypropylene-based resin (4D-5). Table 10 shows obtained results.

Since the polypropylene-based resin (A), the ethylene-α-olefin random copolymer (C), and the polypropylene-based resin (B) satisfied all the requirements of the present invention, the obtained decorative molded body was excellent in appearance and adhesive force. Moreover, coupled with the sticking of the colored decorative film, the scratches were sufficiently hidden to such a degree that the scratched place was not able to identify. Therefore, the scratch depth was not measured. Moreover, the polypropylene-based resin (4D-5) was laminated as the surface decorative layer (III) at the uppermost surface side, so that a result of excellent gloss was observed. Further, since the layer (II) was colored black and the surface decorative layer (III) was colored silver, the film became a metallic film and appearance was excellent.

{Example 4-25}

- Production of Decorative Film

In the production of the decorative film of Example 4-24, melt-extrusion was performed under conditions of a discharge amount from the extruder-1 for a sealing layer (I) of 4 kg/h, a discharge amount from the extruder-2 for a layer (II) of 12 kg/h, and a discharge amount from the extruder-3 for a surface decorative layer (III) of 4 kg/h and the obtained three-layered unstretched film was slit into a width of 200 mm, thereby obtaining a three-layered unstretched film where a surface decorative layer (III) having a thickness of 50 μm, a layer (II) having a thickness of 150 μm, and a sealing layer (I) having a thickness of 50 μm were laminated.

- Production of Embossed Film

As an embossing apparatus, an electric heating type test embossing machine manufactured by YURIROLL Co., Ltd. was used. The electric heating type test embossing machine has a mechanism of transferring an uneven shape at an upper stage to a film surface by heating and pressing the film with a heatable roll (embossing roll) having an uneven shape placed at an upper stage and a smooth roll placed at a lower stage. In the embossing roll, a hairline pattern having a depth of 30 μm was used.

The three-layered unstretched film obtained by the production of the decorative film was fed between two rolls of the embossing machine so that the surface decorative layer (III) came into contact with the embossing roll. By transferring the embossment under conditions of an embossing roll temperature of 145°C, a contact pressure of 3 MPa, and a roll speed of 3 m/min, there was obtained a decorative film where the hairline pattern was transferred on the surface of the surface decorative layer (III).

- Three-Dimensional Decorative Thermoforming

A three-dimensional decorative thermoformed article was obtained in the same manner as in Example 4-1.

- Evaluation of Physical Properties

(4-1) Evaluation of Embossment Transfer

Depth of the hairline pattern portion provided on the surface decorative layer of the obtained decorative film was measured by means of a shape-measuring laser microscope ("VX-X200" manufactured by KEYENCE Corporation). The number of measurement times was 5 times (n=5) and an average value thereof was taken as depth of embossment (μm).

(4-2) Evaluation of Embossment Pattern after Thermoforming

It was visually observed how the embossment pattern remained after three-dimensional decorative thermoforming and evaluation was performed according to the following criteria.

○: The embossment pattern remains on the surface of the three-dimensional decorative thermoformed article after three-dimensional decorative thermoforming and designability is excellent.
×: The embossment pattern disappears on most of the surface of the three-dimensional decorative thermoformed article after three-dimensional decorative thermoforming and designability is poor.

Table 11 shows evaluation results of physical properties of the obtained decorative molded body and the like.
Since the polypropylene-based resin (A), the ethylene-α-olefin random copolymer (C), and the polypropylene-based resin (B) satisfied all the requirements of the present invention, the depth of embossment of the film obtained by the production of the embossed film was so excellent as 25 μm. Moreover, also on the surface of the three-dimensional decorative thermoformed article after three-dimensional decorative thermoforming, the hairline pattern strongly remained and thus designability was excellent.

[Table 9]

Table 9

| | | | Unit | Example 4-1 | Example 4-2 | Example 4-3 | Example 4-4 | Example 4-5 | Example 4-6 | Example 4-7 | Example 4-8 | Example 4-9 | Example 4-10 | Example 4-11 | Example 4-12 | Example 4-13 | Example 4-14 | Example 4-15 | Example 4-16 | Comparative Example 4-1 | Comparative Example 4-2 | Reference Example 4-3 |
|---|---|---|---|---|---|---|---|---|---|---|---|---|---|---|---|---|---|---|---|---|---|---|
| Surface decorative layer (III) | Kind | | | - | - | - | - | - | - | - | - | - | - | - | - | - | - | - | 4A-2 | - | - | - |
| | MFR | | g/10min | - | - | - | - | - | - | - | - | - | - | - | - | - | - | - | 10 | - | - | - |
| Layer (II) | Long-chain branching PP (4C-1) | Kind | | 4C-1-1 | 4C-1-1 | 4C-1-1 | 4C-1-2 | 4C-1-2 | 4C-1-2 | 4C-1-1 | 4C-1-1 | 4C-1-1 | 4C-1-1 | 4C-1-1 | 4C-1-1 | 4C-1-1 | 4C-1-1 | 4C-1-1 | 4C-1-1 | none | none | 4C-1-1 |
| | | Ratio | wt% | 100 | 30 | 5 | 100 | 30 | 5 | 100 | 100 | 100 | 100 | 100 | 100 | 100 | 100 | 100 | 100 | 0 | 0 | 100 |
| | Other PP | Kind | | - | 4A-2 | 4A-2 | - | 4A-2 | 4A-2 | - | - | - | - | - | - | - | - | - | - | 4A-2 | 4A-2 | - |
| | | Ratio | wt% | - | 70 | 95 | - | 70 | 95 | - | - | - | - | - | - | - | - | - | - | 100 | 100 | - |
| | Whole composition (B) | MFR | g/10min | 9.0 | 9.5 | 9.9 | 1.0 | 5.1 | 9.8 | 9.0 | 9.0 | 9.0 | 9.0 | 9.0 | 9.0 | 9.0 | 9.0 | 9.0 | 9.0 | 10 | 10 | 9 |
| | | λ | | 7.8 | 2.6 | 1.4 | 9.7 | 4.0 | 1.6 | 7.8 | 7.8 | 7.8 | 7.8 | 7.8 | 7.8 | 7.8 | 7.8 | 7.8 | 7.8 | 0.9 | 0.9 | 7.8 |
| Sealing layer (I) | Polypropylene-based resin (A) | Kind | | 4A-1 | 4A-1 | 4A-1 | 4A-1 | 4A-1 | 4A-1 | 4A-1 | 4A-1 | 4A-1 | 4A-1 | 4A-1 | 4A-1 | 4A-1 | 4A-2 | 4A-3 | 4A-1 | 4A-1 | 4A-1 | 4A-1 |
| | | Blending amount | wt% | 85 | 85 | 85 | 85 | 85 | 85 | 70 | 30 | 85 | 85 | 85 | 85 | 85 | 85 | 85 | 85 | 100 | 85 | 100 |
| | Ethylene-α-olefin random copolymer (C) | Kind | | 4B-1 | 4B-1 | 4B-1 | 4B-1 | 4B-1 | 4B-1 | 4B-1 | 4B-1 | 4B-2 | 4B-3 | 4B-4 | 4B-5 | 4B-6 | 4B-1 | 4B-1 | 4B-1 | none | 4B-1 | none |
| | | Blending amount | wt% | 15 | 15 | 15 | 15 | 15 | 15 | 30 | 70 | 15 | 15 | 15 | 15 | 15 | 15 | 15 | 15 | 0 | 15 | 0 |
| Substrate | Kind | | | 4X-1 | 4X-1 | 4X-1 | 4X-1 | 4X-1 | 4X-1 | 4X-1 | 4X-1 | 4X-1 | 4X-1 | 4X-1 | 4X-1 | 4X-1 | 4X-1 | 4X-1 | 4X-1 | 4X-1 | 4X-1 | 4X-1 |
| Heating time after spring-back | | | sec | 0 | 0 | 0 | 0 | 0 | 0 | 0 | 0 | 0 | 0 | 0 | 0 | 0 | 0 | 0 | 0 | 0 | 0 | 0 |
| Appearance of decorative molded body | | | | O | O | O | O | O | O | O | O | O | O | O | O | O | O | O | O | × | × | O |
| Adhesive force | | | N/10mm | 35 | 34 | 35 | 38 | 36 | 36 | 20 | 18 | 25 | 38 | 26 | 21 | 35 | 20 | 31 | 35 | 1 | 30 | 1 |
| Scratch evaluation | Scratch depth | | μm | 2.6 | 3.0 | 2.5 | 3.1 | 2.9 | 2.5 | 5.4 | 3.0 | 5.6 | 3.3 | 5.0 | 3.3 | 3.4 | 4.2 | 2.4 | 4.1 | - | - | 10 |
| | Whitened appearance | | | O | O | O | O | O | O | O | O | O | O | O | O | O | O | O | O | - | - | × |
| Gloss (60°) | | | % | 20 | 22 | 26 | 15 | 21 | 24 | 19 | 20 | 20 | 19 | 20 | 19 | 21 | 19 | 19 | 30 | - | - | 20 |
| Appearance of recycled molded body | | | | O | O | O | O | O | O | O | O | O | O | O | O | O | O | O | O | O | O | O |

[Table 10]

Table 10

| | | | Unit | Example 4-17 | Example 4-18 | Example 4-19 | Example 4-20 | Example 4-21 | Example 4-22 | Example 4-23 | Example 4-24 |
|---|---|---|---|---|---|---|---|---|---|---|---|
| Surface decorative layer (III) | Kind | | | - | - | 4D-1 | 4D-2 | 4D-3 | 4D-4 | 4A-2 | 4D-5 |
| | MFR | | g/ 10min | - | - | 10 | 7.0 | 7.0 | 10 | 10 | 10 |
| Layer (II) | Long-chain branching PP (4C-1) | Kind | | 4C-1-1 | 4C-1-1 | 4C-1-1 | 4C-1-1 | 4C-1-1 | 4C-1-1 | 4C-1-3 | 4C-1-3 |
| | | Ratio | wt% | 100 | 100 | 100 | 100 | 100 | 100 | 100 | 100 |
| | Other PP | Kind | | - | - | - | - | - | - | - | - |
| | | Ratio | wt% | - | - | - | - | - | - | - | - |
| | Whole composition (B) | MFR | g/ 10min | 9.0 | 9.0 | 9.0 | 9.0 | 9.0 | 9.0 | 9.0 | 9.0 |
| | | $\lambda$ | | 7.8 | 7.8 | 7.8 | 7.8 | 7.8 | 7.8 | 7.3 | 7.3 |
| Sealing layer (I) | Polypropylene-based resin (A) | Kind | | 4A-1 | 4A-1 | 4A-1 | 4A-1 | 4A-1 | 4A-1 | 4A-1 | 4A-1 |
| | | Blending amount | wt% | 85 | 85 | 85 | 85 | 85 | 85 | 85 | 85 |
| | Ethylene-$\alpha$-ole fin random copolymer (C) | Kind | | 4B-1 | 4B-1 | 4B-1 | 4B-1 | 4B-1 | 4B-1 | 4B-1 | 4B-1 |
| | | Blending amount | wt% | 15 | 15 | 15 | 15 | 15 | 15 | 15 | 15 |
| Substrate | Kind | | | 4X-2 | 4X-3 | 4X-1 | 4X-1 | 4X-1 | - | - | 4X-1 |
| Heating time after spring-back | | | sec | 0 | 0 | 0 | 0 | 0 | 0 | 0 | 0 |
| Appearance of decorative molded body | | | | ○ | ○ | ○ | ○ | ○ | ○ | ○ | ○ |
| Adhesive force | | | N/ 10mm | 33 | 31 | 33 | 29 | 31 | 31 | 32 | 34 |
| Scratch evaluation | Scratch depth | | $\mu$m | 2.8 | 2.7 | 2.7 | 2.6 | 3.1 | - | - | - |
| | Whitened appearance | | | ○ | ○ | ○ | ○ | ○ | ○ | ○ | ○ |
| Gloss (60°) | | | % | 17 | 18 | 83 | 32 | 95 | 31 | 30 | 32 |
| Appearance of recycled molded body | | | | ○ | ○ | ○ | ○ | ○ | ○ | ○ | ○ |

[Table 11]

Table 11

| | | | Unit | Example 4-17 |
|---|---|---|---|---|
| Surface decorative layer (III) | Polypropylene-based resin (4D) | Kind | | 4D-5 |
| | | MFR | g/10min | 10 |
| Layer (II) | Long-chain branching PP (4C-1) | Kind | | 4C-1-3 |
| | | Ratio | wt% | 100 |
| | Other PP | Kind | | - |
| | | Ratio | wt% | - |
| | Whole composition (B) | MFR | g/10min | 9.0 |
| | | λ | | 7.3 |
| Sealing layer (I) | Polypropylene-based resin (A) | Kind | | 4A-1 |
| | | Blending amount | wt% | 85 |
| | Ethylene-α-olefin random copolymer (C) | Kind | | 4B-1 |
| | | Blending amount | wt% | 15 |
| Substrate | Kind | | | 4X-1 |
| Heating time after spring-back | | | sec | 0 |
| Depth of embossment | | | μm | 25 |
| Embossment pattern after thermoforming | | | | ○ |

[5. Decorative Film including Sealing Layer (I) containing Polypropylene-based Resin

(A) and Thermoplastic Elastomer (D)]

5-2. Used Materials

(5-1) Polypropylene-based Resins

The following polypropylene-based resins were used.

(5A-1): Propylene-α-olefin copolymer (MFR=7 g/10 minutes, Tm=146°C), trade name "NOVATEC (registered trademark) FW3GT" manufactured by Japan Polypropylene Corporation
(5A-2): Propylene homopolymer (MFR=10 g/10 minutes, Tm=161°C), trade name "NOVATEC (registered trademark) FA3KM" manufactured by Japan Polypropylene Corporation
(5A-3): Propylene-α-olefin copolymer (MFR=5 g/10 minutes, Tm=127°C), trade name "NOVATEC (registered trademark) FX4G" manufactured by Japan Polypropylene Corporation
(5C-1-1): Propylene homopolymer having a long-chain branch, which was produced by a macromer copolymerization method, trade name "WAYMAX (registered trademark) MFX3" manufactured by Japan Polypropylene Corporation, MFR=8.8 g/10 minutes, strain hardening degree λ=7.8, Tm=154°C, branching index g' at an absolute molecular weight Mabs of 1,000,000=0.85, the presence of a long-chain branched structure was confirmed by $^{13}$C-NMR measurement.
(5C-1-2): Propylene homopolymer having a long-chain branch, which was produced by a macromer copolymerization method, trade name "WAYMAX (registered trademark) MFX8" manufactured by Japan Polypropylene Corporation, MFR=1 g/10 minutes, strain hardening degree λ=9.7, Tm=154°C, branching index g' at an absolute molecular weight Mabs of 1,000,000=0.89, the presence of a long-chain branched structure was confirmed by $^{13}$C-NMR measurement.
(5C-1-3): Polypropylene-based resin composition (MFR=9 g/10 minutes, strain hardening degree λ=7.3, Tm=154°C) obtained by blending 96% by weight of the polypropylene-based resin (5C-1-1) with 4% by weight of a black pigment

MB (EPP-K-120601 manufactured by Polycol Kogyo K.K.)

(5D-1): Polypropylene-based resin composition (MFR=10 g/10 minutes, Tm=164°C) obtained by blending 100% by weight of the polypropylene-based resin (5A-2) with 0.4% by weight of a nucleating agent (trademark "Millad NX8000J" manufactured by Milliken Japan, K.K.)

(5D-2): Propylene-α-olefin copolymer (MFR=7 g/10 minutes, Tm=125°C, Mw/Mn=2.5) by metallocene catalyst, trade name "WINTEC (registered trademark) WFX4M" manufactured by Japan Polypropylene Corporation

(5D-3): Polypropylene-based resin composition (MFR=7 g/10 minutes, Tm=127°C) obtained by blending 100% by weight of the polypropylene-based resin (5D-2) with 0.4% by weight of a nucleating agent (trademark "Millad NX8000J" manufactured by Milliken Japan, K.K.)

(5D-4): Polypropylene-based resin composition (MFR=10 g/10 minutes, Tm=161°C) obtained by blending 96% by weight of the polypropylene-based resin (5A-2) with 4% by weight of a white pigment MB (EPP-W-59578 manufactured by Polycol Kogyo K.K., titanium oxide content of 80% by weight) of MFR=11 g/10 minutes

(5D-5): Polypropylene-based resin composition (MFR=10 g/10 minutes, Tm=161°C) obtained by blending 96% by weight of the polypropylene-based resin (5A-2) with 4% by weight of a silver pigment MB (PPCM913Y-42 SILVER21X manufactured by TOYOCOLOR Co., Ltd.)

(5-2) Thermoplastic Elastomer (D)

The following thermoplastic elastomers were used.

(5B-1): Propylene-butene random copolymer using propylene as a main component (MFR=7.0 g/10 minutes, Tm=75°C, density=0.885 g/$cm^3$, propylene content=69 wt%, butene content=31 wt%, ethylene content [E]=0 wt%): trade name "TAFMER XM7070" manufactured by Mitsui Chemicals, Inc.

(5B-2): Butene homopolymer (MFR=5.0 g/10 minutes, Tm=125°C, density=0.915 g/$cm^3$, ethylene content [E]=0 wt%): trade name "TAFMER BL4000" manufactured by Mitsui Chemicals, Inc.

(5B-3): Propylene-ethylene-butene random copolymer using propylene as a main component (MFR=6.0 g/10 minutes, Tm=160°C, density=0.868 g/$cm^3$, propylene content=84 wt%, ethylene content [E]=9 wt%, butene content=7 wt%): trade name "TAFMER PN2060" manufactured by Mitsui Chemicals, Inc.

(5B-4): Propylene-ethylene random copolymer using propylene as a main component (MFR=8.0 g/10 minutes, Tm=61°C, density=0.871 g/$cm^3$, propylene content=89 wt%, ethylene content [E]=11 wt%): trade name "VISTAMAXX3000" manufactured by Exxon Mobil Chemical, Corporation

5-3. Production of Resin Molded Body (Substrate)

Using the following polypropylene-based resins (5X-1) to (5X-3), injection molded bodies were obtained by the following method.

(5X-1): Propylene homopolymer (MFR=40 g/10 minutes, Tm=165°C), trade name "NOVATEC (registered trademark) MA04H" manufactured by Japan Polypropylene Corporation

(5X-2): Propylene ethylene block copolymer (MFR=30 g/10 minutes, Tm=164°C), trade name "NOVATEC (registered trademark) NBC03HR" manufactured by Japan Polypropylene Corporation

(5X-3): Polypropylene-based resin composition obtained by blending 60% by weight of the polypropylene-based resin (5X-2) with 20% of EBR (TAFMER (registered trademark) A0550S manufactured by Mitsui Chemicals, inc.) of MFR=1.0 and 20% by weight of an inorganic filler (TALC P-6 manufactured by Nippon Talc Co., Ltd., average particle size of 4.0 μm)

Injection molding machine: "IS100GN" manufactured by Toshiba Machine Co., ltd., mold clamping pressure of 100 tons

Cylinder temperature: 200°C

Mold temperature: 40°C

Injection mold: A flat plate of width×height×thickness = 120 mm×120 mmx3 mm

Condition control: Kept in a constant-temperature constant-humidity chamber at a temperature of 23°C and a humidity of 50%RH for 5 days

Moreover, the obtained injection molded bodies were scratched by the following method to form resin molded bodies (substrates).

Processing for scratch evaluation: In a constant-temperature constant-humidity chamber at a temperature of 23°C and a humidity of 50%RH, using a scratch tester ("SCRATCH&MAR TESTER" manufactured by ROCKWOOD SYSTEMS AND EQUIPMENT), each of the above injection molded bodies was scratched with a scratching tip subjected to shape

(curvature radius of 0.5 mm, ball shape) processing, under a load of 25N at a scratching rate of 100 mm/minute.

When the scratches formed on the surface of the resin molded body (substrate) were measured by means of a shape-measuring laser microscope ("VX-X200" manufactured by KEYENCE Corporation), the depth of the scratches was 16 μm. Further, the scratches became whitened scratches.

{Example 5-1}

- Production of Decorative Film

There was used a 2-kind 2-layer T-die having a lip opening of 0.8 mm and a die width of 400 mm, to which an extruder-1 for a sealing layer (I) having a nozzle diameter of 30 mm (diameter) and an extruder-2 for a layer (II) having a nozzle diameter of 40 mm (diameter) had been connected. One obtained by blending the polypropylene-based resin (5A-1) and the thermoplastic elastomer (5B-1) so as to be a weight ratio of 85:15 was charged into the extruder-1 for a sealing layer (I) and the polypropylene-based resin (5C-1-1) having a long-chain branched structure was charged into the extruder-2 for a layer (II), and melt-extrusion was performed under conditions of a resin temperature of 240°C, a discharge amount from the extruder-1 for a sealing layer (I) of 4 kg/h, and a discharge amount from the extruder-2 for a layer (II) of 12 kg/h. The melt-extruded film was cooled and solidified while pushing it to a first roll rotating at 3 m/min at 80°C with an air knife so that the sealing layer (I) came outside, thereby obtaining a two-layered unstretched film where a sealing layer (I) having a thickness of 50 μm and a layer (II) having a thickness of 150 μm were laminated.

- Three-Dimensional Decorative Thermoforming

As the resin molded body (substrate) 5, there was used the injection molded body composed of the polypropylene-based resin (5X-1) obtained in the above.

As a three-dimensional decorative thermoforming apparatus, "NGF-0406-SW" manufactured by Fu-se Vacuum Forming Ltd. was used. As shown in FIG. 2 to FIG. 7, a decorative film 1 was cut into a size having a width of 250 mm and a length of 350 mm and was set to a jig 13 for film fixing having an opening part size of 210 mm×300 mm so that the longitudinal direction became the MD direction of the film. The resin molded body (substrate) 5 was attached on a sample-placing stand having a height of 20 mm, which was placed on a table 14 positioned below the jig 13 for film fixing, through "NICETACK NW-K15" manufactured by Nichiban Co., Ltd. The jig 13 for film fixing and the table 14 were placed in upper and lower chamber boxes 11 and 12 and the upper and lower chamber boxes 11 and 12 were closed to make the inside of the chamber boxes a tightly closed state. The chamber boxes were divided into upper and lower ones through the decorative film 1. The upper and lower chamber boxes were vacuum-suctioned and a far-infrared heater 15 placed on the upper chamber box 11 was started at an output of 80% to heat the decorative film 1 in a state that the pressure was reduced from atmospheric pressure (101.3 kPa) to 1.0 kPa. During heating, the vacuum-suction was continued and finally, the pressure was reduced to 0.1 kPa. After 5 seconds from the finish of a spring-back phenomenon that the decorative film 1 was heated to temporarily slacken and thereafter tension returned, the table 14 placed in the lower chamber box 12 was transferred upward to push the resin molded body (substrate) 5 to the decorative film 1 and immediately after that, compressed air was fed so that the pressure in the upper chamber box 11 became 270 kPa to adhere the resin molded body (substrate) 5 and the decorative film 1 closely. Thus, there was obtained a three-dimensional decorative thermoformed article 6 where the decorative film 1 was stuck to the upper surface and side surface of the resin molded body (substrate) 5.

- Physical Property Evaluation

(5-1) Evaluation of Thermoformability (Appearance of Decorative Molded Body)

A draw-down state of the decorative film at the time of three-dimensional decorative thermoforming and a sticking state of the decorative film of the decorative molded body where the decorative film had been stuck to the substrate were visually observed and evaluated according to the criteria shown below.

O: Since the contact between the substrate and the decorative film is simultaneously achieved over a whole contact surface without generating draw-down of the decorative film at the time of three-dimensional decorative thermoforming, uneven contact is not generated and the film is uniformly stuck.

x: Since draw-down of the decorative film remarkably occurs at the time of three-dimensional decorative thermoforming, uneven contact is generated all over the surface of the substrate.

(5-2) Adhesive Force between Resin Molded Body (Substrate) and Decorative Film

"Craft adhesive tape No. 712N" manufactured by Nitoms, Inc. was cut into a size having a width of 75 mm and a length of 120 mm and was attached to a resin molded body (substrate) in the range of 75 mm×120 mm from the edge part of the resin molded body (substrate) to perform a masking treatment (a surface exposed part of the substrate had a width of 45 mm and a length of 120 mm). The resin molded body (substrate) was placed on a three-dimensional decorative thermoforming apparatus NGF-0406-SW so that the masking face of the molded body came into contact with the decorative film, and three-dimensional decorative thermoforming was conducted.

The decorative film face of the obtained decorative molded body was cut to the substrate surface at a width of 10 mm using a cutter in a vertical direction toward a longitudinal direction of the adhesive tape to prepare a test specimen. In the obtained test specimen, the adhesion face between the substrate and the decorative film has a width of 10 mm and a length of 45 mm. It was fixed to a tensile tester so that the substrate part and the decorative film part of the test specimen made an angle of 180°, and 180° peeling strength of the adhesion face was measured at a tensile rate of 200 mm/min. Maximum strength (N/10 mm) at peeling or at break was measured five times and averaged strength was taken as adhesive force.

(5-3) Evaluation of Effect of Making Scratches Inconspicuous

Depth of scratches at the portion where scratches were present on a three-dimensional decorative thermoformed product of a resin molded body (substrate) which had been scratched with a load of 25 N was measured by means of a shape-measuring laser microscope ("VX-X200" manufactured by KEYENCE Corporation). The number of measurement times was 5 times (n=5) and an average value thereof was taken as scratch depth (μm).

Moreover, as whitened appearance, it was visually judged according to the following criteria whether whitened scratches of the molded body (substrate), which had been scratched with a load of 25 N, were made inconspicuous or not by the decorative film, and thus evaluation was performed.
O: Scars of whitened scratches are inconspicuous and appearance is excellent.

×: Whitened scratches remain and appearance is poor.

(5-4) Evaluation of Recyclability

The obtained decorative molded body was pulverized and a recycled molded body was obtained by injection molding in the same manner as in the production of the resin molded body (substrate). The appearance was visually evaluated.

(5-5) Gloss

The gloss in the vicinity of the center of the decorative molded body to which a decorative film had been stuck was measured at an incident angle of 60° using Gloss Meter VG2000 manufactured by Nippon Denshoku Industries Co., Ltd. The measurement method conformed to JIS K7105-1981.

Table 12 shows results of physical property evaluation of the obtained decorative molded body and the like.

Since the polypropylene-based resin (A), the thermoplastic elastomer (D), and the polypropylene-based resin (B) satisfied all the requirements of the present invention, the obtained decorative molded body was excellent in appearance and adhesive force, and scratches were made inconspicuous. Moreover, the recycled molded body was excellent in appearance (evaluation: O).

{Example 5-2}

Evaluation was performed in the same manner as in Example 5-1 except that, in the production of the decorative film of Example 5-1, the polypropylene-based resin (5C-1-1) having a long-chain branched structure used for the layer (II) was changed to one obtained by blending the polypropylene-based resin (5C-1-1) having a long-chain branched structure and the polypropylene-based resin (5A-2) so as to be a weight ratio of 30:70. Table 12 shows evaluation results.

Since the polypropylene-based resin (A), the thermoplastic elastomer (D), and the polypropylene-based resin composition (B) satisfied all the requirements of the present invention, the obtained decorative molded body was excellent in appearance and adhesive force, and scratches were made inconspicuous. Moreover, the recycled molded body was excellent in appearance (evaluation: O).

{Example 5-3}

Evaluation was performed in the same manner as in Example 5-1 except that, in the production of the decorative film of Example 5-1, the polypropylene-based resin (5C-1-1) having a long-chain branched structure used for the layer (II) was changed to one obtained by blending the polypropylene-based resin (5C-1-1) having a long-chain branched structure and the polypropylene-based resin (5A-2) so as to be a weight ratio of 5:95. Table 12 shows evaluation results.
Since the polypropylene-based resin (A), the thermoplastic elastomer (D), and the polypropylene-based resin composition (B) satisfied all the requirements of the present invention, the obtained decorative molded body was excellent in appearance and adhesive force, and scratches were made inconspicuous. Moreover, the recycled molded body was excellent in appearance (evaluation: O).

{Example 5-4}

Evaluation was performed in the same manner as in Example 5-1 except that, in the production of the decorative film of Example 5-1, the polypropylene-based resin (5C-1-1) having a long-chain branched structure used for the layer (II) was changed to the polypropylene-based resin (5C-1-2) having a long-chain branched structure. Table 12 shows evaluation results.
Since the polypropylene-based resin (A), the thermoplastic elastomer (D), and the polypropylene-based resin composition (B) satisfied all the requirements of the present invention, the obtained decorative molded body was excellent in appearance and adhesive force, and scratches were made inconspicuous. Moreover, the recycled molded body was excellent in appearance (evaluation: O).

{Example 5-5}

Evaluation was performed in the same manner as in Example 5-1 except that, in the production of the decorative film of Example 5-1, the polypropylene-based resin (5C-1-1) having a long-chain branched structure used for the layer (II) was changed to one obtained by blending the polypropylene-based resin (5C-1-2) having a long-chain branched structure and the polypropylene-based resin (5A-2) so as to be a weight ratio of 30:70. Table 12 shows evaluation results.
Since the polypropylene-based resin (A), the thermoplastic elastomer (D), and the polypropylene-based resin composition (B) satisfied all the requirements of the present invention, the obtained decorative molded body was excellent in appearance and adhesive force, and scratches were made inconspicuous. Moreover, the recycled molded body was excellent in appearance (evaluation: O).

{Example 5-6}

Evaluation was performed in the same manner as in Example 5-1 except that, in the production of the decorative film of Example 5-1, the polypropylene-based resin (5C-1-1) having a long-chain branched structure used for the layer (II) was changed to one obtained by blending the polypropylene-based resin (5C-1-2) having a long-chain branched structure and the polypropylene-based resin (5A-2) so as to be a weight ratio of 5:95. Table 12 shows evaluation results.
Since the polypropylene-based resin (A), the thermoplastic elastomer (D), and the polypropylene-based resin composition (B) satisfied all the requirements of the present invention, the obtained decorative molded body was excellent in appearance and adhesive force, and scratches were made inconspicuous. Moreover, the recycled molded body was excellent in appearance (evaluation: O).

{Example 5-7}

Evaluation was performed in the same manner as in Example 5-1 except that, in the production of the decorative film of Example 5-1, the blending ratio of the polypropylene-based resin (5A-1) to the thermoplastic elastomer (5B-1) was controlled to 70:30. Table 12 shows evaluation results.
Since the polypropylene-based resin (A), the thermoplastic elastomer (D), and the polypropylene-based resin (B) satisfied all the requirements of the present invention, the obtained decorative molded body was excellent in appearance and adhesive force, and scratches were made inconspicuous. Moreover, the recycled molded body was excellent in appearance (evaluation: O).

{Example 5-8}

Evaluation was performed in the same manner as in Example 5-1 except that, in the production of the decorative film of Example 5-1, the blending ratio of the polypropylene-based resin (5A-1) to the thermoplastic elastomer (5B-1)

was controlled to 30:70. Table 12 shows evaluation results.

Since the polypropylene-based resin (A), the thermoplastic elastomer (D), and the polypropylene-based resin (B) satisfied all the requirements of the present invention, the obtained decorative molded body was excellent in appearance and adhesive force, and scratches were made inconspicuous. Moreover, the recycled molded body was excellent in appearance (evaluation: O).

{Example 5-9}

Evaluation was performed in the same manner as in Example 5-1 except that, in the production of the decorative film of Example 5-1, the thermoplastic elastomer used for the sealing layer (I) was changed to (5B-2). Table 12 shows evaluation results.

Since the polypropylene-based resin (A), the thermoplastic elastomer (D), and the polypropylene-based resin (B) satisfied all the requirements of the present invention, the obtained decorative molded body was excellent in appearance and adhesive force, and scratches were made inconspicuous. Moreover, the recycled molded body was excellent in appearance (evaluation: O).

{Example 5-10}

Evaluation was performed in the same manner as in Example 5-1 except that, in the production of the decorative film of Example 5-1, the thermoplastic elastomer used for the sealing layer (I) was changed to (5B-3). Table 12 shows evaluation results.

Since the polypropylene-based resin (A), the thermoplastic elastomer (D), and the polypropylene-based resin (B) satisfied all the requirements of the present invention, the obtained decorative molded body was excellent in appearance and adhesive force, and scratches were made inconspicuous. Moreover, the recycled molded body was excellent in appearance (evaluation: O).

{Example 5-11}

Evaluation was performed in the same manner as in Example 5-1 except that, in the production of the decorative film of Example 5-1, the thermoplastic elastomer used for the sealing layer (I) was changed to (5B-4). Table 12 shows evaluation results.

Since the polypropylene-based resin (A), the thermoplastic elastomer (D), and the polypropylene-based resin (B) satisfied all the requirements of the present invention, the obtained decorative molded body was excellent in appearance and adhesive force, and scratches were made inconspicuous. Moreover, the recycled molded body was excellent in appearance (evaluation: O).

{Example 5-12}

Evaluation was performed in the same manner as in Example 5-1 except that, in the production of the decorative film of Example 5-1, the polypropylene-based resin used for the sealing layer (I) was changed to (5A-2). Table 12 shows evaluation results.

Since the polypropylene-based resin (A), the thermoplastic elastomer (D), and the polypropylene-based resin (B) satisfied all the requirements of the present invention, the obtained decorative molded body was excellent in appearance and adhesive force, and scratches were made inconspicuous. Moreover, the recycled molded body was excellent in appearance (evaluation: O).

{Example 5-13}

Evaluation was performed in the same manner as in Example 5-1 except that, in the production of the decorative film of Example 5-1, the polypropylene-based resin used for the sealing layer (I) was changed to (5A-3). Table 12 shows evaluation results.

Since the polypropylene-based resin (A), the thermoplastic elastomer (D), and the polypropylene-based resin (B) satisfied all the requirements of the present invention, the obtained decorative molded body was excellent in appearance and adhesive force, and scratches were made inconspicuous. Moreover, the recycled molded body was excellent in appearance (evaluation: O).

{Example 5-14}

In the production of the decorative film, there was used a 3-kind 3-layer T-die having a lip opening of 0.8 mm and a die width of 400 mm, to which an extruder-1 for a sealing layer (I) having a nozzle diameter of 30 mm (diameter), an extruder-2 for a layer (II) having a nozzle diameter of 40 mm (diameter), and an extruder-3 for a surface decorative layer (III) having a nozzle diameter of 30 mm (diameter), had been connected. One obtained by blending the polypropylene-based resin (5A-1) and the thermoplastic elastomer (5B-1) so as to be a weight ratio of 85:15 was charged into the extruder-1 for a sealing layer (I), the polypropylene-based resin (5C-1-1) having a long-chain branched structure was charged into the extruder-2 for a layer (II), and the polypropylene-based resin (5A-2) was charged into the extruder-3 for a surface decorative layer (III), and melt-extrusion was performed under conditions of a resin temperature of 240°C, a discharge amount from the extruder-1 for a sealing layer (I) of 4 kg/h, a discharge amount from the extruder-1 for a layer (II) of 8 kg/h, and a discharge amount from the extruder-1 for a surface decorative layer (III) of 4 kg/h.
The melt-extruded film was cooled and solidified while pushing it to a first roll rotating at 3 m/min at 80°C with an air knife so that the surface decorative layer (III) came into contact, thereby obtaining a three-layered unstretched film where a sealing layer (I) having a thickness of 50 μm, a layer (II) having a thickness of 100 μm, and a surface decorative layer (III) having a thickness of 50 μm were laminated.
Evaluation was performed in the same manner as in Example 5-1 except the above. Table 12 shows obtained results. Since the polypropylene-based resin (A), the thermoplastic elastomer (D), and the polypropylene-based resin (B) satisfied all the requirements of the present invention, the obtained decorative molded body was excellent in appearance and adhesive force, and scratches were made inconspicuous. Moreover, the recycled molded body was excellent in appearance (evaluation: O). Furthermore, by providing the surface decorative layer (III), a decorative molded body more excellent in surface gloss could be obtained.

{Comparative Example 5-1}

Evaluation was performed in the same manner as in Example 5-1 except that, in the production of the decorative film of Example 5-1, the thermoplastic elastomer (D) was not blended and the polypropylene-based resin (5A-1) alone was used in the sealing layer (I) and the polypropylene-based resin having a long-chain branched structure was not blended and the polypropylene-based resin (5A-2) alone was used in the layer (II). Table 12 shows evaluation results.
Since the thermoplastic elastomer (D) was not contained in the sealing layer (I), adhesive force was small. Since the polypropylene-based resin having a long-chain branched structure was not contained in the layer (II), draw-down of the film was severe and the appearance of the decorative molded body was poor, so that evaluation on scratches and gloss was not performed.

{Comparative Example 5-2}

Evaluation was performed in the same manner as in Example 5-1 except that, in the production of the decorative film of Example 5-1, the polypropylene-based resin having a long-chain branched structure was not blended and the polypropylene-based resin (5A-2) alone was used in the layer (II). Table 12 shows evaluation results.
Since the polypropylene-based resin having a long-chain branched structure was not contained in the layer (II), draw-down of the film was severe and the appearance of the decorative molded body was poor, so that evaluation on scratches and gloss was not performed.

{Reference Example 5-3}

Evaluation was performed in the same manner as in Example 5-1 except that, in the production of the decorative film of Example 5-1, the thermoplastic elastomer (D) was not blended and the polypropylene-based resin (5A-1) alone was used in the sealing layer (I). Table 12 shows evaluation results.
Since the thermoplastic elastomer (D) was not contained in the sealing layer (I), adhesive force was small and the emergence of the scratches could not be sufficiently suppressed, so that appearance was poor.

{Example 5-15}

Evaluation was performed in the same manner as in Example 5-1 except that, in the three-dimensional decorative thermoforming of Example 5-1, the substrate was changed to the injection molded body using the resin (5X-2). Table 13 shows obtained results.
Since the polypropylene-based resin (A), the thermoplastic elastomer (D), and the polypropylene-based resin composition (B) satisfied all the requirements of the present invention, the obtained decorative molded body was excellent

in appearance and adhesive force, and scratches were made inconspicuous. Moreover, the recycled molded body was excellent in appearance (evaluation: O).

{Example 5-16}

Evaluation was performed in the same manner as in Example 5-1 except that, in the three-dimensional decorative thermoforming of Example 5-1, the substrate was changed to the injection molded body using the resin (5X-3). Table 13 shows obtained results.

Since the polypropylene-based resin (A), the thermoplastic elastomer (D), and the polypropylene-based resin composition (B) satisfied all the requirements of the present invention, the obtained decorative molded body was excellent in appearance and adhesive force, and scratches were made inconspicuous. Moreover, the recycled molded body was excellent in appearance (evaluation: O).

{Example 5-17}

Evaluation was performed in the same manner as in Example 5-14 except that, in the production of the decorative film of Example 5-14, the polypropylene-based resin (5A-2) charged into the extruder-3 for a surface decorative layer (III) was changed to the polypropylene-based resin (5D-1). Table 13 shows obtained results.

Since the polypropylene-based resin (A), the thermoplastic elastomer (D), and the polypropylene-based resin composition (B) satisfied all the requirements of the present invention, the obtained decorative molded body was excellent in appearance and adhesive force, and scratches were made inconspicuous. Moreover, the recycled molded body was excellent in appearance (evaluation: O). Furthermore, the polypropylene-based resin (5D-1) to which a nucleating agent had been added was laminated as the surface decorative layer (III) at the uppermost surface side, so that a result of excellent gloss was observed.

{Example 5-18}

Evaluation was performed in the same manner as in Example 5-14 except that, in the production of the decorative film of Example 5-14, the polypropylene-based resin (5A-2) charged into the extruder-3 for a surface decorative layer (III) was changed to the polypropylene-based resin (5D-2). Table 13 shows obtained results.

Since the polypropylene-based resin (A), the thermoplastic elastomer (D), and the polypropylene-based resin composition (B) satisfied all the requirements of the present invention, the obtained decorative molded body was excellent in appearance and adhesive force, and scratches were made inconspicuous. Moreover, the recycled molded body was excellent in appearance (evaluation: O). Furthermore, the polypropylene-based resin (5D-2) was laminated as the surface decorative layer (III) at the uppermost surface side, so that a result of excellent gloss was observed.

{Example 5-19}

Evaluation was performed in the same manner as in Example 5-14 except that, in the production of the decorative film of Example 5-14, the polypropylene-based resin (5A-2) charged into the extruder-3 for a surface decorative layer (III) was changed to the polypropylene-based resin (5D-3). Table 13 shows obtained results.

Since the polypropylene-based resin (A), the thermoplastic elastomer (D), and the polypropylene-based resin composition (B) satisfied all the requirements of the present invention, the obtained decorative molded body was excellent in appearance and adhesive force, and scratches were made inconspicuous. Moreover, the recycled molded body was excellent in appearance (evaluation: O). Furthermore, the polypropylene-based resin (5D-3) to which a nucleating agent had been added was laminated as the surface decorative layer (III) at the uppermost surface side, so that a result of excellent gloss was observed.

{Example 5-20}

Evaluation was performed in the same manner as in Example 5-14 except that, in the production of the decorative film of Example 5-14, the polypropylene-based resin (5A-2) charged into the extruder-3 for a surface decorative layer (III) was changed to the polypropylene-based resin (5D-4). Table 13 shows obtained results.

Since the polypropylene-based resin (A), the thermoplastic elastomer (D), and the polypropylene-based resin composition (B) satisfied all the requirements of the present invention, the obtained decorative molded body was excellent in appearance and adhesive force. Moreover, coupled with the sticking of the white-colored decorative film, the scratches were sufficiently hidden to such a degree that the scratched place was not able to identify. Therefore, the scratch depth was not measured. Moreover, since the surface decorative layer (III) excellent in gloss was colored white, appearance

was excellent.

{Example 5-21}

Evaluation was performed in the same manner as in Example 5-14 except that, in the production of the decorative film of Example 5-14, the polypropylene-based resin (5C-1-1) was changed to the polypropylene-based resin (5C-1-3). Table 13 shows obtained results.

Since the polypropylene-based resin (A), the thermoplastic elastomer (D), and the polypropylene-based resin composition (B) satisfied all the requirements of the present invention, the obtained decorative molded body was excellent in appearance and adhesive force. Moreover, coupled with the sticking of the black-colored decorative film, the scratches were sufficiently hidden to such a degree that the scratched place was not able to identify. Therefore, the scratch depth was not measured. Moreover, since the layer (II) was colored black, appearance was excellent. Furthermore, the polypropylene-based resin (5A-2) was laminated as the surface decorative layer (III) at the uppermost surface side, so that a result of excellent gloss was observed.

{Example 5-22}

Evaluation was performed in the same manner as in Example 5-21 except that, in the production of the decorative film of Example 5-21, the polypropylene-based resin (5A-2) charged into the extruder-3 for a surface decorative layer (III) was changed to the polypropylene-based resin (5D-5). Table 13 shows obtained results.

Since the polypropylene-based resin (A), the thermoplastic elastomer (D), and the polypropylene-based resin composition (B) satisfied all the requirements of the present invention, the obtained decorative molded body was excellent in appearance and adhesive force. Moreover, coupled with the sticking of the colored decorative film, the scratches were sufficiently hidden to such a degree that the scratched place was not able to identify. Therefore, the scratch depth was not measured. Moreover, the polypropylene-based resin (5D-5) was laminated as the surface decorative layer (III) at the uppermost surface side, so that a result of excellent gloss was observed. Further, since the layer (II) was colored black and the surface decorative layer (III) was colored silver, the film became a metallic film and appearance was excellent.

{Example 5-23}

- Production of Decorative Film

In the production of the decorative film of Example 5-22, melt-extrusion was performed under conditions of a discharge amount from the extruder-1 for a sealing layer (I) of 4 kg/h, a discharge amount from the extruder-2 for a layer (II) of 12 kg/h, and a discharge amount from the extruder-3 for a surface decorative layer (III) of 4 kg/h and the obtained three-layered unstretched film was slit into a width of 200 mm, thereby obtaining a three-layered unstretched film where a surface decorative layer (III) having a thickness of 50 μm, a layer (II) having a thickness of 150 μm, and a sealing layer (I) having a thickness of 50 μm were laminated.

- Production of Embossed Film

As an embossing apparatus, an electric heating type test embossing machine manufactured by YURIROLL Co., Ltd. was used. The electric heating type test embossing machine has a mechanism of transferring an uneven shape at an upper stage to a film surface by heating and pressing the film with a heatable roll (embossing roll) having an uneven shape placed at an upper stage and a smooth roll placed at a lower stage. In the embossing roll, a hairline pattern having a depth of 30 μm was used.

The three-layered unstretched film obtained by the production of the decorative film was fed between two rolls of the embossing machine so that the surface decorative layer (III) came into contact with the embossing roll. By transferring the embossment under conditions of an embossing roll temperature of 145°C, a contact pressure of 3 MPa, and a roll speed of 3 m/min, there was obtained a decorative film where the hairline pattern was transferred on the surface of the surface decorative layer (III).

- Three-Dimensional Decorative Thermoforming

A three-dimensional decorative thermoformed article was obtained in the same manner as in Example 5-1.

- Evaluation of Physical Properties

(5-1) Evaluation of Embossment Transfer

Depth of the hairline pattern portion provided on the surface decorative layer of the obtained decorative film was measured by means of a shape-measuring laser microscope ("VX-X200" manufactured by KEYENCE Corporation). The number of measurement times was 5 times (n=5) and an average value thereof was taken as depth of embossment (μm).

(5-2) Evaluation of Embossment Pattern after Thermoforming

It was visually observed how the embossment pattern remained after three-dimensional decorative thermoforming and evaluation was performed according to the following criteria.

O: The embossment pattern remains on the surface of the three-dimensional decorative thermoformed article after three-dimensional decorative thermoforming and designability is excellent.
x: The embossment pattern disappears on most of the surface of the three-dimensional decorative thermoformed article after three-dimensional decorative thermoforming and designability is poor.

Table 14 shows evaluation results of physical properties of the obtained decorative molded body and the like.
Since the polypropylene-based resin (A), the thermoplastic elastomer (D), and the polypropylene-based resin composition (B) satisfied all the requirements of the present invention, the depth of embossment of the film obtained by the production of the embossed film was so excellent as 25 μm. Moreover, also on the surface of the three-dimensional decorative thermoformed article after three-dimensional decorative thermoforming, the hairline pattern strongly remained and thus designability was excellent.

[Table 12]

Table 12

| | | | Unit | Example 5-1 | Example 5-2 | Example 5-3 | Example 5-4 | Example 5-5 | Example 5-6 | Example 5-7 | Example 5-8 | Example 5-9 | Example 5-10 | Example 5-11 | Example 5-12 | Example 5-13 | Example 5-14 | Comparative Example 5-1 | Comparative Example 5-2 | Reference Example 5-3 |
|---|---|---|---|---|---|---|---|---|---|---|---|---|---|---|---|---|---|---|---|---|
| Surface decorative layer (III) | | Kind | | - | - | - | - | - | - | - | - | - | - | - | - | - | 5A-2 | - | - | - |
| | | MFR | g/10min | - | - | - | - | - | - | - | - | - | - | - | - | - | 10 | - | - | - |
| Layer (II) | Long-chain branching polypropylene (5C-1) | Kind | | 5C-1-1 | 5C-1-1 | 5C-1-1 | 5C-1-2 | 5C-1-2 | 5C-1-2 | 5C-1-1 | 5C-1-1 | 5C-1-1 | 5C-1-1 | 5C-1-1 | 5C-1-1 | 5C-1-1 | 5C-1-1 | none | none | 5C-1-1 |
| | | Ratio | wt% | 100 | 30 | 5 | 100 | 30 | 5 | 100 | 100 | 100 | 100 | 100 | 100 | 100 | 100 | 0 | 0 | 100 |
| | Other polypropylene | Kind | | - | 5A-2 | 5A-2 | - | 5A-2 | 5A-2 | - | - | - | - | - | - | - | - | 5A-2 | 5A-2 | - |
| | | Ratio | wt% | - | 70 | 95 | - | 70 | 95 | - | - | - | - | - | - | - | - | 100 | 100 | - |
| | Whole resin composition (B) | MFR | g/10min | 9.0 | 9.5 | 9.9 | 1.0 | 5.1 | 9.8 | 9.0 | 9.0 | 9.0 | 9.0 | 9.0 | 9.0 | 9.0 | 9.0 | 10 | 10 | 9.0 |
| | | λ | | 7.8 | 2.6 | 1.4 | 9.7 | 4 | 1.6 | 7.8 | 7.8 | 7.8 | 7.8 | 7.8 | 7.8 | 7.8 | 7.8 | 0.9 | 0.9 | 7.8 |
| Sealing layer (I) | Polypropylene-based resin (A) | Kind | | 5A-1 | 5A-1 | 5A-1 | 5A-1 | 5A-1 | 5A-1 | 5A-1 | 5A-1 | 5A-1 | 5A-1 | 5A-1 | 5A-2 | 5A-3 | 5A-1 | 5A-1 | 5A-1 | 5A-1 |
| | | Blending amount | wt% | 85 | 85 | 85 | 85 | 85 | 85 | 70 | 30 | 85 | 85 | 85 | 85 | 85 | 85 | 100 | 85 | 100 |
| | Thermoplastic elastomer (D) | Kind | | 5B-1 | 5B-1 | 5B-1 | 5B-1 | 5B-1 | 5B-1 | 5B-1 | 5B-1 | 5B-2 | 5B-3 | 5B-4 | 5B-1 | 5B-1 | 5B-1 | none | 5B-1 | none |
| | | Blending amount | wt% | 15 | 15 | 15 | 15 | 15 | 15 | 30 | 70 | 15 | 15 | 15 | 15 | 15 | 15 | 0 | 15 | 0 |
| Substrate | | Kind | | 5X-1 | 5X-1 | 5X-1 | 5X-1 | 5X-1 | 5X-1 | 5X-1 | 5X-1 | 5X-1 | 5X-1 | 5X-1 | 5X-1 | 5X-1 | 5X-1 | 5X-1 | 5X-1 | 5X-1 |
| Heating time after spring-back | | | sec | 5 | 5 | 5 | 0 | 5 | 5 | 5 | 5 | 5 | 5 | 5 | 5 | 5 | 5 | 5 | 5 | 5 |
| Appearance of decorative molded body | | | | O | O | O | O | O | O | O | O | O | O | O | O | O | O | × | × | O |
| Adhesive force | | | N/10mm | 25 | 26 | 24 | 25 | 25 | 25 | 22 | 25 | 31 | 26 | 16 | 22 | 31 | 24 | 3 | 18 | 4 |
| Scratch evaluation | Scratch depth | | µm | 2.6 | 2.5 | 2.4 | 2.7 | 3.0 | 2.9 | 2.4 | 2.5 | 3.8 | 2.6 | 2.7 | 2.1 | 2.4 | 2.9 | - | - | 9.5 |
| | Whitened appearance | | | O | O | O | O | O | O | O | O | O | O | O | O | O | O | - | - | × |
| Gloss (60°) | | | % | 21 | 20 | 25 | 15 | 21 | 23 | 20 | 21 | 25 | 19 | 20 | 20 | 19 | 35 | - | - | 20 |
| Appearance of recycled molded body | | | | O | O | O | O | O | O | O | O | O | O | O | O | O | O | O | O | O |

[Table 13]

Table 13

| | | | Unit | Example 5-15 | Example 5-16 | Example 5-17 | Example 5-18 | Example 5-19 | Example 5-20 | Example 5-21 | Example 5-22 |
|---|---|---|---|---|---|---|---|---|---|---|---|
| Surface decorative layer (III) | | Kind | | - | - | 5D-1 | 5D-2 | 5D-3 | 5D-4 | 5A-2 | 5D-5 |
| | | MFR | g/ 10min | - | - | 10 | 7.0 | 7.0 | 10 | 10 | 10 |
| Layer (II) | Long-chain branching polypro-pylene (5C-1) | Kind | | 5C-1-1 | 5C-1-1 | 5C-1-1 | 5C-1-1 | 5C-1-1 | 5C-1-1 | 5C-1-3 | 5C-1-3 |
| | | Ratio | wt% | 100 | 100 | 100 | 100 | 100 | 100 | 100 | 100 |
| | Other polypro-pylene | Kind | | - | - | - | - | - | - | - | - |
| | | Ratio | wt% | - | - | - | - | - | - | - | - |
| | Whole resin composition (B) | MFR | g/ 10min | 9.0 | 9.0 | 9.0 | 9.0 | 9.0 | 9.0 | 9.0 | 9.0 |
| | | λ | | 7.8 | 7.8 | 7.8 | 7.8 | 7.8 | 7.8 | 7.3 | 7.3 |
| Sealing layer (I) | Polypropylene-based resin (C) | Kind | | 5A-1 | 5A-1 | 5A-1 | 5A-1 | 5A-1 | 5A-1 | 5A-1 | 5A-1 |
| | | Blending amount | wt% | 85 | 85 | 85 | 85 | 85 | 85 | 85 | 85 |
| | Thermoplastic elastomer (D) | Kind | | 5B-1 | 5B-1 | 5B-1 | 5B-1 | 5B-1 | 5B-1 | 5B-1 | 5B-1 |
| | | Blending amount | wt% | 15 | 15 | 15 | 15 | 15 | 15 | 15 | 15 |
| Substrate | Kind | | | 5X-2 | 5X-3 | 5X-1 | 5X-1 | 5X-1 | 5X-1 | 5X-1 | 5X-1 |
| Heating time after spring-back | | | sec | 5 | 5 | 5 | 5 | 5 | 5 | 5 | 5 |
| Appearance of decorative molded body | | | | ○ | ○ | ○ | ○ | ○ | ○ | ○ | ○ |
| Adhesive force | | | N/ 10mm | 33 | 31 | 33 | 29 | 31 | 31 | 32 | 34 |
| Scratch evaluation | Scratch depth | | μm | 2.7 | 2.9 | 2.6 | 3.1 | 3.0 | - | - | - |
| | Whitened appearance | | | ○ | ○ | ○ | ○ | ○ | ○ | ○ | ○ |
| Gloss (60°) | | | % | 18 | 17 | 85 | 31 | 93 | 32 | 30 | 31 |
| Appearance of recycled molded body | | | | ○ | ○ | ○ | ○ | ○ | ○ | ○ | ○ |

[Table 14]

Table 14

| | | | Unit | Example 5-23 |
|---|---|---|---|---|
| Surface decorative layer (III) | | Kind | | 5D-5 |
| | | MFR | g/10min | 10 |
| Layer (II) | Long-chain branching PP (5C-1) | Kind | | 5C-1-3 |
| | | Ratio | wt% | 100 |
| | Other PP | Kind | | - |
| | | Ratio | wt% | - |
| | Whole resin composition (B) | MFR | g/10min | 9.0 |
| | | $\lambda$ | | 7.3 |
| Sealing layer (I) | Polypropylene-bas ed resin (A) | Kind | | 5A-1 |
| | | Blending amount | wt% | 85 |
| | Thermoplastic elastomer (D) | Kind | | 5B-1 |
| | | Blending amount | wt% | 15 |
| Substrate | | Kind | | 5X-1 |
| Heating time after spring-back | | | sec | 5 |
| Depth of embossment | | | μm | 25 |
| Embossment pattern after thermoforming | | | | ○ |

[6. Decorative Film including Sealing Layer (I) containing Polypropylene-based Resin

(A) and Thermoplastic Resin (E)]

6-2. Used Materials

(6-1) Polypropylene-based Resins

The following polypropylene-based resins were used.

(6A-1): Propylene-α-olefin copolymer (MFR=7 g/10 minutes, Tm=146°C, crystallization initiation temperature = 111°C, isothermal crystallization time (t) = 263 seconds (measured at 121°C)), trade name "NOVATEC (registered trademark) FW3GT" manufactured by Japan Polypropylene Corporation
(6A-2): Propylene homopolymer (MFR=10 g/10 minutes, Tm=161°C, crystallization initiation temperature = 123°C, isothermal crystallization time (t) = 613 seconds (measured at 133°C)), trade name "NOVATEC (registered trademark) FA3KM" manufactured by Japan Polypropylene Corporation
(6A-3): Propylene-α-olefin copolymer (MFR=7 g/10 minutes, Tm=125°C, crystallization initiation temperature = 97°C, isothermal crystallization time (t) = 570 seconds (measured at 107°C)), trade name "WINTEC (registered trademark) WFX4M" manufactured by Japan Polypropylene Corporation
(6A-4): Propylene block copolymer (MFR=6 g/10 minutes, Tm=135°C, crystallization initiation temperature = 99°C, isothermal crystallization time (t) = 478 seconds (measured at 109°C)), trade name "WELNEX (registered trademark) RFG4VA" manufactured by Japan Polypropylene Corporation
(6C-1-1): Propylene homopolymer having a long-chain branch, which was produced by a macromer copolymerization method, trade name "WAYMAX (registered trademark) MFX3" manufactured by Japan Polypropylene Corporation, MFR=8.8 g/10 minutes, strain hardening degree $\lambda$=7.8, Tm=154°C, branching index g' at an absolute molecular weight Mabs of 1,000,000=0.85, the presence of a long-chain branched structure was confirmed by $^{13}$C-NMR measurement.

(6C-1-2): Propylene homopolymer having a long-chain branch, which was produced by a macromer copolymerization method, trade name "WAYMAX (registered trademark) MFX8" manufactured by Japan Polypropylene Corporation, MFR=1 g/10 minutes, strain hardening degree λ=9.7, Tm=154°C, branching index g' at an absolute molecular weight Mabs of 1,000,000=0.89, the presence of a long-chain branched structure was confirmed by $^{13}C$-NMR measurement.
(6C-1-3): Polypropylene-based resin composition (MFR=2.4 g/10 minutes, strain hardening degree λ=7.3, Tm=154°C) obtained by blending 96% by weight of the polypropylene-based resin (6C-1-1) with 4% by weight of a black pigment MB (EPP-K-120601 manufactured by Polycol Kogyo K.K.)
(6-D-1): Polypropylene-based resin composition (MFR=10 g/10 minutes, Tm=164°C) obtained by blending 100% by weight of the polypropylene-based resin (6A-2) with 0.4% by weight of a nucleating agent (trademark "Millad NX8000J" manufactured by Milliken Japan, K.K.)
(6-D-2): Polypropylene-based resin composition (MFR=7 g/10 minutes, Tm=127°C) obtained by blending 100% by weight of the polypropylene-based resin (6A-3) with 0.4% by weight of a nucleating agent (trademark "Millad NX8000J" manufactured by Milliken Japan, K.K.)
(6-D-3): Polypropylene-based resin composition (MFR=10 g/10 minutes, Tm=161°C) obtained by blending 96% by weight of the polypropylene-based resin (6A-2) with 4% by weight of a white pigment MB (EPP-W-59578 manufactured by Polycol Kogyo K.K., titanium oxide content of 80% by weight) of MFR=11 g/10 minutes
(6-D-4): Polypropylene-based resin composition (MFR=10 g/10 minutes, Tm=161°C) obtained by blending 96% by weight of the polypropylene-based resin (6A-2) with 4% by weight of a silver pigment MB (PPCM913Y-42 SILVER21X manufactured by TOYOCOLOR Co., Ltd.)

(6-2) Thermoplastic Resin (E)

The following thermoplastic resins were used.

(6B-1): Hydrogenated styrene-based elastomer (HSBR): trade name "DYNARON 1320P" manufactured by JSR Corporation
(6B-2): Styrene-based elastomer (SEBS): trade name "KRATON G1645" manufactured by KRATON Polymer Japan Corporation
(6B-3): Alicyclic hydrocarbon resin: trade name "ARKON-P125" manufactured by Arakawa Chemical Industries, Ltd.

(6-3) Polypropylene-based Resins used for Resin Molded Bodies

The following polypropylene-based resins were used.

(6X-1): Propylene homopolymer (MFR=40 g/10 minutes, Tm=165°C), trade name "NOVATEC (registered trademark) MA04H" manufactured by Japan Polypropylene Corporation
(6X-2): Propylene ethylene block copolymer (MFR=30 g/10 minutes, Tm=164°C), trade name "NOVATEC (registered trademark) NBC03HR" manufactured by Japan Polypropylene Corporation
(6X-3): Polypropylene-based resin composition obtained by blending 60% by weight of the polypropylene-based resin (6X-2) with 20% of EBR (TAFMER (registered trademark) A0550S manufactured by Mitsui Chemicals, inc.) of MFR=1.0 and 20% by weight of an inorganic filler (TALC P-6 manufactured by Nippon Talc Co., Ltd., average particle size of 4.0 μm)

6-3. Production of Resin Molded Body (Substrate)

Using the polypropylene-based resins (6X-1) to (6X-3), injection molded bodies were obtained by the following method. Moreover, the obtained injection molded bodies were scratched by the following method to form resin molded bodies (substrates).
Injection molding machine: "IS 100GN" manufactured by Toshiba Machine Co., ltd., mold clamping pressure of 100 tons
Cylinder temperature: 200°C
Mold temperature: 40°C
Injection mold: A flat plate of width×height×thickness = 120 mm×120 mmx3 mm
Condition control: Kept in a constant-temperature constant-humidity chamber at a temperature of 23°C and a humidity of 50%RH for 5 days
Processing for scratch evaluation: In a constant-temperature constant-humidity chamber at a temperature of 23°C and a humidity of 50%RH, using a scratch tester ("SCRATCH&MAR TESTER" manufactured by ROCKWOOD SYSTEMS AND EQUIPMENT), each of the above injection molded bodies was scratched with a scratching tip subjected to shape (curvature radius of 0.5 mm, ball shape) processing, under a load of 25N at a scratching rate of 100 mm/minute.

When the scratches formed on the surface of the resin molded body (substrate) were measured by means of a shape-measuring laser microscope ("VX-X200" manufactured by KEYENCE Corporation), the depth of the scratches was 16 μm. Further, the scratches became whitened scratches.

{Example 6-1}

- Production of Decorative Film

There was used a 2-kind 2-layer T-die having a lip opening of 0.8 mm and a die width of 400 mm, to which an extruder-1 for a sealing layer (I) having a nozzle diameter of 30 mm (diameter) and an extruder-2 for a layer (II) having a nozzle diameter of 40 mm (diameter) had been connected. One obtained by blending the polypropylene-based resin (6A-1) and the thermoplastic resin (6B-1) so as to be a weight ratio of 50:50 was charged into the extruder-1 for a sealing layer (I) and the polypropylene-based resin (6C-1-1) having a long-chain branched structure was charged into the extruder-2 for a layer (II), and melt-extrusion was performed under conditions of a resin temperature of 240°C, a discharge amount from the extruder-1 for a sealing layer (I) of 4 kg/h, and a discharge amount from the extruder-2 for a layer (II) of 12 kg/h. The melt-extruded film was cooled and solidified while pushing it to a first roll rotating at 3 m/min at 80°C with an air knife so that the sealing layer (I) came outside, thereby obtaining a two-layered unstretched film where a sealing layer (I) having a thickness of 50 μm and a layer (II) having a thickness of 150 μm were laminated.

- Three-Dimensional Decorative Thermoforming

As the resin molded body (substrate) 5, there was used the injection molded body composed of the polypropylene-based resin (6X-1) obtained in the above.

As a three-dimensional decorative thermoforming apparatus, "NGF-0406-SW" manufactured by Fu-se Vacuum Forming Ltd. was used. As shown in FIG 2 to FIG. 7, a decorative film 1 was cut into a size having a width of 250 mm and a length of 350 mm and was set to a jig 13 for film fixing having an opening part size of 210 mmx300 mm so that the longitudinal direction became the MD direction of the film. The resin molded body (substrate) 5 was attached on a sample-placing stand having a height of 20 mm, which was placed on a table 14 positioned below the jig 13 for film fixing, through "NICETACK NW-K15" manufactured by Nichiban Co., Ltd. The jig 13 for film fixing and the table 14 were placed in upper and lower chamber boxes 11 and 12 and the upper and lower chamber boxes 11 and 12 were closed to make the inside of the chamber boxes a tightly closed state. The chamber boxes were divided into upper and lower ones through the decorative film 1. The upper and lower chamber boxes 11 and 12 were vacuum-suctioned and a far-infrared heater 15 placed on the upper chamber box 11 was started at an output of 80% to heat the decorative film 1 in a state that the pressure was reduced from atmospheric pressure (101.3 kPa) to 1.0 kPa. During heating, the vacuum-suction was continued and finally, the pressure was reduced to 0.1 kPa. Immediately after the finish of a spring-back phenomenon that the decorative film 1 was heated to temporarily slacken and thereafter tension returned (i.e., heating time after the spring-back phenomenon was 0 second), the table 14 placed in the lower chamber box 12 was transferred upward to push the resin molded body (substrate) 5 to the decorative film 1 and immediately after that, compressed air was fed so that the pressure in the upper chamber box 11 became 270 kPa to adhere the resin molded body (substrate) 5 and the decorative film 1 closely. Thus, there was obtained a three-dimensional decorative thermoformed article 6 where the decorative film 1 was stuck on the upper surface and side surface of the resin molded body (substrate) 5.

- Physical Property Evaluation

(6-1) Evaluation of Thermoformability (Appearance of Decorative Molded Body)

A draw-down state of the decorative film at the time of three-dimensional decorative thermoforming and a sticking state of the decorative film of the decorative molded body where the decorative film had been stuck to the substrate were visually observed and evaluated according to the criteria shown below.

○: Since the contact between the substrate and the decorative film is simultaneously achieved over a whole contact surface without generating draw-down of the decorative film at the time of three-dimensional decorative thermoforming, uneven contact is not generated and the film is uniformly stuck.

x: Since draw-down of the decorative film remarkably occurs at the time of three-dimensional decorative thermoforming, uneven contact is generated all over the surface of the substrate.

(6-2) Gloss

The gloss in the vicinity of the center of the decorative molded body to which a decorative film had been stuck was measured at an incident angle of 60° using Gloss Meter VG2000 manufactured by Nippon Denshoku Industries Co., Ltd. The measurement method conformed to JIS K7105-1981.

(6-3) Adhesive Force between Resin Molded Body (Substrate) and Decorative Film

"Craft adhesive tape No. 712N" manufactured by Nitoms, Inc. was cut into a size having a width of 75 mm and a length of 120 mm and was attached to a resin molded body (substrate) in the range of 75 mm×120 mm from the edge part of the resin molded body (substrate) to perform a masking treatment (a surface exposed part of the substrate had a width of 45 mm and a length of 120 mm). The resin molded body (substrate) was placed on a three-dimensional decorative thermoforming apparatus NGF-0406-SW so that the masking face of the molded body came into contact with the decorative film, and three-dimensional decorative thermoforming was conducted.
The decorative film face of the obtained decorative molded body was cut to the substrate surface at a width of 10 mm using a cutter in a vertical direction toward a longitudinal direction of the adhesive tape to prepare a test specimen. In the obtained test specimen, the adhesion face between the substrate and the decorative film has a width of 10 mm and a length of 45 mm. It was fixed to a tensile tester so that the substrate part and the decorative film part of the test specimen made an angle of 180°, and 180° peeling strength of the adhesion face was measured at a tensile rate of 200 mm/min. Maximum strength (N/10 mm) at peeling or at break was measured five times and averaged strength was taken as adhesive force.

(6-4) Evaluation of Effect of Making Scratches Inconspicuous

Depth of scratches at the portion where scratches were present on a three-dimensional decorative thermoformed product of a resin molded body (substrate) which had been scratched with a load of 25 N was measured by means of a shape-measuring laser microscope ("VX-X200" manufactured by KEYENCE Corporation). The number of measurement times was 5 times (n=5) and an average value thereof was taken as scratch depth (μm).
Moreover, as whitened appearance, it was visually judged according to the following criteria whether whitened scratches of the molded body (substrate), which had been scratched with a load of 25 N, were made inconspicuous or not by the decorative film, and thus evaluation was performed.

○: Scars of whitened scratches are inconspicuous and appearance is excellent.
×: Whitened scratches remain and appearance is poor.

(6-5) Evaluation of Recyclability

The obtained decorative molded body was pulverized and a recycled molded body was obtained by injection molding in the same manner as in the production of the resin molded body (substrate). The appearance was visually evaluated.
Table 15 shows results of physical property evaluation of the obtained decorative molded body and the like.
Since the polypropylene-based resin (A), the thermoplastic resin (E), the resin composition (X), and the polypropylene-based resin (B) satisfied all the requirements of the present invention, the obtained decorative molded body was excellent in appearance and adhesive force, and scratches were made inconspicuous. Moreover, the recycled molded body was excellent in appearance (evaluation: O).

{Example 6-2}

Evaluation was performed in the same manner as in Example 6-1 except that, in the production of the decorative film of Example 6-1, the polypropylene-based resin (6C-1-1) having a long-chain branched structure used for the layer (II) was changed to one obtained by blending the polypropylene-based resin (6C-1-1) having a long-chain branched structure and the polypropylene-based resin (6A-2) so as to be a weight ratio of 30:70. Table 15 shows evaluation results.
Since the polypropylene-based resin (A), the thermoplastic resin (E), the resin composition (X), and the polypropylene-based resin composition (B) satisfied all the requirements of the present invention, the obtained decorative molded body was excellent in appearance and adhesive force, and scratches were made inconspicuous. Moreover, the recycled molded body was excellent in appearance (evaluation: O).

{Example 6-3}

Evaluation was performed in the same manner as in Example 6-1 except that, in the production of the decorative film of Example 6-1, the polypropylene-based resin (6C-1-1) having a long-chain branched structure used for the layer (II) was changed to one obtained by blending the polypropylene-based resin (6C-1-1) having a long-chain branched structure and the polypropylene-based resin (6A-2) so as to be a weight ratio of 5:95. Table 15 shows evaluation results.

Since the polypropylene-based resin (A), the thermoplastic resin (E), the resin composition (X), and the polypropylene-based resin composition (B) satisfied all the requirements of the present invention, the obtained decorative molded body was excellent in appearance and adhesive force, and scratches were made inconspicuous. Moreover, the recycled molded body was excellent in appearance (evaluation: O).

{Example 6-4}

Evaluation was performed in the same manner as in Example 6-1 except that, in the production of the decorative film of Example 6-1, the polypropylene-based resin (6C-1-1) having a long-chain branched structure used for the layer (II) was changed to the polypropylene-based resin (6C-1-2) having a long-chain branched structure. Table 15 shows evaluation results.

Since the polypropylene-based resin (A), the thermoplastic resin (E), the resin composition (X), and the polypropylene-based resin (B) satisfied all the requirements of the present invention, the obtained decorative molded body was excellent in appearance and adhesive force, and scratches were made inconspicuous. Moreover, the recycled molded body was excellent in appearance (evaluation: O).

{Example 6-5}

Evaluation was performed in the same manner as in Example 6-1 except that, in the production of the decorative film of Example 6-1, the polypropylene-based resin (6C-1-1) having a long-chain branched structure used for the layer (II) was changed to one obtained by blending the polypropylene-based resin (6C-1-2) having a long-chain branched structure and the polypropylene-based resin (6A-2) so as to be a weight ratio of 30:70. Table 15 shows evaluation results.

Since the polypropylene-based resin (A), the thermoplastic resin (E), the resin composition (X), and the polypropylene-based resin composition (B) satisfied all the requirements of the present invention, the obtained decorative molded body was excellent in appearance and adhesive force, and scratches were made inconspicuous. Moreover, the recycled molded body was excellent in appearance (evaluation: O).

{Example 6-6}

Evaluation was performed in the same manner as in Example 6-1 except that, in the production of the decorative film of Example 6-1, the polypropylene-based resin (6C-1-1) having a long-chain branched structure used for the layer (II) was changed to one obtained by blending the polypropylene-based resin (6C-1-2) having a long-chain branched structure and the polypropylene-based resin (6A-2) so as to be a weight ratio of 5:95. Table 15 shows evaluation results.

Since the polypropylene-based resin (A), the thermoplastic resin (E), the resin composition (X), and the polypropylene-based resin composition (B) satisfied all the requirements of the present invention, the obtained decorative molded body was excellent in appearance and adhesive force, and scratches were made inconspicuous. Moreover, the recycled molded body was excellent in appearance (evaluation: O).

{Example 6-7}

Evaluation was performed in the same manner as in Example 6-1 except that, in the production of the decorative film of Example 6-1, the thermoplastic resin used for the sealing layer (I) was changed to (6B-2). Table 15 shows evaluation results.

Since the polypropylene-based resin (A), the thermoplastic resin (E), the resin composition (X), and the polypropylene-based resin (B) satisfied all the requirements of the present invention, the obtained decorative molded body was excellent in appearance and adhesive force, and scratches were made inconspicuous. Moreover, the recycled molded body was excellent in appearance (evaluation: O).

{Example 6-8}

Evaluation was performed in the same manner as in Example 6-1 except that, in the production of the decorative film of Example 6-1, the thermoplastic resin used for the sealing layer (I) was changed to (6B-3) and the blending ratio

of the polypropylene-based resin (6A-1) to the thermoplastic resin (6B-3) was controlled to 85:15. Table 15 shows evaluation results.

Since the polypropylene-based resin (A), the thermoplastic resin (E), the resin composition (X), and the polypropylene-based resin (B) satisfied all the requirements of the present invention, the obtained decorative molded body was excellent in appearance and adhesive force, and scratches were made inconspicuous. Moreover, the recycled molded body was excellent in appearance (evaluation: O).

{Example 6-9}

Evaluation was performed in the same manner as in Example 6-1 except that, in the production of the decorative film of Example 6-1, the blending ratio of the polypropylene-based resin (6A-1) used for the sealing layer (I) to the thermoplastic resin (6B-1) was controlled to 70:30. Table 15 shows evaluation results.

Since the polypropylene-based resin (A), the thermoplastic resin (E), the resin composition (X), and the polypropylene-based resin (B) satisfied all the requirements of the present invention, the obtained decorative molded body was excellent in appearance and adhesive force, and scratches were made inconspicuous. Moreover, the recycled molded body was excellent in appearance (evaluation: O).

{Example 6-10}

Evaluation was performed in the same manner as in Example 6-1 except that, in the production of the decorative film of Example 6-1, the blending ratio of the polypropylene-based resin (6A-1) used for the sealing layer (I) to the thermoplastic elastomer (6B-1) was controlled to 30:70. Table 15 shows evaluation results.

Since the polypropylene-based resin (A), the thermoplastic resin (E), the resin composition (X), and the polypropylene-based resin (B) satisfied all the requirements of the present invention, the obtained decorative molded body was excellent in appearance and adhesive force, and scratches were made inconspicuous. Moreover, the recycled molded body was excellent in appearance (evaluation: O).

{Example 6-11}

Evaluation was performed in the same manner as in Example 6-1 except that, in the production of the decorative film of Example 6-1, the polypropylene-based resin used for the sealing layer (I) was changed to (6A-2). Table 15 shows evaluation results.

Since the polypropylene-based resin (A), the thermoplastic resin (E), the resin composition (X), and the polypropylene-based resin (B) satisfied all the requirements of the present invention, the obtained decorative molded body was excellent in appearance and adhesive force, and scratches were made inconspicuous. Moreover, the recycled molded body was excellent in appearance (evaluation: O).

{Example 6-12}

Evaluation was performed in the same manner as in Example 6-1 except that, in the production of the decorative film of Example 6-1, the polypropylene-based resin used for the sealing layer (I) was changed to (6A-3). Table 15 shows evaluation results.

Since the polypropylene-based resin (A), the thermoplastic resin (E), the resin composition (X), and the polypropylene-based resin (B) satisfied all the requirements of the present invention, the obtained decorative molded body was excellent in appearance and adhesive force, and scratches were made inconspicuous. Moreover, the recycled molded body was excellent in appearance (evaluation: O).

{Example 6-13}

Evaluation was performed in the same manner as in Example 6-1 except that, in the production of the decorative film of Example 6-1, the polypropylene-based resin used for the sealing layer (I) was changed to (6A-4) and the blending ratio of the polypropylene-based resin (6A-4) to the thermoplastic resin (6B-1) was controlled to 70:30. Table 15 shows evaluation results.

Since the polypropylene-based resin (A), the thermoplastic resin (E), the resin composition (X), and the polypropylene-based resin (B) satisfied all the requirements of the present invention, the obtained decorative molded body was excellent in appearance and adhesive force, and scratches were made inconspicuous. Moreover, the recycled molded body was excellent in appearance (evaluation: O).

{Example 6-14}

In the production of the decorative film, there was used a 3-kind 3-layer T-die having a lip opening of 0.8 mm and a die width of 400 mm, to which an extruder-1 for a sealing layer (I) having a nozzle diameter of 30 mm (diameter), an extruder-2 for a layer (II) having a nozzle diameter of 40 mm (diameter), and an extruder-3 for a surface decorative layer (III) having a nozzle diameter of 30 mm (diameter), had been connected. One obtained by blending the polypropylene-based resin (6A-1) and the thermoplastic resin (6B-1) so as to be a weight ratio of 50:50 was charged into the extruder-1 for a sealing layer (I), the polypropylene-based resin (6C-1-1) was charged into the extruder-2 for a layer (II), and the polypropylene-based resin (6A-2) was charged into the extruder-3 for a surface decorative layer (III), and melt-extrusion was performed under conditions of a resin temperature of 240°C, a discharge amount from the extruder-1 for a sealing layer (I) of 4 kg/h, a discharge amount from the extruder-2 for a layer (II) of 8 kg/h, and a discharge amount from the extruder-3 for a surface decorative layer (III) of 4 kg/h.

The melt-extruded film was cooled and solidified while pushing it to a first roll rotating at 3 m/min at 80°C with an air knife so that the surface decorative layer (III) came into contact, thereby obtaining a three-layered unstretched film where a sealing layer (I) having a thickness of 50 μm, a layer (II) having a thickness of 100 μm, and a surface decorative layer (III) having a thickness of 50 μm were laminated in this order.

Evaluation was performed in the same manner as in Example 6-1 except the above. Table 15 shows obtained results. Since the polypropylene-based resin (A), the thermoplastic resin (E), the resin composition (X), and the polypropylene-based resin (B) satisfied all the requirements of the present invention, the obtained decorative molded body was excellent in appearance and adhesive force, and scratches were made inconspicuous. Moreover, the recycled molded body was excellent in appearance (evaluation: O). Furthermore, by providing the surface decorative layer (III), a decorative molded body more excellent in surface gloss could be obtained.

{Reference Example 6-1}

Evaluation was performed in the same manner as in Example 6-1 except that, in the production of the decorative film of Example 6-1, the thermoplastic resin (E) was not blended and the polypropylene-based resin (6A-1) alone was used in the sealing layer (I). Table 15 shows evaluation results.

Since the thermoplastic resin (E) was not contained in the sealing layer, adhesive force was small and the emergence of the scratches could not be sufficiently suppressed, so that appearance was poor.

{Comparative Example 6-2}

Evaluation was performed in the same manner as in Example 6-1 except that, in the production of the decorative film of Example 6-1, the thermoplastic resin (E) was not blended and the polypropylene-based resin (6A-1) alone was used in the sealing layer and the polypropylene-based resin having a long-chain branched structure was not blended and the polypropylene-based resin (6A-2) alone was used in the layer (II). Table 15 shows evaluation results.

Since the thermoplastic resin (E) was not contained in the sealing layer, adhesive force was small and the emergence of the scratches could not be sufficiently suppressed. Since the polypropylene-based resin having a long-chain branched structure was not contained in the layer (II), draw-down of the film was severe and the appearance of the decorative molded body was poor, so that evaluation on scratches and surface gloss was not performed.

{Comparative Example 6-3}

Evaluation was performed in the same manner as in Example 6-1 except that, in the production of the decorative film of Example 6-1, the polypropylene-based resin having a long-chain branched structure was not blended and the polypropylene-based resin (6A-2) alone was used in the layer (II). Table 15 shows evaluation results.

Since the polypropylene-based resin having a long-chain branched structure was not contained in the layer (II), draw-down of the film was severe and the appearance of the decorative molded body was poor, so that evaluation on scratches and gloss was not performed.

{Example 6-15}

Evaluation was performed in the same manner as in Example 6-1 except that, in the three-dimensional decorative thermoforming of Example 6-1, the substrate was changed to the injection molded body using the resin (6X-2). Table 16 shows obtained results.

Since the polypropylene-based resin (A), the thermoplastic resin (E), the resin composition (X), and the polypropylene-based resin composition (B) satisfied all the requirements of the present invention, the obtained decorative

molded body was excellent in appearance and adhesive force, and scratches were made inconspicuous. Moreover, the recycled molded body was excellent in appearance (evaluation: O).

{Example 6-16}

Evaluation was performed in the same manner as in Example 6-1 except that, in the three-dimensional decorative thermoforming of Example 6-1, the substrate was changed to the injection molded body using the resin (6X-3). Table 16 shows obtained results.

Since the polypropylene-based resin (A), the thermoplastic resin (E), the resin composition (X), and the polypropylene-based resin composition (B) satisfied all the requirements of the present invention, the obtained decorative molded body was excellent in appearance and adhesive force, and scratches were made inconspicuous. Moreover, the recycled molded body was excellent in appearance (evaluation: O).

{Example 6-17}

Evaluation was performed in the same manner as in Example 6-14 except that, in the production of the decorative film of Example 6-14, the polypropylene-based resin (6A-2) charged into the extruder-3 for a surface decorative layer (III) was changed to the polypropylene-based resin (6D-1). Table 16 shows obtained results.

Since the polypropylene-based resin (A), the thermoplastic resin (E), the resin composition (X), and the polypropylene-based resin composition (B) satisfied all the requirements of the present invention, the obtained decorative molded body was excellent in appearance and adhesive force, and scratches were made inconspicuous. Moreover, the polypropylene-based resin (6D-1) to which a nucleating agent had been added was laminated as the surface decorative layer (III) [surface layer (III)] at the uppermost surface side, so that a result of excellent gloss was observed. In addition, the recycled molded body was excellent in appearance (evaluation: O).

{Example 6-18}

Evaluation was performed in the same manner as in Example 6-14 except that, in the production of the decorative film of Example 6-14, the polypropylene-based resin (6A-2) used for the surface layer was changed to the polypropylene-based resin (6A-3). Table 16 shows obtained results.

Since the polypropylene-based resin (A), the thermoplastic resin (E), the resin composition (X), and the polypropylene-based resin composition (B) satisfied all the requirements of the present invention, the obtained decorative molded body was excellent in appearance and adhesive force, and scratches were made inconspicuous. Moreover, the polypropylene-based resin (6A-3) was laminated as the surface decorative layer (III) [surface layer (III)] at the uppermost surface side, so that a result of excellent gloss was observed. In addition, the recycled molded body was excellent in appearance (evaluation: O).

{Example 6-19}

Evaluation was performed in the same manner as in Example 6-14 except that, in the production of the decorative film of Example 6-14, the polypropylene-based resin (6A-2) used for the surface layer was changed to the polypropylene-based resin (6D-2). Table 16 shows obtained results.

Since the polypropylene-based resin (A), the thermoplastic resin (E), the resin composition (X), and the polypropylene-based resin composition (B) satisfied all the requirements of the present invention, the obtained decorative molded body was excellent in appearance and adhesive force, and scratches were made inconspicuous. Moreover, the polypropylene-based resin (6D-2) to which a nucleating agent had been added was laminated as the surface decorative layer (III) [surface layer (III)] at the uppermost surface side, so that a result of excellent gloss was observed. In addition, the recycled molded body was excellent in appearance (evaluation: O).

{Example 6-20}

Evaluation was performed in the same manner as in Example 6-14 except that, in the production of the decorative film of Example 6-14, the polypropylene-based resin (6A-2) used for the surface layer was changed to the polypropylene-based resin (6D-3). Table 16 shows obtained results.

Since the polypropylene-based resin (A), the thermoplastic resin (E), the resin composition (X), and the polypropylene-based resin composition (B) satisfied all the requirements of the present invention, the obtained decorative molded body was excellent in appearance and adhesive force. Moreover, coupled with the sticking of the white-colored decorative film, the scratches were sufficiently hidden to such a degree that the scratched place was not able to identify.

Therefore, the scratch depth was not measured. Furthermore, since the surface decorative layer (III) [surface layer (III)] excellent in gloss was colored white, appearance was excellent. In addition, the recycled molded body was excellent in appearance (evaluation: O).

{Example 6-21}

Evaluation was performed in the same manner as in Example 6-14 except that, in the production of the decorative film of Example 6-14, the polypropylene-based resin (6C-1-1) was changed to the polypropylene-based resin (6C-1-3). Table 16 shows obtained results.

Since the polypropylene-based resin (A), the thermoplastic resin (E), the resin composition (X), and the polypropylene-based resin composition (B) satisfied all the requirements of the present invention, the obtained decorative molded body was excellent in appearance and adhesive force. Moreover, coupled with the sticking of the black-colored decorative film, the scratches were sufficiently hidden to such a degree that the scratched place was not able to identify. Therefore, the scratch depth was not measured. Moreover, since the layer (II) was colored black, appearance was excellent. Furthermore, the polypropylene-based resin (6A-2) was laminated as the surface decorative layer (III) [the surface layer (III)] at the uppermost surface side, so that a result of excellent gloss was observed. In addition, the recycled molded body was excellent in appearance (evaluation: O).

{Example 6-22}

Evaluation was performed in the same manner as in Example 6-21 except that, in the production of the decorative film of Example 6-21, the polypropylene-based resin (6A-2) used for the surface layer was changed to the polypropylene-based resin (6D-4). Table 16 shows obtained results.

Since the polypropylene-based resin (A), the thermoplastic resin (E), the resin composition (X), and the polypropylene-based resin composition (B) satisfied all the requirements of the present invention, the obtained decorative molded body was excellent in appearance and adhesive force. Moreover, coupled with the sticking of the colored decorative film, the scratches were sufficiently hidden to such a degree that the scratched place was not able to identify. Therefore, the scratch depth was not measured. Moreover, the polypropylene-based resin (6D-4) was laminated as the surface decorative layer (III) [surface layer (III)] at the uppermost surface side, so that a result of excellent gloss was observed. Furthermore, since the layer (II) was colored black and the surface decorative layer (III) was colored silver, the film became a metallic film and appearance was excellent. In addition, the recycled molded body was excellent in appearance (evaluation: O).

{Example 6-23}

- Production of Decorative Film

In the production of the decorative film of Example 6-22, melt-extrusion was performed under conditions of a discharge amount from the extruder-1 for a sealing layer (I) of 4 kg/h, a discharge amount from the extruder-2 for a layer (II) of 12 kg/h, and a discharge amount from the extruder-3 for a surface decorative layer (III) of 4 kg/h and the obtained three-layered unstretched film was slit into a width of 200 mm, thereby obtaining a three-layered unstretched film where a surface decorative layer (III) having a thickness of 50 μm, a layer (II) having a thickness of 150 μm, and a sealing layer (I) having a thickness of 50 μm were laminated.

- Production of Embossed Film

As an embossing apparatus, an electric heating type test embossing machine manufactured by YURIROLL Co., Ltd. was used. The electric heating type test embossing machine has a mechanism of transferring an uneven shape at an upper stage to a film surface by heating and pressing the film with a heatable roll (embossing roll) having an uneven shape placed at an upper stage and a smooth roll placed at a lower stage. In the embossing roll, a hairline pattern having a depth of 30 μm was used.

The three-layered unstretched film obtained by the production of the decorative film was fed between two rolls of the embossing machine so that the surface decorative layer (III) came into contact with the embossing roll. By transferring the embossment under conditions of an embossing roll temperature of 145°C, a contact pressure of 3 MPa, and a roll speed of 3 m/min, there was obtained a decorative film where the hairline pattern was transferred on the surface of the surface decorative layer.

- Three-Dimensional Decorative Thermoforming

A three-dimensional decorative thermoformed article was obtained in the same manner as in Example 6-1.

- Evaluation of Physical Properties

(6-1) Evaluation of Embossment Transfer

Depth of the hairline pattern portion provided on the surface decorative layer of the obtained decorative film was measured by means of a shape-measuring laser microscope ("VX-X200" manufactured by KEYENCE Corporation). The number of measurement times was 5 times (n=5) and an average value thereof was taken as depth of embossment (μm).

(6-2) Evaluation of Embossment Pattern after Thermoforming

It was visually observed how the embossment pattern remained after three-dimensional decorative thermoforming and evaluation was performed according to the following criteria.

O: The embossment pattern remains on the surface of the three-dimensional decorative thermoformed article after three-dimensional decorative thermoforming and designability is excellent.
x: The embossment pattern disappears on most of the surface of the three-dimensional decorative thermoformed article after three-dimensional decorative thermoforming and designability is poor.

Table 17 shows evaluation results of physical properties of the obtained decorative molded body and the like.
The depth of embossment of the film obtained by the production of the embossed film was so excellent as 25 μm. Moreover, since the polypropylene-based resin (A), the thermoplastic resin (E), the resin composition (X), and the polypropylene-based resin composition (B) satisfied all the requirements of the present invention, the obtained decorative molded body was excellent in appearance and, also on the surface of the three-dimensional decorative thermoformed article after three-dimensional decorative thermoforming, the hairline pattern strongly remained and thus designability was excellent.

[Table 15]

Table 15

| | | | Unit | Example 6-1 | Example 6-2 | Example 6-3 | Example 6-4 | Example 6-5 | Example 6-6 | Example 6-7 | Example 6-8 | Example 6-9 | Example 6-10 | Example 6-11 | Example 6-12 | Example 6-13 | Example 6-14 | Reference Example 6-1 | Comparative Example 6-2 | Comparative Example 6-3 |
|---|---|---|---|---|---|---|---|---|---|---|---|---|---|---|---|---|---|---|---|---|
| Surface decorative layer (III) | Polypropylene-based resin | Kind | | - | - | - | - | - | - | - | - | - | - | - | - | - | 6A-2 | - | - | - |
| | | MFR | | - | - | - | - | - | - | - | - | - | - | - | - | - | 10 | - | - | - |
| Layer (II) | Long-chain branching polypropylene resin (6C-1) | Kind | | 6C-1-1 | 6C-1-1 | 6C-1-1 | 6C-1-2 | 6C-1-2 | 6C-1-2 | 6C-1-1 | 6C-1-1 | 6C-1-1 | 6C-1-1 | 6C-1-1 | 6C-1-1 | 6C-1-1 | 6C-1-1 | 6C-1-1 | none | none |
| | | Blending Amount | wt% | 100 | 30 | 5 | 100 | 30 | 5 | 100 | 100 | 100 | 100 | 100 | 100 | 100 | 100 | 100 | 0 | 0 |
| | Other polypropylene resin | Kind | | - | 6A-2 | 6A-2 | - | 6A-2 | 6A-2 | - | - | - | - | - | - | - | - | - | 6A-2 | 6A-2 |
| | | Blending Amount | wt% | - | 70 | 95 | - | 70 | 95 | - | - | - | - | - | - | - | - | - | 100 | 100 |
| | Whole resin composition (B) | MFR (B) | g/10min | 9.0 | 9.5 | 9.9 | 1.0 | 5.1 | 9.8 | 9.0 | 9.0 | 9.0 | 9.0 | 9.0 | 9.0 | 9.0 | 9.0 | 9.0 | 10 | 10 |
| | | λ | | 7.8 | 2.6 | 1.4 | 9.7 | 4.0 | 1.6 | 7.8 | 7.8 | 7.8 | 7.8 | 7.8 | 7.8 | 7.8 | 7.8 | 7.8 | 0.9 | 0.9 |
| Sealing layer (I) | Polypropylene-based resin (A) | Kind | | 6A-1 | 6A-1 | 6A-1 | 6A-1 | 6A-1 | 6A-1 | 6A-1 | 6A-1 | 6A-1 | 6A-1 | 6A-2 | 6A-3 | 6A-4 | 6A-1 | 6A-1 | 6A-1 | 6A-1 |
| | | MFR(A) | g/10min | 7 | 7 | 7 | 7 | 7 | 7 | 7 | 7 | 7 | 7 | 10 | 7 | 6 | 7 | 7 | 7 | 7 |
| | | Isothermal crystallization time t(A) | sec | 263 | 263 | 263 | 263 | 263 | 263 | 263 | 263 | 263 | 263 | 613 | 570 | 478 | 263 | 263 | 263 | 263 |
| | | Blending amount | wt% | 50 | 50 | 50 | 50 | 50 | 50 | 50 | 85 | 70 | 30 | 50 | 50 | 70 | 50 | 100 | 100 | 50 |
| | Thermoplastic resin (E) | Kind | | 6B-1 | 6B-1 | 6B-1 | 6B-1 | 6B-1 | 6B-1 | 6B-2 | 6B-3 | 6B-1 | 6B-1 | 6B-1 | 6B-1 | 6B-1 | 6B-1 | - | - | 6B-1 |
| | | Blending amount | wt% | 50 | 50 | 50 | 50 | 50 | 50 | 50 | 15 | 30 | 70 | 50 | 50 | 30 | 50 | 0 | 0 | 50 |
| | Resin composition (X) | Isothermal crystallization time t(X) | sec | 2590 | 2590 | 2590 | 2590 | 2590 | 2590 | 1991 | 1085 | 1233 | 4815 | 2598 | 2590 | 1397 | 2590 | 263 | 263 | 2590 |
| | | t(X)/t(A) | | 9.8 | 9.8 | 9.8 | 9.8 | 9.8 | 9.8 | 7.6 | 4.1 | 4.7 | 18.3 | 4.2 | 4.5 | 2.9 | 9.8 | 1.0 | 1.0 | 9.8 |
| Substrate | Kind | | | 6X-1 | 6X-1 | 6X-1 | 6X-1 | 6X-1 | 6X-1 | 6X-1 | 6X-1 | 6X-1 | 6X-1 | 6X-1 | 6X-1 | 6X-1 | 6X-1 | 6X-1 | 6X-1 | 6X-1 |
| Heating time after spring-back | | | sec | 0 | 0 | 0 | 0 | 0 | 0 | 0 | 0 | 0 | 0 | 0 | 0 | 0 | 0 | 0 | 0 | 0 |
| Appearance of decorative molded body (thermoformability) | | | | ○ | ○ | ○ | ○ | ○ | ○ | ○ | ○ | ○ | ○ | ○ | ○ | ○ | ○ | ○ | × | × |
| Gloss (60°) | | | | 20 | 21 | 22 | 18 | 20 | 21 | 21 | 20 | 20 | 20 | 21 | 23 | 22 | 31 | 20 | - | - |
| Adhesive force | | | N/10mm | 40 | 36 | 38 | 35 | 39 | 40 | 20 | 33 | 30 | 36 | 38 | 54 | 20 | 35 | 1 | 1 | 34 |
| Scratch evaluation | Scratch depth | | μm | 2.9 | 3.1 | 2.8 | 3.4 | 3.5 | 3.1 | 2.9 | 3 | 2.9 | 3 | 4.7 | 2.5 | 3 | 3.9 | 10.1 | - | - |
| | Whitened appearance | | | ○ | ○ | ○ | ○ | ○ | ○ | ○ | ○ | ○ | ○ | ○ | ○ | ○ | ○ | × | - | - |
| Appearance of recycled molded body | | | | ○ | ○ | ○ | ○ | ○ | ○ | ○ | ○ | ○ | ○ | ○ | ○ | ○ | ○ | ○ | ○ | ○ |

[Table 16]

Table 16

| | | | Unit | Example 6-15 | Example 6-16 | Example 6-17 | Example 6-18 | Exampl e6-19 | Example 6-20 | Example 6-21 | Example 6-22 |
|---|---|---|---|---|---|---|---|---|---|---|---|
| Surface decorative layer (III) | Polypropylen e-based resin | Kind | | - | - | 6D-1 | 6A-3 | 6D-2 | 6D-3 | 6A-2 | 6D-4 |
| | | MFR | | - | - | 10 | 7.0 | 7.0 | 10 | 10 | 10 |
| Layer (II) | Long-chain branching polypropylen e resin (6C-1) | Kind | | 6C-1-1 | 6C-1-1 | 6C-1-1 | 6C-1-1 | 6C-1-1 | 6C-1-1 | 6C-1-3 | 6C-1-3 |
| | | Blending Amount | wt% | 100 | 100 | 100 | 100 | 100 | 100 | 100 | 100 |
| | Other Polypropylen e resin | Kind | | - | - | - | - | - | - | - | - |
| | | Blending Amount | wt% | - | - | - | - | - | - | - | - |
| | Whole resin composition (B) | MFR (B) | g/10min | 9.0 | 9.0 | 9.0 | 9.0 | 9.0 | 9.0 | 9.0 | 9.0 |
| | | λ | | 7.8 | 7.8 | 7.8 | 7.8 | 7.8 | 7.8 | 7.3 | 7.3 |
| Sealing layer (I) | Polypropylen e-based resin (A) | Kind | | 6A-1 | 6A-1 | 6A-1 | 6A-1 | 6A-1 | 6A-1 | 6A-1 | 6A-1 |
| | | MFR(A) | g/ 10min | 7 | 7 | 7 | 7 | 7 | 7 | 7 | 7 |
| | | Isothermal crystallizatio n time t(A) | sec | 263 | 263 | 263 | 263 | 263 | 263 | 263 | 263 |
| | | Blending | wt% | 50 | 50 | 50 | 50 | 50 | 50 | 50 | 85 |
| | Thermoplasti c resin (E) | Kind | | 6B-1 | 6B-1 | 6B-1 | 6B-1 | 6B-1 | 6B-1 | 6B-1 | 6B-1 |
| | | Blending amount | wt% | 50 | 50 | 50 | 50 | 50 | 50 | 50 | 50 |
| | Resin composition (X). | Isothermal crystallizatio n time t(X) | sec | 2590 | 2590 | 2590 | 2590 | 2590 | 2590 | 2590 | 2590 |
| | | t((X)/t(A) | | 9.8 | 9.8 | 9.8 | 9.8 | 9.8 | 9.8 | 9.8 | 9.8 |
| Substrate | Kind | | | 6X-2 | 6X-3 | 6X-1 | 6X-1 | 6X-1 | 6X-1 | 6X-1 | 6X-1 |

(continued)

| | | Unit | Example 6-15 | Example 6-16 | Example 6-17 | Example 6-18 | Exampl e6-19 | Example 6-20 | Example 6-21 | Example 6-22 |
|---|---|---|---|---|---|---|---|---|---|---|
| Heating time after spring-back | | sec | 0 | 0 | 0 | 0 | 0 | 0 | 0 | 0 |
| Appearance of decorative molded body (thermoformability) | | | ○ | ○ | ○ | ○ | ○ | ○ | ○ | ○ |
| Gloss(60°) | | | 19 | 18 | 86 | 35 | 94 | 32 | 34 | 31 |
| Adhesive force | | N/10mm | 38 | 36 | 38 | 41 | 40 | 37 | 39 | 41 |
| Scratch evaluation | Scratch depth | μm | 3.1 | 3.9 | 3.6 | 2.5 | 2.8 | - | - | - |
| | Whitened appearance | | ○ | ○ | ○ | ○ | ○ | ○ | ○ | ○ |
| Appearance of recycled molded body | | | ○ | ○ | ○ | ○ | ○ | ○ | ○ | ○ |

[Table 17]

Table 17

<table>
<tr><td></td><td></td><td></td><td>Unit</td><td>Example 6-23</td></tr>
<tr><td rowspan="2">Surface decorative layer (III)</td><td rowspan="2">Polypropylene-based resin</td><td>Kind</td><td></td><td>6D-4</td></tr>
<tr><td>MFR</td><td></td><td>10</td></tr>
<tr><td rowspan="6">Layer (II)</td><td rowspan="2">Long-chain branching polypropylene resin (6C-1)</td><td>Kind</td><td></td><td>6C-1-3</td></tr>
<tr><td>Blending Amount</td><td>wt%</td><td>100</td></tr>
<tr><td rowspan="2">Other polypropylene resin</td><td>Kind</td><td></td><td>-</td></tr>
<tr><td>Blending Amount</td><td>wt%</td><td>-</td></tr>
<tr><td rowspan="2">Whole resin composition (B)</td><td>MFR (C)</td><td>g/10min</td><td>9.0</td></tr>
<tr><td>$\lambda$</td><td></td><td>7.3</td></tr>
<tr><td rowspan="8">Sealing layer (I)</td><td rowspan="4">Polypropylene-based resin (A)</td><td>Kind</td><td></td><td>6A-1</td></tr>
<tr><td>MFR(A)</td><td>g/10min</td><td>7</td></tr>
<tr><td>Isothermal crystallization time t(A)</td><td>sec</td><td>263</td></tr>
<tr><td>Blending amount</td><td>wt%</td><td>50</td></tr>
<tr><td rowspan="2">Thermoplastic resin (E)</td><td>Kind</td><td></td><td>6B-1</td></tr>
<tr><td>Blending amount</td><td>wt%</td><td>50</td></tr>
<tr><td rowspan="2">Resin composition (X)</td><td>Isothermal crystallization time t(X)</td><td>sec</td><td>2590</td></tr>
<tr><td>t(X)/t(A)</td><td></td><td>9.8</td></tr>
<tr><td>Substrate</td><td colspan="2">Kind</td><td></td><td>6X-1</td></tr>
<tr><td colspan="3">Heating time after spring-back</td><td>sec</td><td>0</td></tr>
<tr><td colspan="3">Depth of embossment</td><td>$\mu$m</td><td>25</td></tr>
<tr><td colspan="3">Embossment pattern after thermoforming</td><td></td><td>○</td></tr>
</table>

[7: Decorative Film including Sealing Layer (I) composed of Propylene-Ethylene Block Copolymer (F)]

7-2. Used Materials

- Production of Polypropylene-Ethylene Block Copolymer (F)

As the propylene-ethylene block copolymer (F) to be used for the sealing layer (I) of the decorative film, there were used propylene-ethylene block copolymers (7A-1) to (7A-4) obtained in the Production Examples to be mentioned below. Table 18 shows polymerization conditions and polymerization results and Table 19 shows results of polymer analyses.

[Production Example 7A-1: Production of Propylene-Ethylene Block Copolymer (7A-1)]

- Analysis of Catalyst Composition

Ti content: A sample was precisely weighed and, after hydrolysis, the content was measured using a colorimetry. As for a sample after pre-polymerization, the content was calculated using the weight of the sample excluding a preliminarily polymerized polymer.

Silicon compound content: A sample was precisely weighed and decomposed with methanol. By comparing it with a standard sample using gas chromatography, silicon compound concentration in the resulting methanol solution was determined. The content of silicone compounds contained in the sample was calculated from the silicon compound concentration in methanol and the weight of the sample. As for a sample after pre-polymerization, the content was calculated using the weight of the sample excluding a preliminarily polymerized polymer.

Preparation of Preliminarily Polymerized Catalyst

(7-1) Preparation of Solid Catalyst

An autoclave fitted with a stirring device and having a volume of 10 L was thoroughly replaced by nitrogen and 2 L of purified toluene was introduced therein. Thereto was charged 200 g of magnesium diethoxide [$Mg(OEt)_2$] at room temperature, followed by adding 1 L of titanium tetrachloride ($TiCl_4$) slowly. Temperature was raised to 90°C and 50 ml of di-n-butyl phthalate was introduced therein. Thereafter, the temperature was raised to 110°C and reaction was carried out for 3 hours. The reaction product was thoroughly washed with purified toluene. Then, purified toluene was introduced to adjust the total liquid volume to 2 L. After 1 L of $TiCl_4$ was added at room temperature, the temperature was raised to 110°C and reaction was carried out for 2 hours. The reaction product was thoroughly washed with purified toluene. Then, purified toluene was introduced to adjust the total liquid volume to 2 L. After 1 L of $TiCl_4$ was added at room temperature, the temperature was raised to 110°C and reaction was carried out for 2 hours. The reaction product was thoroughly washed with purified toluene. Furthermore, using purified n-heptane, toluene was replaced by n-heptane to obtain a slurry of a solid component. A part of the slurry was sampled and dried. When it was analyzed, the Ti content of the solid component was 2.7% by weight.

Next, an autoclave fitted with a stirring device and having a volume of 20 L was thoroughly replaced by nitrogen and the slurry of the solid component was introduced therein in an amount of 100 g as the solid component. Purified n-heptane was introduced therein to adjust the concentration of the solid component to be 25 g/L. Silicon tetrachloride ($SiCl_4$) was added in an amount of 50 ml and reaction was carried out at 90°C for 1 hour. The reaction product was thoroughly washed with purified n-heptane.

Thereafter, purified n-heptane was introduced therein to adjust the liquid level to 4 L. Thereto were added 30 ml of dimethyldivinylsilane, 30 ml of diisopropyldimethoxysilane [$i\text{-}Pr_2Si(OMe)_2$], and an n-heptane-diluted solution of triethylaluminum ($Et_3Al$) in an amount of 80 g as $Et_3Al$, followed by reaction at 40°C for 2 hours. The reaction product was thoroughly washed with purified n-heptane to obtain a solid catalyst. A part of the obtained solid catalyst was sampled, dried, and analyzed. The solid catalyst contained 1.2% by weight of Ti and 8.9% by weight of $i\text{-}Pr_2Si(OMe)_2$.

(7-2) Pre-polymerization

Using the solid catalyst obtained above, pre-polymerization was carried out according to the following procedure. Purified heptane was introduced into the above slurry to adjust the concentration of the solid catalyst so as to be 20 g/L. After the slurry was cooled to 10°C, an n-heptane-diluted solution of $Et_3Al$ was added in an amount of 10 g as $Et_3Al$ and 280 g of propylene was fed over a period of 4 hours. After the feed of propylene was finished, reaction was continued for further 30 min. Then, the gas-phase part was thoroughly replaced by nitrogen and the reaction product was thoroughly washed with purified n-heptane. The obtained slurry was extracted from the autoclave and vacuum drying was performed to obtain a preliminarily polymerized catalyst. The preliminarily polymerized catalyst contained 2.5 g of polypropylene per g of the solid catalyst. When it was analyzed, the portion of the preliminarily polymerized catalyst from which polypropylene was excluded contained 1.0% by weight of Ti and 8.3% by weight of $i\text{-}Pr_2Si(OMe)_2$.

Using the preliminarily polymerized catalyst, the propylene-ethylene block copolymer (F) was produced according to the following procedure.

(7-3) Production of Propylene-Ethylene Block Copolymer (F)

A propylene-ethylene block copolymer was produced using a two-tank continuous polymerization facility where two fluidized bed type polymerization tanks having an internal volume of 2 $m^3$ were connected in series. As propylene, ethylene, hydrogen, and nitrogen to be used, those purified using general purification catalysts were used. The production amount of the component (F1) in the first polymerization tank and the production amount of the component (F2) in the second polymerization tank were determined from the values of the temperature of cooling water of the heat exchangers to be used for temperature control of the polymerization tanks.

First Polymerization Step: Production of Component (F1) Composed of Propylene Homopolymer

Homopolymerization of propylene was carried out using the first polymerization tank. The polymerization temperature was 65°C, total pressure was 3.0 MPaG (gauge pressure, the same shall apply hereinafter), and the powder hold amount was 40 kg. Propylene, hydrogen, and nitrogen were continuously fed to the polymerization tank and the concentration of propylene and the concentration of hydrogen were regulated so as to be 70.83 mol% and 0.92 mol%, respectively. As an auxiliary catalyst, $Et_3Al$ was continuously fed at a rate of 5.0 g/hour. The preliminarily polymerized catalyst obtained in the above was continuously fed to the polymerization tank so that the production amount of the component (F1) in the first polymerization tank became 20.0 kg/hour. The formed component (F1) was continuously extracted and regulation was performed so that the powder hold amount became constant at 40 kg. The component (F1) extracted from the first polymerization tank was continuously fed to the second polymerization tank and the production of the component (F2) composed of a propylene-ethylene random copolymer was continuously carried out.

Second Polymerization Step: Production of Propylene-Ethylene Random Copolymer Component (F2)

Random copolymerization of propylene and ethylene was carried out using the second polymerization tank. The polymerization temperature was 65°C, total pressure was 2.0 MPaG, and the powder hold amount was 40 kg. Propylene, ethylene, hydrogen, and nitrogen were continuously fed to the polymerization tank and the concentration of propylene, the concentration of ethylene, and the concentration of hydrogen were regulated so as to be 54.29 mol%, 17.14 mol%, and 0.41 mol%, respectively. By continuously feeding ethanol that is a polymerization suppressor, regulation was performed so that the production amount of the propylene-ethylene random copolymer component (F2) in the second polymerization tank became 6.7 kg/h. The thus formed propylene-ethylene block copolymer (F) was continuously extracted and regulation was performed so that the powder hold amount became constant at 40 kg. The propylene-ethylene block copolymer (F) extracted from the second polymerization tank was further transferred to a drying machine and was thoroughly dried.

When a part of the formed propylene-ethylene block copolymer (F) was analyzed, MFR(F) was 7.0 g/10 min and the ethylene content E(F) was 9.5% by weight. The weight ratio W(F1) of the component (F1) and the weight ratio W(F2) of the component (F2) determined from the production amount of the first polymerization step and the production amount of the second polymerization step were 0.75 and 0.25, respectively.

From the thus obtained W(F1), W(F2), and E(F), the ethylene content E(F2) of the propylene-ethylene random copolymer component (F2) was calculated.

For the calculation, the following expression was used:

$$E(F2) = \{E(F)-E(F1)\times W(F1)\}\div W(F2)$$

wherein, since the component (F1) is propylene homopolymer, E(F1) is 0% by weight. The above expression is one where aforementioned one described for E(F) is arranged for E(F2).

The ethylene content E(F2) was 38.0% by weight.

[Production Examples 7A-2 and 7A-3: Production of Propylene-Ethylene Block Copolymers (7A-2) and (7A-3)

Propylene-ethylene block copolymers (7A-2) and (7A-3) were produced in the same manner as in Production Example of the propylene-ethylene block copolymer (7A-1) except that the conditions described in Table 18 were used.

[Table 18]

Table 18

| Production Example | | | 7A-1 | 7A-2 | 7A-3 |
|---|---|---|---|---|---|
| First polymerization | Propylene concentration | mol% | 70.83 | 70.83 | 70.83 |
| | Ethylene concentration | mol% | 0 | 0 | 0 |
| | Hydrogen concentration | mol% | 0.92 | 0.64 | 1.59 |

(continued)

| Production Example | | | | 7A-1 | 7A-2 | 7A-3 |
|---|---|---|---|---|---|---|
| Second Polymerization | Propylene concentration | mol% | 54.29 | 45.72 | 42 |
| | Ethylene concentration | mol% | 17.14 | 25.71 | 29.43 |
| | Hydrogen concentration | mol% | 0.41 | 0.43 | 0.58 |
| Polymerization results | First Polymerization step | kg/hour | 20.0 | 20.0 | 20.0 |
| | Second polymerization step | kg/hour | 6.7 | 5.0 | 3.3 |
| | Total production amount | kg/hour | 26.7 | 25.0 | 23.3 |

[Production Example 7A-4: Production of Propylene-Ethylene Block Copolymer (7A-4)]

(Preparation of Preliminarily Polymerized Catalyst)

(7-1) Chemical Treatment of Silicate Salt

To a 10-L glass-made separable flask equipped with a stirring blade were gradually added 3.75 L of distilled water and subsequently 2.5 kg of concentrated sulfuric acid (96%). At 50°C, 1 kg of montmorillonite (Benclay SL manufactured by Mizusawa Industrial Chemicals, Ltd.; average particle diameter = 25 μm, particle size distribution = 10 to 60 μm) was further dispersed therein, the whole was heated to 90°C, and the temperature was maintained for 6.5 hours. After cooled to 50°C, the slurry was filtrated under reduced pressure to recover a cake. After 7 L of distilled water was added to the cake to obtain a slurry again, filtration was performed. The washing operation was carried out until pH of the washing fluid (filtrate) exceeded 3.5. The recovered cake was dried at 110°C under a nitrogen atmosphere overnight. The weight thereof after drying was 707 g.

(7-2) Drying of Silicate Salt

The chemically treated silicate salt as above was dried in a kiln dryer. Specifications and drying conditions are as follows.
Rotating tube: Cylindrical one, inner diameter of 50 mm, heating band of 550 mm (electric furnace)
Number of rotations of scraping blade: 2 rpm
Angel of inclination: 20/520
Feeding rate of silicate salt: 2.5 g/minute
Gas flow rate: nitrogen, 96 L/hour
Countercurrent drying temperature: 200°C (powder temperature)

(7-3) Preparation of Catalyst

An autoclave having stirring and temperature-regulating devices and having an internal volume of 16 L was thoroughly replaced by nitrogen. Thereto was introduced 200 g of dry silicate salt and were added 1,160 ml of mixed heptane and further 840 ml of a heptane solution (0.60M) of triethylaluminum, followed by stirring at room temperature. After 1 hour, the whole was washed with mixed heptane and the silicate salt slurry was adjusted to 2,000 ml. Then, 9.6 ml of a heptane solution (0.71M) of triisobutylaluminum was added to the silicate salt slurry prepared beforehand, followed by reaction at 25°C for 1 hour. In parallel, 33.1 ml of a heptane solution (0.71M) of triisobutylaluminum was added to 2.180 mg (0.3 mM) of (r)-dichloro[1,1'-dimethylsilyienebis{2-methyl-4-(4-chlorophenyl)-4H-azulenyl}]zircon ium and 870 ml of mixed heptane and the whole was reacted at room temperature for 1 hour. Then, the resulting mixture was added to the silicate salt slurry and, after stirring for 1 hour, mixed heptane was added to adjust the volume to 5,000 ml.

(7-4) Pre-polymerization/Washing

Subsequently, the temperature in tank was raised to 40°C and, when the temperature became stable, propylene was fed at a rate of 100 g/hour to maintain the temperature. After 4 hours, the feed of propylene was stopped and the temperature was maintained for further 2 hours.
After the pre-polymerization was completed, residual monomer was purged, stirring was stopped, and, after still standing for about 10 minutes, 2,400 ml of the supernatant was decanted. Subsequently, 9.5 ml of a heptane solution

of triisobutylaluminum (0.71M) and 5,600 ml of mixed heptane were added thereto, followed by stirring at 40°C for 30 minutes. After still standing for 10 minutes, 5,600 ml of the supernatant was removed. Further, the operation was repeated three times. The component analysis of the final supernatant revealed that the concentration of the organoaluminum component was 1.23 mmol/L, zirconium (Zr) concentration was $8.6\times10^{-6}$ g/L, and the existing amount in the supernatant relative to the charged amount was 0.016%. Subsequently, 170 ml of a heptane solution of triisobutylaluminum (0.71M) was added and then drying under reduced pressure was carried out at 45°C. A preliminarily polymerized catalyst containing 2.0 g of polypropylene per g of the catalyst was obtained.

(7-5) Production of Propylene-Ethylene Block Copolymer (F)

First Polymerization Step: Production of Component (F1) composed of Propylene-Ethylene Random Copolymer

A horizontal reactor (L/D=6, internal volume of 100 L) having a stirring blade was thoroughly dried and the inside was thoroughly replaced by nitrogen gas. In the presence of a polypropylene powder bed, while stirring at the number of rotations of 30 rpm, the prepared preliminarily polymerized catalyst and triisobutylaluminum were continuously fed to an upper stream of the reactor at a rate of 0.444 g/hour (as a solid catalyst amount excluding the preliminarily polymerized powder) and at a rate of 15.0 mmol/hour, respectively. A monomer mixed gas was allowed to pass continuously through the inside of the reactor so that the temperature of the reactor was kept at 65°C and the pressure was kept at 2.00 MPaG and the molar ratio of ethylene/propylene at a gas phase part in the reactor became 0.058 and the hydrogen concentration became 150 ppm, thus performing gas-phase polymerization. The polymer powder formed by the reaction was continuously extracted from a downstream part of the reactor so that the powder bed amount in the reactor became constant. At this time, the polymer extraction amount at the time when a stationary state was achieved was 10.0 kg/hour.
When the propylene-ethylene random copolymer obtained in the first polymerization step was analyzed, the ethylene content was 1.7% by weight.

Second Polymerization Step: Production of Component (F2) composed of Propylene-Ethylene Random Copolymer

The propylene-ethylene copolymer extracted from the first polymerization step was continuously fed to a horizontal reactor (L/D=6, internal volume of 100 L) having a stirring blade. While stirring at number of rotations of 25 rpm, a monomer mixed gas was allowed to pass continuously through the inside of the reactor so that the temperature of the reactor was kept at 70°C and the pressure was kept at 1.88 MPaG and the molar ratio of ethylene/propylene at the gas phase part in the reactor became 0.450 and the hydrogen concentration became 300 ppm, thus performing gas-phase polymerization. The polymer powder formed by the reaction was continuously extracted from the downstream part of the reaction so that the powder bed amount in the reactor became constant. At this time, oxygen was fed as an activity-suppressing agent so that the polymer extraction amount became 18.0 kg/hour, thus regulating the polymerization reaction amount in the second polymerization step.
When the propylene-ethylene block copolymer (7A-4) thus obtained was analyzed, MFR was 7.0 g/10 minutes and the ethylene content was 6.3% by weight.
Table 19 shows the results of polymer analyses of the above propylene-ethylene block copolymers (7A-1) to (7A-4).

[Table 19]

Table 19

| **Production Example** | | | 7A-1 | 7A-2 | 7A-3 | 7A-4 |
|---|---|---|---|---|---|---|
| Propylene-ethylene block copolymer (F) | MFR(F) | g/10 minutes | 7.0 | 2.5 | 6.0 | 7.0 |
| | Tm(F) | °C | 161.0 | 161.0 | 161.0 | 133.0 |
| | E(F) | % by weight | 9.5 | 10.4 | 10.9 | 6.3 |
| Component (F1) | W(F1) | % by weight | 75 | 80 | 86 | 56 |
| | E(F1) | % bv weight | 0.0 | 0.0 | 0.0 | 1.7 |

(continued)

| Production Example | | | 7A-1 | 7A-2 | 7A-3 | 7A-4 |
|---|---|---|---|---|---|---|
| Component (F2) | W(F2) | % by weight | 25 | 20 | 14 | 44 |
| | E(F2) | % by weight | 38.0 | 52.0 | 78.0 | 12.2 |

(Pelletization of Propylene-Ethylene Block Copolymer (F))

In a tumbler, 0.05 parts by weight of tetrakis[methylene-3-(3',5'-di-t-butyl-4-hydroxyphenyl)propionate]methane, 0.10 parts by weight of tris(2,4-di-t-butylphenyl) phosphite, and 0.05 parts by weight of calcium stearate were mixed with 100 parts by weight of each of the propylene-ethylene block copolymers (F) obtained in Production Examples 7A-1 to 7A-4 and the whole was homogenized. The obtained mixture was melt-kneaded at 230°C by means of a twin-screw extruder having a diameter of 35 mm to obtain pellets of each of the propylene-ethylene block copolymers (7A-1) to (7A-4).

7-3. Other Used Materials

As resins for the sealing layers (I) of decorative films, the following polypropylene-based resins were used, in addition to the above propylene-ethylene block copolymers (7A-1) to (7A-4).

(7A-5): Propylene homopolymer (MFR=10 g/10 minutes, Tm=161°C, ethylene content E of 0% by weight, component (F2) is not contained since polymerization only in the first polymerization step is performed), trade name "NOVATEC (registered trademark) FA3KM" manufactured by Japan Polypropylene Corporation, strain hardening degree $\lambda$=0.9

(7A-6): Propylene-$\alpha$-olefin copolymer (MFR=7 g/10 minutes, Tm=146°C, ethylene content E of 2.5% by weight, it is a propylene-$\alpha$-olefin copolymer composed of the component (F1) alone polymerized only in the first polymerization step and does not contain the component (F2)), trade name "NOVATEC (registered trademark) FW3GT" manufactured by Japan Polypropylene Corporation

As resins for the layers (II) of decorative films, the following polypropylene-based resins were used.

(7B-1-1): Propylene homopolymer having a long-chain branch, which was produced by a macromer copolymerization method, trade name "WAYMAX (registered trademark) MFX3" manufactured by Japan Polypropylene Corporation, MFR=8.8 g/10 minutes, strain hardening degree $\lambda$=7.8, Tm=154°C, branching index g' at an absolute molecular weight Mabs of 1,000,000=0.85, the presence of a long-chain branched structure was confirmed by $^{13}$C-NMR measurement.
(7B-1-2): Propylene homopolymer having a long-chain branch, which was produced by a macromer copolymerization method, trade name "WAYMAX (registered trademark) MFX8" manufactured by Japan Polypropylene Corporation, MFR=1.0 g/10 minutes, strain hardening degree $\lambda$=9.7, Tm=154°C, branching index g' at an absolute molecular weight Mabs of 1,000,000=0.89, the presence of a long-chain branched structure was confirmed by $^{13}$C-NMR measurement.
(7B-1-3): Polypropylene-based resin composition (MFR=9.0 g/10 minutes, strain hardening degree $\lambda$=7.3, Tm=154°C) obtained by blending 96% by weight of the polypropylene-based resin (7B-1-1) with 4% by weight of a black pigment MB (EPP-K-120601 manufactured by Polycol Kogyo K.K.)

As resins for the surface decorative layers (III) of decorative films, the following polypropylene-based resins were used.

(7C-1): Polypropylene-based resin composition (MFR=10 g/10 minutes, Tm=164°C) obtained by blending 100% by weight of the polypropylene-based resin (7A-5) with 0.4% by weight of a nucleating agent (trademark "Millad NX8000J" manufactured by Milliken Japan)
(7C-2): Propylene-$\alpha$-olefin copolymer (MFR=7 g/10 minutes, Tm=125°C, Mw/Mn=2.5) by a metallocene catalyst, trade name "WINTEC (registered trademark) WFX4M" manufactured by Japan Polypropylene Corporation
(7C-3): Polypropylene-based resin composition (MFR=7 g/10 minutes, Tm=127°C) obtained by blending 100% by weight of the polypropylene-based resin (7C-2) with 0.4% by weight of a nucleating agent (trademark "Millad NX8000J" manufactured by Milliken Japan)
(7C-4): Polypropylene-based resin composition (MFR=10 g/10 minutes, Tm=161°C) obtained by blending 96% by

weight of the polypropylene-based resin (7A-5) with 4% by weight of a white pigment MB (EPP-W-59578 manufactured by Polycol Kogyo K.K., titanium oxide content of 80% by weight)
(7C-5): Polypropylene-based resin composition (MFR=10 g/10 minutes, Tm=161°C) obtained by blending 96% by weight of the polypropylene-based resin (7A-5) with 4% by weight of a silver pigment MB (PPCM913Y-42 SILVER21X manufactured by TOYOCOLOR Co., Ltd.)

7-4. Production of Resin Molded Body (Substrate)

Using the following polypropylene-based resins (7X-1) to (7X-3), injection molded bodies (substrates) were obtained by the following method.

(7X-1): Propylene homopolymer (MFR=40 g/10 minutes, Tm=165°C), trade name "NOVATEC (registered trademark) MA04H" manufactured by Japan Polypropylene Corporation
(7X-2): Propylene ethylene block copolymer (MFR=30 g/10 minutes, Tm=164°C), trade name "NOVATEC (registered trademark) NBC03HR" manufactured by Japan Polypropylene Corporation
(7X-3): Polypropylene-based resin composition obtained by blending 60% by weight of the polypropylene-based resin (7X-2) with 20% of EBR (TAFMER (registered trademark) A0550S manufactured by Mitsui Chemicals, inc.) of MFR=1.0 and 20% by weight of an inorganic filler (TALC P-6 manufactured by Nippon Talc Co., Ltd., average particle size of 4.0 μm)
Injection molding machine: "IS100GN" manufactured by Toshiba Machine Co., ltd., mold clamping pressure of 100 tons
Cylinder temperature: 200°C
Mold temperature: 40°C
Injection mold: A flat plate of width×height×thickness = 120 mm×120 mmx3 mm
Condition control: Kept in a constant-temperature constant-humidity chamber at a temperature of 23°C and a humidity of 50%RH for 5 days

Moreover, on the obtained injection molded body, scratches were formed by the following method to be a resin molded body (substrate).
Processing for scratch evaluation: In a constant-temperature constant-humidity chamber at a temperature of 23°C and a humidity of 50%RH, using a scratch tester ("SCRATCH&MAR TESTER" manufactured by ROCKWOOD SYSTEMS AND EQUIPMENT), with a load of 25 N, each of the above injection molded bodies was scratched with a scratching tip subjected to shape (curvature radius of 0.5 mm, ball shape) processing, at a scratching rate of 100 mm/minute.
When the scratches formed on the surface of the resin molded body (substrate) were measured by means of a shape-measuring laser microscope ("VX-X200" manufactured by KEYENCE Corporation), the depth of the scratches was 16 μm. Further, the scratches became whitened scratches.

{Example 7-1}

- Production of Decorative Film

There was used a 2-kind 2-layer T-die having a lip opening of 0.8 mm and a die width of 400 mm, to which an extruder-1 for a sealing layer (I) having a nozzle diameter of 30 mm (diameter) and an extruder-2 for a layer (II) having a nozzle diameter of 40 mm (diameter) had been connected. The polypropylene-ethylene block copolymer (7A-1) was charged into the extruder-1 for a sealing layer (I) and the polypropylene-based resin (7B-1-1) having a long-chain branched structure was charged into the extruder-2 for a layer (II), and melt-extrusion was performed under conditions of a resin temperature of 240°C, a discharge amount from the extruder-1 for a sealing layer (I) of 4 kg/h, and a discharge amount from the extruder-2 for a layer (II) of 12 kg/h. The melt-extruded film was cooled and solidified while pushing it to a first roll rotating at 3 m/min at 80°C with an air knife so that the sealing layer (I) came outside, thereby obtaining a two-layered unstretched film where a sealing layer (I) having a thickness of 50 μm and a layer (II) having a thickness of 150 μm were laminated.

- Three-Dimensional Decorative Thermoforming

As the resin molded body (substrate) 5, there was used the injection molded body composed of the polypropylene-based resin (7X-1) obtained in the above.
As a three-dimensional decorative thermoforming apparatus, "NGF-0406-SW" manufactured by Fu-se Vacuum Forming Ltd. was used. As shown in FIG.2 to FIG. 7, a decorative film 1 was cut into a size having a width of 250 mm

and a length of 350 mm and was set to a jig 13 for film fixing having an opening part size of 210 mmx300 mm so that the sealing layer (I) faced to the substrate (resin molded body 5) and the longitudinal direction became the MD direction of the film. The resin molded body (substrate) 5 was attached on a sample-placing stand having a height of 20 mm, which was placed on a table 14 positioned below the jig 13 for film fixing, through "NICETACK NW-K15" manufactured by Nichiban Co., Ltd. The jig 13 for film fixing and the table 14 were placed in upper and lower chamber boxes 11 and 12 and the upper and lower chamber boxes 11 and 12 were closed to make the inside of the chamber boxes a tightly closed state. The chamber boxes were divided into upper and lower ones through the decorative film 1. The upper and lower chamber boxes were vacuum-suctioned and a far-infrared heater 15 placed on the upper chamber box 11 was started at an output of 80% to heat the decorative film 1 in a state that the pressure was reduced from atmospheric pressure (101.3 kPa) to 1.0 kPa. During heating, the vacuum-suction was continued and finally, the pressure was reduced to 0.1 kPa. Immediately after the finish of a spring-back phenomenon that the decorative film 1 was heated to temporarily slacken and thereafter tension returned (i.e., heating time after the spring-back phenomenon was 0 second), the table 14 placed in the lower chamber box 12 was transferred upward to push the resin molded body (substrate) 5 to the decorative film 1 and immediately after that, compressed air was fed so that the pressure in the upper chamber box 11 became 270 kPa to adhere the resin molded body (substrate) 5 and the decorative film 1 closely. Thus, there was obtained a three-dimensional decorative thermoformed article 6 where the decorative film 1 was stuck to the upper surface and side surface of the resin molded body 5.

- Physical Property Evaluation

(7-1) Evaluation of Thermoformability (Appearance of Decorative Molded Body)

A draw-down state of the decorative film at the time of three-dimensional decorative thermoforming and a sticking state of the decorative film of the decorative molded body where the decorative film had been stuck to the substrate were visually observed and evaluated according to the criteria shown below.

O: Since the contact between the substrate and the decorative film is simultaneously achieved over a whole contact surface without generating draw-down of the decorative film at the time of three-dimensional decorative thermoforming, uneven contact is not generated and the film is uniformly stuck.
x: Since draw-down of the decorative film remarkably occurs at the time of three-dimensional decorative thermoforming, uneven contact is generated all over the surface of the substrate.

(7-2) Adhesive Force between Resin Molded Body (Substrate) and Decorative Film

"Craft adhesive tape No. 712N" manufactured by Nitoms, Inc. was cut into a size having a width of 75 mm and a length of 120 mm and was attached to a resin molded body (substrate) in the range of 75 mm×120 mm from the edge part of the resin molded body (substrate) to perform a masking treatment (a surface exposed part of the substrate had a width of 45 mm and a length of 120 mm). The resin molded body (substrate) was placed on a three-dimensional decorative thermoforming apparatus NGF-0406-SW so that the masking face of the molded body came into contact with the decorative film, and three-dimensional decorative thermoforming was conducted.
The decorative film face of the obtained decorative molded body was cut to the substrate surface at a width of 10 mm using a cutter in a vertical direction toward a longitudinal direction of the adhesive tape to prepare a test specimen. In the obtained test specimen, the adhesion face between the substrate and the decorative film has a width of 10 mm and a length of 45 mm. It was fixed to a tensile tester so that the substrate part and the decorative film part of the test specimen made an angle of 180°, and 180° peeling strength of the adhesion face was measured at a tensile rate of 200 mm/min. Maximum strength (N/10 mm) at peeling or at break was measured five times and averaged strength was taken as adhesive force.

(7-3) Evaluation of Effect of Making Scratches Inconspicuous

Depth of scratches at the portion where scratches were present on a three-dimensional decorative thermoformed product of a resin molded body (substrate) which had been scratched with a load of 25 N was measured by means of a shape-measuring laser microscope ("VX-X200" manufactured by KEYENCE Corporation). The number of measurement times was 5 times (n=5) and an average value thereof was taken as scratch depth (μm).
Moreover, as whitened appearance, it was visually judged according to the following criteria whether whitened scratches of the molded body (substrate), which had been scratched with a load of 25 N, were made inconspicuous or not by the decorative film, and thus evaluation was performed.

O: Scars of whitened scratches are inconspicuous and appearance is excellent.
x: Whitened scratches remain and appearance is poor.

(7-4) Evaluation of Recyclability

The obtained decorative molded body was pulverized and a recycled molded body was obtained by injection molding in the same manner as in the production of the resin molded body (substrate). The appearance was visually evaluated. On excellent in appearance was evaluated as "O".

(7-5) Gloss

The gloss in the vicinity of the center of the decorative molded body to which a decorative film had been stuck was measured at an incident angle of 60° using Gloss Meter VG2000 manufactured by Nippon Denshoku Industries Co., Ltd. The measurement method conformed to JIS K7105-1981.
Table 20 shows results of physical property evaluation of the obtained decorative molded body and the like.
Since the propylene-ethylene block copolymer (F) and the polypropylene-based resin (B) satisfied all the requirements of the present invention, the obtained decorative molded body was excellent in appearance and adhesive force, and scratches were made inconspicuous. Moreover, the recycled molded body was excellent in appearance.

{Example 7-2}

Evaluation was performed in the same manner as in Example 7-1 except that, in the production of the decorative film of Example 7-1, the polypropylene-based resin (7B-1-1) having a long-chain branched structure used for the layer (II) was changed to one obtained by blending the polypropylene-based resin (7B-1-1) having a long-chain branched structure and the propylene homopolymer (7A-5) so as to be a weight ratio of 30:70. Table 20 shows evaluation results.
Since the propylene-ethylene block copolymer (F) and the polypropylene-based resin composition (B) satisfied all the requirements of the present invention, the obtained decorative molded body was excellent in appearance and adhesive force, and scratches were made inconspicuous. Moreover, the recycled molded body was excellent in appearance.

{Example 7-3}

Evaluation was performed in the same manner as in Example 7-1 except that, in the production of the decorative film of Example 7-1, the polypropylene-based resin (7B-1-1) having a long-chain branched structure used for the layer (II) was changed to one obtained by blending the polypropylene-based resin (7B-1-1) having a long-chain branched structure and the propylene homopolymer (7A-5) so as to be a weight ratio of 5:95. Table 20 shows evaluation results.
Since the propylene-ethylene block copolymer (F) and the polypropylene-based resin composition (B) satisfied all the requirements of the present invention, the obtained decorative molded body was excellent in appearance and adhesive force, and scratches were made inconspicuous. Moreover, the recycled molded body was excellent in appearance.

{Example 7-4}

Evaluation was performed in the same manner as in Example 7-1 except that, in the production of the decorative film of Example 7-1, the polypropylene-based resin (7B-1-1) having a long-chain branched structure used for the layer (II) was changed to the polypropylene-based resin (7B-1-2) having a long-chain branched structure. Table 20 shows evaluation results.
Since the propylene-ethylene block copolymer (F) and the polypropylene-based resin (B) satisfied all the requirements of the present invention, the obtained decorative molded body was excellent in appearance and adhesive force, and scratches were made inconspicuous. Moreover, the recycled molded body was excellent in appearance.

{Example 7-5}

Evaluation was performed in the same manner as in Example 7-1 except that, in the production of the decorative film of Example 7-1, the polypropylene-based resin (7B-1-1) having a long-chain branched structure used for the layer (II) was changed to one obtained by blending the polypropylene-based resin (7B-1-2) having a long-chain branched structure and the propylene homopolymer (7A-5) so as to be a weight ratio of 30:70. Table 20 shows evaluation results.
Since the propylene-ethylene block copolymer (F) and the polypropylene-based resin composition (B) satisfied

all the requirements of the present invention, the obtained decorative molded body was excellent in appearance and adhesive force, and scratches were made inconspicuous. Moreover, the recycled molded body was excellent in appearance.

{Example 7-6}

Evaluation was performed in the same manner as in Example 7-1 except that, in the production of the decorative film of Example 7-1, the polypropylene-based resin (7B-1-1) having a long-chain branched structure used for the layer (II) was changed to one obtained by blending the polypropylene-based resin (7B-1-2) having a long-chain branched structure and the propylene homopolymer (7A-5) so as to be a weight ratio of 5:95. Table 20 shows evaluation results.

Since the propylene-ethylene block copolymer (F) and the polypropylene-based resin composition (B) satisfied all the requirements of the present invention, the obtained decorative molded body was excellent in appearance and adhesive force, and scratches were made inconspicuous. Moreover, the recycled molded body was excellent in appearance.

{Example 7-7}

Evaluation was performed in the same manner as in Example 7-1 except that, in the production of the decorative film of Example 7-1, the propylene-ethylene block copolymer (7A-1) used for the sealing layer (I) was changed to the polypropylene-ethylene block copolymer (7A-2). Table 20 shows evaluation results.

Since the propylene-ethylene block copolymer (F) and the polypropylene-based resin (B) satisfied all the requirements of the present invention, the obtained decorative molded body was excellent in appearance and adhesive force, and scratches were made inconspicuous. Moreover, the recycled molded body was excellent in appearance.

{Example 7-8}

Evaluation was performed in the same manner as in Example 7-1 except that, in the production of the decorative film of Example 7-1, the propylene-ethylene block copolymer (7A-1) used for the sealing layer (I) was changed to the polypropylene-ethylene block copolymer (7A-3). Table 20 shows evaluation results.

Since the propylene-ethylene block copolymer (F) and the polypropylene-based resin (B) satisfied all the requirements of the present invention, the obtained decorative molded body was excellent in appearance and adhesive force, and scratches were made inconspicuous. Moreover, the recycled molded body was excellent in appearance.

{Example 7-9}

Evaluation was performed in the same manner as in Example 7-1 except that, in the production of the decorative film of Example 7-1, the propylene-ethylene block copolymer (7A-1) used for the sealing layer (I) was changed to the polypropylene-ethylene block copolymer (7A-4). Table 20 shows evaluation results.

Since the propylene-ethylene block copolymer (F) and the polypropylene-based resin (B) satisfied all the requirements of the present invention, the obtained decorative molded body was excellent in appearance and adhesive force, and scratches were made inconspicuous. Moreover, the recycled molded body was excellent in appearance.

{Example 7-10}

In the production of the decorative film, there was used a 3-kind 3-layer T-die having a lip opening of 0.8 mm and a die width of 400 mm, to which an extruder-1 for a sealing layer (I) having a nozzle diameter of 30 mm (diameter), an extruder-2 for a layer (II) having a nozzle diameter of 40 mm (diameter), and an extruder-3 for a surface decorative layer (III) having a nozzle diameter of 30 mm (diameter), had been connected. The propylene-ethylene block copolymer (7A-1) was charged into the extruder-1 for a sealing layer (I), the polypropylene-based resin (7B-1-1) having a long-chain branched structure was charged into the extruder-2 for a layer (II), and the polypropylene homopolymer (7A-5) was charged into the extruder-3 for a surface decorative layer (III), and melt-extrusion was performed under conditions of a resin temperature of 240°C, a discharge amount from the extruder-1 for a sealing layer (I) of 4 kg/h, a discharge amount from the extruder-1 for a layer (II) of 8 kg/h, and a discharge amount from the extruder-1 for a surface decorative layer (III) of 4 kg/h.

The melt-extruded film was cooled and solidified while pushing it to a first roll rotating at 3 m/min at 80°C with an air knife so that the surface decorative layer (III) came into contact, thereby obtaining a three-layered unstretched film where a sealing layer (I) having a thickness of 50 μm, a layer (II) having a thickness of 100 μm, and a surface decorative layer (III) having a thickness of 50 μm were laminated.

Evaluation was performed in the same manner as in Example 7-1 except that the three-layered unstretched film obtained above was used. Table 20 shows obtained results. Since the propylene-ethylene block copolymer (F) and the polypropylene-based resin (B) satisfied all the requirements of the present invention, the obtained decorative molded body was excellent in appearance and adhesive force, and scratches were made inconspicuous. Moreover, the recycled molded body was excellent in appearance (evaluation: O). Furthermore, by providing the surface decorative layer (III) composed of the polypropylene-based resin, a decorative molded body more excellent in surface gloss could be obtained.

[Table 20]

Table 20

| | | | Unit | Example 7-1 | Example 7-2 | Example 7-3 | Example 7-4 | Example 7-5 | Example 7-6 | Example 7-7 | Example 7-8 | Example 7-9 | Example 7-10 |
|---|---|---|---|---|---|---|---|---|---|---|---|---|---|
| Surface decorative layer (III) | Kind | | | - | - | - | - | - | - | - | - | - | 7A-5 |
| | MFR | | g/10min | - | - | - | - | - | - | - | - | - | 10 |
| Layer (II) | Long-chain branching PP (7B-1) | Kind | | 7B-1-1 | 7B-1-1 | 7B-1-1 | 7B-1-2 | 7B-1-2 | 7B-1-2 | 7B-1-1 | 7B-1-1 | 7B-1-1 | 7B-1-1 |
| | | Ratio | wt% | 100 | 30 | 5 | 100 | 30 | 5 | 100 | 100 | 100 | 100 |
| | Other PP | Kind | | - | 7A-5 | 7A-5 | - | 7A-5 | 7A-5 | - | - | - | - |
| | | Ratio | wt% | - | 70 | 95 | - | 70 | 95 | - | - | - | - |
| | Whole composition (B) | MFR | g/10min | 9.0 | 9.5 | 9.9 | 1.0 | 5.1 | 9.8 | 9.0 | 9.0 | 9.0 | 9.0 |
| | | $\lambda$ | | 7.8 | 2.6 | 1.4 | 9.7 | 4.0 | 1.6 | 7.8 | 7.8 | 7.8 | 7.8 |
| Sealing layer (I) | Propylene-ethylene block copolymer (F) | Kind | | 7A-1 | 7A-1 | 7A-1 | 7A-1 | 7A-1 | 7A-1 | 7A-2 | 7A-3 | 7A-4 | 7A-1 |
| Substrate | Kind | | | 7X-1 | 7X-1 | 7X-1 | 7X-1 | 7X-1 | 7X-1 | 7X-1 | 7X-1 | 7X-1 | 7X-1 |
| Heating time after finish of spring-back | | | sec | 0 | 0 | 0 | 0 | 0 | 0 | 0 | 0 | 0 | 0 |
| Appearance of decorative molded body | | | | ○ | ○ | ○ | ○ | ○ | ○ | ○ | ○ | ○ | ○ |
| Adhesive force | | | N(10mm | 28 | 27 | 25 | 29 | 28 | 30 | 23 | 19 | 25 | 27 |
| Scratch evaluation | Depth | | µm | 3.9 | 3.6 | 3.7 | 3.9 | 3.8 | 3.5 | 2.9 | 3.6 | 2.6 | 3.1 |
| | Whitened appearance | | | ○ | ○ | ○ | ○ | ○ | ○ | ○ | ○ | ○ | ○ |
| Gloss(60°) | | | % | 20 | 23 | 27 | 15 | 21 | 26 | 19 | 21 | 20 | 35 |
| Appearance of recycled molded body | | | | ○ | ○ | ○ | ○ | ○ | ○ | ○ | ○ | ○ | ○ |

{Comparative Example 7-1}

Evaluation was performed in the same manner as in Example 7-1 except that, in the production of the decorative film of Example 7-1, the propylene-ethylene block copolymer (7A-1) used for the sealing layer (I) was changed to the propylene homopolymer (7A-5) and the polypropylene-based resin (7B-1-1) having a long-chain branched structure was not blended and the propylene homopolymer (7A-5) alone was used in the layer (II). Table 21 shows evaluation results.
Since the propylene homopolymer (7A-5) used for the sealing layer (I) did not contain the component (F2), adhesive force was small. Since the polypropylene-based resin (B) was not contained in the layer (II), draw-down of the film was severe and the appearance was poor, so that evaluation on scratches and surface gloss was not performed.

{Comparative Example 7-2}

Evaluation was performed in the same manner as in Example 7-1 except that, in the production of the decorative film of Example 7-1, the propylene-ethylene block copolymer (7A-1) used for the sealing layer (I) was changed to the propylene-α-olefin copolymer (7A-6) and the polypropylene-based resin (7B-1-1) having a long-chain branched structure was not blended and the propylene homopolymer (7A-5) alone was used in the layer (II). Table 21 shows evaluation results.
Since the propylene-α-olefin copolymer (7A-6) used for the sealing layer (I) did not contain the component (F2), adhesive force was small. Since the polypropylene-based resin (B) was not contained in the layer (II), draw-down of the film was severe and the appearance was poor, so that evaluation on scratches and surface gloss was not performed.

{Reference Example 7-3}

Evaluation was performed in the same manner as in Example 7-1 except that, in the production of the decorative film of Example 7-1, the propylene-ethylene block copolymer (7A-1) used for the sealing layer (I) was changed to the propylene homopolymer (7A-5). Table 21 shows evaluation results.
Since the propylene homopolymer (7A-5) used for the sealing layer (I) did not contain the component (F2), adhesive force was small and the emergence of the scratches could not be sufficiently suppressed.

{Comparative Example 7-4}

Evaluation was performed in the same manner as in Example 7-1 except that, in the production of the decorative film of Example 7-1, the polypropylene-based resin (7B-1-1) having a long-chain branched structure was not blended and the propylene homopolymer (7A-5) alone was used in the layer (II). Table 21 shows evaluation results.
Since the polypropylene-based resin (B) was not contained in the layer (II), draw-down of the film was severe and the appearance was poor, so that evaluation on scratches and surface gloss was not performed.

{Example 7-11}

Evaluation was performed in the same manner as in Example 7-1 except that, in the three-dimensional decorative thermoforming of Example 7-1, the substrate was changed to the injection molded body using the resin (7X-2). Table 22 shows obtained results.
Since the propylene-ethylene block copolymer (F) and the polypropylene-based resin composition (B) satisfied all the requirements of the present invention, the obtained decorative molded body was excellent in appearance and adhesive force, and scratches were made inconspicuous. Moreover, the recycled molded body was excellent in appearance.

{Example 7-12}

Evaluation was performed in the same manner as in Example 7-1 except that, in the three-dimensional decorative thermoforming of Example 7-1, the substrate was changed to the injection molded body using the resin (7X-3). Table 22 shows obtained results.
Since the propylene-ethylene block copolymer (F) and the polypropylene-based resin composition (B) satisfied all the requirements of the present invention, the obtained decorative molded body was excellent in appearance and adhesive force, and scratches were made inconspicuous. Moreover, the recycled molded body was excellent in appearance.

{Example 7-13}

Evaluation was performed in the same manner as in Example 7-10 except that, in the production of the decorative film of Example 7-10, the polypropylene-based resin (7A-5) charged into the extruder-3 for a surface decorative layer (III) was changed to the polypropylene-based resin (7C-1). Table 22 shows obtained results.

Since the propylene-ethylene block copolymer (F) and the polypropylene-based resin composition (B) satisfied all the requirements of the present invention, the obtained decorative molded body was excellent in appearance and adhesive force, and scratches were made inconspicuous. Moreover, the recycled molded body was excellent in appearance. Furthermore, the polypropylene-based resin (7C-1) to which a nucleating agent had been added was laminated as the surface decorative layer (III) at the uppermost surface side, so that a result of excellent gloss was observed.

{Example 7-14}

Evaluation was performed in the same manner as in Example 7-10 except that, in the production of the decorative film of Example 7-10, the polypropylene-based resin (7A-5) charged into the extruder-3 for a surface decorative layer (III) was changed to the polypropylene-based resin (7C-2). Table 22 shows obtained results.

Since the propylene-ethylene block copolymer (F) and the polypropylene-based resin composition (B) satisfied all the requirements of the present invention, the obtained decorative molded body was excellent in appearance and adhesive force, and scratches were made inconspicuous. Moreover, the recycled molded body was excellent in appearance. Furthermore, the polypropylene-based resin (7C-2) was laminated as the surface decorative layer (III) at the uppermost surface side, so that a result of excellent gloss was observed.

{Example 7-15}

Evaluation was performed in the same manner as in Example 7-10 except that, in the production of the decorative film of Example 7-10, the polypropylene-based resin (7A-5) charged into the extruder-3 for a surface decorative layer (III) was changed to the polypropylene-based resin (7C-3). Table 22 shows obtained results.

Since the propylene-ethylene block copolymer (F) and the polypropylene-based resin composition (B) satisfied all the requirements of the present invention, the obtained decorative molded body was excellent in appearance and adhesive force, and scratches were made inconspicuous. Moreover, the recycled molded body was excellent in appearance. Furthermore, the polypropylene-based resin (7C-3) to which a nucleating agent had been added was laminated as the surface decorative layer (III) at the uppermost surface side, so that a result of excellent gloss was observed.

{Example 7-16}

Evaluation was performed in the same manner as in Example 7-10 except that, in the production of the decorative film of Example 7-10, the polypropylene-based resin (7A-5) charged into the extruder-3 for a surface decorative layer (III) was changed to the polypropylene-based resin (7C-4). Table 22 shows obtained results.

Since the propylene-ethylene block copolymer (F) and the polypropylene-based resin composition (B) satisfied all the requirements of the present invention, the obtained decorative molded body was excellent in appearance and adhesive force. Moreover, coupled with the sticking of the white-colored decorative film, the scratches were sufficiently hidden to such a degree that the scratched place was not able to identify. Therefore, the scratch depth was not measured. Moreover, since the surface decorative layer (III) excellent in gloss was colored white, appearance was excellent.

{Example 7-17}

Evaluation was performed in the same manner as in Example 7-10 except that, in the production of the decorative film of Example 7-10, the polypropylene-based resin (7B-1-1) was changed to the polypropylene-based resin (7B-1-3). Table 22 shows obtained results.

Since the propylene-ethylene block copolymer (F) and the polypropylene-based resin composition (B) satisfied all the requirements of the present invention, the obtained decorative molded body was excellent in appearance and adhesive force. Moreover, coupled with the sticking of the black-colored decorative film, the scratches were sufficiently hidden to such a degree that the scratched place was not able to identify. Therefore, the scratch depth was not measured. Moreover, since the layer (II) was colored black, appearance was excellent. Furthermore, the polypropylene-based resin (7A-5) was laminated as the surface decorative layer (III) at the uppermost surface side, so that a result of excellent gloss was observed.

{Example 7-18}

Evaluation was performed in the same manner as in Example 7-17 except that, in the production of the decorative film of Example 7-17, the polypropylene-based resin (7A-5) charged into the extruder-3 for a surface decorative layer (III) was changed to the polypropylene-based resin (7C-5). Table 22 shows obtained results.

Since the propylene-ethylene block copolymer (F) and the polypropylene-based resin composition (B) satisfied all the requirements of the present invention, the obtained decorative molded body was excellent in appearance and adhesive force. Moreover, coupled with the sticking of the colored decorative film, the scratches were sufficiently hidden to such a degree that the scratched place was not able to identify. Therefore, the scratch depth was not measured. Moreover, the polypropylene-based resin (7C-5) was laminated as the surface decorative layer (III) at the uppermost surface side, so that a result of excellent gloss was observed. Further, since the layer (II) was colored black and the surface decorative layer (III) was colored silver, the film became a metallic film and appearance was excellent.

{Example 7-19}

- Production of Decorative Film

In the production of the decorative film of Example 7-18, melt-extrusion was performed under conditions of a discharge amount from the extruder-1 for a sealing layer (I) of 4 kg/h, a discharge amount from the extruder-2 for a layer (II) of 12 kg/h, and a discharge amount from the extruder-3 for a surface decorative layer (III) of 4 kg/h and the obtained three-layered unstretched film was slit into a width of 200 mm, thereby obtaining a three-layered unstretched film where a surface decorative layer (III) having a thickness of 50 μm, a layer (II) having a thickness of 150 μm, and a sealing layer (I) having a thickness of 50 μm were laminated.

- Production of Embossed Film

As an embossing apparatus, an electric heating type test embossing machine manufactured by YURIROLL Co., Ltd. was used. The electric heating type test embossing machine has a mechanism of transferring an uneven shape at an upper stage to a film surface by heating and pressing the film with a heatable roll (embossing roll) having an uneven shape placed at an upper stage and a smooth roll placed at a lower stage. In the embossing roll, a hairline pattern having a depth of 30 μm was used.

The three-layered unstretched film obtained by the production of the decorative film was fed between two rolls of the embossing machine so that the surface decorative layer (III) came into contact with the embossing roll. By transferring the embossment under conditions of an embossing roll temperature of 145°C, a contact pressure of 3 MPa, and a roll speed of 3 m/min, there was obtained a decorative film where the hairline pattern was transferred on the surface of the surface decorative layer (III).

- Three-Dimensional Decorative Thermoforming

A three-dimensional decorative thermoformed article was obtained in the same manner as in Example 7-1.

- Evaluation of Physical Properties

(7-1) Evaluation of Embossment Transfer

Depth of the hairline pattern portion provided on the surface decorative layer of the obtained decorative film was measured by means of a shape-measuring laser microscope ("VX-X200" manufactured by KEYENCE Corporation). The number of measurement times was 5 times (n=5) and an average value thereof was taken as depth of embossment (μm).

(7-2) Evaluation of Embossment Pattern after Thermoforming

It was visually observed how the embossment pattern remained after three-dimensional decorative thermoforming and evaluation was performed according to the following criteria.

○: The embossment pattern remains on the surface of the three-dimensional decorative thermoformed article after three-dimensional decorative thermoforming and designability is excellent.
x: The embossment pattern disappears on most of the surface of the three-dimensional decorative thermoformed

article after three-dimensional decorative thermoforming and designability is poor.

Table 23 shows evaluation results of physical properties of the obtained decorative molded body and the like.

The depth of embossment of the film obtained by the production of the embossed film was so excellent as 25 μm. Moreover, also on the surface of the three-dimensional decorative thermoformed article after three-dimensional decorative thermoforming, the hairline pattern strongly remained and thus designability was excellent.

[Table 21]

Table 21

| | | | Unit | Comparative Example 7-1 | Comparative Example 7-2 | Reference Example 7-3 | Comparative Example 7-4 |
|---|---|---|---|---|---|---|---|
| Surface decorative layer (III) | Kind | | | - | - | - | - |
| | MFR | | g/ 10min | - | - | - | - |
| Layer (II) | Long-chain branching PP (7B-1) | Kind | | none | none | 7B-1-1 | none |
| | | Ratio | wt% | 0 | 0 | 100 | 0 |
| | Other PP | Kind | | 7A-5 | 7A-5 | - | 7A-5 |
| | | Ratio | wt% | 100 | 100 | - | 100 |
| | Whole | MFR | g/ 10min | 10 | 10 | 9.0 | 10 |
| | composition (B) | λ | | 0.9 | 0.9 | 7.8 | 0.9 |
| Sealing layer (I) | Propylene-ethylene block copolymer (F) | Kind | | 7A-5 | 7A-6 | 7A-5 | 7A-1 |
| Substrate | Kind | | | 7X-1 | 7X-1 | 7X-1 | 7X-1 |
| Heating time after spring-back | | | sec | 0 | 0 | 0 | 0 |
| Appearance of decorative molded body | | | | × | × | ○ | × |
| Adhesive force | | | N/ 10mm | 1 | 3 | 2 | 25 |
| Scratch evaluation | Depth | | μm | - | - | 9.5 | - |
| | Whitened appearance | | | - | - | × | - |
| GLOSS(60°) | | | % | - | - | 21 | - |
| Appearance of recycled molded body | | | | ○ | ○ | ○ | ○ |

[Table 22]

Table 22

| | | | Unit | Example 7-11 | Example 7-12 | Example 7-13 | Example 7-14 | Example 7-15 | Example 7-16 | Example 7-17 | Example 7-18 |
|---|---|---|---|---|---|---|---|---|---|---|---|
| Surface decorative layer (III) | Kind | | | - | - | 7C-1 | 7C-2 | 7C-3 | 7C-4 | 7A-5 | 7C-5 |
| | MFR | | g/ 10min | - | - | 10 | 7.0 | 7.0 | 10 | 10 | 10 |
| Layer (II) | Long-chain branching PP (7B-1) | Kind | | 7B-1-1 | 7B-1-1 | 7B-1-1 | 7B-1-1 | 7B-1-1 | 7B-1-1 | 7B-1-3 | 7B-1-3 |
| | | Ratio | wt% | 100 | 100 | 100 | 100 | 100 | 100 | 100 | 100 |
| | Other PP | Kind | | - | - | - | - | - | - | - | - |
| | | Ratio | wt% | - | - | - | - | - | - | - | - |
| | Whole composition (B) | MFR | g/ 10min | 9.0 | 9.0 | 9.0 | 9.0 | 9.0 | 9.0 | 9.0 | 9.0 |
| | | λ | | 7.8 | 7.8 | 7.8 | 7.8 | 7.8 | 7.8 | 7.3 | 7.3 |
| Sealing layer (I) | Propylene-ethylene block copolymer (F) | Kind | | 7A-1 | 7A-1 | 7A-1 | 7A-1 | 7A-1 | 7A-1 | 7A-1 | 7A-1 |
| Substrate | Kind | | | 7X-2 | 7X-3 | 7X-1 | 7X-1 | 7X-1 | 7X-1 | 7X-1 | 7X-1 |
| Heating time after spring-back | | | sec | 0 | 0 | 0 | 0 | 0 | 0 | 0 | 0 |
| Appearance of decorative molded body | | | | ○ | ○ | ○ | ○ | ○ | ○ | ○ | ○ |
| Adhesive force | | | N/ 10mm | 30 | 29 | 30 | 31 | 28 | 29 | 28 | 31 |
| Scratch evaluation | Depth | | μm | 2.9 | 2.9 | 3.0 | 3.5 | 3.2 | - | - | - |
| | Whitened appearance | | | ○ | ○ | ○ | ○ | ○ | ○ | ○ | ○ |
| GLOSS(60°) | | | % | 18 | 17 | 83 | 31 | 96 | 30 | 31 | 31 |
| Appearance of recycled molded body | | | | ○ | ○ | ○ | ○ | ○ | ○ | ○ | ○ |

[Table 23]

Table 23

| | | | Unit | Example 7-19 |
|---|---|---|---|---|
| Surface decorative layer (III) | Kind | | | 7C-5 |
| | MFR | | g/10min | 10 |
| Layer (II) | Long-chain branching PP (7B-1) | Kind | | 7B-1-3 |
| | | Ratio | wt% | 100 |
| | Other PP | Kind | | - |
| | | Ratio | wt% | - |
| | Whole composition (B) | MFR | p/10min | 9.0 |
| | | λ | | 7.3 |
| Sealing layer (I) | Propylene-ethylene block copolymer (F) | Kind | | 7A-1 |
| Substrate | Kind | | | 7X-1 |
| Heating time after spring-back | | | sec | 0 |
| Depth of embossment | | | μm | 25 |
| Embossment pattern after thermoforming | | | | ○ |

[8. Decorative Film including Sealing Layer (I) composed of Olefin Adhesive Resin (G)]

8-2. Used Materials

(8-1) Polypropylene-based Resins

The following polypropylene-based resins were used.

(8A-1-1): Propylene homopolymer having a long-chain branch, which was produced by a macromer copolymerization method, trade name "WAYMAX (registered trademark) MFX8" manufactured by Japan Polypropylene Corporation, MFR=1.0 g/10 minutes, strain hardening degree λ=9.7, Tm=154°C, branching index g' at an absolute molecular weight Mabs of 1,000,000=0.89, the presence of a long-chain branched structure was confirmed by $^{13}$C-NMR measurement.

(8A-1-2): Propylene homopolymer having a long-chain branch, which was produced by a macromer copolymerization method, trade name "WAYMAX (registered trademark) MFX3" manufactured by Japan Polypropylene Corporation, MFR=8.8 g/10 minutes, strain hardening degree λ=7.8, Tm=154°C, branching index g' at an absolute molecular weight Mabs of 1,000,000=0.85, the presence of a long-chain branched structure was confirmed by $^{13}$C-NMR measurement.

(8A-1-3): Propylene homopolymer having a long-chain branch, which was produced by a crosslinking method, trade name "Daproy (registered trademark) WB140" manufactured by Borealis AG, MFR=2.2 g/10 minutes, strain hardening degree λ=10.6, Tm=158°C, branching index g' at an absolute molecular weight Mabs of 1,000,000=0.58, the presence of a long-chain branched structure was confirmed by $^{13}$C-NMR measurement.

(8A-1-4): Polypropylene-based resin composition (MFR=1.0 g/10 minutes, strain hardening degree λ=9.3) obtained by blending 96% by weight of the polypropylene-based resin (8A-1-1) with 4% by weight of a black pigment MB (EPP-K-120601 manufactured by Polycol Kogyo K.K.)

(8A-2-1): Propylene homopolymer having no long-chain branch (MFR=10 g/10 minutes, Tm=161°C, strain hardening degree λ=1.0), trade name "NOVATEC (registered trademark) FA3KM" manufactured by Japan Polypropylene Corporation, branching index g' at an absolute molecular weight Mabs of 1,000,000=1.0, the absence of a long-chain branched structure was confirmed by $^{13}$C-NMR measurement.

(8A-2-2): Propylene homopolymer having no long-chain branch (MFR=2.4 g/10 minutes, Tm=161°C, strain hardening degree λ=0.9), trade name "NOVATEC (registered trademark) FY6" manufactured by Japan Polypropylene Corporation, branching index g' at an absolute molecular weight Mabs of 1,000,000=1.0, the absence of a long-chain branched structure was confirmed by $^{13}C$-NMR measurement.

(8-2) Polypropylene-based Resins

(8B-1): Polypropylene-based resin composition (MFR=10 g/10 minutes, Tm=164°C) obtained by blending 100% by weight of the polypropylene-based resin (8A-2-1) with 0.4% by weight of a nucleating agent (trademark "Millad NX8000J" manufactured by Milliken Japan, K.K.)
(8B-2): Propylene-$\alpha$-olefin copolymer (MFR=7 g/10 minutes, Tm=125°C) by metallocene catalyst, trade name "WINTEC (registered trademark) WFX4M" manufactured by Japan Polypropylene Corporation
(8B-3): Polypropylene-based resin composition (MFR=7 g/10 minutes, Tm=127°C) obtained by blending 100% by weight of the polypropylene-based resin (8B-2) with 0.4% by weight of a nucleating agent (trademark "Millad NX8000J" manufactured by Milliken Japan, K.K.)
(8B-4): Polypropylene-based resin composition (MFR=10 g/10 minutes, Tm=161°C) obtained by blending 96% by weight of the polypropylene-based resin (8A-2-1) with 4% by weight of a white pigment MB (EPP-W-59578 manufactured by Polycol Kogyo K.K., titanium oxide content of 80% by weight)
(8B-5): Polypropylene-based resin composition (MFR=10 g/10 minutes, Tm=161°C) obtained by blending 96% by weight of the polypropylene-based resin (8A-2-1) with 4% by weight of a silver pigment MB (PPCM913Y-42 SILVER21X manufactured by TOYOCOLOR Co., Ltd.)

(8-3) Polyolefin Adhesive Resins (G)

(7C-1): Maleic anhydride-modified polyolefin (MFR=7.0 g/10 minutes), trade name "MODIC AP (registered trademark) F534A" manufactured by Mitsubishi Chemical Corporation
(7C-2): Maleic anhydride-modified polyolefin (MFR=1.6 g/10 minutes), trade name "MODIC AP (registered trademark) F532" manufactured by Mitsubishi Chemical Corporation

(8-4) Polar Resins used for Resin Molded Bodies (Substrates)

The following polar resins were used.

(8X-1): PMMA (polymethyl methacrylate) resin, "Acrypet MD" manufactured by Mitsubishi Rayon Co., Ltd.
(8X-2): ABS (acrylonitrile-butadiene-styrene copolymer) resin, "ABS130" manufactured by Techno Polymer Co., Ltd.
(8X-3): PC (polycarbonate) resin, "NOVAREX 7022A" manufactured by Mitsubishi Engineering-Plastics Corporation

8-3. Production of Resin Molded Body (Substrate)

The polar resins (8X-1) to (8X-3) were dried at 80°C for 2 hours using a box-type oven. The resins after drying were subjected to injection molding by the following method to obtain injection molded bodies.

8-3-1. Molding Conditions for PMMA Resin:

Injection molding machine: "IS100GN" manufactured by Toshiba Machine Co., ltd., mold clamping pressure of 100 tons
Cylinder temperature: 230°C
Mold temperature: 40°C
Injection mold: A flat plate of width×height×thickness = 120 mm×120 mmx3 mm
Condition control: Kept in a constant-temperature constant-humidity chamber at a temperature of 23°C and a humidity of 50%RH for 5 days

8-3-2. Molding Conditions for ABS Resin:

Injection molding machine: "IS 100GN" manufactured by Toshiba Machine Co., ltd., mold clamping pressure of 100 tons
Cylinder temperature: 210°C
Mold temperature: 40°C
Injection mold: A flat plate of width×height×thickness = 120 mmx 120 mmx3 mm
Condition control: Kept in a constant-temperature constant-humidity chamber at a temperature of 23°C and a humidity of 50%RH for 5 days

8-3-3. Molding Conditions for PC Resin:

Injection molding machine: "IS100GN" manufactured by Toshiba Machine Co., ltd., mold clamping pressure of 100 tons
Cylinder temperature: 290°C
Mold temperature: 80°C
Injection mold: A flat plate of width×height×thickness = 120 mmx 120 mm×3 mm
Condition control: Kept in a constant-temperature constant-humidity chamber at a temperature of 23°C and a humidity of 50%RH for 5 days

{Example 8-1}

- Production of Decorative Film

There was used a 2-kind 2-layer T-die having a lip opening of 0.8 mm and a die width of 400 mm, to which an extruder-1 having a nozzle diameter of 40 mm (diameter) and an extruder-2 for a sticking layer having a nozzle diameter of 30 mm (diameter) had been connected. The polypropylene-based resin (8A-1-1) was charged into the extruder-1 and the polyolefin adhesive resin (8C-1) was charged into the extruder-2 for a sticking layer, and melt-extrusion was performed under conditions of a resin temperature of 240°C, a discharge amount from the extruder-1 of 12 kg/h, and a discharge amount from the extruder-2 for a sticking layer of 8 kg/h. The melt-extruded film was cooled and solidified on a cooling roll rotating at 3 m/min at 80°C so that the sealing layer (sticking layer) (I) came into contact therewith, thereby obtaining a two-layered unstretched film where a sticking layer (I) having a thickness of 100 μm and a layer (II) having a thickness of 150 μm were laminated.

- Three-Dimensional Decorative Thermoforming

As the resin molded body (substrate) 5, there was used the injection molded body composed of the polar resin (8X-1) obtained in the above.

As a three-dimensional decorative thermoforming apparatus, "NGF-0406-SW" manufactured by Fu-se Vacuum Forming Ltd. was used. A decorative film 1 was cut into a size having a width of 250 mm and a length of 350 mm so that the sticking layer (I) faces to the substrate and the longitudinal direction became the MD direction of the film and was set to a jig 13 for film fixing having an opening part size of 210 mmx300 mm so that the sticking layer (I) became downward. The resin molded body (substrate) 5 was attached on a sample-placing stand having a height of 20 mm, which was placed on a table 14 positioned below the jig 13 for film fixing, through "NICETACK NW-K15" manufactured by Nichiban Co., Ltd. The jig 13 for film fixing and the table 14 were placed in chamber boxes 11 and 12 and the chamber boxes 11 and 12 were closed to make the inside of the chamber boxes a tightly closed state. The chamber boxes were divided into upper and lower ones through the decorative film 1. The upper and lower chamber boxes 11 and 12 were vacuum-suctioned and a far-infrared heater 15 placed on the upper chamber box 11 was started at an output of 80% to heat the decorative film 1 in a state that the pressure was reduced from atmospheric pressure (101.3 kPa) to 1.0 kPa. During heating, the vacuum-suction was continued and finally, the pressure was reduced to 0.1 kPa. After 40 seconds from the finish of a spring-back phenomenon that the decorative film 1 was heated to temporarily slacken and thereafter tension returned, the table 14 placed in the lower chamber box 12 was transferred upward to push the resin molded body (substrate) 5 to the decorative film 1 and immediately after that, compressed air was fed so that the pressure in the upper chamber box 11 became 270 kPa to adhere the resin molded body (substrate) 5 and the decorative film 1

closely. Thus, there was obtained a three-dimensional decorative thermoformed article 6 where the decorative film 1 was stuck to the upper surface and side surface of the resin molded body (substrate) 5.

- Physical Property Evaluation

(8-1) Evaluation of Appearance of Decorative Molded body

A draw-down state of the decorative film at the time of three-dimensional decorative thermoforming and a sticking state of the decorative film of the decorative molded body where the decorative film has been stuck to the substrate were visually observed and evaluated according to the criteria shown below.

O: Since the contact between the substrate and the decorative film is simultaneously effected all over the surface of the contact face without generating draw-down of the decorative film at the time of three-dimensional decorative thermoforming, uneven contact is not generated, the film is uniformly stuck, and the decorative molded body has beautiful appearance.
Δ: Since slight draw-down of the decorative film occurs at the three-dimensional decorative thermoforming, the contact with the decorative film is started from the center of the substrate and thus uneven contact is generated at an edge part of the upper surface of the substrate, but the appearance of the decorative molded body is maintained.
×: Since draw-down of the decorative film remarkably occurs at the time of three-dimensional decorative thermoforming, uneven contact is generated all over the surface of the substrate and thus the appearance of the decorative molded body is unsuitable for practical use.

(8-2) Gloss

The gloss in the vicinity of the center of the decorative molded body to which a decorative film had been stuck was measured at an incident angle of 60° using Gloss Meter VG2000 manufactured by Nippon Denshoku Industries Co., Ltd. The measurement method conformed to JIS K7105-1981. Table 24 shows measurement results.

(8-3) Adhesive Force between Resin Molded Body (Substrate) and Decorative Film

"Craft adhesive tape No. 712N" manufactured by Nitoms, Inc. was cut into a size having a width of 75 mm and a length of 120 mm and was attached to a resin molded body (substrate) in the range of 75 mm×120 mm from the edge part of the resin molded body to perform a masking treatment (a surface exposed part of the substrate had a width of 45 mm and a length of 120 mm). The resin molded body (substrate) was placed on a three-dimensional decorative thermoforming apparatus NGF-0406-SW so that the masking face of the molded body came into contact with the decorative film, and three-dimensional decorative thermoforming was conducted.

The decorative film face of the obtained decorative molded body was cut until the substrate surface at a width of 10 mm using a cutter in a vertical direction toward a longitudinal direction of the adhesive tape to prepare a test specimen. In the obtained test specimen, the adhesion face between the substrate and the decorative film has a width of 10 mm and a length of 45 mm. It was fixed to a tensile tester so that the substrate part and the decorative film part of the test specimen made an angle of 180°, and 180° peeling strength of the adhesion face was measured at a tensile rate of 200 mm/min. Maximum strength (N/10 mm) at peeling or at break was measured five times and averaged strength was taken as adhesive force. Table 24 shows results of the physical property evaluation of the obtained decorative molded body.

(8-4) Chemical Resistance

Trade name "Dnails Nail Polish Remover EX" (enamel remover) manufactured by D-up Corporation was added dropwise on the surface of the decorative film of the decorative molded body. After allowed to stand at 23°C for 5 minutes, the liquid drop was absorbed with a fabric to remove, the appearance was visually observed and evaluated according to the following criteria.

O: No change was observed.
Δ: A scar slightly remains.
×: A scar remarkably remains.

Since MFR of the polypropylene-based resin (8A-1-1) was 40 g/10 minutes or less, the strain hardening degree λ thereof was 1.1 or more, and MFR of the polyolefin adhesive resin (8C-1) having a maleic anhydride group was 100

g/10 minutes or less, the obtained decorative molded body was excellent in appearance, adhesive force, and chemical resistance.

{Examples 8-2, 8-3, 8-7, and 8-8}

Forming and evaluation were performed in the same manner as in Example 8-1 except that, in the production of the decorative film of Example 8-1, the polypropylene-based resin (8A-1-1) was changed to each blend (resin composition (B)) of the polypropylene-based resins (8A-1-1) and (8A-2-1) described in Table 24. Table 24 shows evaluation results.

Since MFR of the resin composition (B) was 40 g/10 minutes or less, the strain hardening degree λ thereof was 1.1 or more, and MFR of the polyolefin adhesive resin (8C-1) having a maleic anhydride group was 100 g/10 minutes or less, the obtained decorative molded body was excellent in appearance, adhesive force, and chemical resistance.

{Example 8-4}

Forming and evaluation were performed in the same manner as in Example 8-3 except that, in the production of the decorative film of Example 8-3, the substrate was changed to the resin molded body composed of the polar resin (8X-2). Table 24 shows evaluation results.

Since MFR of the resin composition (B) was 40 g/10 minutes or less, the strain hardening degree λ thereof was 1.1 or more, and MFR of the polyolefin adhesive resin (8C-1) having a maleic anhydride group was 100 g/10 minutes or less, the obtained decorative molded body was excellent in appearance, adhesive force, and chemical resistance.

{Example 8-5}

Forming and evaluation were performed in the same manner as in Example 8-3 except that, in the production of the decorative film of Example 8-3, the substrate was changed to the resin molded body composed of the polar resin (8X-3). Table 24 shows evaluation results.

Since MFR of the resin composition (B) was 40 g/10 minutes or less, the strain hardening degree λ thereof was 1.1 or more, and MFR of the polyolefin adhesive resin (8C-1) having a maleic anhydride group was 100 g/10 minutes or less, the obtained decorative molded body was excellent in appearance, adhesive force, and chemical resistance.

{Example 8-6}

Evaluation was performed in the same manner as in Example 8-3 except that, in the production of the decorative film of Example 8-3, the polyolefin adhesive resin (8C-1) used for the sticking layer (I) was changed to the polyolefin adhesive resin (8C-2). Table 24 shows evaluation results.

Since MFR of the resin composition (B) was 40 g/10 minutes or less, the strain hardening degree λ thereof was 1.1 or more, and MFR of the polyolefin adhesive resin (8C-2) having a maleic anhydride group was 100 g/10 minutes or less, the obtained decorative molded body was excellent in appearance, adhesive force, and chemical resistance.

{Example 8-9}

Forming and evaluation were performed in the same manner as in Example 8-1 except that, in the production of the decorative film of Example 8-1, the polypropylene-based resin (8A-1-1) was changed to the polypropylene-based resin (8A-1-2). Table 24 shows evaluation results.

Since MFR of the polypropylene-based resin (8A-1-2) was 40 g/10 minutes or less, the strain hardening degree λ thereof was 1.1 or more, and MFR of the polyolefin adhesive resin (8C-1) having a maleic anhydride group was 100 g/10 minutes or less, the obtained decorative molded body was excellent in appearance, adhesive force, and chemical resistance.

{Examples 8-10 to 8-13}

Forming and evaluation were performed in the same manner as in Example 8-9 except that, in the production of the decorative film of Example 8-9, the polypropylene-based resin (8A-1-2) was changed to each blend (resin composition (B)) of the polypropylene-based resins (8A-1-2) and (8A-2-1) described in Table 24. Table 24 shows evaluation results.

Since MFR of the polypropylene-based resin (8A-1-2) was 40 g/10 minutes or less, the strain hardening degree λ thereof was 1.1 or more, and MFR of the polyolefin adhesive resin (8C-1) having a maleic anhydride group was 100

g/10 minutes or less, the obtained decorative molded body was excellent in appearance, adhesive force, and chemical resistance.

{Example 8-14}

Forming and evaluation were performed in the same manner as in Example 8-1 except that, in the production of the decorative film of Example 8-1, the polypropylene-based resin (8A-1-1) was changed to the polypropylene-based resin (8A-1-3). Table 25 shows evaluation results.

Since MFR of the polypropylene-based resin (8A-1-3) was 40 g/10 minutes or less, the strain hardening degree λ thereof was 1.1 or more, and MFR of the polyolefin adhesive resin (8C-1) having a maleic anhydride group was 100 g/10 minutes or less, the obtained decorative molded body was excellent in appearance, adhesive force, and chemical resistance. However, gel was observed in the obtained film.

{Example 8-15}

In the production of the decorative film, there was used a 3-kind 3-layer T-die having a lip opening of 0.8 mm and a die width of 400 mm, to which an extruder-1 having a nozzle diameter of 40 mm (diameter), an extruder-2 for a sticking layer having a nozzle diameter of 30 mm (diameter), and an extruder-3 for a surface layer having a nozzle diameter of 30 mm (diameter) had been connected. The polypropylene-based resin (8A-1-1) was charged into the extruder-1, the polyolefin adhesive resin (8C-1) was charged into the extruder-2 for a sticking layer, and the polypropylene-based resin (8A-2-1) was charged into the extruder-3 for a surface layer, and melt-extrusion was performed under conditions of a resin temperature of 240°C, a discharge amount from the extruder-1 of 12 kg/h, a discharge amount from the extruder-2 for a sticking layer of 8 kg/h, and a discharge amount from the extruder-3 for a surface layer of 4 kg/h.

The melt-extruded film was cooled and solidified so that the surface decorative layer (III) came into contact with a cooling roll rotating at 3 m/min at 80°C, thereby obtaining a three-layered unstretched film where the sticking layer (I) having a thickness of 100 μm, a layer (II) having a thickness of 150 μm, and a surface decorative layer (III) having a thickness of 50 μm were laminated.

Evaluation was performed in the same manner as in Example 8-1 except that the unstretched film obtained in the above decorative film production was used. Table 24 shows evaluation results.

Since MFR of the polypropylene-based resin (8A-1-1) was 40 g/10 minutes or less, the strain hardening degree λ thereof was 1.1 or more, and MFR of the polyolefin adhesive resin (8C-1) having a maleic anhydride group was 100 g/10 minutes or less, the obtained decorative molded body was excellent in appearance, adhesive force, and chemical resistance. Moreover, the polypropylene-based resin (8A-2-1) was laminated as the surface decorative layer [layer (III)] at the uppermost surface side, so that a result of excellent gloss was observed as compared with the decorative film of Example 8-1.

{Example 8-16}

Forming and evaluation were performed in the same manner as in Example 8-15 except that, in the production of the decorative film of Example 8-15, the polypropylene-based resin (8A-1-1) was changed to the polypropylene-based resin (8A-1-2). Table 24 shows evaluation results.

Since MFR of the polypropylene-based resin (8A-1-2) was 40 g/10 minutes or less, the strain hardening degree λ thereof was 1.1 or more, and MFR of the polyolefin adhesive resin (8C-1) having a maleic anhydride group was 100 g/10 minutes or less, the obtained decorative molded body was excellent in appearance, adhesive force, and chemical resistance. Moreover, the polypropylene-based resin (8A-2-1) was laminated as the surface decorative layer [surface layer (III)] at the uppermost surface side, so that a result of excellent gloss was observed as compared with the decorative molded body of Example 8-9.

{Comparative Example 8-1}

Forming and valuation were performed in the same manner as in Example 8-1 except that, in the production of the decorative film of Example 8-1, the polypropylene-based resin (8A-1-1) constituting the layer (II) was changed to the polypropylene-based resin (8A-2-2) having no long-chain branch. Table 24 shows evaluation results.

Since the strain hardening degree λ of the polypropylene-based resin (8A-2-2) was less than 1.1, the stability at thermoforming was poor and remarkable draw-down of the decorative film occured at the time of three-dimensional decorative thermoforming, so that uneven contact was generated all over the surface of the substrate and there was observed a result of remarkably poor appearance of the decorative molded body.

{Reference Example 8-2}

Evaluation was performed in the same manner as in Example 8-1 except that, in the production of the decorative film of Example 8-1, the polyolefin adhesive resin (8C-1) constituting the sticking layer (I) was changed to the polypropylene-based resin (8A-2-1) having no functional group. Table 24 shows results.

Since the polypropylene-based resin (8A-2-1) was not a polyolefin adhesive resin (G), it did not have polarity and did not adhere to the substrate, so that chemical resistance was poor.

{Comparative Example 8-3}

Using only the injection molded body composed of the polar resin (8X-1) which had been obtained by the production of the resin molded body described in Example 8-1, evaluation on chemical resistance was performed. Table 24 shows results.

Since the decorative film having solvent resistance was not stuck, the surface of the molded body was dissolved by an enamel remover and there was observed a result that a scar of the liquid drop strongly remained.

{Comparative Example 8-4}

Evaluation was performed in the same manner as in Comparative Example 8-3 except that the polar resin (8X-1) of Comparative Example 8-3 was changed to the polar resin (8X-2). Table 24 shows results.

Since the decorative film having solvent resistance was not stuck, the molded body was dissolved by an enamel remover and there was observed a result that a scar of the liquid drop strongly remained.

{Comparative Example 8-5}

Evaluation was performed in the same manner as in Comparative Example 8-3 except that the polar resin (8X-1) of Comparative Example 8-3 was changed to the polar resin (8X-3). Table 24 shows results.

Since the decorative film having solvent resistance was not stuck, the surface of the molded body was dissolved by an enamel remover and there was observed a result that a scar of the liquid drop strongly remained.

{Example 8-17}

Evaluation was performed in the same manner as in Example 8-15 except that, in the production of the decorative film of Example 8-15, the polypropylene-based resin (8A-2-1) used for the surface decorative layer (III) was changed to the polypropylene-based resin (8B-1). Table 25 shows obtained results.

Since MFR of the polypropylene-based resin (8A-1-1) was 40 g/10 minutes or less, the strain hardening degree $\lambda$ thereof was 1.1 or more, and MFR of the polyolefin adhesive resin (8C-1) having a maleic anhydride group was 100 g/10 minutes or less, the obtained decorative molded body was excellent in appearance and adhesive force. Moreover, the polypropylene-based resin (8B-1) to which a nucleating agent had been added was laminated as the surface decorative layer [layer (III)] at the uppermost surface side, so that a result of excellent gloss was observed.

{Example 8-18}

Evaluation was performed in the same manner as in Example 8-15 except that, in the production of the decorative film of Example 8-15, the polypropylene-based resin (8A-2-1) used for the surface decorative layer (III) was changed to the polypropylene-based resin (8B-2). Table 25 shows obtained results.

Since MFR of the polypropylene-based resin (8A-1-1) was 40 g/10 minutes or less, the strain hardening degree $\lambda$ thereof was 1.1 or more, and MFR of the polyolefin adhesive resin (8C-1) having a maleic anhydride group was 100 g/10 minutes or less, the obtained decorative molded body was excellent in appearance and adhesive force. Moreover, the polypropylene-based resin (8B-2) was laminated as the surface decorative layer [layer (III)] at the uppermost surface side, so that a result of excellent gloss was observed.

{Example 8-19}

Evaluation was performed in the same manner as in Example 8-15 except that, in the production of the decorative film of Example 8-15, the polypropylene-based resin (8A-2-1) used for the surface decorative layer (III) was changed to the polypropylene-based resin (8B-3). Table 25 shows obtained results.

Since MFR of the polypropylene-based resin (8A-1-1) was 40 g/10 minutes or less, the strain hardening degree

λ thereof was 1.1 or more, and MFR of the polyolefin adhesive resin (8C-1) having a maleic anhydride group was 100 g/10 minutes or less, the obtained decorative molded body was excellent in appearance and adhesive force. Moreover, the polypropylene-based resin (8B-3) to which a nucleating agent had been added was laminated as the surface decorative layer [layer (III)] at the uppermost surface side, so that a result of excellent gloss was observed.

{Example 8-20}

Evaluation was performed in the same manner as in Example 8-15 except that, in the production of the decorative film of Example 8-15, the polypropylene-based resin (8A-2-1) used for the surface decorative layer (III) was changed to the polypropylene-based resin (8B-4). Table 25 shows obtained results.

Since MFR of the polypropylene-based resin (8A-1-1) was 40 g/10 minutes or less, the strain hardening degree λ thereof was 1.1 or more, and MFR of the polyolefin adhesive resin (8C-1) having a maleic anhydride group was 100 g/10 minutes or less, the obtained decorative molded body was excellent in appearance and adhesive force. Moreover, since the surface decorative layer [layer (III)] excellent in gloss was colored white, appearance was excellent.

{Example 8-21}

Evaluation was performed in the same manner as in Example 8-5 except that, in the production of the decorative film of Example 8-5, the polypropylene-based resin (8A-1-1) was changed to the polypropylene-based resin (8A-1-4). Table 25 shows obtained results.

Since MFR of the polypropylene-based resin (8A-1-4) was 40 g/10 minutes or less, the strain hardening degree λ thereof was 1.1 or more, and MFR of the polyolefin adhesive resin (8C-1) having a maleic anhydride group was 100 g/10 minutes or less, the obtained decorative molded body was excellent in appearance and adhesive force. Moreover, since the layer (II) was colored black, appearance was excellent. Furthermore, the polypropylene-based resin (8A-2-1) was laminated as the surface decorative layer [layer (III)] at the uppermost surface side, so that a result of excellent gloss was observed.

{Example 8-22}

Evaluation was performed in the same manner as in Example 8-21 except that, in the production of the decorative film of Example 8-21, the polypropylene-based resin (8A-2-1) used for the surface decorative layer (III) was changed to the polypropylene-based resin (8B-5). Table 25 shows obtained results.

Since MFR of the polypropylene-based resin (8A-1-4) was 40 g/10 minutes or less, the strain hardening degree λ thereof was 1.1 or more, and MFR of the polyolefin adhesive resin (8C-1) having a maleic anhydride group was 100 g/10 minutes or less, the obtained decorative molded body was excellent in appearance and adhesive force. Moreover, the polypropylene-based resin (8B-5) was laminated as the surface decorative layer [layer (III)] at the uppermost surface side, so that a result of excellent gloss was observed. Furthermore, since the layer (II) was colored black and the layer (III) was colored silver, the film became a metallic film and appearance was excellent.

[Table 24]

Table 24

| | | | Unit | Example 8-1 | Example 8-2 | Example 8-3 | Example 8-4 | Example 8-5 | Example 8-6 | Example 8-7 | Example 8-8 | Example 8-9 | Example 8-10 | Example 8-11 | Example 8-12 | Example 8-13 | Example 8-14 |
|---|---|---|---|---|---|---|---|---|---|---|---|---|---|---|---|---|---|
| Surface decorative layer (III) | Kind | | | - | - | - | - | - | - | - | - | - | - | - | - | - | - |
| | MFR | | g/10min | - | - | - | - | - | - | - | - | - | - | - | - | - | - |
| Layer (II) | Long-chain branching PP (8A-1) | Kind | | 8A-1-1 | 8A-1-1 | 8A-1-1 | 8A-1-1 | 8A-1-1 | 8A-1-1 | 8A-1-1 | 8A-1-1 | 8A-1-2 | 8A-1-2 | 8A-1-2 | 8A-1-2 | 8A-1-2 | 8A-1-3 |
| | | MFR | g/10min | 1.0 | 1.0 | 1.0 | 1.0 | 1.0 | 1.0 | 1.0 | 1.0 | 8.8 | 8.8 | 8.8 | 8.8 | 8.8 | 2.2 |
| | | Ratio | wt% | 100 | 70 | 30 | 30 | 30 | 30 | 10 | 5 | 100 | 70 | 30 | 10 | 5 | 100 |
| | Other PP | Kind | | - | 8A-2-1 | 8A-2-1 | 8A-2-1 | 8A-2-1 | 8A-2-1 | 8A-2-1 | 8A-2-1 | - | 8A-2-1 | 8A-2-1 | 8A-2-1 | 8A-2-1 | - |
| | | MFR | g/10min | - | 10 | 10 | 10 | 10 | 10 | 10 | 10 | - | 10 | 10 | 10 | 10 | - |
| | | Ratio | wt% | - | 30 | 70 | 70 | 70 | 70 | 90 | 95 | - | 30 | 70 | 90 | 95 | - |
| | Whole composition (B) | MFR | g/10min | 1.0 | 2.3 | 5.1 | 5.1 | 5.1 | 5.1 | 9.3 | 10 | 8.8 | 8.9 | 9.1 | 10 | 10 | 2.2 |
| | | λ | | 9.7 | 6.6 | 4.0 | 4.0 | 4.0 | 4.0 | 2.2 | 1.6 | 7.8 | 4.8 | 2.6 | 1.5 | 1.4 | 10.6 |
| Sealing layer (I) | Kind | | | 8C-1 | 8C-1 | 8C-1 | 8C-1 | 8C-1 | 8C-2 | 8C-1 | 8C-1 | 8C-1 | 8C-1 | 8C-1 | 8C-1 | 8C-1 | 8C-1 |
| | MFR | | g/10min | 7.0 | 7.0 | 7.0 | 7.0 | 7.0 | 1.6 | 7.0 | 7.0 | 7.0 | 7.0 | 7.0 | 7.0 | 7.0 | 7.0 |
| | Functional group | | | Acid an-hydride | Acid an-hydride | Acid an-hydride | Acid an-hydride | Acid an-hydride | Acid an-hydride | Acid an-hydride | Acid an-hydride | Acid an-hydride | Acid an-hydride | Acid an-hydride | Acid an-hydride | Acid an-hydride | Acid an-hydride |
| Substrate | Kind | | | 8X-1 | 8X-1 | 8X-1 | 8X-2 | 8X-3 | 8X-1 | 8X-1 | 8X-1 | 8X-1 | 8X-1 | 8X-1 | 8X-1 | 8X-1 | 8X-1 |
| Heating time | | | sec | 40 | 40 | 40 | 40 | 40 | 40 | 40 | 40 | 40 | 40 | 40 | 40 | 40 | 40 |
| Appearance of decorative molded body | | | | O | O | O | O | O | O | O | Δ | O | O | O | Δ | Δ | O (gel present) |
| Adhesive force | | | N/10mm | 20 | 19 | 20 | 21 | 20 | 9 | 19 | 19 | 20 | 20 | 22 | 20 | 21 | 19 |
| GLOSS (60°) | | | % | 15 | 17 | 20 | 20 | 20 | 19 | 23 | 24 | 20 | 21 | 23 | 24 | 26 | 5 |
| Chemical resistance test | | | | O | O | O | O | O | O | O | O | O | O | O | O | O | O |

Table 24 (continued)

| | | | Unit | Example 8-15 | Example 8-16 | Comparative Example 8-1 | Reference Example 8-2 | Comparative Example 8-3 | Comparative Example 8-4 | Comparative Example 8-5 |
|---|---|---|---|---|---|---|---|---|---|---|
| Surface decorative layer (III) | Kind | | | 2A-2-1 | 2A-2-1 | - | - | - | - | - |
| | MFR | | g/10min | 10 | 10 | - | - | | | |
| Layer (II) | Long-chain branching PP (8A-1) | Kind | | 8A-1-1 | 8A-1-2 | none | 8A-1-1 | | | |
| | | MFR | g/10min | 1.0 | 8.8 | - | 1.0 | | | |
| | | Ratio | wt% | 100 | 100 | 0 | 100 | | | |
| | Other PP | Kind | | - | - | 8A-2-2 | - | | | |
| | | MFR | g/10min | - | - | 2.4 | - | | | |
| | | Ratio | wt% | - | - | 100 | - | | | |
| | Whole composition (B) | MFR | g/10min | 1.0 | 8.8 | 2.4 | 1.0 | | | |
| | | λ | | 9.7 | 7.8 | 0.9 | 9.7 | | | |
| Sealing layer (I) | Kind | | | 8C-1 | 8C-1 | 8C-1 | 8A-2-1 | | | |
| | MFR | | g/10min | 7.0 | 7.0 | 7.0 | 10 | | | |
| | Functional group | | | Acid an-hydride | Acid an-hydride | Acid an-hydride | none | | | |
| Substrate | Kind | | | 8X-1 | 8X-1 | 8X-1 | 8X-1 | 8X-1 | 8X-2 | 8X-3 |
| Heating time | | | sec | 40 | 40 | 40 | 40 | - | - | - |
| Appearance of decorative molded body | | | | O | O | × | O | - | - | - |
| Adhesive force | | | N/10mm | 19 | 21 | - | 0 | - | - | - |
| GLOSS (60°) | | | % | 30 | 32 | - | - | - | - | - |
| Chemical resistance test | | | | O | O | - | - | × | × | × |

[Table 25]

Table 25

| | | | Unit | Example 8-17 | Example 8-18 | Example 8-19 | Example 8-20 | Example 8-21 | Example 8-22 |
|---|---|---|---|---|---|---|---|---|---|
| Surface decorative layer (III) I) | Kind | | | 8B-1 | 8B-2 | 8B-3 | 8B-4 | 8A-2-1 | 8B-5 |
| | MFR | | g/10min | 10 | 7 | 7 | 10 | 10 | 10 |
| Layer (II) | Long-chain branching PP (8A-1) | Kind | | 8A-1-1 | 8A-1-1 | 8A-1-1 | 8A-1-1 | 8A-1-4 | 8A-1-4 |
| | | MFR | g/10min | 1.0 | 8.8 | 1.0 | 8.8 | 1.0 | 1.0 |
| | | Ratio | wt% | 100 | 100 | 100 | 100 | 100 | 100 |
| | Other PP | Kind | | - | - | - | - | - | - |
| | | MFR | g/10min | - | - | - | - | - | - |
| | | Ratio | wt% | - | - | - | - | - | - |
| | Whole composition (B) | MFR | g/10min | 1.0 | 1.0 | 1.0 | 1.0 | 1.0 | 1.0 |
| | | λ | | 9.7 | 9.7 | 9.7 | 9.7 | 9.3 | 9.3 |
| Sealing layer (I) | Kind | | | 8C-1 | 8C-1 | 8C-1 | 8C-1 | 8C-1 | 8C-1 |
| | MFR | | g/10min | 7.0 | 7.0 | 7.0 | 7.0 | 7.0 | 7.0 |
| | Functional group | | | Acid anhydride | Acid anhydride | Acid anhydride | Acid anhydride | Acid anhydride | Acid anhydride |
| Substrate | Kind | | | 8X-1 | 8X-1 | 8X-1 | 8X-2 | 8X-3 | 8X-1 |
| Heating time | | | sec | 40 | 40 | 40 | 40 | 40 | 40 |
| Appearance of decorative molded body | | | | ○ | ○ | ○ | ○ | ○ | ○ |
| Adhesive force | | | N/10mm | 19 | 19 | 18 | 19 | 20 | 19 |
| GLOSS (60°) | | | % | 89 | 31 | 93 | 30 | 30 | 29 |
| Chemical resistance test | | | | ○ | ○ | ○ | ○ | ○ | ○ |

While the invention has been described in detail and with reference to specific embodiments thereof, it will be apparent to one skilled in the art that various changes and modifications can be made therein without departing from the spirit and scope thereof. The present application is based on Japanese Patent Application No. 2016-156570 filed on August 9, 2016, Japanese Patent Application No. 2016-156571 filed on August 9, 2016, Japanese Patent Application No. 2016-156572 filed on August 9, 2016, Japanese Patent Application No. 2016-164248 filed on August 25, 2016, Japanese Patent Application No. 2017-030578 filed on February 22, 2017, Japanese Patent Application No. 2017-035183 filed on February 27, 2017, Japanese Patent Application No. 2017-049278 filed on March 15, 2017, and Japanese Patent Application No. 2017-051454 filed on March 16, 2017, and the contents are incorporated herein by reference.

INDUSTRIAL APPLICABILITY

According to the present invention, there are provided a decorative film to be used for three-dimensional decorative thermoforming, which film can achieve both of sufficient adhesive strength and product appearance, exhibits less fading of crimps, is capable of reducing product defects by making scratches of the substrate inconspicuous, and further facilitates recycling, and a method for producing a decorative molded body using the decorative film.

REFERENCE SIGNS LIST

1 Decorative film
2 Layer (II)
3 Sealing layer (I)
4 Surface decorative layer (III)
5 Resin molded body (decoration object, substrate)
6 Decorative molded body
11 Upper chamber box
12 Lower chamber box
13 Jig
14 Table
15 Heater

**Claims**

1. A decorative film for sticking on a resin molded body by thermoforming,
wherein the decorative film comprises a layer (II) including a resin composition (B) containing a polypropylene-based resin (B) and the resin composition (B) satisfies the following requirements (b1) and (b2):

    (b1) the melt flow rate (MFR)(B) (230°C, a load of 2.16 kg) is 40 g/10 minutes or less and
    (b2) the strain hardening degree $\lambda$ is 1.1 or more.

2. The decorative film according to claim 1,
wherein the decorative film further comprises a sealing layer (I) including a polypropylene-based resin (A) and MFR(A) (230°C, a load of 2.16 kg) of the polypropylene-based resin (A) is more than 2 g/10 minutes.

3. The decorative film according to claim 1,
wherein the decorative film further comprises a sealing layer (I) composed of a polypropylene-based resin (A) and the polypropylene-based resin (A) satisfies the following requirements (a1) to (a4), and the polypropylene-based resin (B) further satisfies the following requirement (b3):

    (a1) the polypropylene-based resin (A) is a metallocene catalyst-based propylene-based polymer,
    (a2) the MFR(A) (230°C, a load of 2.16 kg) is more than 0.5 g/10 minutes,
    (a3) the melting peak temperature (Tm)(A) is lower than 150°C,
    (a4) the molecular weight distribution (Mw/Mn)(A) obtained by GPC measurement is 1.5 to 3.5, and
    (b3) Tm(B) satisfies the following relational expression (b-3) with respect to the above Tm(A):

$$Tm(B) > Tm(A) \ldots \text{Expression (b-3).}$$

**4.** The decorative film according to claim 1,
wherein the decorative film further comprises a sealing layer (I) including a resin composition (X) containing a polypropylene-based resin (A) and an ethylene-α-olefin random copolymer (C) as main components, the weight ratio of the polypropylene-based resin (A) to the ethylene-α-olefin random copolymer (C) being 97:3 to 5:95, and the polypropylene-based resin (A) satisfies the following requirement (a2) and the ethylene-α-olefin random copolymer (C) satisfies the following requirements (c1) to (c3):

(a2) the MFR(A) (230°C, a load of 2.16 kg) is more than 0.5 g/10 minutes,
(cl) the ethylene content [E(C)] is 65% by weight or more,
(c2) the density is 0.850 to 0.950 g/cm$^3$, and
(c3) the MFR(C) (230°C, a load of 2.16 kg) is 0.1 to 100 g/10 minutes.

**5.** The decorative film according to claim 1,
wherein the decorative film further comprises a sealing layer (I) including a resin composition (X) containing a polypropylene-based resin (A) and a thermoplastic elastomer (D) as main components, the weight ratio of the polypropylene-based resin (A) to the thermoplastic elastomer (D) being 97:3 to 5:95, and
the polypropylene-based resin (A) satisfies the following requirement (a2) and the thermoplastic elastomer (D) satisfies the following requirements (d1) to (d3):

(a2) the MFR(A) (230°C, a load of 2.16 kg) is more than 0.5 g/10 minutes,
(d1) the thermoplastic elastomer is a thermoplastic elastomer in which at least one of propylene and butene is a main component,
(d2) the density is 0.850 to 0.950 g/cm$^3$, and
(d3) the MFR(D) (230°C, a load of 2.16 kg) is 0.1 to 100 g/10 minutes.

**6.** The decorative film according to claim 1,
wherein the decorative film further comprises a sealing layer (I) including a resin composition (X) containing a polypropylene-based resin (A) and a thermoplastic resin (E) as main components, the weight ratio of the polypropylene-based resin (A) and the thermoplastic resin (E) is 97:3 to 5:95 and
the polypropylene-based resin (A) satisfies the following requirement (a2), the thermoplastic resin (E) satisfies the following requirement (e1), and the resin composition (X) satisfies the following requirement (xl):

(a2) the MFR(A) (230°C, a load of 2.16 kg) is more than 0.5 g/10 minutes,
(e1) the thermoplastic resin (E) contains at least one of an alicyclic hydrocarbon group and an aromatic hydrocarbon group, and
(x1) the isothermal crystallization time (t) (second) determined by a differential scanning calorimeter (DSC) satisfies the following expression (x-1):

$$t(X) \geq 1.5 \times t(A) \ldots \text{Expression (x-1)}$$

wherein t(A) represents isothermal crystallization time (second) of the polypropylene-based resin (A) measured at a temperature 10°C higher than the crystallization initiation temperature of the polypropylene-based resin (A) and t(X) is isothermal crystallization time (second) of the resin composition (X) measured at a temperature that is 10°C higher than the crystallization initiation temperature of the polypropylene-based resin (A).

**7.** The decorative film according to claim 1,
wherein the decorative film further comprises a sealing layer (I) including a propylene-ethylene block copolymer (F) and the propylene-ethylene block copolymer (F) satisfies the following requirements (f1) to (f3):

(fl) the propylene-ethylene block copolymer (F) contains 5 to 97% by weight of a component (F1) composed of propylene homopolymer or a propylene-ethylene random copolymer and 3 to 95% by weight of a component (F2) composed of a propylene-ethylene random copolymer having an ethylene content larger than that of the component (F1),

(f2) the MFR(F) (230°C, a load of 2.16 kg) is more than 0.5 g/10 minutes, and
(f3) the melting peak temperature (Tm)(F) is 110 to 170°C.

**8.** The decorative film according to claim 1,
wherein the decorative film further comprises a sealing layer (I) including a polyolefin adhesive resin (G), the polyolefin adhesive resin (G) is a polyolefin resin having a polar functional group containing at least one heteroatom, and MFR(G) (230°C, a load of 2.16 kg) thereof is 100 g/10 minutes or less.

**9.** The decorative film according to any one of claims 1 to 8,
wherein the resin composition (B) satisfies the following requirements (b1') and (b2'):

(b1') the MFR(B) (230°C, a load of 2.16 kg) is 20 g/10 minutes or less and
(b2') the strain hardening degree λ is 1.8 or more.

**10.** The decorative film according to any one of claims 1 to 8,
wherein the resin composition (B) satisfies the following requirements (b1") and (b2"):

(b1") the MFR(B) (230°C, a load of 2.16 kg) is 12 g/10 minutes or less and
(b2") the strain hardening degree λ is 2.3 or more.

**11.** The decorative film according to any one of claims 1 to 10,
wherein the polypropylene-based resin (B) is a polypropylene-based resin (B-1) having a long-chain branched structure.

**12.** The decorative film according to claim 11,
wherein the polypropylene-based resin (B-1) is a polypropylene-based resin containing little gel, which is produced by a method other than a crosslinking method.

**13.** The decorative film according to any one of claims 1 to 12, which comprises a surface decorative layer (III) composed of a surface decorative layer resin at an opposite face side of the layer (II) to a sticking face side thereof with the resin molded body.

**14.** The decorative film according to claim 13,
wherein the surface decorative layer resin contains a polypropylene-based resin (H) and the polypropylene-based resin (H) has a strain hardening degree λ of 1 or less.

**15.** The decorative film according to claim 3,
wherein the polypropylene-based resin (A) is a propylene-α-olefin copolymer.

**16.** The decorative film according to claim 3 or 15,
wherein the above Tm(A) is 140°C or lower.

**17.** The decorative film according to claim 4,
wherein the ethylene-α-olefin random copolymer (C) further satisfies the following requirement (c4):
(c4) melting peak temperature (Tm)(C) is 30 to 130°C.

**18.** The decorative film according to claim 4 or 17,
wherein the ethylene-α-olefin random copolymer (C) further satisfies the following requirement (c5):
(c5) the ethylene-α-olefin random copolymer (C) is a random copolymer of ethylene and an α-olefin having 3 to 20 carbon atoms.

**19.** The decorative film according to claim 5,
wherein the thermoplastic elastomer (D) is a propylene-ethylene copolymer having an ethylene content of less than 50% by weight, a butene-ethylene copolymer having an ethylene content of less than 50% by weight, a propylene-ethylene-butene copolymer having an ethylene content of less than 50% by weight, a propylene-butene copolymer, or butene homopolymer.

**20.** The decorative film according to claim 5 or 19,

wherein the thermoplastic elastomer (D) further satisfies the following requirement (d4):
(d4) the melting peak temperature (Tm)(D) is 30 to 170°C.

**21.** The decorative film according to claim 6,
wherein the thermoplastic resin (E) is a styrene-based elastomer.

**22.** The decorative film according to claim 6,
wherein the thermoplastic resin (E) is an alicyclic hydrocarbon resin.

**23.** The decorative film according to claim 7,
wherein the propylene-ethylene block copolymer (F) further satisfies the following requirement (f4):
(f4) the ethylene content in the propylene-ethylene block copolymer (F) is 0.15 to 85% by weight.

**24.** The decorative film according to claim 7 or 23,
wherein the propylene-ethylene block copolymer (F) further satisfies the following requirement (f5):
(f5) the ethylene content of the component (F1) is in the range of 0 to 6% by weight.

**25.** The decorative film according to claim 7, 23, or 24,
wherein the propylene-ethylene block copolymer (F) further satisfies the following requirement (f6):
(f6) the ethylene content of the component (F2) is in the range of 5 to 90% by weight.

**26.** A method for producing a decorative molded body comprising:

preparing the decorative film according to any one of claims 1 to 25,
preparing a resin molded body,
setting the resin molded body and the decorative film in a pressure-reducible chamber box,
reducing the pressure in the chamber box,
heating and softening the decorative film,
pushing the heated and softened decorative film to the resin molded body, and
returning the inside of the pressure-reduced chamber box to atmospheric pressure or pressurizing the inside.

**27.** The method for producing a decorative molded body according to claim 26,
wherein the resin molded body includes a propylene-based resin composition.

**28.** The method for producing a decorative molded body according to claim 26, wherein the decorative film is the decorative film according to any one of claims 8 to 14 and
the resin molded body includes a polar resin material containing at least one selected from a polyester resin, a polyamide resin, a polyimide resin, a polystyrene resin, an acrylic resin, a polyvinyl alcohol resin, a polycarbonate resin, an ABS resin, an urethane resin, a melamine resin, a polyphenylene ether resin, and composite materials thereof.

FIG.1A

(a)

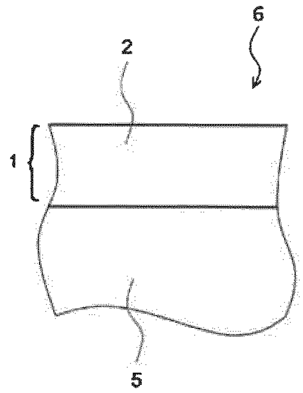


(b)

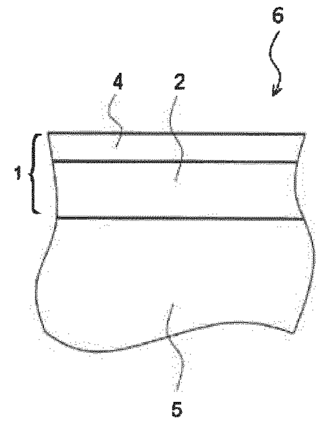


(c)

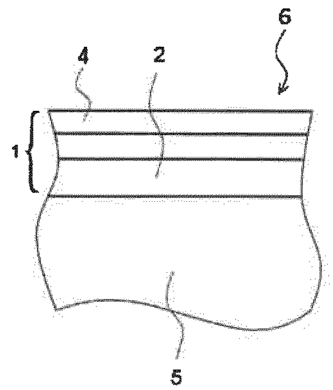

FIG. 1B

(a)

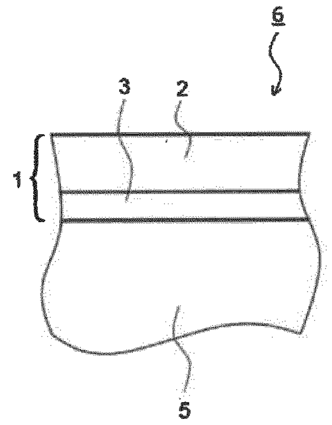


(b)

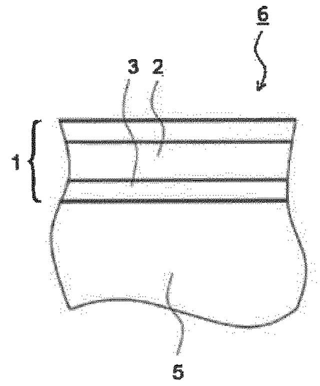


(c)

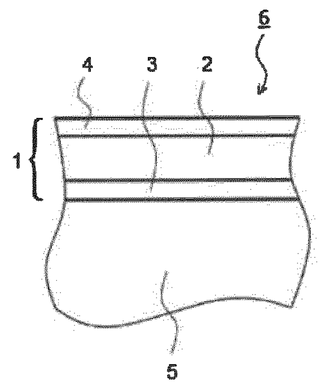

FIG. 1C

(a)

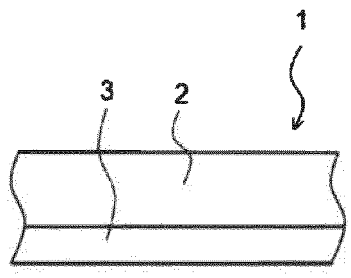


(b)

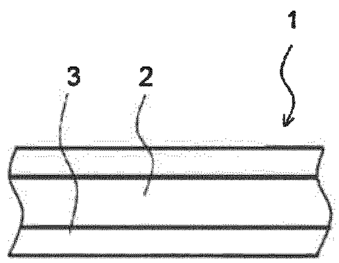


(c)

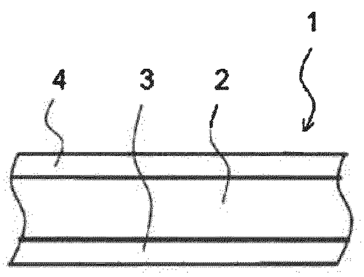

FIG. 2

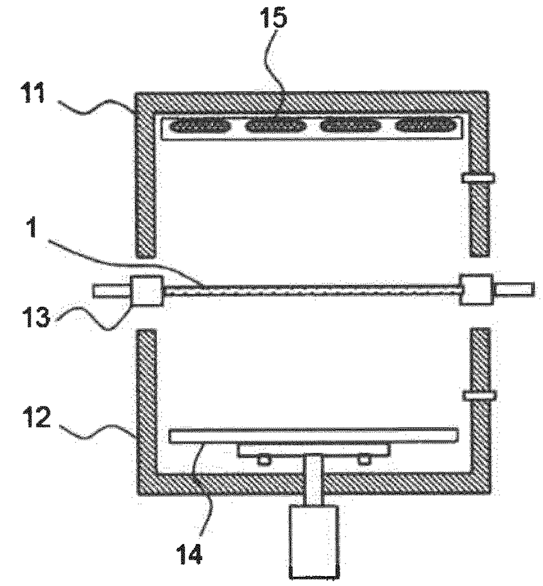


FIG. 3

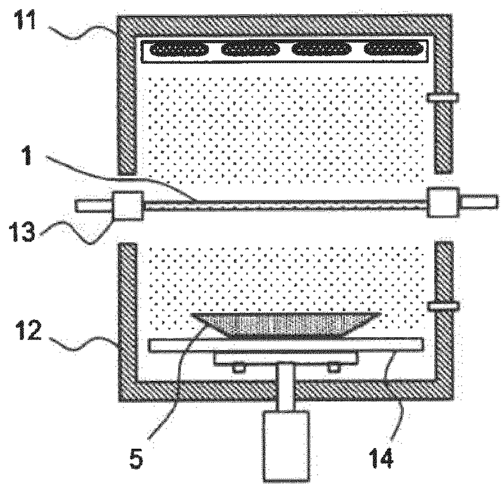

FIG. 4

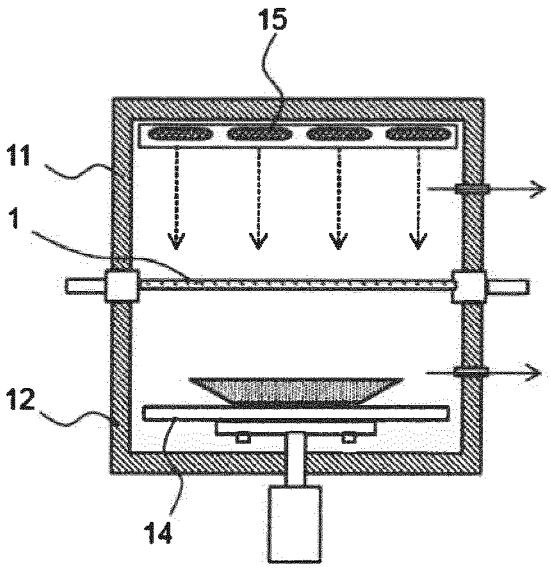


FIG. 5

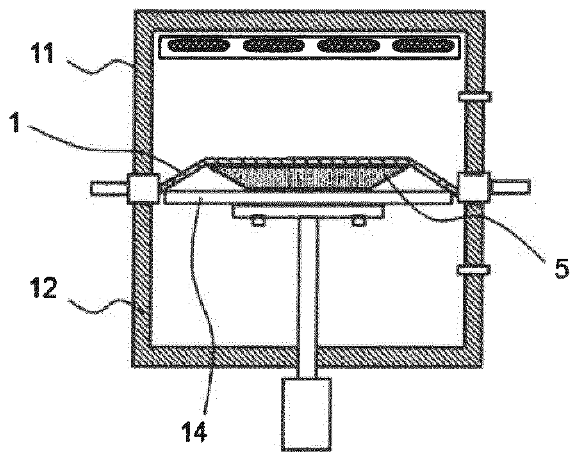

FIG. 6

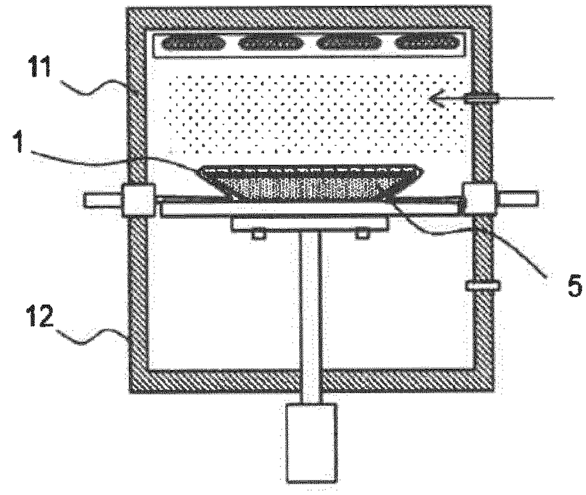


FIG. 7

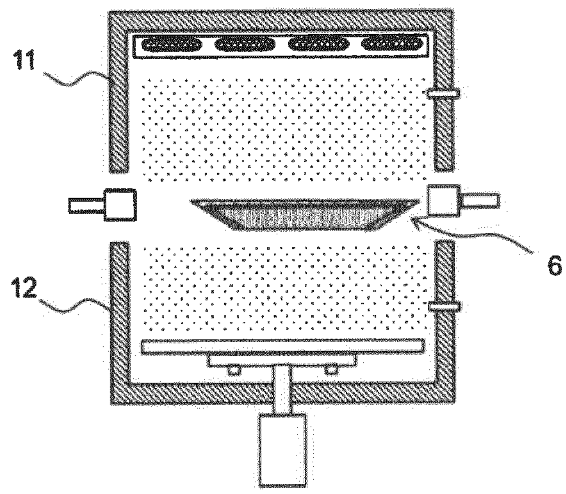

## INTERNATIONAL SEARCH REPORT

International application No.
PCT/JP2017/029012

A. CLASSIFICATION OF SUBJECT MATTER
*C08J5/18*(2006.01)i, *B29C51/16*(2006.01)i, *B32B27/00*(2006.01)i, *B32B27/32*(2006.01)i

According to International Patent Classification (IPC) or to both national classification and IPC

B. FIELDS SEARCHED

Minimum documentation searched (classification system followed by classification symbols)
C08J5/18, B32B1/00-43/00, B29C51/00-51/46, B29C63/00-65/82

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| P,X | JP 2017-66373 A (Diaplus Film Inc.), 06 April 2017 (06.04.2017), claims; paragraphs [0018] to [0023], [0025], [0031], [0033]; examples 1, 2 (Family: none) | 1,3,11-16,26 |
| A | JP 2014-534297 A (Braskem S.A.), 18 December 2014 (18.12.2014), claims; paragraphs [0057] to [0061] & US 2014/0308502 A1 claims; paragraphs [0071] to [0076] & WO 2013/053025 A1 & EP 2767559 A1 & CA 2851847 A & KR 10-2014-0074374 A & CN 103987778 A & MX 2014004401 A | 1-28 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 23 October 2017 (23.10.17) | 31 October 2017 (31.10.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

INTERNATIONAL SEARCH REPORT

International application No.
PCT/JP2017/029012

C (Continuation). DOCUMENTS CONSIDERED TO BE RELEVANT

| Category* | Citation of document, with indication, where appropriate, of the relevant passages | Relevant to claim No. |
|---|---|---|
| A | JP 2003-171514 A (Sumitomo Chemical Co., Ltd.), 20 June 2003 (20.06.2003), claims; paragraphs [0010] to [0013], [0022] (Family: none) | 1-28 |
| A | JP 2003-268144 A (Dainippon Printing Co., Ltd.), 25 September 2003 (25.09.2003), claims; paragraphs [0011] to [0014], [0026] (Family: none) | 1-28 |
| A | JP 2015-48367 A (Riken Technos Corp.), 16 March 2015 (16.03.2015), claims; paragraphs [0028] to [0029] (Family: none) | 1-28 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002067137 A
- JP 2013014027 A
- JP 2014124940 A
- JP 62121704 A
- JP 2001524565 T
- JP 2001525460 T
- JP 10338717 T
- JP 2002523575 T
- JP 2009057542 A
- JP 05027353 B
- JP 10338717 A
- JP 2015040213 A
- JP 2007254671 A
- JP 2010105197 A
- JP 2016156570 A
- JP 2016156571 A
- JP 2016156572 A
- JP 2016164248 A
- JP 2017030578 A
- JP 2017035183 A
- JP 2017049278 A
- JP 2017051454 A


### Non-patent literature cited in the description


- Koza Rheology. Kobunshi Kankoukai. 1992, 221-222
- Developments in Polymer Characterization-4. Applied Science Publishers, 1983
- *Polymer,* 2004, vol. 45, 6495-6505
- *Macromolecules,* 2000, vol. 33, 2424-2436
- *Macromolecules,* 2000, vol. 33, 6945-6952
- *Macromol. Chem. Phys.,* 2003, vol. 204, 1738
- *Macromolecules,* 2002, vol. 35 (10), 3839-3842
- Kobunshi no Kiso. Tokyo Kagaku Dojin, 1978
- *Macromolecules,* 1977, vol. 10 (4
- *Macromolecules,* 2003, vol. 36 (11
- *Analytical Chemistry,* 2004, vol. 76 (19
- *Macromolecules,* 2001, vol. 34, 4757-4767
- *Macromolecules,* 1992, vol. 25 (1
- **G. GLOKNER.** *J. Appl. Polym. Sci: Appl. Poly. Symp.,* 1990, vol. 45, 1-24
- **L. WILD.** *Adv. Polym. Sci.,* 1990, vol. 98, 1-47
- **J. B. P. SOARES ; A. E. HAMIELEC.** *Polymer,* 1995, vol. 36 (8), 1639-1654
- *Macromolecules,* 1984, vol. 17, 1950
- **CARMAN et al.** *Macromolecules,* 1977, vol. 10, 536
- *Macromolecules,* 1982, vol. 15, 1150